(19) Europäisches Patentamt
European Patent Office
Office européen des brevets

(11) **EP 4 510 581 A1**

## EUROPEAN PATENT APPLICATION
published in accordance with Art. 153(4) EPC

(43) Date of publication:
**19.02.2025 Bulletin 2025/08**

(21) Application number: **22937071.3**

(22) Date of filing: **09.06.2022**

(51) International Patent Classification (IPC):
***H04N 19/50*** (2014.01)

(52) Cooperative Patent Classification (CPC):
**H04N 19/50**

(86) International application number:
**PCT/CN2022/097978**

(87) International publication number:
**WO 2023/197433 (19.10.2023 Gazette 2023/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.04.2022 PCT/CN2022/086450**

(71) Applicant: **GUANGDONG OPPO MOBILE
TELECOMMUNICATIONS
CORP., LTD.
Dongguan, Guangdong 523860 (CN)**

(72) Inventor: **WANG, Fan
Dongguan, Guangdong 523860 (CN)**

(74) Representative: **RGTH
Patentanwälte PartGmbB
Neuer Wall 10
20354 Hamburg (DE)**

(54) **VIDEO ENCODING METHOD, APPARATUS AND DEVICE, VIDEO DECODING METHOD, APPARATUS AND DEVICE, VIDEO ENCODING AND DECODING SYSTEM, AND STORAGE MEDIUM**

(57) A video encoding and decoding method, an apparatus, a device, a system and a storage medium are provided in the present disclosure. In the present disclosure, a weight derivation mode and K prediction modes are used as a combination to indicate a weight derivation mode and K prediction modes used by a current block in a bitstream in a combination form. At this time, a decoder side decodes the bitstream to obtain a first index, and the first index is used to indicate a first combination composed of a weight derivation mode and K prediction modes, and a first weight derivation mode and K first prediction modes included in the first combination are determined according to the first index, and the current block is predicted according to the first weight derivation mode and the K first prediction modes to obtain a prediction value of the current block. In the present disclosure, the first weight derivation mode and the K first prediction modes corresponding to the current block are indicated in a combination form, thereby making a grammar simpler, saving code words, eliminating the need for judgments in various situations, and further improving the encoding efficiency.

FIG. 8F

EP 4 510 581 A1

**Description**

**TECHNICAL FIELD**

The present disclosure relates to the field of video encoding and decoding technology, and in particular, to a video encoding and decoding method, an apparatus, a device, a system, and a storage medium.

**BACKGROUND**

Digital video technology may be incorporated into a variety of video apparatuses, such as a digital television, a smartphone, a computer, an e-reader, or a video player. With the development of video technology, the amount of data included in video data is larger. In order to facilitate the transmission of video data, a video apparatus implements video compression technology to enable more efficient transmission or storage of video data.

Since there is a temporal or spatial redundancy in the video, the redundancy in the video may be eliminated or reduced through prediction and the compression efficiency is thus improved. Currently, in order to improve the prediction effect, a plurality of prediction modes may be used to predict a current block. However, when the plurality of prediction modes are used to predict the current block, more information needs to be transmitted in a bitstream, thereby increasing the encoding cost.

**SUMMARY**

Embodiments of the present disclosure provide a video encoding and decoding method, an apparatus, a device, a system, and a storage medium, which can reduce the encoding cost.

In a first aspect, the present disclosure provides a video decoding method, which is applied to a decoder, the method includes:

obtaining a first index by decoding a bitstream, where the first index is used to indicate a first combination, the first combination includes a weight derivation mode and K prediction modes, and K is a positive integer greater than 1;

determining a first weight derivation mode and K first prediction modes included in the first combination according to the first index; and

obtaining a prediction value of a current block by predicting the current block according to the first weight derivation mode and the K first prediction modes.

In a second aspect, the embodiments of the present disclosure provide a video encoding method, including:

determining a first combination, where the first combination includes a first weight derivation mode and K first prediction modes;

obtaining a prediction value of a current block by predicting the current block according to the first weight derivation mode and the K first prediction modes; and

obtaining a bitstream according to the prediction value of the current block, where the bitstream includes a first index, and the first index is used to indicate the first combination.

In a third aspect, the present disclosure provides a video decoding apparatus, which is configured to implement the method in the above-mentioned first aspect or various implementations of the first aspect. Specifically, the apparatus includes a functional unit for implementing the method in the above-mentioned first aspect or the various implementations of the first aspect.

In a fourth aspect, the present disclosure provides a video encoding apparatus, which is configured to implement the method in the above-mentioned second aspect or various implementations in the second aspect. Specifically, the apparatus includes a functional unit for implementing the method in the above-mentioned second aspect or the various implementations of the second aspect.

In a fifth aspect, there is provided a video decoder, including a processor and a memory. The memory is used to store a computer program, and the processor is configured to invoke and execute the computer program stored in the memory to implement the method in the above-mentioned first aspect or various implementations of the first aspect.

In a sixth aspect, there is provided a video encoder, including a processor and a memory. The memory is used to store a computer program, and the processor is configured to invoke and execute the computer program stored in the memory to implement the method according to the above-mentioned second aspect or various implementations of the second aspect.

In a seventh aspect, there is provided a video encoding and decoding system, including a video encoder and a video decoder. The video decoder is configured to implement the method in the above-mentioned first aspect or the various implementations of the first aspect, and the video encoder is configured to implement the method in the above-mentioned second aspect or the various implementations of the second aspect.

In an eighth aspect, there is provided a chip for implementing the method in any one of the first aspect to second aspect or in various implementations of the first aspect or second aspect. Specifically, the chip includes: a processor, configured to invoke a computer program from a memory and execute the computer program to make a device installed with the chip implement the method according to any one of the first aspect to the second aspect or in implementations of the first aspect or second aspect.

In a ninth aspect, there is provided a computer-readable storage medium for storing a computer program, where the computer program enables a computer to execute the method according to any one of the first aspect to second aspect or in various implementations of the first aspect or second aspect.

In a tenth aspect, there is provided a computer program product, including computer program instructions, the computer program instructions enable a computer to execute the method according to any one of the first aspect to second aspect or in various implementations of the first aspect or second aspect.

In an eleventh aspect, there is provided a computer program, which, upon being executed on a computer, enables the computer to execute the method according to any one of the first aspect to second aspect or in various implementations of the first aspect or second aspect.

In a twelfth aspect, there is provided a bitstream. The bitstream is generated based on the method according to the above-mentioned second aspect. Optionally, the bitstream includes a first index, where the first index is used to indicate a first combination consisting of a weight derivation mode and K prediction modes, where K is a positive integer greater than 1.

Based on the above technical solutions, in the present disclosure, a weight derivation mode and K prediction modes are used as a combination, so as to indicate a weight derivation mode and K prediction modes used by a current block in a bitstream in a combination form. At this time, a decoder side decodes the bitstream to obtain a first index, where the first index is used to indicate a first combination composed of a weight derivation mode and K prediction modes, and a first weight derivation mode and K first prediction modes included in the first combination are determined according to the first index, and the current block is predicted according to the first weight derivation mode and the K first prediction modes to obtain a prediction value of the current block. In the present disclosure, the first weight derivation mode and the K first prediction modes corresponding to the current block are indicated in a combination form, thereby making grammar simpler, saving code words, eliminating the need for judgments in various situations, and further improving the encoding efficiency.

## BRIEF DESCRIPTION OF THE DRAWINGS

FIG. 1 is a schematic block diagram of a video encoding and decoding system involved in the embodiments of the present disclosure.
FIG. 2 is a schematic block diagram of a video encoder involved in the embodiments of the present disclosure.
FIG. 3 is a schematic block diagram of a video decoder involved in the embodiments of the present disclosure.
FIG. 4 is a schematic diagram of weight allocation.
FIG. 5 is a schematic diagram of weight allocation.
FIG. 6A is a schematic diagram of inter prediction.
FIG. 6B is a schematic diagram of weighted inter prediction.
FIG. 7A is a schematic diagram of intra prediction.
FIG. 7B is a schematic diagram of intra prediction.
FIGS. 8A-8I are schematic diagrams of intra prediction.
FIG. 9 is a schematic diagram of an intra prediction mode.
FIG. 10 is a schematic diagram of an intra prediction mode.
FIG. 11 is a schematic diagram of an intra prediction mode.
FIG. 12 is a schematic diagram of MIP.
FIG. 13 is a schematic diagram of weighted prediction.
FIG. 14 is a schematic diagram of template matching.
FIG. 15 is a flowchart diagram of a video decoding method provided in an embodiment of the present disclosure.
FIG. 16A is a schematic diagram of weight allocation.
FIG. 16B is another schematic diagram of weight allocation.
FIG. 17 is a schematic diagram of deriving a template weight.
FIG. 18 is a schematic diagram of a template.

FIG. 19 is a flowchart diagram of a video encoding method provided in an embodiment of the present disclosure.

FIG. 20 is a schematic block diagram of a video decoding apparatus provided in an embodiment of the present disclosure.

FIG. 21 is a schematic block diagram of a video encoding apparatus provided in an embodiment of the present disclosure.

FIG. 22 is a schematic block diagram of an electronic device provided in the embodiments of the present disclosure.

FIG. 23 is a schematic block diagram of a video encoding and decoding system provided in the embodiments of the present disclosure.

## DETAILED DESCRIPTION

The present disclosure may be applied to the field of picture coding, the field of video coding, the field of hardware video coding, the field of dedicated circuit video coding, and the field of real-time video coding, etc. For example, solutions of the present disclosure may be combined into an audio video coding standard (AVS), such as H.264/audio video coding (AVC) standard, H.265/high efficiency video coding (HEVC) standard, and H.266/versatile video coding (VVC) standard. Or, the solutions of the present disclosure may be combined into other dedicated or industrial standards for operations, and the standards contain ITU-TH.261, ISO/IECMPEG-1Visual, ITU-TH.262 or ISO/IECMPEG-2Visual, ITU-TH.263, ISO/-IECMPEG-4Visual, ITU-TH.264 (also referred to as ISO/IECMPEG-4AVC), containing scalable video coding (SVC) and multi-view video coding (MVC) extensions. It should be understood that the technology of the present disclosure is not limited to any specific coding standard or technology.

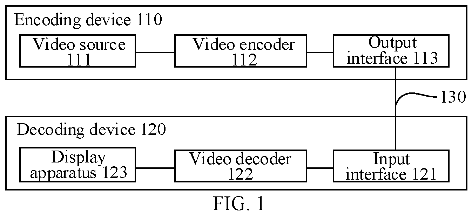

For ease of understanding, a video coding system involved in the embodiments of the present disclosure is first introduced in combination with FIG. 1.

FIG. 1 is a schematic block diagram of a video coding system involved in the embodiments of the present disclosure. It should be noted that FIG. 1 is only an example, and the video coding system of the embodiments of the present disclosure includes but is not limited to that shown in FIG. 1. As shown in FIG. 1, the video coding system 100 contains an encoding device 110 and a decoding device 120. Herein, the encoding device is used to encode video data (which may be understood as compression) to generate a bitstream, and transmit the bitstream to the decoding device. The decoding device decodes the bitstream generated by the encoding of the encoding device to obtain decoded video data.

The encoding device 110 of the embodiments of the present disclosure may be understood as a device with a video encoding function, and the decoding device 120 may be understood as a device with a video decoding function, that is, the embodiments of the present disclosure contain a wider range of apparatuses for the encoding device 110 and the decoding device 120, such as containing a smartphone, a desktop computer, a mobile computing apparatus, a notebook (e.g., laptop) computer, a tablet computer, a set-top box, a television, a camera, a display apparatus, a digital media player, a video game console, a vehicle-mounted computer, etc.

In some embodiments, the encoding device 110 may transmit the encoded video data (e.g., the bitstream) to the decoding device 120 via channel 130. Channel 130 may include one or more media and/or apparatuses capable of transmitting the encoded video data from the encoding device 110 to the decoding device 120.

In an instance, channel 130 includes one or more communication media that enable the encoding device 110 to transmit the encoded video data directly to the decoding device 120 in real-time. In this instance, the encoding device 110 may modulate the encoded video data according to a communication standard and transmit modulated video data to the decoding device 120. Herein, the communication medium contains a wireless communication medium, such as a radio frequency spectrum. Optionally, the communication medium may also contain a wired communication medium, such as one or more physical transmission lines.

In another instance, channel 130 includes a storage medium, and the storage medium may store the video data encoded by the encoding device 110. The storage medium contains a variety of locally accessible data storage media, such as an optical disk, a digital video disk (DVD), a flash memory, etc. In this instance, the decoding device 120 may acquire the encoded video data from the storage medium.

In another instance, channel 130 may contain a storage server, and the storage server may store the video data encoded by the encoding device 110. In this instance, the decoding device 120 may download the stored encoded video data from the storage server. Optionally, the storage server may store the encoded video data and may transmit the encoded video data to the decoding device 120, for example, a web server (e.g., for a website), a file transfer protocol (FTP) server, etc.

In some embodiments, the encoding device 110 contains a video encoder 112 and an output interface 113. Herein, the output interface 113 may contain a modulator/demodulator (a modem) and/or a transmitter.

In some embodiments, the encoding device 110 may also include a video source 111 other than the video encoder 112 and the input interface 113.

The video source 111 may contain at least one of: a video capturing apparatus (e.g., a video camera), a video archive, a video input interface, or a computer graphics system, where the video input interface is used to receive video data from a video content provider, and the computer graphics system is used to generate video data.

The video encoder 112 encodes the video data from the video source 111 to generate a bitstream. The video data may include one or more pictures or one or more sequences of pictures. The bitstream contains encoded information of the picture or the sequence of pictures in the form of a bitstream. The encoded information may contain encoded picture data and associated data. The associated data may contain a sequence parameter set (SPS), a picture parameter set (PPS) and other syntax structures. The SPS may contain a parameter applied to one or more sequences. The PPS may contain a parameter applied to one or more pictures. The syntax structure is a set of zero or more syntax elements arranged in a specified order in a bitstream.

The video encoder 112 transmits the encoded video data directly to the decoding device 120 via the output interface 113. The encoded video data may also be stored in the storage medium or the storage server, for subsequent reading by the decoding device 120.

In some embodiments, the decoding device 120 contains an input interface 121 and a video decoder 122.

In some embodiments, the decoding device 120 may include a display apparatus 123 other than the input interface 121 and the video decoder 122.

Herein, the input interface 121 contains a receiver and/or a modem. The input interface 121 may receive the encoded video data through the channel 130.

The video decoder 122 is used to decode the encoded video data to obtain decoded video data, and transmit the decoded video data to the display apparatus 123.

The display apparatus 123 displays the decoded video data. The display apparatus 123 may be integrated with the decoding device 120 or external to the decoding device 120. The display apparatus 123 may include various display apparatuses, such as a liquid crystal display (LCD), a plasma display, an organic light emitting diode (OLED) display, or other types of display apparatuses.

In addition, FIG. 1 is only an instance, and the solutions of the embodiments of the present disclosure are not limited to FIG. 1. For example, the technology of the present disclosure may also be applied to unilateral video encoding or unilateral video decoding.

A video encoding framework involved in the embodiments of the present disclosure is introduced below.

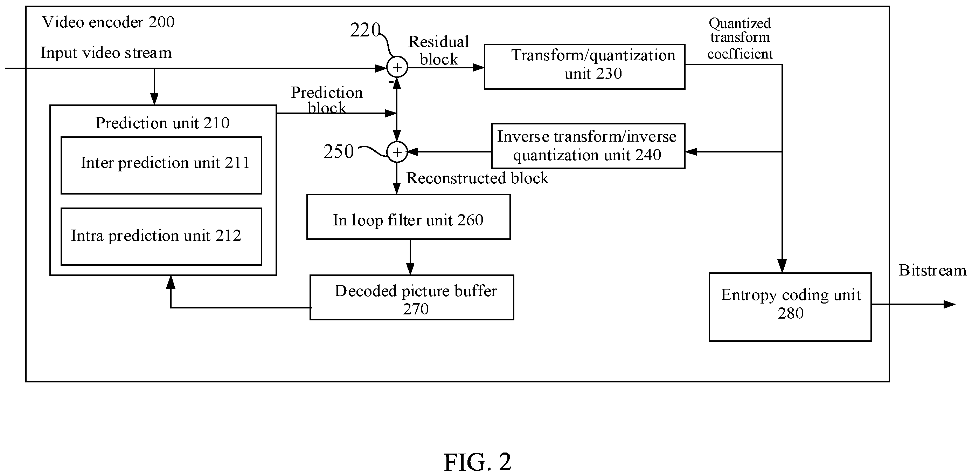

FIG. 2 is a schematic block diagram of a video encoder involved in the embodiments of the present disclosure. It should be understood that the video encoder 200 may be used to perform lossy compression on a picture, or may be used to perform lossless compression on a picture. The lossless compression may be visually lossless compression or may be mathematically lossless compression.

The video encoder 200 may be applied to picture data in a luma and chroma (YCbCr, YUV) format. For example, a YUV ratio may be 4:2:0, 4:2:2 or 4:4:4, where Y represents luma (Luma), Cb (U) represents blue chroma, Cr (V) represents red chroma, and U and V represent that the chroma (Chroma) is used to describe color and saturation. For example, in a color format, 4:2:0 represents that every 4 pixels have 4 luma components and 2 chroma components (YYYYCbCr), 4:2:2 represents that every 4 pixels have 4 luma components and 4 chroma components (YYYYCbCrCbCr), and 4:4:4 represents full pixel display (YYYYCbCrCbCrCbCrCbCr).

For example, the video encoder 200 reads video data, and for each picture of the video data, partitions one picture into several coding tree units (CTUs). In some examples, a CTB may be referred to as a "tree block", "largest coding unit" (LCU) or "coding tree block" (CTB). Each CTU may be associated with a pixel block with identical size within the picture. Each pixel may correspond to a luma (luminance) sample and two chroma (chrominance) samples. Thus, each CTU may be associated with one luma sample block and two chroma sample blocks. The size of one CTU is, for example, $128 \times 128$, $64 \times 64$, $32 \times 32$, etc. One CTU may be further partitioned into several coding units (CU) for encoding. The CU may be a rectangular block or a square block. The CU may be further partitioned into a prediction unit (PU) and a transform unit (TU), enabling separation of encoding, prediction and transform, and more flexible in processing. In an example, a CTU is partitioned into CUs in a quadtree manner, and a CU is partitioned into TUs and PUs in a quadtree manner.

The video encoder and the video decoder may support various PU sizes. Assuming that the size of a specific CU is $2N \times 2N$, the video encoder and the video decoder may support a PU size of $2N \times 2N$ or $N \times N$ for intra prediction, and support symmetric PUs of $2N \times 2N$, $2N \times N$, $N \times 2N$, $N \times N$ or similar sizes for inter prediction. The video encoder and video decoder may also support asymmetric PUs of $2N \times nU$, $2N \times nD$, $nL \times 2N$, and $nR \times 2N$ for inter prediction.

In some embodiments, as shown in FIG. 2, the video encoder 200 may include: a prediction unit 210, a residual unit 220, a transform/quantization unit 230, an inverse transform/inverse quantization unit 240, a reconstructed unit 250, an in loop filter unit 260, a decoded picture buffer 270 and an entropy coding unit 280. It should be noted that the video encoder 200 may contain more, fewer or different functional components.

Optionally, in the present disclosure, a current block may be referred to as a current coding unit (CU) or a current prediction unit (PU), etc. The prediction block may also be referred to as a prediction picture block or a picture prediction block, and a reconstructed picture block may also be referred to as a reconstructed block or a picture reconstructed picture block.

In some embodiments, the prediction unit 210 includes an inter prediction unit 211 and an intra prediction unit 212. Since there is a strong correlation between adjacent pixels in one frame of a video, an intra prediction method is used in the video coding technology to eliminate spatial redundancy between the adjacent pixels. Since there is a strong similarity between adjacent frames in a video, an inter prediction method is used in the video coding technology to eliminate temporal redundancy between the adjacent frames, thereby improving the encoding efficiency.

The inter prediction unit 211 may be used for inter prediction, the inter prediction may include motion estimation and motion compensation. It may refer to picture information of different frames, and inter prediction uses motion information to find a reference block from a reference frame, and generates a prediction block according to the reference block, to eliminate the temporal redundancy. The frame used for inter prediction may be a P frame and/or a B frame, where the P frame refers to a forward prediction frame and the B frame refers to a bi-directional prediction frame. Inter prediction uses motion information to find a reference block from a reference frame and generates a prediction block according to the reference block. The motion information includes a reference frame list in which the reference frame is located, a reference frame index, and a motion vector. The motion vector may be a whole-pixel or a sub-pixel. If the motion vector is a sub-pixel, then it is necessary to use interpolation filtering in the reference frame to obtain a required sub-pixel block. Here, a whole-pixel block or sub-pixel block of the reference frame found according to the motion vector is referred to as a reference block. The reference block is used as a prediction block directly in some technologies, while a prediction block is generated on the basis of processing the reference block in some technologies. The prediction block being generated on the basis of processing the reference block, may also be understood as using the reference block as a prediction block and then generating a new prediction block on the basis of processing the prediction block.

The intra prediction unit 212 only refers to information of a same picture to predict pixel information of a current encoded picture block, to eliminate spatial redundancy. The frame used for intra prediction may be an I frame.

There are multiple prediction modes for intra prediction. Taking the H series of international digital video coding standards as an example, there are 8 angular prediction modes and 1 non-angular prediction mode for the H.264/AVC standard, and the H.265/HEVC is extended to 33 angular prediction modes and 2 non-angular prediction modes. The intra prediction mode used by HEVC includes a planar mode, a DC mode and 33 angular modes, for a total of 35 prediction modes. The intra modes used by VVC are a Planar mode, a DC mode, and 65 angular modes, for a total of 67 prediction modes.

It should be noted that with the increase of angular modes, intra prediction will be more accurate and more in line with the needs of the development of high-definition and ultra-high-definition digital video.

The residual unit 220 may generate a residual block of a CU based on a pixel block of the CU and a prediction block of a PU of the CU. For example, the residual unit 220 may generate a residual block of the CU, so that each sample of the residual block has a value equal to a difference between: a sample of the pixel block of the CU and a corresponding sample of the prediction block of the PU of the CU.

The transform/quantization unit 230 may quantize a transform coefficient. The transform/quantization unit 230 may quantize the transform coefficient associated with a TU of a CU based on a quantization parameter (QP) value associated with the CU. The video encoder 200 may adjust a degree of quantization applied to a transform coefficient associated with the CU by adjusting the QP value associated with the CU.

The inverse transform/inverse quantization unit 240 may apply inverse quantization and inverse transform to a quantized transform coefficient, respectively, to reconstruct a residual block from the quantized transform coefficient.

The reconstructed unit 250 may add a sample of the reconstructed residual block to a corresponding sample of one or more prediction blocks generated by the prediction unit 210, to generate a reconstructed picture block associated with the TU. By reconstructing the sample block of each TU of the CU in this manner, the video encoder 200 may reconstruct the pixel block of the CU.

The in loop filter unit 260 is used to process the inverse-transformed and inverse-quantized pixels to compensate for distortion information, and provide a better reference for subsequent encoded pixels. For example, a deblocking filtering operation may be performed to reduce block artifacts of the pixel block associated with the CU.

In some embodiments, the in loop filter unit 260 includes a deblocking filter unit and a sample adaptive offset/adaptive loop filter (SAO/ALF) unit, where the deblocking filter unit is used to remove block artifacts, and the SAO/ALF unit is used to remove a ringing effect.

The decoded picture buffer 270 may store the reconstructed pixel block. The inter prediction unit 211 may use a reference picture containing the reconstructed pixel block to perform the inter prediction on a PU of another picture. In addition, the intra prediction unit 212 may use the reconstructed pixel block in the decoded picture buffer 270 to perform intra prediction on other PUs in the same picture as the CU.

The entropy coding unit 280 may receive the quantized transform coefficient from the transform/quantization unit 230. The entropy coding unit 280 may perform one or more entropy coding operations on the quantized transform coefficient, to generate entropy-coded data.

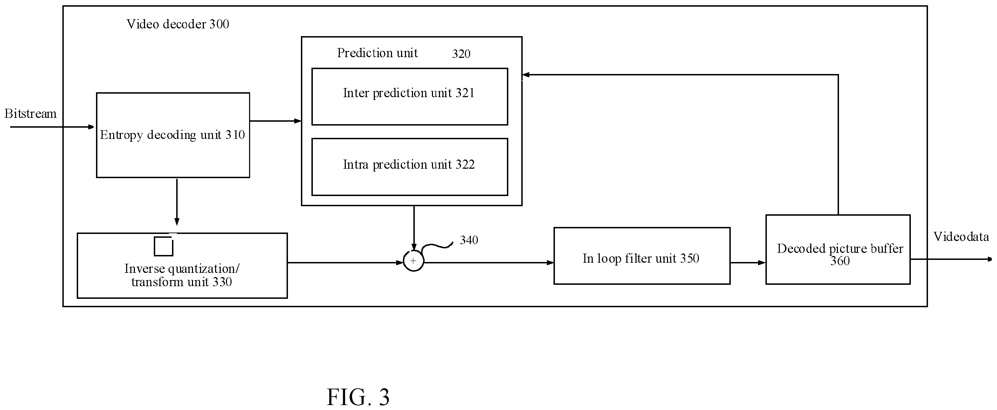

FIG. 3 is a schematic block diagram of a video decoder involved in the embodiments of the present disclosure.

As shown in FIG. 3, the video decoder 300 contains: an entropy decoding unit 310, a prediction unit 320, an inverse quantization/inverse transform unit 330, a reconstructed unit 340, an in loop filter unit 350, and a decoded picture buffer 360. It should be noted that the video decoder 300 may contain more, fewer or different functional components.

The video decoder 300 may receive a bitstream. The entropy decoding unit 310 may parse the bitstream to extract a syntax element from the bitstream. As a part of parsing the bitstream, the entropy decoding unit 310 may parse the entropy-coded syntax element in the bitstream. The prediction unit 320, the inverse quantization/inverse transform unit 330, the reconstructed unit 340, and the in loop filter unit 350 may decode video data according to the syntax element extracted from the bitstream, that is, to generate decoded video data.

In some embodiments, the prediction unit 320 includes an intra prediction unit 322 and an inter prediction unit 321.

The intra prediction unit 322 may perform the intra prediction to generate a prediction block of a PU. The intra prediction unit 322 may use an intra prediction mode to generate a prediction block of a PU based on a pixel block of a spatial neighboring PU. The intra prediction unit 322 may also determine the intra prediction mode of the PU according to one or more syntax elements parsed from the bitstream.

The inter prediction unit 321 may construct a first reference picture list (list 0) and a second reference picture list (list 1) according to the syntax element parsed from the bitstream. In addition, if the PU is encoded by using the inter prediction, the entropy decoding unit 310 may parse motion information of the PU. The inter prediction unit 321 may determine one or more reference blocks of the PU according to motion information of the PU. The inter prediction unit 321 may generate a prediction block of the PU according to one or more reference blocks of the PU.

The inverse quantization/inverse transform unit 330 may inverse quantize (i.e., dequantize) a transform coefficient associated with a TU. The inverse quantization/inverse transform unit 330 may use a QP value associated with the CU of the TU to determine a degree of the quantization.

After inverse-quantizing the transform coefficient, the inverse quantization/inverse transform unit 330 may apply one or more inverse transforms to the inverse-quantized transform coefficient, to generate a residual block associated with the TU.

The reconstructed unit 340 uses the residual block associated with the TU of the CU and the prediction block of the PU of the CU to reconstruct a pixel block of the CU. For example, the reconstructed unit 340 may add a sample of the residual block to a corresponding sample of the prediction block to reconstruct the pixel block of the CU, to obtain a reconstructed picture block.

The in loop filter unit 350 may perform a deblocking filtering operation to reduce block artifacts of the pixel block associated with the CU.

The video decoder 300 may store the reconstructed picture of the CU in the decoded picture buffer 360. The video decoder 300 may use the reconstructed picture of the decoded picture buffer 360 as a reference picture for subsequent prediction, or transmit the reconstructed picture to a display apparatus for presentation.

A basic procedure of video encoding and decoding is as follows: at a coding end, a picture is partitioned into blocks, and for a current block, the prediction unit 210 generates a prediction block of the current block by using intra prediction or inter prediction. The residual unit 220 may calculate a residual block based on the prediction block and an original block of the current block, that is, a difference between the prediction block and the original block of the current block. The residual block may also be referred to as residual information. The residual block is transformed and quantized by the transform/quantization unit 230 and processed in other ways, so that information to which human's eyes are not sensitive may be removed, thereby eliminating visual redundancy. Optionally, the residual block before transform and quantization performed by the transform/quantization unit 230 may be referred to as a time domain residual block, and the time domain residual block transformed and quantized by the transform/quantization unit 230 may be referred to as a frequency residual block or a frequency domain residual block. The entropy coding unit 280 receives a quantized transformed coefficient output by the transform/quantization unit 230, and may perform entropy-coding on the quantized transformed coefficient, to output a bitstream. For example, the entropy coding unit 280 may eliminate character redundancy according to a target context model and probability information of a binary bitstream.

At a decoder side, the entropy decoding unit 310 may parse the bitstream to obtain prediction information, a quantization coefficient matrix, etc., of the current block, and the prediction unit 320 generates a prediction block of the current block by using intra prediction or inter prediction for the current block, based on the prediction information. The inverse quantization/inverse transform unit 330 uses the quantization coefficient matrix obtained from the bitstream to perform inverse quantization and inverse transform on the quantization coefficient matrix to obtain a residual block. The reconstructed unit 340 adds the prediction block and the residual block, to obtain a reconstructed block. The reconstructed block constitutes a reconstructed picture. The in loop filter unit 350 performs in loop filtering on the reconstructed picture based on a picture or a block, to obtain a decoded picture. The encoder side also needs to perform operations similar to those of the decoder side, to obtain a decoded picture. The decoded picture may also be referred to as a reconstructed picture, and the reconstructed picture may be used as a reference frame of the inter prediction for a subsequent frame.

It should be noted that block partition information, as well as mode information such as prediction, transform, quantization, entropy coding, in loop filtering, etc., or parameter information, etc., determined by the encoder side, are carried in the bitstream when necessary. The decoder side determines the same block partition information, mode information such as prediction, transform, quantization, entropy coding, in loop filtering, etc., or parameter information as the encoding end, by parsing the bitstream and performing analysis according to existing information, thereby ensuring that the decoded picture obtained by the encoder side is the same as the decoded picture obtained by the decoder side.

The above is the basic procedure of a video codec under the block-based hybrid coding framework. With the development of the technology, some modules or steps of this framework or procedure may be optimized. The present disclosure is applicable to the basic procedure of the video codec under the block-based hybrid coding framework, but is not limited to this framework and procedure.

In some embodiments, the current block may be a current coding unit (CU) or a current prediction unit (PU), etc. Due to the need for parallel processing, a picture may be partitioned into slices, etc., and slices in a same picture may be processed in parallel, that is, there is no data dependency between the slices. The "frame" is a commonly used term, which may generally be understood as one frame being one picture. In the present disclosure, the frame may also be replaced by a picture or a slice, etc.

In the Versatile Video Coding (VVC) video codec standard currently specified, there is an inter prediction mode referred to as a geometric partitioning prediction mode (Geometric partitioning Mode, GPM). In the Audio Video coding Standard (AVS) video coding standard currently specified, there is an inter prediction mode referred to as an angular weighted prediction mode (Angular Weighted prediction, AWP). Although these two modes have different names and different specific implementations, they share some common principles.

It should be noted that the traditional unidirectional prediction only finds one reference block with the same size as the current block, and the traditional bi-directional prediction uses two reference blocks with the same size as the current block, and a pixel value of each point of the prediction block is the average of corresponding positions of the two reference blocks, that is, all points of each reference block account for 50%. The bi-directional weighted prediction causes proportions of the two reference blocks to be different, such as all points of the first reference block account for 75%, and all points of the second reference block account for 25%. But all points of the same reference block have the same proportion. But all points of the same reference block have the same proportion. Some other optimization manners, such as the use of a decoder side motion vector refinement (Decoder sideMotion Vector Refinement, DMVR) technology and bi-directional optical flow (Bi-directional Optical Flow, BIO), etc., will cause some changes in the reference pixel or prediction pixel, but they are not related to the principle mentioned above. The BIO may also be abbreviated as BDOF. The GPM or AWP also uses two reference blocks with the same size as the current block, but some pixel positions 100% use a pixel value of a corresponding position of a first reference block, and some pixel positions 100% use a pixel value of a corresponding position of a second reference block, while in a boundary region or blending region, the pixel values of the corresponding positions of the two reference blocks are used in a certain proportion. The weights of the boundary region are also blended gradually. How these weights are distributed is determined by the mode of the GPM or AWP. The weight of each pixel position is determined according to the mode of the GPM or AWP. Of course, in some cases, such as in a case where the block size is very small, it may not be guaranteed in some modes of the GPM or AWP that there must be some pixel positions 100% using the pixel value of the corresponding position of the first reference block and there must be some pixel positions 100% using the pixel value of the corresponding position of the second reference block. It may also be considered that the GPM or AWP uses two reference blocks with different sizes from the current block, that is, each of the GPM or AWP takes a required part as the reference block. That is, a part with a non-zero weight is used as the reference block, and a part with a zero weight is deleted. This is an implementation issue and is not the focus of the discussion of this invention.

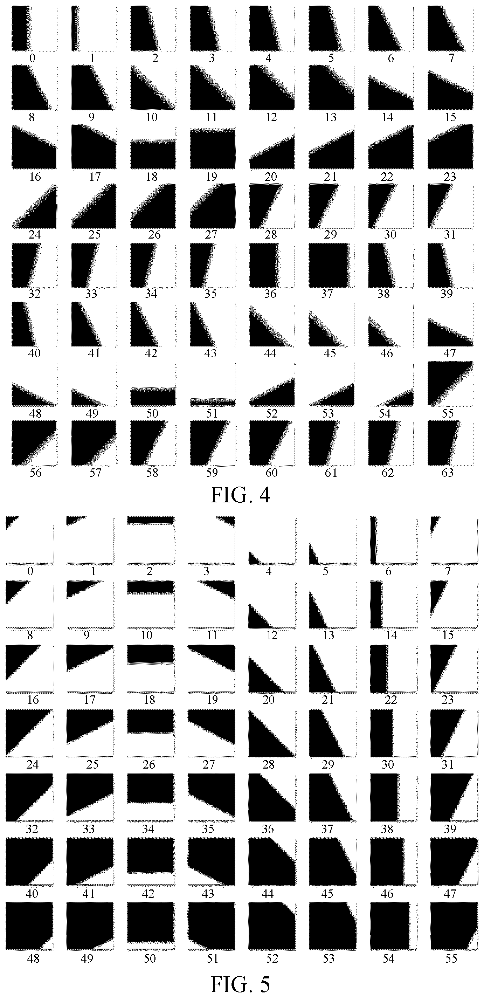

Exemplarily, FIG. 4 is a schematic diagram of weight distribution. As shown in FIG. 4, it shows a schematic diagram of the weight distribution of multiple partition modes of the GPM on a 64×64 current block provided by the embodiments of the present disclosure, where there are 64 partition modes of the GPM. FIG. 5 is a schematic diagram of weight distribution. As shown in FIG. 5, FIG. 5 shows a schematic diagram of the weight distribution of multiple partition modes of the AWP on a 64×64 current block provided by the embodiments of the present disclosure, where there are 56 partition modes of the AWP. In either FIG. 4 or FIG. 5, in each partition mode, the black region represents that a weight value of the corresponding position of the first reference block is 0%, the white region represents that a weight value of the corresponding position of the first reference block is 100%, and the gray region represents that a weight value of the corresponding position of the first reference block is a weight value greater than 0% and less than 100% according to different shades of the color. A weight value of the corresponding position of the second reference block is 100% minus the weight value of the corresponding position of the first reference block.

The GPM and AWP have different methods for deriving weights. The GPM determines an angle and offset according to each mode, and then calculates a weight matrix for each mode. The AWP first makes a one-dimensional weight line, and then uses a method similar to intra angular prediction to spread the one-dimensional weight line across the entire matrix.

It should be understood that in the early coding technologies, there were only partition manners for rectangles, either the CU, PU or transform unit (Transform Unit, TU). However, the GPM or AWP both achieve a predicted non-rectangular partition effect without partition. The GPM and AWP use a mask of weights of two reference blocks, that is, the weight diagram mentioned above. This mask determines the weights of the two reference blocks when generating the prediction blocks, or it may be simply understood that a part of the positions of the prediction block is from the first reference block and a part of the positions of the prediction block is from the second reference block, and the blending region is weighted by the corresponding positions of the two reference blocks to make the blending smoother. The GPM and AWP do not partition the current block into two CUs or PUs according to a partitioning line, so the current block is also taken as a whole for processing such as the transform, quantization, inverse transform, inverse quantization, etc., of the residual after the prediction.

The GPM simulates the partition of a geometric shape, and more accurately, simulates the partition of the prediction, by using the weight matrix. To implement the GPM, in addition to the weight matrix, two prediction values are required, each of the two prediction values is determined by one unidirectional motion information. The two unidirectional motion information are from one motion information candidate list, for example, from a merge motion information candidate list (mergeCandList). The GPM uses two indices in the bitstream, to determine two unidirectional motion information from the mergeCandList.

Inter prediction uses motion information to represent "motion". The basic motion information contains information of the reference frame (or referred to as a reference picture) and information of a motion vector (MV). The commonly used bi-directional prediction uses two reference blocks to predict the current block. The two reference blocks may use a forward reference block and a backward reference block. Optionally, the two reference blocks may be forward reference blocks or backward reference blocks. The said forward means that a time instant corresponding to the reference frame is before the current frame, and the backward means that the time instant corresponding to the reference frame is after the current frame. In other words, the forward means that a position of the reference frame in the video is before the current frame, and the backward means that the position of the reference frame in the video is after the current frame. In other words, the forward means that a POC (picture order count) of the reference frame is smaller than a POC of the current frame, and the backward means that the POC of the reference frame is larger than the POC of the current frame. In order to be capable of using bi-directional prediction, it is naturally necessary to find two reference blocks, which then require two sets of information of the reference frame and information of the motion vector. Each of these sets may be understood as one unidirectional motion information, and one bi-directional motion information is constituted by combining these two sets together. In a specific implementation, the unidirectional motion information and the bi-directional motion information may use a same data structure, except that the two sets of information of the reference frame and information of the motion vector of the bi-directional motion information are both valid, while one set of information of the reference frame and information of the the motion vector of the unidirectional motion information is invalid.

In some embodiments, two reference frame lists are supported, denoted as RPL0 and RPL1, where RPL is an abbreviation of a reference picture list. In some embodiments, a P slice may only use the RPL0, and a B slice may use the RPL0 and the RPL1. For one slice, there are several reference frames in each reference frame list, and the codec finds a certain reference frame by a reference frame index. In some embodiments, the motion information is represented by the reference frame index and the motion vector. For the above-mentioned bi-directional motion information, the reference frame index refIdxL0 corresponding to the reference frame list 0 and the motion vector mvL0 corresponding to the reference frame list 0, and the reference frame index refIdxL1 corresponding to the reference frame list 1 and the motion vector mvL0 corresponding to the reference frame list 1 are used. Here, the reference frame index corresponding to the reference frame list 0 and the reference frame index corresponding to the reference frame list 1 may be understood as the above-mentioned information of the reference frame. In some embodiments, two flags are used to represent whether to use the motion information corresponding to the reference frame list 0 and whether to use the motion information corresponding to the reference frame list 1, respectively, which are denoted as predFlagL0 and predFlagL1, respectively. It may also be understood that the predFlagL0 and predFlagL1 represent whether the above-mentioned unidirectional motion information is "valid". Although this data structure of the motion information is not explicitly mentioned, it uses the reference frame index, the motion vector and the flag of whether "valid" corresponding to each reference frame list together to represent the motion information. In some standard texts, the motion information does not appear, but the motion vector is used. The reference frame index and the flag of whether to use the corresponding motion information may also be considered as a subsidiary to the motion vector. In the present disclosure, the "motion information" is still used for the convenience of description, but it should be understood that it may also be described as the "motion vector".

The motion information used by the current block may be stored. The subsequent coded block of the current frame may use the motion information of the previously coded block, such as an adjacent block, according to an adjacent position relationship. This utilizes a correlation in spatial domain, so this coded motion information is referred to as the motion information in spatial domain. The motion information used by each block of the current frame may be stored. The subsequent coded frame may use the motion information of the previously coded frame according to the reference relationship. This utilizes a correlation in time domain, so the motion information of the coded frame is referred to as the motion information in time domain. A storage method of the motion information, used by each block of the current frame, generally uses a matrix with a fixed size, such as a 4x4 matrix, as a minimum unit, and each minimum unit stores a set of motion information separately. In this way, every time a block is coded, those smallest units corresponding to the block's position may store the motion information of this block. In this way, when using the motion information in spatial domain or the motion information in time domain, the motion information corresponding to the position may be directly found according to the position. If a 16x16 block uses the traditional unidirectional prediction, then all 4x4 minimum units corresponding to this block store the motion information of this unidirectional prediction. If a block uses the GPM or AWP, then all minimum units corresponding to this block will determine the motion information stored in each minimum unit according to the mode of the GPM or AWP, the first motion information, the second motion information and the position of each minimum unit. One method is that if all 4x4 pixels corresponding to a minimum unit are from the first motion information, then this minimum unit stores the first motion information; if all 4x4 pixels corresponding to a minimum unit are from the second motion information, then this minimum unit stores the second motion information. If the 4x4 pixels corresponding to a minimum unit are from both the first motion information and the second motion information, the AWP will select one of these motion information to store; the method of the GPM is that if the two motion information point to different reference frame lists, then the two motion information are combined into bi-directional motion information for storage, otherwise, only the second motion information is stored.

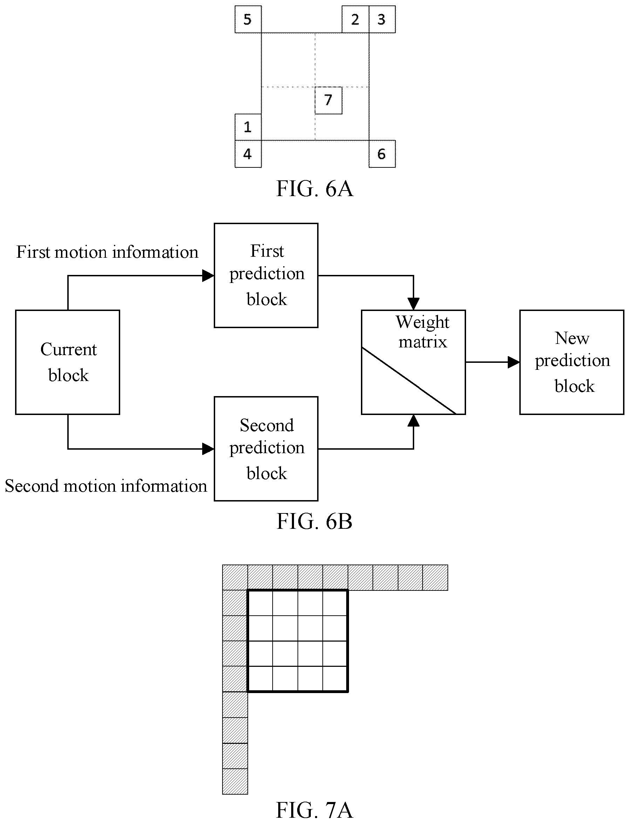

Optionally, the above-mentioned mergeCandList is constructed according to spatial domain motion information, time domain motion information, history-based motion information, and some other motion information. Exemplarily, the mergeCandList uses position 1 to position 5 as shown in FIG. 6A to derive the spatial domain motion information, and uses position 6 or position 7 as shown in FIG. 6A to derive the time domain motion information. For the history-based motion information, when a block is coded every time, the motion information of this block is added to a first-in-first-out list, and the adding process may require some checking, such as checking whether the motion information is repeated with the existing motion information in the list. In this way, when the current block is coded, the motion information in this history-based list may be referred.

In some embodiments, a syntax description about the GPM is shown in Table 1:

Table 1

| | |
|---|---|
| regular_merge_flag[x0][y0] | ae(v) |
| if( regular merge _flag[x0][y0] == 1 ) { | |
| if( sps_mmvd_enabled_flag) | |
| mmvd merge flag[x0][v0] | ae(v) |
| if( mmvd_merge_flag[x0][y0] == 1 ) { | |
| if( MaxNumMergeCand > 1 ) | |
| mmvd cand _flag[x0][y0] | ae(v) |
| mmvd_distance_idx[x0][y0] | ae(v) |
| mmvd_direction_idx[x0][y0] | ae(v) |
| } else if( MaxNumMergeCand > 1 ) | |
| merge_idx[x0][y0] | ae(v) |
| } else { | |
| if( sps_ciip_enabled_flag && sps_gpm_enabled_flag && sh_slice_type == B && cu_skip_flag[x0][y0] == 0 && cbWidth >= 8 && cbHeight >= 8 && cbWidth < (8*cbHeight) && cbHeight < (8*cbWidth) && cbWidth < 128 && cbHeight < 128 ) | |
| ciip_flag[x0][y0] | ae(v) |
| if( ciip_flag[x0][y0] && MaxNumMergeCand > 1 ) | |
| merge_idx[x0][y0] | ae(v) |
| if( !ciip_flag[x0][y0] ) { | |
| merge_gpm_partition_idx[x0][y0] | ae(v) |

(continued)

| | |
|---|---|
| merge_gpm idx0[x0][y0] | ae(v) |
| if( MaxNumGpmMergeCand > 2 ) | |
| merge_gpm idx1[x0][y0] | ae(v) |
| } | |
| } | |

As shown in Table 1, in the merge mode, if regular_merge _flag is not 1, the current block may use CIIP (Combined Inter and Intra Prediction) or GPM. If the current block does not use the CIIP, then it uses the GPM, which is shown in the syntax "if(! ciip_flag[x0][y0] )" in Table 1.

As can be seen from Table 1 above, the GPM needs to transmit three information in the bitstream, that is, merge_gpm_partition_idx, merge_gpm_idx0, and merge_gpm_idx1. x0, and y0 are used to determine a coordinate (x0, y0) of an upper-left corner luma pixel of the current block relative to an upper-left corner luma pixel of the picture. A partition shape of the GPM is determined by merge_gpm_partition_idx. As mentioned above, it is the "simulated partition". The merge_gpm_partition_idx is a weight matrix derivation mode or an index of the weight matrix derivation mode referred to in this document, or in other words, a weight derivation mode or an index of the weight derivation mode. The merge_gpm_idx0 is a first merge candidate index, and the first merge candidate index is used to determine the first motion information or the first merge candidate according to the mergeCandList. The merge_gpm_idx1 is a second merge candidate index, and the second merge candidate index is used to determine the second motion information or a second merge candidate according to the mergeCandList. If MaxNumGpmMergeCand > 2, that is, the length of the candidate list is greater than 2, the merge_gpm_idx1 needs to be decoded, otherwise, it may be determined directly.

In some embodiments, the decoding process of the GPM includes the following steps.

The information input to the decoding process includes: a coordinate ( xCb, yCb ) of the upper-left corner luma position of the current block relative to the upper-left corner of the picture, the width cbWidth of the luma component of the current block, the height cbHeight of the luma component of the current block, luma motion vectors mvA and mvB with 1/16 pixel precision, chroma motion vectors mvCA and mvCB, reference frame indices refIdxA and refIdxB, and prediction list flags predListFlagA and predListFlagB.

Exemplarily, the motion information may be represented by combining the motion vector, the reference frame index and the prediction list flag. The VVC supports two reference frame lists, and each reference frame list may have multiple reference frames. The unidirectional prediction uses only one reference block of one reference frame in one of the reference frame lists as a reference, and the bi-directional prediction uses one reference block of one reference frame in each of two reference frame lists as references. The GPM in the VVC uses two unidirectional predictions. In the above-mentioned mvA and mvB, mvCA and mvCB, refIdxA and refIdxB, and predListFlagA and predListFlagB, A may be understood as a first prediction mode, and B may be understood as a second prediction mode. We use X to represent A or B, the predListFlagX represents whether X uses the first reference frame list or the second reference frame list, the refIdxX represents the reference frame index in the reference frame list used by X, the mvX represents the luma motion vector used by X, and the mvCX represents the chroma motion vector used by X. To reiterate, it may be considered that in the VVC, the motion vector, the reference frame index and the prediction list flag are combined together to represent the motion information described in this document.

The information output by the decoding process includes: a luma prediction sample matrix predSamplesL of (cbWidth)X(cbHeight); a prediction sample matrix of the Cb chroma component of (cbWidth / SubWidthC)X(cbHeight / SubHeightC), if necessary; and a prediction sample matrix of the Cr chroma component of (cbWidth / SubWidthC) X(cbHeight / SubHeightC), if necessary.

Exemplarily, the following takes the luma component as an example, and the processing of the chroma component is similar to that of the luma component.

Assuming that the size of predSamplesLAL and predSamplesLBL is (cbWidth)X(cbHeight), which is the prediction sample matrix made according to two prediction modes. The predSamplesL is derived by: determining the predSamplesLAL and predSamplesLBL according to the luma motion vectors mvA and mvB, the chroma motion vectors mvCA and mvCB, the reference frame indices refIdxA and refIdxB, and the prediction list flags predListFlagA and predListFlagB, respectively. That is, the prediction is performed according to the motion information of the two prediction modes respectively, and the detailed process will not be repeated. Usually, the GPM is the merge mode, and it may be considered that the two prediction modes of the GPM are both the merge mode.

According to the merge_gpm_partition_idx[ xCb ][ yCb ], Table 2 is used to determine a partition angle index variable angleIdx and a distance index variable distanceIdx of the GPM.

Table 2 - Correspondence between angleIdx, distanceIdx and merge_gpm partition idx

| merge_gpm_partition_ idx | 0 | 1 | 2 | 3 | 4 | 5 | 6 | 7 | 8 | 9 | 1 0 | 1 1 | 1 2 | 1 3 | 1 4 | 1 5 |
|---|---|---|---|---|---|---|---|---|---|---|---|---|---|---|---|---|
| angleIdx | 0 | 0 | 2 | 2 | 2 | 2 | 3 | 3 | 3 | 3 | 4 | 4 | 4 | 4 | 5 | 5 |
| distanceIdx | 1 | 3 | 0 | 1 | 2 | 3 | 0 | 1 | 2 | 3 | 0 | 1 | 2 | 3 | 0 | 1 |
| merge_gpm_partition_ idx | 1 6 | 1 7 | 1 8 | 1 9 | 2 0 | 2 1 | 2 2 | 2 3 | 2 4 | 2 5 | 2 6 | 2 7 | 2 8 | 2 9 | 3 0 | 3 1 |
| angleIdx | 5 | 5 | 8 | 8 | 1 1 | 1 1 | 1 1 | 1 1 | 1 2 | 1 2 | 1 2 | 1 2 | 1 3 | 1 3 | 1 3 | 1 3 |
| distanceIdx | 2 | 3 | 1 | 3 | 0 | 1 | 2 | 3 | 0 | 1 | 2 | 3 | 0 | 1 | 2 | 3 |
| merge_gpm_partition_ idx | 3 2 | 3 3 | 3 4 | 3 5 | 3 6 | 3 7 | 3 8 | 3 9 | 4 0 | 4 1 | 4 2 | 4 3 | 4 4 | 4 5 | 4 6 | 4 7 |
| angleIdx | 1 4 | 1 4 | 1 4 | 1 4 | 1 6 | 1 6 | 1 8 | 1 8 | 1 8 | 1 9 | 1 9 | 1 9 | 2 0 | 2 0 | 2 0 | 2 1 |
| distanceIdx | 0 | 1 | 2 | 3 | 1 | 3 | 1 | 2 | 3 | 1 | 2 | 3 | 1 | 2 | 3 | 1 |
| merge_gpm_partition_ idx | 4 8 | 4 9 | 5 0 | 5 1 | 5 2 | 5 3 | 5 4 | 5 5 | 5 6 | 5 7 | 5 8 | 5 9 | 6 0 | 6 1 | 6 2 | 6 3 |
| angleIdx | 2 1 | 2 1 | 2 4 | 2 4 | 2 7 | 2 7 | 2 7 | 2 8 | 2 8 | 2 8 | 2 9 | 2 9 | 2 9 | 3 0 | 3 0 | 3 0 |
| distanceIdx | 2 | 3 | 1 | 3 | 1 | 2 | 3 | 1 | 2 | 3 | 1 | 2 | 3 | 1 | 2 | 3 |

It should be noted that, because all the three components (such as Y, Cb, Cr) may use the GPM, in some standard texts, the process of generating a prediction sample matrix of the GPM for one component is packaged into a sub-process, that is, a weighted prediction process for the GPM (Weighted sample prediction process for geometric partitioning mode). All the three components will invoke this process, but the invoked parameters are different. Here, only the luma component is taken as an example. The prediction matrix predSamplesL[ xL ][ yL ] (where xL = 0..cbWidth - 1, yL = 0..cbHeight - 1) of the current luma block is derived by the weighted prediction process of the GPM. Herein, nCbW is set to cbWidth, nCbH is set to cbHeight, the prediction sample matrices predSamplesLAL and predSamplesLBL made by the two prediction modes, and the angleIdx and distanceIdx are used as inputs.

In some embodiments, the process of weighted prediction derivation of the GPM includes the following steps.

Inputs of this process are: the width nCbW of the current block, the height nCbH of the current block; prediction sample matrices predSamplesLA and predSamplesLB of the two (nCbW)X(nCbH); a partition angle index variable angleIdx of the GPM; a distance index variable distanceIdx of the GPM; and a component index variable cIdx. This example takes luma as an example, so the above-mentioned cIdx of 0, represents the luma component.

The output of this process is: the GPM prediction sample matrix pbSamples of (nCbW)X(nCbH).

Exemplarily, variables nW, nH, shift1, offset1, displacementX, displacementY, partFlip and shiftHor are derived as follows:

$$nW = ( cIdx \quad == \quad 0 ) \, ? \, nCbW : nCbW * SubWidthC;$$

$$nH = ( cIdx \quad == \quad 0 ) \, ? \, nCbH : nCbH * SubHeightC;$$

$$shift1 = Max( 5, 17 - BitDepth ),$$

where the BitDepth is a bit depth of coding;

$$offset1 = 1 \quad << \quad ( shift1 - 1 ),$$

where "<<" represents left shift;

$$displacementX = angleIdx;$$

$$displacementY = ( angleIdx + 8 ) \% 32;$$

$$partFlip = ( angleIdx \quad >= \quad 13 \, \&\& \, angleIdx \quad <= \quad 27 ) \, ? \, 0 : 1;$$

shiftHor = ( angleIdx % 16 = = 8 ‖ ( angleIdx % 16 ! = 0 && nH >= nW ) ) ? 0 : 1.

The variables offsetX and offsetY are derived as follows:

when the value of shiftHor is 0:

$$offsetX = ( -nW ) \quad >> \quad 1,$$

offsetY = ( ( -nH ) >> 1 ) + ( angleIdx < 16 ? ( distanceIdx * nH ) >> 3 : -( ( distanceIdx * nH) >> 3));

when the value of shiftHor is 1:

offsetX = ( ( -nW ) >> 1 ) + ( angleIdx < 16 ? ( distanceIdx * nW ) >> 3 : -( ( distanceIdx * nW >> 3 ),

$$offsetY = ( -nH ) \quad >> \quad 1.$$

The variables xL and yL are derived as follows:

$$xL = ( cIdx \quad == \quad 0 ) ? x : x * SubWidthC,$$

$$yL = ( cIdx \quad == \quad 0 ) ? y : y * SubHeightC.$$

The variable wValue representing the weight of the prediction sample of the current position is derived as follows: the wValue is the weight of the prediction value predSamplesLA[ x ][ y ] of the prediction matrix of a first prediction mode at a point (x, y), and ( 8 - wValue ) is the weight of the prediction value predSamplesLB[ x ][ y ] of the prediction matrix of the first prediction mode at a point (x, y).

Herein, the distance matrix disLut is determined according to Table 3:

Table 3

| idx | 0 | 2 | 3 | 4 | 5 | 6 | 8 | 10 | 11 | 12 | 13 | 14 |
|---|---|---|---|---|---|---|---|---|---|---|---|---|
| disLut[idx] | 8 | 8 | 8 | 4 | 4 | 2 | 0 | -2 | -4 | -4 | -8 | -8 |
| idx | 16 | 18 | 19 | 20 | 21 | 22 | 24 | 26 | 27 | 28 | 29 | 30 |
| disLut[idx] | -8 | -8 | -8 | -4 | -4 | -2 | 0 | 2 | 4 | 4 | 8 | 8 |

weightIdx = ( ( ( xL + offsetX ) << 1 ) + 1 ) * disLut[ displacementX ] + ( ( ( yL + offsetY ) << 1 ) + 1 ) * disLut[ displacementY ],

$$weightIdxL = partFlip ? 32 + weightIdx : 32 - weightIdx,$$

$$wValue = Clip3( 0, 8, ( weightIdxL + 4 ) \quad >> \quad 3 ),$$

The value pbSamples[ x ][ y ] of the prediction sample is derived as follows:

pbSamples[ x ][ y ] = Clip3( 0, ( 1 << BitDepth ) - 1, ( predSamplesLA[ x ][ y ] * wValue + predSamplesLB[ x ][ y ] * ( 8 - wValue ) + offset1 ) >> shift1 ).

It should be noted that a weight value is derived for each position of the current block, and then a prediction value pbSamples[ x ][ y ] of the GPM is calculated. Because in this way, the weight wValue does not have to be written in the form of a matrix, but it may be understood that if the wValue of each position is stored in a matrix, then it is a weight matrix. The principle of calculating the weight respectively for each point and weighting the points to obtain the prediction value of the GPM, and the principle of calculating all weights and then uniformly weighting to obtain the prediction sample matrix of the GPM, are the same. The term of the weight matrix used in many descriptions in the present disclosure is for the purpose of making the expression easier to understand, and it is more intuitive to draw a diagram with the weight matrix, actually, it may be described in terms of the weight of each position. For example, the weight matrix derivation mode may also be referred to as a weight derivation mode.

In some embodiments, as shown in FIG. 6B, the decoding process of the GPM may be expressed as: parsing the bitstream and determining whether the GPM technology is used by the current block; if the GPM technology is used by the current block, determining the weight derivation mode (or partition mode or weight matrix derivation mode), and the first motion information and the second motion information. A first prediction block is determined according to the first motion information, a second prediction block is determined according to the second motion information, respectively. A weight matrix is determined according to the weight matrix derivation mode, and a prediction block of the current block is determined according to the first prediction block, the second prediction block and the weight matrix.

The intra prediction method is to predict the current block by using the coded reconstructed pixel around the current block as the reference pixel. FIG. 7A is a schematic diagram of intra prediction. As shown in FIG. 7A, the size of the current block is 4×4, and pixels in a left row and an upper column of the current block are reference pixels of the current block. The intra prediction is to predict the current block by using these reference pixels. These reference pixels may all be available, i.e., all have been coded. A part of these reference pixels may also be unavailable, for example, if the current block is at the leftmost side of the whole frame, then reference pixels at the left of the current block are unavailable. Or when coding the current block, a part at the lower-left of the current block has not been coded, then the reference pixels at the lower-left are also unavailable. In a case where the reference pixels are unavailable, available reference pixels or certain values or certain methods may be used for filling, or not filling.

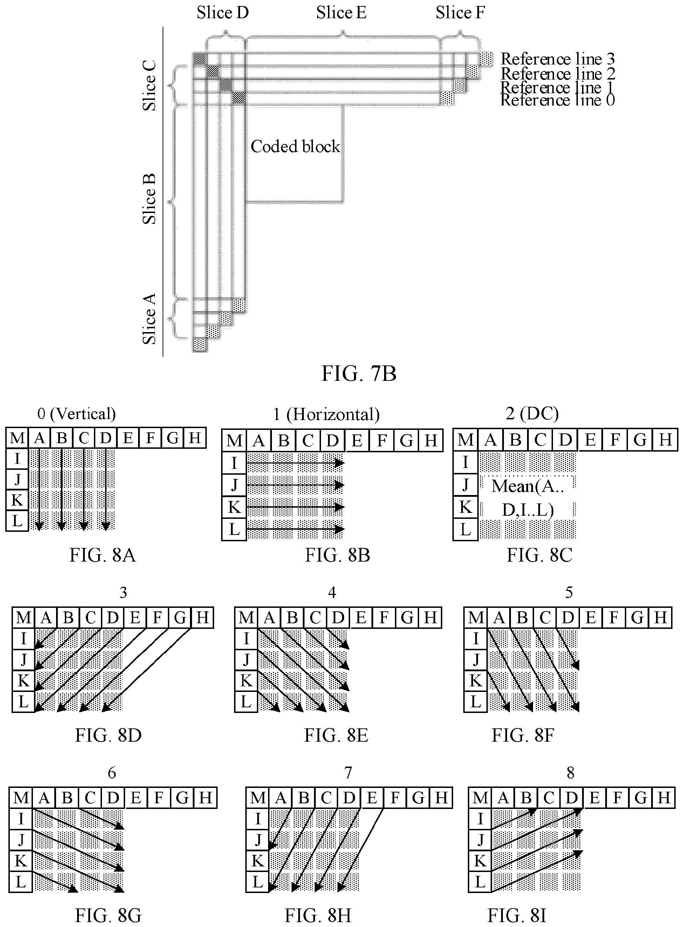

FIG. 7B is a schematic diagram of intra prediction. As shown in FIG. 7B, the multiple reference line intra prediction method (MRL) may use more reference pixels to improve the coding efficiency, for example, by using 4 reference rows/columns as reference pixels of the current block.

Furthermore, there are multiple prediction modes for the intra prediction. FIG. 8A to FIG. 5I are schematic diagrams of the intra prediction. As shown in FIG. 8A to FIG. 5I, intra prediction for a 4x4 block in H.264 may mainly include 9 modes. Herein, in mode 0 as shown in FIG. 8A, pixels above the current block are copied vertically to the current block as prediction values; in mode 1 as shown in FIG. 8B reference pixels on the left are copied horizontally to the current block as prediction values; in mode 2 of direct current (DC) as shown in FIG. 8C, an average value of these eight points A to D and I to L is used as prediction values for all points; and in mode 3 to mode 8 as shown in FIG. 8D to FIG. 5I, the reference pixels are copied to corresponding positions of the current block at a certain angle, respectively. Because some positions of the current block cannot correspond exactly to reference pixels, it may be necessary to use a weighted average value of the reference pixels, or sub-pixels of the interpolated reference pixels.

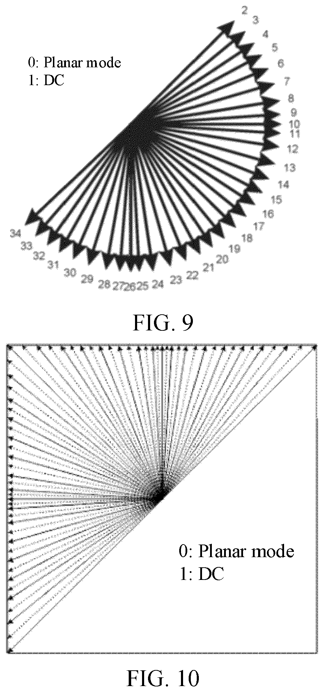

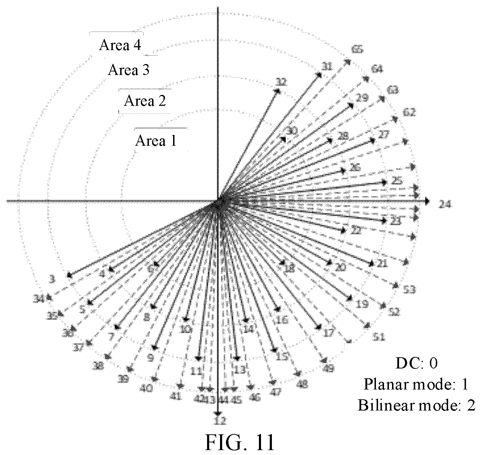

In addition, there are Plane mode, Planar mode and other modes. With the development of the technology and the expansion of blocks, there are more and more angular prediction modes. FIG. 9 is a schematic diagram of an intra prediction mode. As shown in FIG. 9, the intra prediction modes as used by HEVC include a Planar mode, a DC mode, and 33 angular modes, for a total of 35 prediction modes. FIG. 10 is a schematic diagram of an intra prediction mode. As shown in FIG. 10, intra modes used by VVC include a Planar mode, a DC mode, and 65 angular modes, for a total of 67 prediction modes. FIG. 11 is a schematic diagram of an intra prediction mode. As shown in FIG. 11, VS3 uses a total of 66 prediction modes, including a DC mode, a Plane mode, a Bilinear mode, a PCM (Pulse Coding Mode) mode, and 62 angular modes.

There are also some other technologies to improve the prediction, such as by improving the sub-pixel interpolation of the reference pixel, filtering the prediction pixel, etc. For example, For multiple intra prediction filter (MIPF) in the AVS3, different filters for different block sizes are used to generate prediction values. For pixels at different positions in the same block, a filter is used for pixels closer to the reference pixel to generate prediction values, and another filter is used for pixels farther from the reference pixel to generate prediction values. The technology of filtering prediction pixels, is the intra prediction filter (IPF) in the AVS3 for example, and the prediction value may be filtered by using the reference pixel.

In the intra prediction, an intra mode coding technology of a most probable mode List (MostprobableModes List, MPM) may be used to improve the coding efficiency. A mode list is constituted by using the intra prediction mode of the surrounding coded block, and the intra prediction mode derived from the intra prediction mode of the surrounding coded block (such as the adjacent mode), and some intra prediction modes commonly used or with the relatively high usage probability (such as the DC mode, the Planar mode, the Bilinear mode, etc.). The reference to the intra prediction mode of the surrounding coded block utilizes the spatial correlation, because the texture will have a certain spatial continuity. The MPM may be used as the prediction for the intra prediction mode. That is, the probability that the current block uses the MPM is higher than the probability that the current block does not use the MPM. Therefore, during binarization, fewer codewords will be used for the MPM, thereby saving the overhead and improving the coding efficiency.

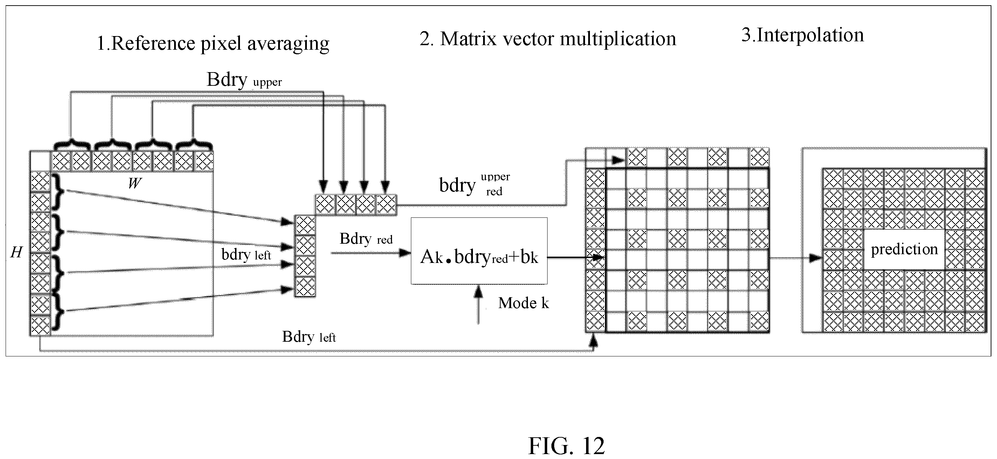

In some embodiments, matrix-based intra prediction (MIP) may be used, which is also written as Matrix weighted Intra Prediction for intra prediction in some places. As shown in FIG. 12, in order to predict a block with a width of W and a height of H, the MIP requires H reconstructed pixels in a left column of the current block and W reconstructed pixels in an upper row of the current block as inputs. The MIP generates a prediction block in the following three steps: reference pixel averaging, matrix multiplication (Matrix Vector Multiplication), and interpolation. Herein, the matrix multiplication is a core of the MIP. The MIP may be considered as a process of generating the prediction block by using input pixels (reference pixels) in a matrix multiplication manner. MIP provides multiple matrices, and the difference of prediction manners is reflected on the difference of the matrices. Different results will be obtained by the same input pixel using different matrices. The process of averaging and the interpolation of the reference pixel is a design that compromises performance and complexity. For the block with a larger size, an effect similar to downsampling may be achieved by the averaging of the reference pixel, so that the input can be adaptive to a smaller matrix, while the interpolation achieves an effect of upsampling. In this way, there is no need to provide a matrix of the MIP for each size of the block, but only one or several matrices of specific sizes need to be provided. As the demand for compression performance increases and hardware capabilities improve, the next generation of standards may see the MIP with higher complexity.

The MIP is somewhat similar to the planar, but the MIP is obviously more complex and more flexible than the planar.

The GPM combines two inter prediction blocks by using a weight matrix. In fact, the GPM may be extended to combine any two prediction blocks, such as two inter prediction blocks, two intra prediction blocks, an inter prediction block and an intra prediction block. Even in screen content encoding, a prediction block of IBC (intra block copy) or palette may also be used as one or two prediction blocks of the two prediction blocks.

The present disclosure refers to intra, inter, IBC, and palette as different prediction modes. For the sake of expression, a term called the prediction mode is used here. The prediction mode may be understood as that, the codec may generate information of a prediction block of the current block according to the prediction mode. For example, in the intra prediction, the prediction mode may be a certain intra prediction mode, such as a DC mode, a Planar mode, various intra angular prediction modes, etc. Of course, one or some auxiliary information, such as an optimization method for intra reference pixels, an optimization method (such as filtering) after generating a primary prediction block, etc., may also be superimposed. For example, in the inter prediction, the prediction mode may be a skip mode, a merge mode or an MMVD (merge with motion vector difference) mode, or an AMVP (advanced motion vector predition), and may be unidirectional prediction, or bi-directional prediction, or multi-hypothesis prediction. If the inter prediction mode uses the unidirectional prediction, one prediction mode can also be able to determine one motion information, and able to determine the prediction block according to the one motion information. If the inter prediction mode uses the bi-directional prediction, one prediction mode may also be able to determine two motion information, and able to determine the prediction block according to the two motion information.

In this way, the information that GPM needs to determine may be expressed as one weight derivation mode and two prediction modes. The weight derivation mode is used to determine a weight matrix or weights, and the two prediction modes are used to determine one prediction block or prediction value, respectively. The weight derivation mode is also referred to as a partition mode in some places. But because the partition mode is the simulated partition, it is referred to as the weight derivation mode in the present disclosure.

Herein, the two prediction modes may be from the same or different prediction manners, where the prediction manner includes but is not limited to the intra prediction, the inter prediction, the IBC, and the palette.

Optionally, the two prediction modes may be from the same or different prediction manners, where the prediction manner includes but is not limited to the intra prediction, the inter prediction, the IBC, and the palette.

A specific concrete example is as follows: if the current block uses the GPM, this example is used in an inter encoded block, and allows to use the merge mode in the intra prediction and inter prediction. As shown in Table 4, a syntax element intra_mode_idx is added to represent which prediction mode is the intra prediction mode. For example, the intra_mode_idx of 0, represents that the two prediction modes are inter prediction modes, that is, mode0IsInter is 1 and mode0IsInter is 1; intra_mode_idx of 1, represents that the first prediction mode is the intra prediction mode and the second prediction mode is the inter prediction mode, that is, the mode0IsInter is 0 and mode0IsInter is 1; intra_mode_idx of 2, represents that the first prediction mode is the inter prediction mode, and the second prediction mode is the intra prediction mode, that is, the mode0IsInter is 1 and the mode0IsInter is 0; intra_mode_idx of 3, represents that two prediction modes are intra prediction modes, that is, mode0IsInter is 0 and mode0IsInter is 0.

Table 4

| { | |
|---|---|
| merge_gpm_partition_idx[x0][y0] | ae(v) |
| intra mode idx[x0][y0] | ae(v) |
| if( mode0IsInter ) | |

(continued)

| | |
|---|---|
| merge_gpm idx0[x0][v0] | ae(v) |
| if( (!mode0IsInter && mode1IsInter) ‖ (MaxNumGpmMergeCand > 2 && mode0IsInter && mode1IsInter)) | |
| merge_gpm_idx1[x0][y0] | ae(v) |
| } | |

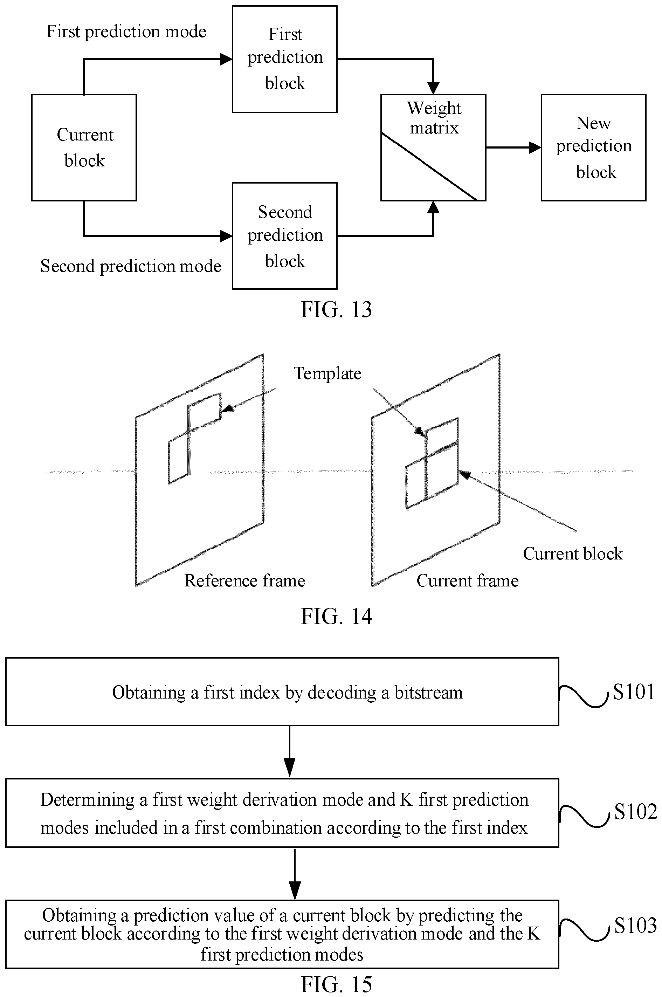

In some embodiments, as shown in FIG. 13, the decoding process of the GPM may be expressed as: parsing the bitstream and determining whether the GPM technology is used by the current block; if the GPM technology is used by the current block, determining the weight derivation mode (or partition mode or weight matrix derivation mode), and the first prediction mode and the second prediction mode. A first prediction block is determined according to the first prediction mode, a second prediction block is determined according to the second prediction mode, respectively. A weight matrix is determined according to the weight matrix derivation mode, and a prediction block of the current block is determined according to the first prediction block, the second prediction block and the weight matrix.

A method of template matching was used in inter prediction at the earliest, it utilizes the correlation between adjacent pixels and uses some regions around the current block as a template. When the current block is coded, the left side and the upper side of the current block have already been coded according to the coding order. Of course, when an existing hardware decoder is implemented, it cannot be necessarily guaranteed that when the current block starts to be coded, its left side and upper side have been decoded. Of course, what is said here is an inter block. For example, in HEVC, when generating a prediction block by an inter coded block, the surrounding reconstructed pixels are not required, so the prediction process of the inter block may be performed in parallel. However, an intra coded block must use reconstructed pixels on the left side and upper side as reference pixels. Theoretically, the left side and the upper side are available, which means that it may be achieved by making a corresponding adjustment to the hardware design. The right side and the lower side are relatively not available under the coding order of the current standard such as VVC.

As shown in FIG. 14, rectangular regions on the left side and upper side of the current block are set as a template. The height of the template part on the left side is generally the same as the height of the current block, and the width of the template part on the upper side is generally the same as the width of the current block, but of course, they may also be different. The best matching position of the template is found in the reference frame to determine the motion information or motion vector of the current block. This process may be roughly described as in a certain reference frame, starting from a starting position and searching within a certain surrounding range. A search rule, such as a search range, a search step, etc., may be pre-set. Each time moving to a position, a matching degree between a template corresponding to the position and the template around the current block is calculated. The said matching degree may be measured by some distortion costs, such as a SAD (sum of absolute difference), a SATD (sum of absolute transformed difference) (generally, the transform used by the SATD is Hadamard transform), an MSE (mean-square error), etc. The smaller the values of the SAD, the SATD, the MSE, etc., the higher the matching degree. The cost is calculated by using the prediction block of the template corresponding to the position and the reconstructed block of the template around the current block. In addition to searching at the integer pixel position, the search may also be performed at the sub-pixel position, and the motion information of the current block may be determined according to the searched position with the highest matching degree. By utilizing the correlation between adjacent pixels, the motion information that is appropriate for the template may also be the motion information appropriate for the current block. Of course, the method of template matching may not necessarily be applicable to all blocks, so some methods may be used to determine whether the current block uses the above-mentioned method of template matching, for example, a control switch is used for the current block to represent whether to use the method of template matching. One name of this method of template matching is DMVD (decoder side motion vector derivation). Both the encoder and the decoder may utilize the template for searching, to derive the motion information or find better motion information based on the original motion information. It does not need to transmit a specific motion vector or a motion vector difference. Instead, both the encoder and the decoder search by the same rule, to guarantee consistent encoding and decoding. The method of template matching may improve the compression performance, but it also needs "searching" in the decoder, thereby bringing some decoder complexity.

The above is the method of applying template matching on the inter. The method of template matching may also be used on the intra, for example, the template is used to determine an intra prediction mode. For the current block, the region within a certain range on the upper side and the left side of the current block, for example, the rectangular region on the left side and the rectangular region on the upper side still as shown in the above figure, may also be used as a template. When coding the current block, the reconstructed pixels in the template are available. This process may be roughly described as determining a set of candidate intra prediction modes for the current block, where the candidate intra prediction modes constitute a subset of all available intra prediction modes. Of course, the candidate intra prediction modes may be a full set of all available intra prediction modes. This may be determined according to the trade-off between performance and complexity. The set of candidate intra prediction modes may be determined according to the MPM or some rules, such as equal-interval screening, etc. The cost of each candidate intra prediction mode on the template, such as the SAD, the SATD, the MSE, etc., is calculated. The prediction block is made by predicting on the template by using this mode, and the cost is calculated by using the prediction block and the reconstructed block of the template. The mode with a low cost may match better with the template. By utilizing the similarity between adjacent pixels, the intra prediction mode that performs well on the template may also be the intra prediction mode that performs well on the current block. One or several modes with low costs are selected. Of course, the above two steps may be repeated. For example, after selecting one or several modes with low costs, the set of candidate intra prediction modes is determined again, the cost of the newly determined set of candidate intra prediction modes is calculated again, and one or several modes with low costs are selected. This may also be understood as coarse selection and fine selection. One intra prediction mode finally selected is determined as the intra prediction mode of the current block, or several intra prediction modes finally selected are used as candidates of the intra prediction mode of the current block. Of course, the set of candidate intra prediction modes may also be sorted by only using the method of template matching, such as by sorting the MPM list, that is, generating prediction blocks on the template in the modes in the MPM list, respectively, and determining the costs, and sorting the costs according to the costs from smallest to largest. Generally, the more front modes in the MPM list, has the fewer overhead in the bitstream, which may also achieve the purpose of improving the compression efficiency.

The method of template matching may be used to determine the two prediction modes of the GPM. If the method of template matching is used for the GPM, one control switch may be used for the current block to control whether the two prediction modes of the current block use template matching, or two control switches may be used to control whether the two prediction modes use template matching respectively.

Another aspect is how to use template matching. For example, if the GPM, such as the GPM in VVC, is used in the merge mode, it uses merge_gpm_idxX to determine one motion information from mergeCandList, where the uppercase X is 0 or 1. For the X-th motion information, a method is to optimize by using the method of template matching on the basis of the above-mentioned motion information. That is, one motion information is determined from the mergeCandList according to merge_gpm_idxX, and if template matching is used for the motion information, the optimization is performed by using the method of template matching on the basis of the above-mentioned motion information. Another method is not to use merge_gpm_idxX to determine one motion information from the mergeCandList, but instead to directly search on the basis of one default motion information to determine one motion information.

If the X-th prediction mode is an intra prediction mode, and the X-th prediction mode of the current block uses the method of template matching, then one intra prediction mode may be determined by using the method of template matching, without indicating an index of the intra prediction mode in the bitstream. Or, a candidate set or an MPM list is determined by using the method of template matching, and the index of the intra prediction mode needs to be indicated in the bitstream.

From the above, GPM has three elements, that is, one weight matrix and two prediction modes. The advantage of the GPM is that it may achieve more autonomous combinations by the weight matrix. On the other hand, the GPM needs to determine more information, so it needs to pay a greater overhead in the bitstream. Taking the GPM in VVC as an example, the GPM in VVC is used in the merge mode. In the bitstream, merge_gpm_partition_idx, merge_gpm_idx0, and merge_gpm_idx1 are used to determine the weight matrix, the first prediction mode and the second prediction mode, respectively. The weight matrix and the two prediction modes each have multiple possible options. For example, the weight matrix in VVC has 64 possible options. The merge_gpm_idx0 and merge_gpm_idx1 each are allowed to have a maximum of 6 possible options in VVC. Of course, the VVC specifies that the merge_gpm_idx0 and the merge_gpm_idx1 are not repeated. Then, such a GPM has 65X6X5 possible options. If the MMVD is used to optimize the two motion information (prediction modes), multiple possible options may also be provided for each prediction mode. This number is quite huge.

In addition, if the GPM uses two intra prediction modes, if each of the two prediction modes may use 67 common intra prediction modes in VVC, and the two intra prediction modes are different, there are also 64X67X66 possible options. Of course, to save the overhead, each prediction mode may be restricted to use only a subset of all common intra prediction modes, but there are still many possible options.

Currently, one weight derivation mode and two prediction modes of the GPM need to transmit necessary information in the bitstream according to their respective rules, respectively. For example, one weight derivation mode has its own one or more syntax elements, the first prediction mode has its own one or more syntax elements, and the second prediction mode has its own one or more syntax elements. Of course, the standard may restrict that in some cases, the second prediction mode cannot be the same as the first prediction mode, or some optimization means may be used in the two prediction modes at the same time (which may also be understood as being used in the current block), but the there are relatively independent in writing and parsing of the syntax elements, that is, more codewords are required to indicate the weight derivation mode and the prediction modes, resulting in the large coding overhead.

In order to solve the above technical problems, the present disclosure combines the weight derivation mode and K prediction modes as a combination, so that the weight derivation mode and K prediction modes used by the current block are indicated in the bitstream in a combined form, thereby saving codewords and improving the coding efficiency.

A video decoding method provided in the embodiments of the present disclosure is introduced below by taking a decoder side as an example, in conjunction with FIG. 15.

FIG. 15 is a flow chart of a video decoding method provided in an embodiment of the present disclosure. The embodiments of the present disclosure are applied to video decoders shown in FIG. 1 and FIG. 3. As shown in FIG. 15, the method of the embodiment of the present disclosure includes.

S101, obtaining a first index by decoding a bitstream.

The first index is used to indicate a first combination, the first combination includes a weight derivation mode and K prediction modes, and K is a positive integer greater than 1.

From the above, a prediction block is generated by a weight derivation mode and K prediction modes jointly, and this prediction block acts on a current block, that is, weights are determined according to the weight derivation mode, and the current block is predicted according to the K prediction modes to obtain K prediction values, and the K prediction values are weighted according to the weights to obtain prediction values of the current block. It can be seen that this weight derivation mode and the K prediction modes, as a combination, act together on the current block, and there is a correlation between the weight derivation mode and the K prediction modes.

It should be noted that the embodiments of the present disclosure do not limit the specific form of the weight derivation mode and contents included in the weight derivation mode. The weight derivation mode is used to derive the weight, such as the weight of the prediction value or the weight of the template.

For example, if the current block contains edges of K objects with relative motion, this is an ideal scenario for inter GPM. In theory, this partition should be performed at the edges of the objects, but in reality there are limited possible partitions, and it is impossible to cover any of the edges. Sometimes the adjacent partition is selected, and there may be more than one adjacent partition, which one to be selected depends on a result of a combination of which partition and the K prediction modes is optimal. Similarly, which prediction mode to be selected sometimes also depends on a result of which combination is optimal, because even in a part using the prediction mode, for a natural video, it is difficult for this part to completely match with the current block, and the finally selected prediction mode may be the one with the highest coding efficiency. Another common usage of GPM is that the current block contains a part with relative motion in an object. For example, for twisted and distorted parts resulted by arm swinging, etc., this partition is more blurry, and it may finally depend on a result of which combination is optimal. Another scenario is intra prediction. We know that the texture of some parts of the natural picture is very complex, and there is a gradient from one texture to another texture in some parts, and some parts may not be able to be expressed in one simple direction. Intra GPM may provide a more complex prediction block, and the intra coded block usually has a larger residual than the inter coded block under the same quantization. Which prediction mode to be selected may finally depend on a result of which combination is optimal.

Based on the above description, a weight derivation mode and K prediction modes may, as a combination, act together on the current block. In order to save codewords and reduce the coding cost, the embodiments of the present disclosure regard the weight derivation mode and K prediction modes corresponding to the current block as a combination, i.e., a first combination, and use a first index to indicate the first combination. Compared with indicating the weight derivation mode and K prediction modes respectively, the embodiments of the present disclosure use fewer codewords, thereby reducing the coding cost.

Specifically, an encoder side determines a first combination corresponding to the current block, and the first combination consists of a weight derivation mode and K prediction modes. For the convenience of description, the weight derivation mode included in the first combination is denoted as a first weight derivation mode, and the K prediction modes included in the first combination are determined as K first prediction modes. The encoder side uses the first weight derivation mode and K first prediction modes to predict the current block to obtain a prediction value of the current block. For example, the first weight derivation mode is used to derive weights, and the K prediction modes are used to predict the current block respectively to obtain K prediction values. The K prediction values are weighted according to derived weights, to obtain the prediction value of the current block.

Meanwhile, in order to maintain consistency between the encoder side and the decoder side, the encoder side indicates the first combination to the decoder side by a first index, that is, the encoder side writes the first index into the bitstream. The decoder side obtains the first index by decoding the bitstream, and then determines the first combination corresponding to the current block according to the first index, so as to predict the current block using the first weight derivation mode and K first prediction modes included in the first combination, to obtain the prediction value of the current block.

The embodiments of the present disclosure do not limit the specific syntax element form of the first index.

In a possible implementation, if the current block is predicted by using the GPM technology, gpm_cand_idx is used to represent the first index.

Since the above-mentioned first index is used to indicate the first combination, in some embodiments, the first index may also be referred to as a first combination index or an index of the first combination.

In an example, a syntax to which the first index is added in the bitstream is shown in Table 5:

Table 5

| if( a condition for deriving that the current block uses GPM ) { | |
|---|---|
| **gpm_cand_idx**[x0][y0] | ae(v) |
| } | |
| } | |

Herein, gpm_cand_idx is the first index.

In some embodiments, before decoding the first index, the decoder side first needs to judge whether the current block uses K different prediction modes to perform weighted prediction processing. If the decoder side determines that the current block uses K different prediction modes to perform the weighted prediction processing, the above S101 is performed to decode the bitstream, to obtain the first index. If the decoder side determines that the current block does not use K different prediction modes to perform the weighted prediction processing, the above step S101 is skipped.

In a possible implementation, the decoder side may determine whether the current block uses K different prediction modes to perform the weighted prediction processing, by determining a prediction mode parameter of the current block.

Optionally, in the embodiments of the present disclosure, the prediction mode parameter may indicate whether the current block can use the GPM mode or the AWP mode, that is, indicate whether the current block can use K different prediction modes to perform the prediction processing.

It may be understood that, in the embodiments of the present disclosure, the prediction mode parameter may be understood as a flag indicating whether the GPM mode or the AWP mode is used. Specifically, the encoder may use a variable as the prediction mode parameter, so that the setting of the prediction mode parameter may be achieved by setting the value of the variable. Exemplarily, in the present disclosure, if the current block uses the GPM mode or the AWP mode, the encoder may set the value of the prediction mode parameter to indicate that the current block uses the GPM mode or the AWP mode. Specifically, the encoder may set the value of the variable to 1. Exemplarily, in the present disclosure, if the current block does not use the GPM mode or the AWP mode, the encoder may set the value of the prediction mode parameter to indicate that the current block does not use the GPM mode or the AWP mode. Specifically, the encoder may set the value of the variable to 0. Furthermore, in the embodiments of the present disclosure, after completing the setting of the prediction mode parameter, the encoder may write the prediction mode parameter into the bitstream and transmit it to the decoder, so that the decoder may obtain the prediction mode parameter after parsing the bitstream.

Based on this, the decoder side decodes the bitstream to obtain the prediction mode parameter, and then determines whether the current block uses the GPM mode or the AWP mode according to the prediction mode parameter, and if the current block uses the GPM mode or the AWP mode, that is, uses K different prediction modes to perform the prediction processing, the decoder side determines the weight derivation mode of the current block.

In some embodiments, as shown in Table 5, the embodiments of the present disclosure may also conditionally limit the usage of the GPM mode or the AWP mode for the current block, that is, when it is judged that the current block satisfies a preset condition, it is determined that the current block uses K prediction modes for the weighted prediction, and then the decoder side decodes the bitstream to obtain the first index.

Exemplarily, when the GPM mode or the AWP mode is applied, the size of the current block may be limited.

It may be understood that since the prediction method proposed in the embodiments of the present disclosure needs to use K different prediction modes to generate K prediction values respectively, and then perform weighting according to weights to obtain the prediction value of the current block. In order to reduce the complexity and meanwhile consider the trade-off between compression performance and complexity, in the embodiments of the present disclosure, the usage of the GPM mode or AWP mode may be limited for some blocks with certain sizes. Therefore, in the present disclosure, the decoder may first determine a size parameter of the current block, and then determine whether the current block uses the GPM mode or the AWP mode according to the size parameter.

In the embodiments of the present disclosure, the size parameter of the current block may include a height and a width of the current block. Therefore, the decoder may determine whether the current block uses the GPM mode or the AWP mode according to the height and the width of the current block.

Exemplarily, in the present disclosure, if the width is greater than a first threshold and the height is greater than a second threshold, it is determined that the current block may use the GPM mode or the AWP mode. It may be seen that a possible limitation is to use the GPM mode or the AWP mode only when the width of the block is greater than (or greater than or equal to) the first threshold and the height of the block is greater than (or greater than or equal to) the second threshold. Herein, values of the first threshold and the second threshold may be 4, 8, 16, 32, 128, 256, etc., and the first threshold may be equal to the second threshold.

Exemplarily, in the present disclosure, if the width is less than a third threshold and the height is greater than a fourth threshold, it is determined that the current block may use the GPM mode or the AWP mode. It may be seen that a possible limitation is to use the GPM mode or the AWP mode only when the width of the block is less than (or less than or equal to) the third threshold and the height of the block is greater than (or greater than or equal to) the fourth threshold. Herein, values of the third threshold and the fourth threshold may be 4, 8, 16, 32, 128, 256, etc., and the third threshold may be equal to the fourth threshold.

Furthermore, in the embodiments of the present disclosure, the size of the block that can use the GPM mode or the AWP mode may be limited by limiting a pixel parameter.

Exemplarily, in the present disclosure, the decoder may first determine the pixel parameter of the current block, and then further judge whether the current block can use the GPM mode or the AWP mode according to the pixel parameter and a fifth threshold. It may be seen that a possible limitation is to use the GPM mode or the AWP mode only when a number of pixels of the block is greater than (or greater than or equal to) the fifth threshold. Herein, a value of the fifth threshold may be 4, 8, 16, 32, 128, 256, 1024, etc.

That is, in the present disclosure, only in a case where the size parameter of the current block satisfies a size requirement, the current block may use the GPM mode or the AWP mode.

Exemplarily, in the present disclosure, there may be a frame level flag to determine whether the current frame to be decoded uses the present disclosure. For example, an intra frame (such as an I-frame) may be configured to use the present disclosure, and an inter frame (such as a B-frame and a P-frame) may be configured to not use the present disclosure. Or, the intra frame may be configured not to use the present disclosure, and the inter frame may be configured to use the present disclosure. Or, some inter frames may be configured to use the present disclosure, and some inter frames may be configured to not use the present disclosure. The inter frame may also use intra prediction, so the inter frame may also use the present disclosure.

In some embodiments, there may also be a flag below the frame level and above a CU level (such as tile, slice, patch, LCU, etc.) to determine whether this region uses the present disclosure.

S102, determining a first weight derivation mode and K first prediction modes included in the first combination according to the first index.

After the decoder side decodes the bitstream to obtain the first index, the decoder side determines the first weight derivation mode and K first prediction modes included in the first combination according to the first index.

In the present disclosure, the weight derivation mode is used to determine weights used for the current block. Specifically, the weight derivation mode may be a mode for deriving weights. For a block with a given length and width, each weight derivation mode may derive a weight matrix; for blocks with the same size, different weight derivation modes derive different weight matrices.

Exemplarily, in the present disclosure, AWP has 56 weight derivation modes and GPM has 64 weight derivation modes.

The K different first prediction modes included in the above-mentioned first combination include the following examples.

Example 1: the above-mentioned K different first prediction modes are all intra prediction modes, for example, the current block is an intra coded block and not applicable for screen content encoding.

Example 2: the above-mentioned K different first prediction modes are all inter prediction modes, for example, the current block is an inter coded block.

Example 3: among the above-mentioned K different first prediction modes, at least one first prediction mode is an intra prediction mode, and at least one first prediction mode is an inter prediction mode.

Example 4: among the above-mentioned K different first prediction modes, at least one first prediction mode is an intra prediction mode, and at least one first prediction mode is a non-inter and non-intra prediction mode, such as an intra block copy (IBC) prediction mode or a palette prediction mode, etc.

Example 5: among the above-mentioned K different first prediction modes, at least one first prediction mode is an inter prediction mode, and at least one first prediction mode is a non-inter and non-intra prediction mode, such as an IBC prediction mode or a palette prediction mode, etc.

Example 6: the above-mentioned K different first prediction modes are neither the intra prediction mode nor the inter prediction mode, for example, one first prediction mode is an IBC prediction mode, one first prediction mode is a palette prediction mode, etc.

It should be noted that the embodiments of the present disclosure do not limit the specific types of the K different first prediction modes included in the first combination.

In the embodiments of the present disclosure, in one case, the first combination includes a first weight derivation mode and K first prediction modes, and the first weight derivation mode does not include a blending parameter. In another case, the first combination includes a first weight derivation mode, K first prediction modes, and a second blending parameter. In yet another case, the first combination includes a first weight derivation mode and K first prediction modes, and the first weight derivation mode includes a blending parameter. Herein, the blending parameter is used together with the K first prediction modes to determine the prediction value of the current block.

The implementation process of the above S102 is described below when the first combination includes different contents.

Case 1: when the first combination includes the first weight derivation mode and K first prediction modes, an implementation of the above S102 includes but is not limited to the following manners.

Manner 1, the encoder side and the decoder side determine the first combination corresponding to the first index from a plurality of preset first candidate combinations. For example, the plurality of preset first candidate combinations include any number of first candidate combinations such as 2, 3, 4, 5, 6, 7, 8, 9, etc., and assuming that 8 first candidate combinations are included, each first candidate combination includes a weight derivation mode and K prediction modes, and these 8 first candidate combinations have different identifiers (or indices). In this way, after the decoder side obtains the first index, the decoder side looks up the first candidate combination corresponding to the first index among the plurality of first candidate combinations, determines the first candidate combination corresponding to the first index as the first combination, and then determines the weight derivation mode included in the first candidate combination as the first weight derivation mode, and determines K prediction modes included in the first candidate combination as the K first prediction modes.

Manner 2: both the decoder side and the encoder side determine a list, the list includes a plurality of first candidate combinations. Therefore, the list is also referred to as a first candidate combination list, and the first combination corresponding to the first index is determined from the first candidate combination list. At this time, the above S102 includes the following steps:

S102-A, determining a first candidate combination list.

S102-B, determining a weight derivation mode and K prediction modes included in a first candidate combination corresponding to the first index among the first candidate combination list as the first weight derivation mode and the K first prediction modes.

Herein, the above first candidate combination list includes a plurality of first candidate combinations, and any one first candidate combination of the plurality of first candidate combinations includes a weight derivation mode and K prediction modes.

Exemplarily, the first candidate combination list is shown in Table 6:

Table 6

| Index | First candidate combination |
|-------|------------------------------|
| 0 | First candidate combination 1 (including a weight derivation mode and K prediction modes) |
| 1 | First candidate combination 2 (including a weight derivation mode and K prediction modes) |
| ...... | ...... |
| i-1 | First candidate combination i (including a weight derivation mode and K prediction modes) |
| ...... | ...... |

As shown in Table 6, the first candidate combination list includes a plurality of first candidate combinations, any two of the plurality of first candidate combinations are not the same completely, that is, at least one mode of the weight derivation mode and the K prediction modes respectively included in any two first candidate combinations is different. For example, weight derivation modes in a first candidate combination 1 and a first candidate combination 2 are different; or in a first candidate combination 1 and a first candidate combination 2, weight derivation modes are the same and at least one of the K prediction modes is different; or in a first candidate combination 1 and a first candidate combination 2, the weight derivation modes are different, and at least one of the K prediction modes is different.

Exemplarily, in above Table 6, the order of the first candidate combination in the first candidate combination list is used as an index. Optionally, the index of the first candidate combination in the first candidate combination list may be represented in other ways, which is not limited to the embodiments of the present disclosure.

In this manner 2, the decoder side decodes the bitstream to obtain the first index, and determines the first candidate combination list as shown in Table 6 above, and looks up in the first candidate combination list according to the first index, to obtain the first weight derivation mode and K prediction modes included in the first combination indicated by the first index.

For example, the first index is an index 1. In the first candidate combination list shown in Table 6, a first candidate combination corresponding to index 1 is the first candidate combination 2. That is, the first combination indicated by the first index is the first candidate combination 2. In this way, the decoder side determines the weight derivation mode and K prediction modes included in the first candidate combination 1 as the first weight derivation mode and K first prediction modes included in the first combination, and uses the first weight derivation mode and K first prediction modes to predict the current block, to obtain the prediction value of the current block.

In this manner 2, the encoder side and decoder side may determine the same first candidate combination list, respectively. For example, the encoder side and decoder side both determine a list including N first candidate combinations, each first candidate combination includes a weight derivation mode and K prediction modes. In the bitstream, the encoder side only needs to write a first candidate combination finally selected, for example, the first combination. The decoder side parses the first combination finally selected by the encoder side. Specifically, the decoder side decodes the bitstream to obtain the first index, and determines the first combination in the first candidate combination list determined by the decoder side, by the first index.

The embodiments of the present disclosure do not limit the specific manner in which the decoder side determines the above-mentioned first candidate combination list.

In some embodiments, the above first candidate combination list is pre-existing. After obtaining the first index by decoding the bitstream, the decoder side may obtain or read the first candidate combination list according to the first index, and then look up the first candidate combination corresponding to the first index in the first candidate combination list according to the first index.

In some embodiments, the above first candidate combination list is transmitted from the encoder side to the decoder side, for example, the encoder side transmits to the decoder side before encoding the current block.

In some embodiments, the above first candidate combination list is uploaded to a cloud by the encoder side, and the decoder side reads the first candidate combination list from the cloud after decoding the bitstream and obtaining the first index.

In some embodiments, the above first candidate combination list is constructed by the decoder side. For example, after decoding the bitstream and obtaining the first index, the decoder side constructs the first candidate combination list in response to the first index.

The embodiments of the present disclosure do not limit the manner in which the decoder side constructs the first candidate combination list. For example, information related to the current block is used to analyze the probability of occurrence of various combinations consisting of different weight derivation modes and different prediction modes, and the first candidate combination list is constructed according to the probability of occurrence of various combinations.

Optionally, the information related to the current block includes mode information of surrounding blocks of the current block, reconstructed pixels of the current block, etc.

In some embodiments, the decoder side constructs the first candidate combination list by the following step S102-A1:

S102-A1, constructing a first candidate combination list based on a template of the current block.

Template matching utilizes the correlation between adjacent pixels and takes some regions around the current block as a template. When the current block is coded, the left side and the upper side thereof have been coded according to the coding order. During the inter prediction, the best matching position of the template is found in a reference frame to determine the motion information or motion vector of the current block. During the intra prediction, a template is used to determine the intra prediction mode of the current block.

The template of the current block is constituted by reconstructed regions around the current block and is relevant to the current block. Based on this, the embodiments of the present disclosure construct the first candidate combination list based on the template of the current block.

The present disclosure does not limit the specific shape of the template of the current block.

In some embodiments, the template includes at least one of: an upper encoded area, a left encoded area, and an upper-left encoded area of the current block.

Optionally, the width of the upper encoded area is the same as the width of the current block, the height of the left encoded area is the same as the height of the current block, the width of the upper-left encoded area is the same as the width of the left encoded area, and the height of the upper-left encoded area is the same as the height of the upper encoded area.

For example, for each combination, the template of the current block is predicted by using the combination, to obtain a prediction value of the template under each combination, and the first candidate combination list is constructed according to the prediction value of the template under each combination.

Exemplarily, for each combination, the combination is used to predict the template of the current block, to obtain a prediction value of the template under each combination. For example, weights of the template are derived by using the weight derivation mode included in the combination, the template is predicted by using the K prediction modes included in the combination respectively, to obtain K prediction values of the template, and the K prediction values of the template are weighted according to the derived weights of the template, to obtain the prediction value of the template under the combination. Finally, the first candidate combination list is constructed according to the prediction value of the template under each combination.

It should be noted that the above-mentioned weights derived according to the weight derivation mode may be understood as deriving a weight corresponding to each pixel point in the template, and may also be understood as deriving a weight matrix corresponding to the template. Herein, determining the prediction value of the template according to the weights, may be determining K prediction values corresponding to each pixel point in the template, and determining the prediction value corresponding to each pixel according to the K prediction values and the weight corresponding to each pixel. The prediction value corresponding to each pixel in the template constitutes the prediction value of the template. Optionally, determining the prediction value of the template according to the weights, may also be performed according to blocks. For example, for determining the prediction value of the template, K prediction values of the template are weighted according to the weight matrix of the template, to obtain the prediction value of the template.

In some embodiments, S102-A1 includes the following steps S102-A11 to S102-A13:

S102-A11, determining R second combinations, where any one of the R second combinations includes a weight derivation mode and K prediction modes, and the weight derivation mode and the K prediction modes respectively included in any two combinations of the R second combinations are not the same completely, and R is a positive integer greater than 1;

S102-A12, for each second combination of the R second combinations, predicting the template by using a weight derivation mode and K prediction modes in the second combination to obtain a template prediction value corresponding to the second combination; and

S102-A13, constructing a first candidate combination list according to the template prediction values corresponding to respective second combinations of the R second combinations.

In this embodiment, when constructing the first candidate combination list, the decoder side first determines R second combinations. The present disclosure does not limit the specific number of the R second combinations, such as 8, 16, 32, etc. Each of the R second combinations includes a weight derivation mode and K prediction modes, and the weight derivation mode and K prediction modes respectively included in any two combinations of the R second combinations are not the same completely. Next, for each second combination of the R second combinations, a weight derivation mode and K prediction modes included in the second combination are used to predict the template of the current block, to obtain a prediction value of the template under the second combination. Finally, a first candidate combination list is constructed according to the template prediction values corresponding to respective second combinations of the R second combinations.

In the above S102-A13, manners of constructing the first candidate combination list according to the template prediction values corresponding to respective second combinations of the R second combinations include but are not limited to the following manners.

Manner 1: the first candidate combination list is constructed according to sizes of the template prediction values corresponding to respective second combinations of the R second combinations.

For example, the R second combinations are sorted according to the sizes of the template prediction values corresponding to respective second combinations of the R second combinations, and the sorted R second combinations are determined as the first candidate combination list. At this time, the first candidate combination list includes R first candidate combinations.

For another example, the R second combinations are sorted according to the sizes of the template prediction values corresponding to respective second combinations of the R second combinations, and N second combinations are selected from the sorted R second combinations to constitute the first candidate combination list. At this time, the first candidate combination list includes N first candidate combinations.

Manner 2, the above S102-A13 includes the following steps:

S102-A13-1, determining a cost corresponding to the second combination according to the template prediction value and a template reconstructed value corresponding to the second combination; and

S102-A13-2, constructing the first candidate combination list according to the costs corresponding to respective second combinations of the R second combinations.

Since the template of the current block is a reconstructed region, the decoder side may obtain the reconstructed value of the template. In this way, for each second combination of the R second combinations, a prediction distortion cost corresponding to the second combination may be determined according to the template prediction value and the template reconstructed value under the second combination. Herein, a manner of determining the cost corresponding to the second combination includes but is not limited to SAD, SATD, SEE, etc. Next, the first candidate combination list is constructed according to the costs corresponding to the respective second combinations of the R second combinations.

In the embodiments of the present disclosure, the template prediction value corresponding to the second combination includes at least the following two cases.

A first case is that the template prediction value corresponding to the second combination is a numerical value, that is, the decoder side uses the K prediction modes included in the second combination to predict the template, to obtain K prediction values, determines the weights of the template according to the weight derivation mode included in the second combination, weights the K prediction values by the weights of the template, to obtain the weighted prediction value, and determines the weighted prediction value as the template prediction value corresponding to the second combination.

A second case is that the template prediction value corresponding to the second combination includes the template prediction values respectively corresponding to the K prediction modes included in the second combination. At this time, the above S102-A13-1 includes the following steps.

S102-A13-11, determining costs respectively corresponding to the K prediction modes in the second combination, according to the template prediction values and template reconstructed values respectively corresponding to the K prediction modes in the second combination; and

S102-A13-12, determining the cost corresponding to the second combination according to the costs respectively corresponding to the K prediction modes in the second combination. For example, a sum of the costs corresponding to the K prediction modes in the second combination is determined as the cost corresponding to the second combination.

In the embodiments of the present disclosure, taking K=2 as an example, the weights on the template may be simplified to only two possibilities, 0 and 1. Then, for each pixel position, its pixel value is only from a prediction block of the first prediction mode or a prediction block of the second prediction mode. Therefore, for a prediction mode, the cost on the template when the prediction mode is the first prediction mode of a certain weight derivation mode, may be calculated, that is, only the cost generated by some pixels with the weight of 1 on the template when the prediction mode is the first prediction mode in the case of the weight derivation mode, is calculated. An example is to denote the cost as cost [pred_mode_idx][gpm_idx][0], where pred_mode_idx represents an index of the prediction mode, gpm_idx represents an index of the weight derivation mode, and 0 represents the first prediction mode.

In addition, for the cost on the template when the prediction mode is the second prediction mode of the certain weight derivation mode, only the cost generated by some pixels with the weight of 1 on the template when the prediction mode is the second prediction mode in the case of the weight derivation mode, is calculated. An example is to denote the cost as cost[pred_mode_idx][gpm_idx][1], where pred_mode_idx represents an index of the prediction mode, gpm_idx represents an index of the weight derivation mode, and 1 represents the second prediction mode.

Then, when a cost of a combination is calculated, the above-mentioned corresponding two costs may be directly added. For example, a cost of prediction modes pred_mode_idx0 and pred_mode_idx1 in the case of the weight derivation mode gpm_idx are required, where the pred_mode_idx0 is the first prediction mode and the pred_mode_idx1 is the second prediction mode. The cost is denoted as costTemp, then costTemp=cost[pred_mode_idx0][gpm_idx][0]+ cost [pred_mode_idx1][gpm_idx][1]. If the cost of prediction modes pred_mode_idx0 and pred_mode_idx1 in the case of the weight derivation mode gpm_idx is required, where the pred_mode_idx1 is the first prediction mode and the pred_mode_idx0 is the second prediction mode, the cost is denoted as costTemp, then costTemp=cost[pred_mode_idx1][gpm_idx] [0]+ cost[pred_mode_idx0][gpm_idx][1].

One advantage of this way is that first weighting and combining into a prediction block and then calculating the cost, is simplified to directly calculating the costs of the two parts and then summing the costs to obtain the cost of the combination. Since a prediction mode may be combined with a plurality of other prediction modes, and for the same weight derivation mode, the cost of the prediction mode as a part of the first prediction mode and the second prediction mode is fixed, so these costs, i.e., cost[pred_mode_idx][gpm_idx][0] and cost[pred_mode_idx][gpm_idx][1] in the above example, may be retained and reused, thereby reducing the amount of calculation.

According to the above method, the cost corresponding to each second combination in the R second combinations may be determined, and then S102-A13-2 is performed.

Herein, in S102-A13-2, manners of constructing the first candidate combination list according to the costs corresponding to respective second combinations in the R second combinations include but are not limited to the following examples.

Example 1: sorting the R second combinations according to the costs corresponding to respective second combinations in the R second combinations; and determining the sorted R second combinations as the first candidate combination list.

The first candidate combination list generated in this Example 1 includes R first candidate combinations.

Optionally, the R first candidate combinations in the first candidate combination list are sorted in order of the sizes of the costs from small to large, that is, the costs corresponding to the R first candidate combinations in the first candidate combination list increase in sequence according to the sorting.

Herein, sorting the R second combinations according to the costs corresponding to respective second combinations in the R second combinations may be, sorting the R second combinations in order of the costs from small to large.

Example 2: selecting N second combinations from the R second combinations according to the costs corresponding to the second combinations, and determining a list consisting of the N second combinations as the first candidate combination list.

Optionally, the above-mentioned N second combinations are the first N second combinations with the smallest costs among the R second combinations. For example, N second combinations with the smallest costs are selected from the R second combinations to constitute the first candidate combination list, according to the costs corresponding to respective second combinations in the R second combinations. At this time, the first candidate combination list includes N first candidate combinations.

Optionally, the N first candidate combinations in the first candidate combination list are sorted in order of the sizes of the costs from small to large, that is, the costs corresponding to the N first candidate combinations in the first candidate combination list increase in sequence according to the sorting.

The process of determining the R second combinations in the above S102-A11 is introduced below.

In some embodiments, the above-mentioned R second combinations are preset. In this way, each second combination of the preset R second combinations is used to predict the template of the current block, to obtain the template prediction value corresponding to each second combination, and then the cost corresponding to each second combination is determined according to the template prediction value and the template reconstructed value corresponding to each second combination, and the R second combinations are sorted according to the costs corresponding to respective second combinations, and the sorted R second combinations are used as the first candidate combination list, or N second combinations with the smallest costs are selected from the sorted R second combinations, to constitute the first candidate combination list.

In some embodiments, S102-A11 includes the following steps:

S102-A11-1, determining P weight derivation modes and Q prediction modes, where P is a positive integer and Q is a positive integer greater than or equal to K; and

S102-A11-2, constructing R second combinations according to the P weight derivation modes and the Q prediction modes, where any one of the R second combinations includes one weight derivation mode of the P weight derivation modes and K prediction modes of the Q prediction modes, where P is a positive integer and Q is a positive integer greater than or equal to K.

In this embodiment, the decoder side first determines P weight derivation modes and Q prediction modes, and then constructs R second combinations according to the determined P weight derivation modes and Q prediction modes.

For example, the second combination includes one weight derivation mode and two prediction modes. Assuming that the P weight derivation modes are a weight derivation mode 1 and a weight derivation mode 2, and the Q prediction modes are a prediction mode 1, a prediction mode 2 and a prediction mode 3. These two weight derivation modes and three prediction modes may be combined into 2X3X2 second combinations, for a total of 12 second combinations.

The embodiments of the present disclosure do not limit the specific number of the above-mentioned P weight derivation modes and Q prediction modes.

In a possible implementation, assuming that the current block is an intra coded block, it is assumed that there are 64 possible weight derivation modes of GPM and 67 possible intra prediction modes of GPM, which may be found in the VVC standard. However, there is no limitation that there are only 64 possible weights of the GPM, or of what the 64 possible weights are. It should be noted that the reason why the VVC's GPM selects 64 is also a trade-off scheme between improving the prediction effect and improving the overhead in the bitstream. However, the present disclosure no longer uses a fixed logic to code the weight derivation mode, so in theory, the present disclosure may use more diverse weights and use them more flexibly. Likewise, there is no limitation that there are only 67 intra prediction modes of the GPM, or of what the 67 intra prediction modes are. In theory, all possible intra prediction modes may be used in the GPM. For example, if the intra angular prediction mode performs more precisely and more intra angular prediction modes are generated, then the GPM may also use more intra angular prediction modes. For example, the MIP (matrix-based intra prediction) mode of VVC may also be used in the present disclosure, but considering that the MIP has multiple sub-modes to be selected, the MIP will not be added to this embodiment for ease of understanding. In addition, there are also some wide angular modes that may also be used in the present disclosure, which will not be further described in the present embodiment.

Assuming K=2, the above-mentioned K prediction modes include a first prediction mode and a second prediction mode. Assuming that there are 67 of all available prediction modes (i.e., Q=67), the first prediction mode has 67 possibilities. Since the second prediction mode is different from the first prediction mode, the second prediction mode has 66 possibilities. Assuming that there are 64 weight derivation modes (i.e., P=64), the present disclosure may use any two different prediction modes and any one weight derivation mode to constitute a second combination, with a total of 64*67*66 possible second combinations.

In this implementation, the P weight derivation modes are all the possible weight derivation modes, such as the 64 weight derivation modes in the GPM, and Q prediction modes are all the possible prediction modes, such as the 67 intra prediction modes of the GPM. An exhaustive manner is used to obtain all possible second combinations, for example, 64*67*66 possible second combinations are obtained. Each second combination of the 64*67*66 possible second combinations is used to predict the template of the current block, and the distortion cost of each second combination is calculated. Then, the first candidate combination list corresponding to the current block is obtained according to the distortion costs of the respective second combinations.

In some embodiments, in order to reduce the amount of data and increase the speed of constructing the first candidate combination list, not each prediction mode is tried, but some of the prediction modes may be selected to be tried.

At this time, the implementations of determining the Q prediction modes in the above S102-A11-1 include but are not limited to the following manners.

Manner 1: Q prediction modes are preset prediction modes.

Manner 2: at least one of the first candidate prediction mode list of the current block, the first alternative prediction mode lists corresponding to the K prediction modes respectively, and the prediction mode corresponding to the weight derivation mode is determined; and Q prediction modes are determined according to at least one of the first candidate prediction mode list, the first alternative prediction mode lists corresponding to the K prediction modes respectively, and the prediction modes corresponding to the weight derivation mode.

Herein, the first candidate prediction mode list includes a plurality of first candidate prediction modes, and the first alternative prediction mode list corresponding to any one of the K prediction modes includes at least one first alternative prediction mode.

For example, Q prediction modes are determined according to the candidate prediction mode list of the current block.

For another example, Q prediction modes are determined according to the first alternative prediction mode lists corresponding to the K prediction modes respectively.

For another example, Q prediction modes are determined according to the prediction mode corresponding to the weight derivation mode.

For another example, Q prediction modes are determined according to the first candidate prediction mode list of the current block and the first alternative prediction mode lists corresponding to the K prediction modes respectively.

For another example, Q prediction modes are determined according to the first candidate prediction mode list of the current block and the prediction mode corresponding to the weight derivation mode.

For another example, Q prediction modes are determined according to the first alternative prediction mode lists corresponding to the K prediction modes respectively and the prediction mode corresponding to the weight derivation mode.

For another example, Q prediction modes are determined according to the first candidate prediction mode list, the first alternative prediction mode lists corresponding to the K prediction modes respectively, and the prediction mode corresponding to the weight derivation mode.

Herein, determining the first alternative prediction mode lists corresponding to the K prediction modes respectively may be understood as determining a first alternative prediction mode list for each prediction mode of the K prediction modes, and when subsequently constructing the second combination, a prediction mode in the second combination is selected from a first alternative prediction mode list corresponding to this prediction mode. For example, K=2, the K prediction modes include a first prediction mode and a second prediction mode, and the decoder side constructs a first alternative prediction mode list 1 for the first prediction mode and a first alternative prediction mode list 2 for the second prediction mode. In this way, when constructing different second combinations in the later stage, a first alternative prediction mode is selected from the first alternative prediction mode list 1 as the first prediction mode, and a first alternative prediction mode is selected from the first alternative prediction mode list 2 as the second prediction mode. In this way, a weight derivation mode, and the currently selected first prediction mode and the second prediction mode constitute a second combination.

The embodiments of the present disclosure do not limit the manner for determining the first alternative prediction mode list corresponding to each prediction mode of the K prediction modes.

In a possible implementation, for any one of the K prediction modes, at least one of a first candidate prediction mode list corresponding to the prediction mode and the prediction mode corresponding to the weight derivation mode are determined; a first alternative prediction mode list corresponding to the prediction mode is determined according to at least one of the first candidate prediction mode list and the prediction mode corresponding to the weight derivation mode.

In the embodiments of the present disclosure, determining the first candidate prediction mode list corresponding to a certain prediction mode of K prediction modes is basically similar to the process of determining the first candidate prediction mode list corresponding to the current block, which can be described as follows.

In some embodiments, the above first candidate prediction mode list includes one or more inter prediction modes, for example, at least one of skip, merge, common inter prediction mode, unidirectional prediction, bi-directional prediction, multi-hypothesis prediction, etc.

In some embodiments, the above first candidate prediction mode list includes one or more intra prediction modes, for example, at least one of a direct current (Direct Current, DC) mode, a planar (PLANAR) mode, an angular mode, etc. Optionally, the above first candidate prediction mode list includes at least one intra prediction mode in the MPM list.

In some embodiments, the above-mentioned first candidate prediction mode list may also include modes such as IBC and palette, etc.

The present disclosure does not limit the types of prediction modes and the number of prediction modes included in the above-mentioned first candidate prediction mode list.

In some embodiments, the first candidate prediction mode list is determined by at least one of the following manners.

Manner 1: the above-mentioned first candidate prediction mode list includes a preset mode.

Manner 2: the above-mentioned first candidate prediction mode list includes a mode in the MPM list.

In some embodiments, the first candidate intra prediction mode list may be an MPM list of the current block. For example, in VVC, the current block may obtain an MPM list with a length of 6. In addition, in some subsequent technological evolutions, there is a secondary MPM scheme, which may derive an MPM list with a length of 22. In other words, a sum of the lengths of the first MPM list and the second MPM list is 22. That is, the embodiments of the present disclosure may use the MPM to screen the intra prediction modes.

In some embodiments, if the first candidate prediction mode list determined above does not include the preset mode, the preset mode is added to the candidate prediction mode list.

In an example, the above-mentioned preset mode is several preset prediction modes. Optionally, the above-mentioned preset mode includes at least one of a DC mode, a horizontal mode, and a vertical mode.

In another example, the preset mode is determined, by determining a picture type corresponding to the current block and according to the picture type corresponding to the current block.

Currently, commonly used picture types include I picture, B picture, and P picture; commonly used slice types include I slice, B slice, and P slice. Taking the slice type as an example, the same applies to the picture type. The I slice may only have intra coded blocks, while the B slice and P slice may have both intra coded blocks and inter coded blocks. That is, blocks around the current block in the I slice are all intra coded blocks, while in the B slice and the P slice, blocks around the current block may be intra coded blocks or inter coded blocks. Therefore, for some intra GPM methods in the present disclosure, more relevant information, such as the intra prediction mode of adjacent blocks, may be obtained from the I slice. However, the relevant information obtained from the B slice and the P slice is relatively less. Therefore, different rules may be set for different picture types.

For example, when constructing the first candidate prediction mode list, if the picture type corresponding to the current block is the B type or the P type, more preset modes are added, such as some other angular modes on the basis of the DC mode, horizontal mode and vertical mode, such as an upper-right direction (mode 2 in VVC), a lower-left direction (mode 66 in VVC), an upper-left direction (mode 34 in VVC), etc. Or, different limitations on the number of first candidate prediction mode lists are used for blocks of different picture types, etc.

The above manner of determining the picture type corresponding to the current block may be to determine the picture type corresponding to the current block according to the picture type of the current picture to which the current block belongs or the picture type of the current slice to which the current block belongs. For example, the picture type of the current picture to which the current block belongs or the picture type of the current slice to which the current block belongs is determined as the picture type corresponding to the current block.

Optionally, the preset mode may be added under certain conditions. An example is adding when the number of prediction modes in the candidate prediction modes is less than, or less than or equal to, a threshold, and the threshold may be 3, 4, 5, 6, etc.

Manner 3: the above-mentioned first candidate prediction mode list includes a set of first candidate prediction modes determined according to some rules, such as equal-interval screening.

Manner 4: the first candidate prediction mode list is determined according to a prediction mode used by at least one block adjacent to the current block.

For example, the prediction mode used by one or more blocks adjacent to the current block is added to the first candidate prediction mode list, to obtain the first candidate prediction mode list of the current block, or obtain the first candidate prediction mode list corresponding to a k-th prediction mode of K prediction modes, where the k-th prediction mode is any one of the K prediction modes.

For another example, a prediction mode corresponding to a k-th prediction mode of the prediction modes used by one or more blocks adjacent to the current block is added to the first candidate prediction mode list corresponding to the k-th prediction mode. For example, assuming K=2, the k-th prediction mode is the first prediction mode, and the two blocks adjacent to the current block are assumed to also use two prediction modes for the weighted prediction, where the two prediction modes used by a first adjacent block are a prediction mode 1 and a prediction mode 3, respectively, and the two prediction modes used by a second adjacent block are a prediction mode 4 and a prediction mode 5, respectively. In this way, the prediction mode 1 and the prediction mode 4 may be added to the first candidate prediction mode list corresponding to the first prediction mode.

Manner 5: the picture type corresponding to the current block is determined, and the first candidate prediction mode list is determined according to the picture type corresponding to the current block. For example, if the picture type corresponding to the current block is the B type or the P type, at least one of the DC mode, the horizontal mode, the vertical mode and some angular modes may be added to the first candidate prediction mode list. For another example, if the picture type corresponding to the current block is the I type, at least one of the DC mode, the horizontal mode and the vertical mode may be added to the first candidate prediction mode list.

It should be noted that the above Manner 1 to Manner 5 may be used separately or may be used in any combination as the manner for determining the first candidate prediction mode list.

In some embodiments, the above-mentioned first candidate prediction mode list includes at least one of a candidate intra prediction mode list and a candidate inter prediction mode list. Herein, the candidate intra prediction mode list includes at least one candidate intra prediction mode, and the candidate inter prediction mode list includes at least one candidate inter prediction mode.

According to the above manners, after obtaining the candidate prediction mode list of the current block, Q prediction modes are determined according to the first candidate prediction mode list, for example, all or a part of the first candidate prediction modes included in the first candidate prediction mode list are determined as all or a part of the Q prediction modes.

The process of determining the prediction mode corresponding to the weight derivation mode is introduced below.

In the embodiments of the present disclosure, the prediction mode corresponding to the weight derivation mode is a general term, for example, it may be a prediction mode corresponding to a preset weight derivation mode, or a prediction mode corresponding to several preset weight derivation modes. In some embodiments, the prediction mode corresponding to the weight derivation mode may also be understood as a prediction mode list corresponding to the weight derivation mode, and the prediction mode list includes at least one prediction mode.

In some embodiments, the above-mentioned prediction mode corresponding to the weight derivation mode includes a prediction mode corresponding to at least one weight derivation mode of the P weight derivation modes. At this time, determining the prediction mode corresponding to the weight derivation mode includes: determining the prediction mode corresponding to a p-th weight derivation mode for the p-th weight derivation mode of the P weight derivation modes, and determining the above-mentioned prediction mode corresponding to the weight derivation mode according to the prediction mode corresponding to at least one weight derivation mode of the P weight derivation modes, where p is a positive integer.

In the embodiments of the present disclosure, the process of determining the prediction mode corresponding to each of P weight derivation modes is basically the same. For the sake of description, the p-th weight derivation mode of the P weight derivation modes is taken as an example for explanation below.

Herein, determining the prediction mode corresponding to the p-th weight derivation mode includes the following two manners.

Manner 1: if at least one of prediction modes corresponding to the p-th weight derivation mode is the intra prediction mode, an angle index is determined according to the p-th weight derivation mode; the intra prediction mode corresponding to the angle index is determined to be the at least one of the prediction modes corresponding to the p-th weight derivation mode.

Herein, the angle index is used to indicate a dividing line angle index of the weight.

In some embodiments, the angle index is represented by a field angleIdx.

The above Table 2 shows a correspondence between merge_gpm_partition_idx and angleIdx. Referring to the above Table 2, the angle index may be derived according to the p-th weight derivation mode.

In the present disclosure, there is a correspondence between the angle index and the intra prediction mode, that is, different angle indices correspond to different intra prediction modes.

Exemplarily, the correspondence between the angle index and the intra prediction mode is shown in Table 7:

Table 7

| angleIdx | Intra prediction mode |
|----------|----------------------|
| 0 | 50 |
| 2 | 42 |
| 3 | 38 |
| 4 | 34 |
| 5 | 30 |
| ... | ... |

In this Manner 1, taking K=2 as an example, if the first prediction mode or the second prediction mode is the intra prediction mode, the angle index is determined according to the p-th weight derivation mode. For example, according to the above Table 2, the angle index corresponding to the p-th weight derivation mode is derived. Next, in the above Table 7, the intra prediction mode corresponding to the angle index is determined. For example, the angle index is 2, and its corresponding intra prediction mode is 42, and then the intra prediction mode 42 is determined as the first prediction mode or the second prediction mode.

Manner 2: if at least one of the prediction modes corresponding to the p-th weight derivation mode is the intra prediction mode, the intra prediction mode corresponding to the p-th weight derivation mode is determined; and at least one of the intra prediction modes corresponding to the p-th weight derivation mode is determined as at least one of the prediction modes corresponding to the p-th weight derivation mode.

Herein, the intra prediction mode corresponding to the p-th weight derivation mode includes at least one of an intra prediction mode in which the prediction direction is parallel to the dividing line of the weight, an intra prediction mode in which the prediction direction is perpendicular to the dividing line, and a planar mode.

It should be noted that the intra prediction mode in which the prediction direction is parallel to the dividing line of the weight includes one or more intra prediction modes in which the prediction direction is parallel or approximately parallel to the dividing line of the weight. The intra prediction mode in which the prediction direction is perpendicular to the dividing line of the weight includes one or more intra prediction modes in which the prediction direction is perpendicular or approximately perpendicular to the dividing line of the weight.

In this Manner 2, taking K=2 as an example, if the first prediction mode and/or the second prediction mode is the intra prediction mode, the first prediction mode and/or the second prediction mode is determined from the intra prediction modes corresponding to the weight derivation mode. For example, the first prediction mode and/or the second prediction mode may be an intra prediction mode that is in the same line as or is approximately in the same line as the weight partition line (also referred to as the dividing line). Or, the first prediction mode and/or the second prediction mode may be an intra prediction mode in which the prediction direction is perpendicular or approximately perpendicular to the weight dividing line. For example, if the dividing line of the weight is in the horizontal direction, such as the modes of the GPM with indices of 18, 19, 50, and 51 as in FIG. 4, the first prediction mode and/or the second prediction mode is the mode 18 in the horizontal direction or the mode 50 in the vertical direction.

According to the above steps, the decoder side determines the prediction modes corresponding to at least one weight derivation mode of the P weight derivation modes, and then determines the prediction mode corresponding to the weight derivation mode according to the prediction modes corresponding to at least one weight derivation mode of the P weight derivation modes. For example, all or a part of the prediction modes corresponding to at least one weight derivation mode of the P weight derivation modes is used as the prediction mode corresponding to the weight derivation mode.

Furthermore, there may be repeated prediction modes among the prediction modes corresponding to the P weight derivation modes, and then the repeated prediction modes are deleted, and the remaining different prediction modes are determined as the prediction mode corresponding to the weight derivation mode.

In the embodiments of the present disclosure, in order to reduce the number of R second combinations, the prediction modes are screened, specifically, by determining Q prediction modes according to the above method.

In some embodiments, in order to reduce the complexity of the decoder side, the number of the above-mentioned Q prediction modes is limited. For example, Q is less than or equal to a first preset threshold. The present disclosure does not limit the specific value of the first preset threshold, which may be determined according to actual needs. For example, the first preset threshold is 6, that is, 6 prediction modes are selected to construct R second combinations, to control the number of second combinations.

In some embodiments, the size of Q is related to the size and/or the shape of the current block, where the shape of the current block may be understood to be determined by a length-width ratio of the current block.

During prediction, for a smaller block, similar prediction modes have little difference in their impact on prediction results. For a larger block, similar prediction modes have the more obvious difference in their impact on prediction results. Based on this, the embodiments of the present disclosure set different Q values for blocks with different sizes, that is, a larger Q value is set for a larger block, and a smaller Q value is set for a smaller block.

At this time, when determining the Q value corresponding to the current block, the Q value is set according to the size of the current block. For example, if the size of the current block is greater than a first numerical value, Q is greater than or equal to a second preset threshold. For another example, if the size of the current block is less than or equal to the first numerical value, Q is less than a third preset threshold. The embodiments of the present disclosure do not limit the specific sizes of the first numerical value, the second prediction threshold and the third preset threshold, where the third preset threshold is smaller than the second preset threshold.

The process of determining the P weight derivation modes in S102-A11-1 is introduced below.

In the embodiments of the present disclosure, manners of determining the P weight derivation modes include at least the following manners.

Manner 1: P weight derivation modes are selected from preset M weight derivation modes, where M is a positive integer greater than or equal to P.

The embodiments of the present disclosure do not limit the above-mentioned preset M weight derivation modes.

In some embodiments, the GPM includes 64 weight derivation modes and the AWP includes 56 weight derivation modes. In this embodiment, the above-mentioned preset M weight derivation modes include at least one weight derivation mode of the 64 weight derivation modes included in the GPM, or include at least one weight derivation mode of the 56 weight derivation modes included in the AWP.

In some embodiments, the M weight derivation modes of the embodiments of the present disclosure may support more angleIdxs, or angleIdxs different from those of VVC. For another example, the M weight derivation modes of the embodiments of the present disclosure may support more distanceIdxs, or distanceIdxs different from those of VVC.

In some embodiments, the above-mentioned preset M weight derivation modes may be derived from preset weight derivation modes.

For example, the embodiments of the present disclosure use the weight derivation modes corresponding to the AWP to determine the M weight derivation modes. Optionally, in the embodiments of the present disclosure, other manners may be used to derive the M weight derivation modes.

In some embodiments, if M is equal to P, the M weight derivation modes are determined as the P weight derivation modes.

In some embodiments, if M is greater than P, in order to further reduce the number of the R second combinations, the preset M weight derivation modes are screened, and P weight derivation modes may be selected from the preset M weight derivation modes, to construct the R second combinations.

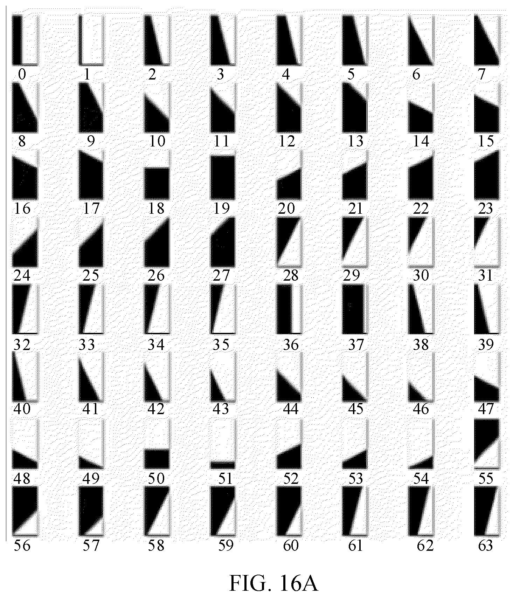

In some embodiments, weight derivation modes corresponding to a preset partition angle and/or a preset offset are deleted from the M weight derivation modes, to obtain the P weight derivation modes. Since a same partition angle in the weight derivation mode may correspond to a plurality of offsets, as shown in FIG. 16A, weight derivation modes 10, 11, 12 and 13 have the same partition angle but different offsets, as such, some weight derivation modes corresponding to preset offsets may be deleted, and/or some weight derivation modes corresponding to preset partition angles may also be deleted. In this way, the total number of possible second combinations may be reduced. In addition, it makes differences between various possible second combinations more obvious.

In some embodiments, screening conditions corresponding to different blocks may be different. In this way, when determining the P weight derivation modes corresponding to the current block, a screening condition corresponding to the current block is first determined, and the P weight derivation modes are selected from the M weight derivation modes according to the screening condition corresponding to the current block.

In some embodiments, the screening condition corresponding to the current block includes a screening condition corresponding to the size of the current block and/or a screening condition corresponding to the shape of the current block. When predicting, for a smaller block, similar weight derivation modes have little difference in their impact on prediction results, while for a larger block, similar weight derivation modes have a more obvious difference in their impact on prediction results. Based on this, the embodiments of the present disclosure set different P values for blocks with different sizes, that is, a larger P value is set for a larger block, and a smaller P value is set for a smaller block.

In some embodiments, the above screening condition includes an array, the array includes M elements, there is a one-to-one correspondence between the M elements and the M weight derivation modes, and the element corresponding to each weight derivation mode is used to indicate whether the weight derivation mode is available, where whether the weight derivation mode is available may be understood as whether the weight derivation mode is used to constitute one of the P weight derivation modes for a subsequent try of the second combination.

The above-mentioned array may be a one-dimension value or a two-dimension value.

Exemplarily, taking the GPM as an example, the number of the M weight derivation modes is 64, and an array containing 64 elements is set, and a value of each element represents whether its corresponding weight derivation mode is available. Taking a one-bit value as an example, a specific example is as follows, an array of g_sgpm_splitDir is set:

```
g_sgpm_splitDir[64] = {
1, 1, 1, 0, 1, 0, 1, 0,
1, 0, 1, 0, 1, 0, 1, 0,
1, 0, 1, 1, 1, 0, 1, 0,
1, 0, 1, 0, 1, 0, 1, 0,
0, 0, 0, 0, 1, 1, 0, 1,
0, 0, 1, 0, 0, 1, 0, 0,
1, 0, 1, 1, 0, 1, 0, 0,
1, 0, 0, 1, 0, 0, 1, 0
};
```

where the value of g_sgpm_splitDir[x] of 1, represents that the weight derivation mode with the index x is available, and 0 represents that the weight derivation mode with the index x is unavailable.

In some embodiments, if the screening condition corresponding to the current block includes a screening condition corresponding to the size of the current block and a screening condition corresponding to the shape of the current block, and for the same weight derivation mode, if the screening condition corresponding to the size of the current block and the screening condition corresponding to the shape of the current block both represent that the weight derivation mode is available, then this weight derivation mode is determined to be one of the P weight derivation modes; if at least one of the screening condition corresponding to the size of the current block and the screening condition corresponding to the shape of the current block represents that the weight derivation mode is unavailable, then it is determined that this weight derivation mode does not constitute the P weight derivation modes.

In some embodiments, screening conditions corresponding to different block sizes and screening conditions corresponding to different block shapes may be implemented by using a plurality of arrays, respectively.

In some embodiments, the screening conditions corresponding to different block sizes and the screening conditions corresponding to different block shapes may be implemented by using a two-dimension array, that is, a two-dimension array includes both the screening condition corresponding to the block sizes and the screening condition corresponding to the block shape.

Exemplarily, the screening condition corresponding to a block with a size A and a shape B is as follows, and the screening condition is represented by a two-dimension array:

```
g_sgpm_splitDir[64] = {
(1, 1), (1, 1), (1, 1), (1, 0), (1, 0), (0, 0), (1, 0), (1, 1),
(1, 1), (0, 0), (1, 1), (1, 0), (1, 0), (0, 0), (1, 0), (1, 1),
(0, 1), (0, 0), (1, 1), (0, 0), (1, 0), (0, 0), (1, 0), (0, 0),
(1, 1), (0, 0), (0, 1), (1, 0), (1, 0), (1, 0), (1, 0), (0, 0),
(0, 0), (0, 0), (1, 1), (0, 0), (1, 1), (1, 1), (1, 0), (0, 1),
(0, 0), (0, 0), (1, 1), (0, 0), (1, 0), (0, 0), (1, 0), (0, 0),
(1, 0), (0, 0), (1, 1), (1, 0), (1, 0), (1, 0), (0, 0), (0, 0),
(1, 1), (0, 0), (1, 1), (0, 0), (0, 0), (1, 0), (1, 1), (0, 0)
};
```

where both values of g_sgpm_splitDir[x] of 1, represent that the weight derivation mode with the index x is available, and one of the values of g_sgpm_splitDir[x] of 0, represents that the weight derivation mode with the index x is not available. For example, g_sgpm_splitDir[4] = (1, 0), represents that the weight derivation mode 4 is available for the block size of A, but is not available for the block shape of B. Therefore, if the block size is A and the block shape is B, the weight derivation mode is not available.

It should be noted that the the above takes the GPM including 64 weight derivation modes as an example, but weight derivation modes of the embodiments of the present disclosure include but are not limited to the 64 weight derivation modes included in the GPM and the 56 weight derivation modes included in the AMP.

After the decoder side determines the Q prediction modes and the P weight derivation modes according to the above steps, the decoder side constitutes R different second combinations according to the Q prediction modes and the P weight derivation modes. Next, the first candidate combination list is determined according to the R second combinations, and then the first weight derivation mode and the K first prediction modes are determined from the first candidate combination list.

In some embodiments, in order to further improve the speed of constructing the first candidate combination list, the decoder side screens the above determined Q prediction modes and P weight derivation modes again. At this time, constituting the R second combinations according to the determined P weight derivation modes and Q prediction modes in the above S102-A11-2, includes the following steps S102-A11-21 to S102-A11-23.

S102-A11-21, selecting S weight derivation modes from the P weight derivation modes, where S is a positive integer less than or equal to P.

Specifically, weight derivation modes with a low probability of occurrence are deleted from the above determined P weight derivation modes, to obtain the screened S weight derivation modes.

Herein, manners for selecting the S weight derivation modes from the P weight derivation modes in the above S102-A11-21 include but are not limited to the following manners.

Manner 1, for an i-th weight derivation mode of the P weight derivation modes, weights of K second prediction modes on the template are determined according to the i-th weight derivation mode, the K second prediction modes are any K prediction modes of the Q prediction modes, and i is a positive integer from 1 to P; if the weight of any prediction mode of the K prediction modes on the template is less than a first preset value, then the i-th weight derivation mode is deleted from the P weight derivation modes, to obtain the S weight derivation modes.

In this Manner 1, if the weights of the template derived by a weight derivation mode make a certain prediction mode have little impact on the template, or has no impact on the template, then this weight derivation mode will not be used. For example, For the weight derivation mode 52 (a square block) in FIG. 4, this weight derivation mode makes the weight of the second prediction mode on the template very small. For another example, the weight derivation mode 54 makes the weight of the second prediction mode on the template be 0. That is, it may be considered that in the weight derivation mode 54, the second prediction mode has no impact on the template, and the prediction value of the template is entirely determined by the first prediction mode. In this case, whatever the second prediction model is, there is no impact, and this weight derivation mode needs to be deleted from the P weight derivation modes.

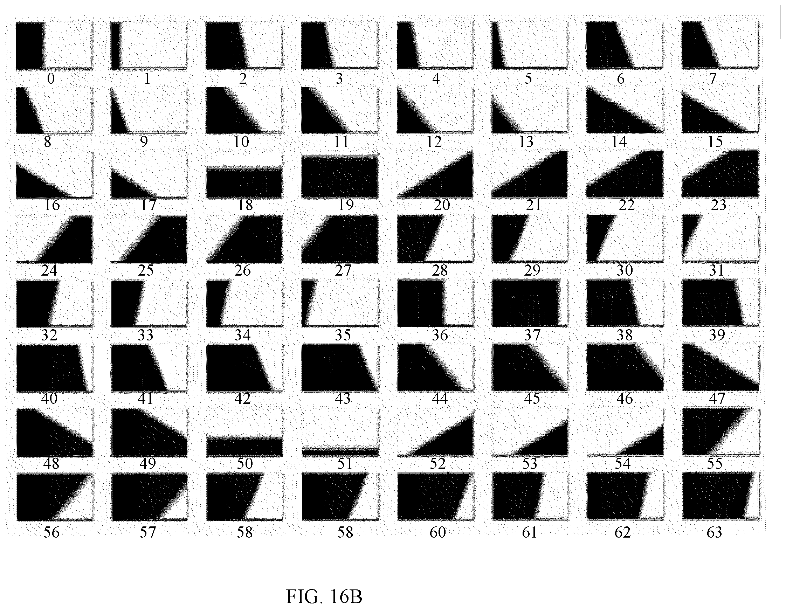

It should be noted that the same weight derivation mode for blocks with different shapes may make the impact of the two prediction modes also different. Since the current block may be a square or a rectangle, the length may be larger than the width or the width may be larger than the length, and the ratio may be 1:2, 1:4, etc. FIG. 16A and FIG. 16B show the weight derivation modes of the GPM on a 32X64 block and a 64X32 block. It can be seen that intersection points of dividing lines and block boundaries in the same weight derivation mode under different shapes are not the same. Because the block shape changes but the angle of the dividing line does not change according to the block shape. As shown in FIG. 16A, for the weight derivation mode with the index of 52, in the 32X64 block, the dividing line of the weight derivation mode with the index of 52 is extended toward the template area of the current block to intersect with the template area, so that the weight of the second prediction mode on the template is not less than the preset value, which means that the second prediction mode has an impact on the template. However, as shown in FIG. 16B, for the weight derivation mode with the same index of 52, in the 64X32 block, the dividing line of the weight derivation mode with the index of 52 is extended toward the template area of the current block to not intersect with the template area, so that the weight of the second prediction mode on the template is 0, which means that the second prediction mode has no impact on the template.

In the above Manner 1, the weight derivation mode that makes the weight of any one prediction mode of the K prediction modes on the template less than the first preset value, is deleted among the P weight derivation modes, to obtain the S weight derivation modes.

The embodiments of the present disclosure do not limit the specific value of the above-mentioned first preset value, for example, it is a small value greater than or equal to 0.

Manner 2, for the i-th weight derivation mode of the P weight derivation modes, a cost of predicting the template by using the i-th weight derivation mode is determined, where i is a positive integer from 1 to P; S weight derivation modes are selected from the P weight derivation modes according to the cost corresponding to the i-th weight derivation mode.

In this Manner 2, the S weight derivation modes are selected from the P weight derivation modes by calculating the cost corresponding to each weight derivation mode of the P weight derivation modes.

In the embodiments of the present disclosure, the weight derivation mode and K prediction modes are taken as a combination to calculate the cost. Thus, for the convenience of calculation, costs of P weight derivation modes are calculated based on the given K prediction modes. That is, the P weight derivation modes are respectively combined with the given K prediction modes to obtain P combinations, and the cost corresponding to each combination of the P combinations is calculated, to obtain the costs of the P weight derivation modes.

For example, assuming that the given K prediction modes are a prediction mode 1 and a prediction mode 2, for the i-th weight derivation mode of the P weight derivation modes, the i-th weight derivation mode and the prediction mode 1 and the prediction mode 2 constitute a combination, denoted as a combination i. The combination i is used to predict the template of the current block, to obtain the prediction value of the template under the combination i, a prediction distortion cost corresponding to the combination i is determined according to the prediction value of the template and a reconstructed value of the template under the combination i, and the prediction distortion cost corresponding to the combination i is determined as the cost corresponding to the i-th weight derivation mode. In this way, the cost corresponding to any one of the P weight derivation modes may be determined.

According to the above method, after determining the cost corresponding to the i-th weight derivation mode of the P weight derivation modes, S weight derivation modes are selected from the P weight derivation modes according to the cost corresponding to the i-th weight derivation mode.

In this Manner 2, selecting, by the decoder side, the S weight derivation modes from the P weight derivation modes according to the cost corresponding to the i-th weight derivation mode, includes the following manners.

A first manner: if the cost corresponding to the i-th weight derivation mode is less than a second preset value, a weight derivation mode similar to the i-th weight derivation mode is selected from the P weight derivation modes; S weight derivation modes are determined according to the i-th weight derivation mode and the weight derivation mode similar to the i-th weight derivation mode. Herein, the weight derivation mode similar to the i-th weight derivation mode may be understood as a weight derivation mode with a prediction result similar to the prediction result of the i-th weight derivation mode, for example, the weight derivation mode similar to the i-th weight derivation mode includes a weight derivation mode with a partition angle similar to the partition angle of the i-th weight derivation mode, and/or a weight derivation mode with an offset similar to the offset of the i-th weight derivation mode, where the offset of the weight derivation mode may also be understood as an intercept of the dividing line of the weight derivation mode on the boundary of the current block.

Exemplarily, the above-mentioned similar partition angles may include the same partition angles and different offsets, such as for the weight derivation mode 11 and the weight derivation mode 13 in FIG. 4, and may also include the same partition angles and similar offsets, such as for the weight derivation mode 11 and the weight derivation mode 12 in FIG. 4, and may also include the similar partition angles and different offsets, such as for the weight derivation mode 9 and the weight derivation mode 11 in FIG. 4, and may also include the similar partition angles and similar offsets, etc., such as for the weight derivation mode 9 and the weight derivation mode 12 in FIG. 4.

Exemplarily, the above similar offsets may include the similar offsets and same partition angles, such as for the weight derivation mode 29 and the weight derivation mode 30 in FIG. 4, and also include the same or similar offsets and similar partition angles, such as for the weight derivation mode 2 and the weight derivation mode 38 in FIG. 4.

In some embodiments, the weight derivation mode similar to the i-th weight derivation mode may be understood as a weight derivation mode with an index similar to the index of the i-th weight derivation mode.

In this first manner, if the cost corresponding to the i-th weight derivation mode is less than the second preset value, it means that when the i-th weight derivation mode is used to predict the current block, a better prediction effect may be achieved. At this time, the i-th weight derivation mode is selected from the P weight derivation modes, to construct the subsequent R second combinations. In addition, since the weight derivation mode similar to the i-th weight derivation mode has a characteristic similar to the i-th weight derivation mode, the weight derivation mode similar to the i-th weight derivation mode is selected from the P weight derivation modes, to construct the subsequent R second combinations. Next, a weight derivation mode is selected from the remaining weight derivation modes of the P weight derivation modes as a new i-th weight derivation mode, and the above steps are repeated to obtain the S weight derivation modes.

The embodiments of the present disclosure do not limit the size of the above-mentioned second preset value, which is determined according to actual needs, specifically.

In some embodiments, the decoder side may also select the S weight derivation modes from the P weight derivation modes according to a second manner below.

The second manner: if the cost corresponding to the i-th weight derivation mode is greater than a third preset value, the i-th weight derivation mode and a weight derivation mode similar to the i-th weight derivation mode are deleted from the P weight derivation modes, to obtain at least one weight derivation mode remained after deleting; and the S weight derivation modes are determined according to the at least one weight derivation mode remained after deleting.

In this second manner, if the cost corresponding to the i-th weight derivation mode is less than the third preset value, it means that when the i-th weight derivation mode is used to predict the current block, a better prediction effect may not be achieved. At this time, the i-th weight derivation mode is deleted from the P weight derivation modes. In addition, since the weight derivation mode similar to the i-th weight derivation mode has a characteristic similar to the i-th weight derivation mode, the weight derivation mode similar to the i-th weight derivation mode is also deleted from the P weight derivation modes, to obtain a set of weight derivation modes remained after deleting. Next, a weight derivation mode is selected from the set of weight derivation modes remained after deleting as a new i-th weight derivation mode, and the above steps are repeated, and weight derivation modes included in the set of the weight derivation modes finally obtained are determined to be the S weight derivation modes.

The embodiments of the present disclosure do not limit the size of the third preset value, which is determined according to actual needs, specifically. The third preset value is greater than the second preset value mentioned above.

According to the above steps, after the decoder side screens the S weight derivation modes from the P weight derivation modes, the decoder side performs the following step S102-A11-22.

S102-A11-22, selecting T prediction modes from the Q prediction modes, where T is a positive integer less than or equal to Q.

The embodiments of the present disclosure do not limit the manner of selecting the T prediction modes from the Q prediction modes.

In some embodiments, preset T prediction modes are selected from the Q prediction modes.

In some embodiments, for an i-th prediction mode of the Q prediction modes, the decoder side determines the cost of predicting the templating by using the i-th prediction mode, where i is a positive integer from 1 to Q; and selects the T prediction modes from the Q prediction modes according to the cost corresponding to the i-th prediction mode.

In the embodiments of the present disclosure, the weight derivation mode and K prediction modes are taken as a combination to calculate the cost. Thus, for the convenience of calculation, the costs of the Q weight derivation modes are calculated based on a given weight derivation mode and other K-1 prediction modes. That is, the Q prediction modes are respectively combined with the given weight derivation mode and the K-1 prediction modes, to obtain Q combinations, and the cost corresponding to each of the Q combinations is calculated, to obtain the costs of the Q prediction modes.

For example, assuming that the given K-1 prediction modes are a prediction mode 1, and the given weight derivation mode is a weight derivation mode 1, for the i-th prediction mode of the Q prediction modes, the weight derivation mode 1, and the i-th prediction mode and the prediction mode 1 constitute a combination, denoted as a combination i. The combination i is used to predict the template of the current block, to obtain the prediction value of the template under the combination i, a prediction distortion cost corresponding to the combination i is determined according to the prediction value of the template and a reconstructed value of the template under the combination i, and the prediction distortion cost corresponding to the combination i is determined as the cost corresponding to the i-th prediction mode. In this way, the cost corresponding to any one of the Q prediction modes may be determined.

According to the above method, after the cost corresponding to the i-th prediction mode of the Q prediction modes is determined, the T prediction modes are selected from the Q prediction modes according to the cost corresponding to the i-th prediction mode.

Herein, selecting, by the decoder side, the T prediction modes from the Q prediction modes according to the cost corresponding to the i-th prediction mode, includes the following manners.

A first manner: if the cost corresponding to the i-th prediction mode is less than a fourth preset value, a prediction mode similar to the i-th prediction mode is selected from the Q prediction modes; and the T prediction modes are determined according to the i-th prediction mode and the prediction mode similar to the i-th prediction mode. Herein, the prediction mode similar to the i-th prediction mode may be understood as a prediction mode with a prediction result similar (or close) to the prediction reception of the i-th prediction mode, for example, a prediction mode with a prediction direction (or angle) close to the prediction direction (or angle) of the i-th prediction mode, or a prediction mode with a prediction mode index close to the index of the i-th prediction mode, such as a prediction mode with an index larger than the index of the i-th prediction mode by 1, 2, etc., or a prediction mode with an index smaller than the index of the i-th prediction mode by 1, 2, etc.

In this first manner, if the cost corresponding to the i-th prediction mode is less than the fourth preset value, it means that when the i-th prediction mode is used to predict the current block, a better prediction effect may be achieved. At this time, the i-th prediction mode is selected from the Q prediction modes, to construct the subsequent R second combinations. In addition, since the prediction mode similar to the i-th prediction mode has a characteristic similar to the i-th prediction mode, the prediction mode similar to the i-th prediction mode is selected from the Q prediction modes, to construct the subsequent R second combinations. Next, a prediction mode is selected from the remaining prediction modes of the Q prediction modes as a new i-th prediction mode, and the above steps are repeated, thereby obtaining T prediction modes.

The embodiments of the present disclosure do not limit the size of the fourth preset value, which is determined according to actual needs, specifically.

A second manner: if the cost corresponding to the i-th prediction mode is greater than a fifth preset value, the i-th prediction mode and a prediction mode similar to the i-th prediction mode are deleted from the Q prediction modes, to obtain at least one prediction mode remained after deleting; and T prediction modes are determined according to the at least one prediction mode remained after deleting.

In this second manner, if the cost corresponding to the i-th prediction mode is greater than the fifth preset value, it means that when the i-th prediction mode is used to predict the current block, a better prediction effect may not be achieved. At this time, the i-th prediction mode is deleted from the Q prediction modes. In addition, since the prediction mode similar to the i-th prediction mode has a characteristic similar to the i-th prediction mode, the prediction mode similar to the i-th prediction mode is also deleted from the Q prediction modes, to obtain a set of prediction modes remained after deleting. Next, a prediction mode is selected from the set of prediction modes remained after deleting as a new i-th prediction mode, and the above steps are repeated, and prediction modes included in the set of the prediction mode finally obtained are determined to be the T prediction modes.

The embodiments of the present disclosure do not limit the size of the fifth preset value, which is determined according to actual needs, specifically. The fifth preset value is greater than the fourth preset value mentioned above.

According to the above steps, the S weight derivation modes are selected from the P weight derivation modes, and the T prediction modes are selected from the Q prediction modes. Then, the following S102-A11-23 is performed.

S102-A11-23, constituting the R second combinations according to the S weight derivation modes and the T prediction modes.

Specifically, a weight derivation mode is selected from the S weight derivation modes, and K prediction modes are selected from the T prediction modes. This weight derivation mode and the K prediction modes constitute a second combination. By repeating this step, R second combinations may be obtained.

It can be seen from the above that a second combination includes a weight derivation mode and K prediction modes. In this way, when screening the prediction modes, possible options of another element may be limited when K elements in a combination are fixed. For example, when K=2, possible vs of another element may be limited in a case where it is used in combination with two of the elements.

An implementation process of the above S102-A11-2 is introduced, by taking an example of the screening process of another prediction mode when the weight derivation mode and a prediction mode are fixed.

In some embodiments, the above S102-A11-2 includes: for the i-th weight derivation mode of the P weight derivation modes, determining the cost of predicting the template by using the i-th weight derivation mode and a j-th prediction mode of the Q prediction modes; if a cost corresponding to a combination of the i-th weight derivation mode and the j-th prediction mode is greater than a sixth preset value, deleting the j-th prediction mode and a prediction mode similar to the j-th prediction mode from the Q prediction modes, to obtain at least one prediction mode remained after deleting; constructing R second combinations according to the i-th weight derivation mode and the at least one prediction mode remained after deleting.

In this embodiment, when the weight derivation mode and one prediction mode are fixed, another prediction mode is screened. For example, if a certain intra prediction mode cannot obtain a relatively small cost as the first prediction mode under a certain weight derivation mode, the case of an intra prediction mode similar to this intra prediction mode to be as the first prediction mode under this weight derivation mode, will no longer be tried.

Specifically, for the i-th weight derivation mode of the P weight derivation modes, it is assumed that K=2, that is, the combination includes the i-th weight derivation mode, a first prediction mode, and a second prediction mode. Assuming that the second prediction mode is set to a prediction mode 1, and the prediction mode 1 may be one of the Q prediction modes, or may be another prediction mode other than the Q prediction modes. A possible option of the first prediction mode is determined from the Q prediction modes, and specifically, the j-th prediction mode of the Q prediction modes is taken as the first prediction mode. At this time, the prediction value of the template is determined when predicting the template by a combination j constituted by the i-th weight derivation mode, the j-th prediction mode and the prediction mode 1, and the cost corresponding to the combination j is determined according to the prediction value, and the cost corresponding to the combination j is determined as the cost corresponding to the j-th prediction mode. Next, whether the cost corresponding to the j-th prediction mode is greater than the sixth preset value is judged. If the cost corresponding to the j-th prediction mode is greater than the sixth preset value, it means that using the combination constituted by the j-th prediction mode and the i-th weight derivation mode and the prediction mode 1 cannot achieve the accurate prediction of the template. At this time, the j-th prediction mode is deleted from the Q prediction modes. Since the prediction mode similar to the j-th prediction mode has a characteristic similar to the j-th prediction mode, the prediction mode similar to the j-th prediction mode is deleted from the Q prediction modes, to obtain a set of prediction modes remained after deleting. In the set of prediction modes remained after deleting, a prediction mode is re-selected as a new j-th prediction mode, and the above steps are repeated, to obtain a set of prediction modes finally remained after deleting corresponding to the i-th weight derivation mode.

According to the above steps, a set of prediction modes finally remained after deleting corresponding to each of the P weight derivation modes may be determined, so that the R second combinations may be constructed according to the P weight derivation modes and their respective corresponding sets of prediction modes finally remained after deleting.

It should be noted that the above embodiment shows the manner of screening the prediction modes in the form of the combination. Optionally, any of the weight derivation modes and the prediction modes may also be screened in the form of the combination, to finally construct the R second combinations.

After the decoder side determines the R second combinations according to the above methods, for any one of the R second combinations, the weight derivation mode and K prediction modes in the second combination are used to predict the template, to obtain the template prediction value corresponding to the second combination.

The process of predicting the template of the current block by using each second combination to obtain the prediction value of the template is introduced below.

First, weights of the template are determined by using the weight derivation mode included in the second combination.

Currently, as shown in FIG. 13 above, the template of the current block is an encoded area above the current block, or the encoded area on the left of the current block, or the encoded area on the left of the current block and the encoded area above the current block.

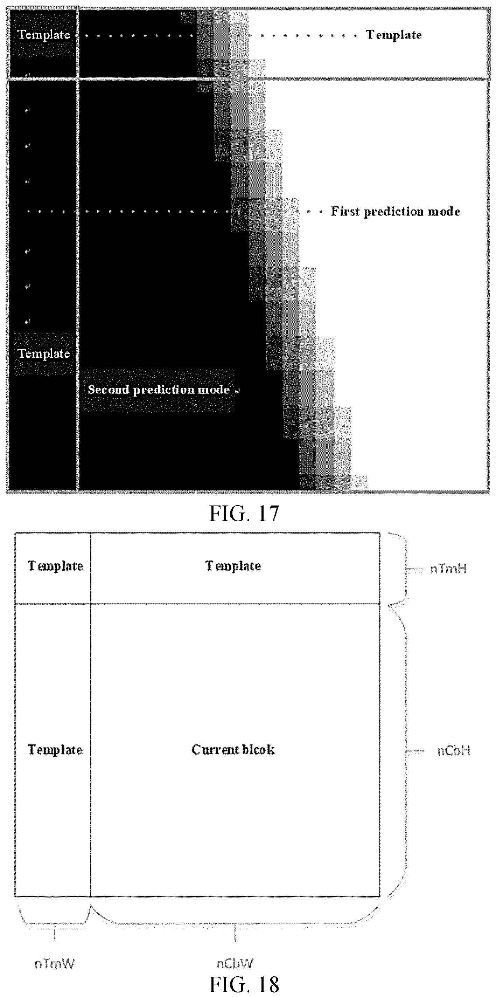

In some embodiments, the weight matrix may be directly extended towards the template area, for example, extended to the left and upward, and the weight matrix may be covered on the template, thereby determining the weights of the template. For example, as shown in FIG. 17, a small rectangular region on the upper-left region of the current block may be selected to be added to the template, and the template and the current block are put together to constitute a rectangle. Of course, only the left part and the upper part may be used as the template. As shown in FIG. 17, taking an example of adding the upper-left region herein, the region in the left, upper-left and upper with an inverted L-shaped block is the template area, and the rectangular region in the lower-right is the current block, then the weight matrix extended towards the upper-left becomes the weight matrix of the template.

In some embodiments, the processes of deriving weights of the template and deriving weights of the prediction values according to the weight derivation mode are combined, for example, the weights of the template and the weights of the prediction values are derived simultaneously. Herein, the weight of the prediction value may be understood as the weight corresponding to the prediction value. For example, the first prediction value is obtained by using the first prediction mode, and the second prediction value is obtained by using the second prediction mode. A first weight of the first prediction value is determined according to the weight derivation mode, and a second weight of the second prediction value is determined according to the weight derivation mode. A sum value of a product of the first prediction value and the first weight and a product of the second prediction value and the second weight, is determined as the prediction value of the current block.

In order to distinguish from weights of the template, the above first weight and second weight are referred to as weights of the prediction values, in the present disclosure.

In some embodiments, determining weights of the template according to the weight derivation mode includes the following steps:

step 1: determining an angle index and a distance index according to the weight derivation mode; and
step 2: determining weights of the template according to the angle index, the distance index and a size of the template.

The present disclosure may derive weights of the template in the same manner as deriving weights of the prediction values. For example, first, according to the weight derivation mode, the angle index and the distance index are determined, where the angle index may be understood as the dividing line angle index of each weight derived by the weight derivation mode. Exemplarily, the angle index and distance index corresponding to the weight derivation mode may be determined according to the above Table 2. For example, if the weight derivation mode is 27, the corresponding angle index is 12 and the corresponding distance index is 3. Next, the weights of the template are determined according to the angle index, the distance index and the size of the template.

In the above step 2, manners for determining the weights of the template according to the angle index, the distance index and the size of the template include but are not limited to the following manners.

Manner one: the weights of the template are directly determined according to the angle index, the distance index and the size of the template. At this time, the above step 2 includes the following steps of step 21 to step 23:

step 21, determining a first parameter of pixel points in the template according to the angle index, the distance index and the size of the template;

step 22: determining weights of the pixel points in the template according to the first parameter of pixel points in the template; and

step 23: determining the weights of the template according to the weights of the pixel points in the template.

In this implementation, the weights of the pixel points in the template are determined according to the angle index, the distance index, the size of the template and the size of the current block, and then a weight matrix constituted by the weight of each point in the template is determined as the weights of the template.

The first parameter of the present disclosure is used to determine the weights. In some embodiments, the first parameter is also referred to as a weight index.

In a possible implementation, an offset and the first parameter may be determined in the following manner.

Inputs of the template weight derivation process are: as shown in FIG. 17, the width of the current block nCbW, the height of the current block nCbH; the width of the left template nTmW, the height of the upper template nTmH; a "partition" angle index variable angleId of the GPM; a distance index variable distanceIdx of the GPM; a component index variable cIdx. Exemplarily, the present disclosure takes the luma component as an example, so the cIdx of 0 indicates the luma component.

Herein, the variables nW, nH, shift1, offset1, displacementX, displacementY, partFlip and shiftHor are derived as follows:

$$nW = ( cIdx \ == \ 0 ) \, ? \, nCbW : nCbW * SubWidthC$$

$$nH = ( cIdx \ == \ 0 ) \, ? \, nCbH : nCbH * SubHeightC$$

$$shift1 = Max( 5, 17 - BitDepth ),$$

where BitDepth is a bit depth of the coding

$$offset1 = 1 \ << \ ( shift1 - 1 )$$

$$displacementX = angleIdx$$

$$displacementY = ( angleIdx + 8 ) \% 32$$

$$partFlip = ( angleIdx \ >= \ 13 \ \&\& \ angleIdx \ <= \ 27 ) \, ? \, 0 : 1$$

shiftHor = ( angleIdx % 16 = = 8 ‖ ( angleIdx % 16 != 0 && nH >= nW ) ) ? 0 : 1

where the offsets of offsetX and offsetY are derived as follows:

- if the value of shiftHor is 0:

$$offsetX = ( -nW ) \quad >> \quad 1$$

offsetY = ( ( -nH ) >> 1 ) + ( angleIdx < 16 ? ( distanceIdx * nH ) >> 3 : -( ( distanceIdx * nH) >> 3 ) )

- otherwise (i.e., the value of shiftHor is 1):

**offsetX** = ( ( -nW ) >> 1) + ( angleIdx < 16 ? ( distanceIdx * nW ) >> 3 : -( ( distanceIdx * nW ) >> 3)

$$offsetY = ( - nH ) \quad >> \quad 1.$$

The template weight matrix wTemplateValue[x][y] (where x = -nTmW..nCbW - 1, y = -nTmH..nCbH - 1, excluding a case of both x and y greater than or equal to 0), noted that in this example, the coordinate of the upper-left corner of the current block is taken as (0, 0), is derived as follows.

**[0390]** - The variables xL and yL are derived as follows:

$$xL = ( cIdx \quad == \quad 0 ) ? x : x * SubWidthC$$

$$yL = ( cIdx \quad == \quad 0 ) ? y : y * SubHeightC.$$

Herein, the disLut is determined according to above the Table 3.

Herein, the first parameter weightIdx is derived as follows:

$$weightIdx = ( ( ( xL + offsetX ) \quad << \quad 1 ) + 1 ) * disLut[ displacementX ] + \\ ( ( ( yL + offsetY ) \quad << \quad 1 ) + 1 ) * disLut[ displacementY ].$$

According to the above method, after the first parameter weightIdx is determined, the weight at the point (x, y) in the template is determined according to the weightIdx.

In the present disclosure, manners for determining the weights of the pixel points in the template according to the first parameter of the pixel points in the template in the above step 22 include but are not limited to the following manners.

Manner 1: a second parameter of the pixel points in the template is determined according to the first parameter of the pixel points in the template; determining the weights of the pixel points in the template according to the second parameter of the pixel points in the template.

Herein, the second parameter is also used to determine the weights. In some embodiments, the above-mentioned second parameter is also referred to as a weight index under a first component, and the first component may be the luma component, the chroma component, etc.

For example, the weights of the pixel points in the template are determined according to the formula:

$$weightIdxL = partFlip ? 32 + weightIdx : 32 - weightIdx \\ wTemplateValue[x][y] = Clip3( 0, 8, ( weightIdxL + 4 ) \quad >> \quad 3 ).$$

Herein, wTemplateValue[x][y] is the weight of the point (x, y) in the template, weightIdxL is the second parameter of the point (x, y) in the template, also referred to as the weight index under the first component (such as the luma component), wTemplateValue[x][y] is the weight of the point (x, y) in the template, partFlip is an intermediate variable, and determined according to the angle index angleIdx, such as the above: partFlip = ( angleIdx >= 13 && angleIdx <= 27 ) ? 0 : 1, that is, the value of partFlip is 1 or 0, and when partFlip is 0, weightIdxL is 32 - weightIdx, and when partFlip is 1, weightIdxL is 32+weightIdx, it should be noted that 32 here is just an example, the present disclosure is not limited thereto.

Manner 2: the weights of the pixel points in the template are determined according to the first parameter of the pixel points in the template, a first threshold and a second threshold.

In order to reduce the computational complexity of the weights of the template, in Manner 2, the weights of the pixel points in the template are limited to the first threshold or the second threshold, that is, the weights of the pixel points in the template is either the first threshold or the second threshold, thereby reducing the computational complexity of the weights of the template.

The present disclosure does not limit the specific values of the first threshold and the second threshold.

Optionally, the first threshold is 1.

Optionally, the second threshold is 0.

In one example, the weights of the pixel points in the template may be determined by the following formula:

$$wTemplateValue[x][y] = (partFlip\ ?\ weightIdx: -weightIdx) > 0\ ?\ 1:0$$

Herein, wTemplateValue[x][y] is the weight of the point (x, y) in the template, and in the above "1 : 0", the 1 is the first threshold and the 0 is the second threshold.

In the above Manner one, the weight of each point in the template is determined by the weight derivation mode, and the weight matrix constituted by the weight of each point in the template is taken as the weights of the template.

Manner two: the weights of the current block and the template are determined according to the weight derivation mode. That is, in this Manner two, a merged region constituted by the current block and the template is taken as a whole, and weights of pixel points in the merged region are derived according to the weight derivation mode. Based on this, the above step 2 includes the following step 2-1 and step 2-2:

> step 2-1, determining weights of pixel points in a merged region constituted by the current block and the template according to the angle index, the distance index, the size of the template and the size of the current block; and
> step 2-2, determining weights of the template according to the size of the template and the weights of the pixel points in the merged region.

In this Manner two, the current block and the template are taken as a whole, and the weights of the pixel points in the merged region constituted by the current block and the template are determined according to the angle index, the distance index, the size of the template and the size of the current block. Then, the weights corresponding to the template in the merged region are determined as the weights of the template according to the size of the template. For example, as shown in FIG. 17, weights corresponding to the L-shaped template area in the merged region are determined as the weights of the template.

In this Manner two, in one process of determining the weights, not only the weights of the template are determined, but also the weights of the prediction values are determined, that is, after removing the weights of the template from the weights corresponding to the merged region, the remaining is the weights of the prediction values, and then the subsequent prediction process may be performed according to the weights of the prediction values, without determining the weights of the prediction values again, thereby reducing the prediction steps and improving the prediction efficiency.

The present disclosure does not limit the specific implementation of determining the weights of the pixel points in the merged region constituted by the current block and the template according to the angle index, the distance index, the size of the template and the size of the current block.

In some embodiments, determining the weights of the pixel points in the merged region in the above step 2-1 includes the following steps of step 2-11 to step 2-12:

> step 2-11, determining a first parameter of pixel points in the merged region according to the angle index, the distance index and the size of the merged region; and
> step 2-12, determining weights of the pixel points in the merged region according to the first parameter of the pixel points in the merged region.

In this implementation, the weights of the pixel points in the merged region are determined according to the angle index, the distance index, and the size of the merged region, and the weight of each point in the merged region constitutes a weight matrix.

In a possible implementation, the offset and the first parameter may be determined according to the following manner.

Inputs of the process of the weight derivation of the merged region are: as shown in FIG. 17, the width nCbW of the current block, the height nCbH of the current block; the width nTmW of the left template, the height nTmH of the upper template; the "partition" angle index variable angleId of the GPM; the distance index variable distanceIdx of the GPM; the component index variable cIdx. Exemplarily, the present disclosure takes the luma component as an example, so the cIdx of 0 represents the luma component.

The variables nW, nH, shift1, offset1, displacementX, displacementY, partFlip and shiftHor are derived as

follows:

$$nW = ( \, cIdx \; = = \;\; 0 \, ) \, ? \, nCbW : nCbW * SubWidthC$$

$$nH = ( \, cIdx \; = = \;\; 0 \, ) \, ? \, nCbH : nCbH * SubHeightC$$

$$shift1 = Max( \, 5, \, 17 - BitDepth \, ),$$

where, the BitDepth is a bit depth of the coding

$$offset1 = 1 \;\; << \;\; ( \, shift1 - 1 \, )$$

$$displacementX = angleIdx$$

$$displacementY = ( \, angleIdx + 8 \, ) \, \% \, 32$$

$$partFlip = ( \, angleIdx \;\; >= \;\; 13 \; \&\& \; angleIdx \;\; <= \;\; 27 \, ) \, ? \, 0 : 1$$

shiftHor = ( angleIdx % 16 = = 8 $\parallel$ ( angleIdx % 16 != 0 && nH >= nW ) ) ? 0 : 1

where the offsets of offsetX and offsetY are derived as follows:

- if the value of shiftHor is 0:

$$offsetX = ( \, -nW \, ) \;\; >> \;\; 1$$

offsetY = ( ( -nH ) >> 1 ) + ( angleIdx < 16 ? ( distanceIdx * nH ) >> 3 : -( ( distanceIdx * nH) >> 3 ) )

- otherwise (i.e., the value of shiftHor is 1):

**offsetX** = ( ( -nW ) >> 1 ) + ( angleIdx < 16 ? ( distanceIdx * nW ) >> 3 : -( ( distanceIdx * nW ) >> 3 )

$$offsetY = ( \, - nH \, ) \;\; >> \;\; 1.$$

The weight matrix wValueMatrix[x][y] of the pixel points in the merged region (where x = -nTmW..nCbW - 1, y = -nTmH..nCbH - 1), noted that in this example, the coordinate of the upper-left corner of the current block is taken as (0, 0), is derived as follows.
[0417] - The variables xL and yL are derived as follows:

$$xL = ( \, cIdx \;\; = = \;\; 0 \, ) \, ? \, x : x * SubWidthC$$

$$yL = ( \, cIdx \;\; = = \;\; 0 \, ) \, ? \, y : y * SubHeightC.$$

Herein, disLut is determined according to Table 3.
Herein, the first parameter weightIdx is derived as follows:

$$weightIdx = ( ( ( xL + offsetX ) \ \ << \ \ 1 ) + 1 ) * disLut[\ displacementX\ ] +$$
$$( ( ( yL + offsetY ) \ \ << \ \ 1 ) + 1 ) * disLut[\ displacementY\ ].$$

According to the above method, after the first parameter weightIdx is determined, the weight at the point (x, y) in the merged region is determined according to the weightIdx.

In the present disclosure, manners for determining the weights of the pixel points in the merged region according to the first parameter of the pixel points in the merged region in the above step 2-12 include but are not limited to the following manners.

Manner 1: a second parameter of the pixel points in the merged region are determined according to the first parameter of the pixel points in the merged region; determining the weights of the pixel points in the merged region according to the second parameter of the pixel points in the merged region.

For example, the weights of the pixel points in the merged region are determined according to the formula:

$$weightIdx = ( ( ( xL + offsetX ) \ \ << \ \ 1 ) + 1 ) * disLut[\ displacementX\ ] +$$
$$( ( ( yL + offsetY ) \ \ << \ \ 1 ) + 1 ) * disLut[\ displacementY\ ]$$

$$weightIdxL = partFlip\ ?\ 32 + weightIdx\ :\ 32 - weightIdx$$

$$wValueMatrix\ [x][y] = Clip3(\ 0,\ 8,\ (\ weightIdxL + 4 )\ \ >> \ \ 3\ ).$$

Herein, wValueMatrix [x][y] is the weight of the point (x, y) in the merged region, weightIdxL is the second parameter of the point (x, y) in the merged region, and wTemplateValue[x][y] is the weight of the point (x, y) in the merged region.

Manner 2: the weights of the pixel points in the merged region are determined according to the first parameter of the pixel points in the merged region, a first threshold and a second threshold.

Exemplarily, the weights of the pixel points in the merged region are the first threshold or the second threshold.

In order to reduce the computational complexity of the weights of the merged region, in Manner 2, the weights of the pixel points in the merged region are limited to the first threshold or the second threshold, that is, the weights of the pixel points in the merged region is either the first threshold or the second threshold, thereby reducing the computational complexity of the weights of the merged region.

The present disclosure does not limit the specific values of the first threshold and the second threshold.

Optionally, the first threshold is 1.

Optionally, the second threshold is 0.

In one example, the weights of the pixel points in the merged region may be determined by the following formula:

$$wTemplateValue[x][y] = (partFlip\ ?\ weightIdx:\ - weightIdx) > 0\ ?\ 1\ :\ 0$$

Herein, wValueMatrix [x][y] is the weight of the point (x, y) in the merged region, and in the above "1 : 0", the 1 is the first threshold and the 0 is the second threshold.

In the above Manner two, the weight of each point in the merged region constituted by the current block and the template is determined by the weight derivation mode, and then, the weights corresponding to the template in the merged region are determined as the weights of the template according to the size of the template. In this Manner two, the weights of the prediction values are determined simultaneously, without performing the subsequent step of determining the weights of the prediction values, thereby reducing the prediction step and improving the prediction efficiency.

According to the above method, after determining the weights of the template corresponding to the weight derivation mode included in the second combination, the K prediction modes in the second combination are used to predict the template, to obtain K prediction values, and the K prediction values are weighted according to the weights of the template, to obtain the prediction value of the template.

Herein, the prediction value of the template may be understood as a matrix constituted by the prediction values of the pixel points in the template.

In some embodiments, the above prediction value is also referred to as a prediction sample.

Next, the cost of the second combination is determined according to the prediction value and the reconstructed value of the template.

The above manners for determining the cost of the second combination include but are not limited to the following manners.

Manner one: the cost of the second combination is determined in a matrix manner. Specifically, a loss is determined according to the prediction value and reconstructed value of the template, and the loss is denoted as a first loss, since the prediction value and the reconstructed value of the above-mentioned template are matrices, the obtained first loss is also a matrix. For example, an absolute value of a difference value between the prediction value and the reconstructed value of the template is determined as the first loss, and the first loss is determined as the cost of the second combination.

Manner two: the cost of the second combination is determined in a manner of calculating point-by-point.

Specifically, for an i-th pixel point in the template, when determining the prediction of the i-th pixel point in each of the K prediction modes in the second combination, a template weight corresponding to the i-th pixel point in the weights of the template is determined, and the prediction value of the i-th pixel point is obtained according to the template weight of the i-th pixel point and the K prediction values of the i-th pixel point. The cost of the second combination at the i-th pixel point is obtained according to the prediction value and the reconstructed value of the i-th pixel point. According to this method, the prediction distortion cost of the second combination at each pixel point in the template may be determined. Finally, an accumulated sum of the prediction distortion cost of the second combination at each pixel point in the template is determined as the cost of the second combination.

According to the above method, the cost of each second combination of the R second combinations may be determined.

Next, the first candidate combination list is constructed according to the costs of respective second combinations of the R second combinations.

For example, the R second combinations are sorted in order of sizes of the costs of the second combinations from small to large, and the sorted R second combinations are determined as the first candidate combination list.

For another example, N second combinations with the smallest costs are selected from the R second combinations according to sizes of the costs of the second combinations, to constitute the first candidate combination list.

Optionally, N is 8 or 16 or 32, etc.

According to the above method, the first candidate combination list is determined, and first candidate combinations in the first candidate combination list are sorted in order of sizes of the costs from small to large. Exemplarily, the first candidate combination list is shown in the above Table 6.

In this way, the decoder side looks up a first candidate combination corresponding to the first index in the first candidate combination list shown in Table 6 according to the first index, and determines the first candidate combination corresponding to the first index as the first combination, that is, determines a weight derivation mode included in the first candidate combination as the first weight derivation mode, and determines K prediction modes included in the first candidate combination as the K first prediction modes.

In the above Case 1, the implementation process of the above S102 is introduced by taking an example where the first combination includes the first weight derivation mode and K first prediction modes.

Case 2: the first combination includes the first weight derivation mode, K first prediction modes and a second blending parameter.

As shown in FIG. 4 and FIG. 5, there is a blending region near the weight partition line, i.e., the gray region in FIG. 4 and FIG. 5. The blending region corresponds to a blending parameter, that is, the blending parameter is used to represent the blending region in the weight map. In some cases, the weight may be affected by the blending parameter. Therefore, in the embodiments of the present disclosure, the prediction value of the current block is determined according to the second blending parameter, the first weight derivation mode, and the K first prediction modes. At this time, the first combination of the embodiments of the present disclosure includes the first weight derivation mode, the K first prediction modes and the second blending parameter.

In this Case 2, the implementation manners of the above S102 include but are not limited to the following manners.

Manner 1: the encoder side and the decoder side determine a first combination corresponding to the first index from a plurality of preset second candidate combinations. For example, the plurality of preset second candidate combinations include any number of second candidate combinations, such as 2, 3, 4, 5, 6, 7, 8, 9, etc., and assuming that 8 second candidate combinations are included, each second candidate combination includes a weight derivation mode, K prediction modes and a blending parameter, and these 8 second candidate combinations have different identifiers (or indices). In this way, after the decoder side obtains the first index, the decoder side looks up the second candidate combination corresponding to the first index among the plurality of second candidate combinations, determines the second candidate combination corresponding to the first index as the first combination, and then determines a weight derivation mode included in the second candidate combination as the first weight derivation mode, determines K prediction modes included in the second candidate combination as the K first prediction modes, and determines a blending parameter included in the second candidate combination as the second blending parameters.

Manner 2: both the decoder side and the encoder side determine a list, the list includes a plurality of second candidate combinations. Therefore, the list is also referred to as the second candidate combination list, and the first combination corresponding to the first index is determined from this second candidate combination list. At this time, the above S102 includes the following steps:

S102-C, determining a second candidate combination list; and

S102-D, determining a weight derivation mode, K prediction modes and a blending parameter included in a second candidate combination corresponding to the first index in the second candidate combination list, as the first weight derivation mode, the K first prediction modes and the second blending parameter.

Herein, the above-mentioned second candidate combination list includes a plurality of second candidate combinations, and any one of the plurality of second candidate combinations includes a weight derivation mode, K prediction modes and a blending parameter.

Exemplarily, the second candidate combination list is shown in Table 8:

Table 8

| Index | Second candidate combination |
|---|---|
| 0 | Second candidate combination 1 (including a weight derivation mode, K prediction modes and a blending parameter) |
| 1 | Second candidate combination 2 (including a weight derivation mode, K prediction modes and a blending parameter) |
| ...... | ...... |
| i-1 | Second candidate combination i (including a weight derivation mode, K prediction modes and a blending parameter) |
| ...... | ...... |

As shown in Table 8, the second candidate combination list includes a plurality of second candidate combinations, and any two of the plurality of second candidate combinations are not the same completely, that is, at least one of the weight derivation mode, K prediction modes and the blending parameter respectively included in any two second candidate combinations are different.

Exemplarily, in the above Table 8, the sorting of the second candidate combination in the second candidate combination list is taken as an index. Optionally, the index of the second candidate combination in the second candidate combination list may be represented in other manners, which is not limited to the embodiments of the present disclosure.

In this Manner 2, the decoder side decodes the bitstream, to obtain the first index, and determines the second candidate combination list as shown in the above Table 8, and looks up in the second candidate combination list according to the first index, to obtain the first weight derivation mode, K prediction modes and the blending parameter included in the first combination indicated by the first index.

For example, the first index is an index 1. In the second candidate combination list shown in Table 8, a second candidate combination corresponding to the index 1 is the second candidate combination 2. That is, the first combination indicated by the first index is the second candidate combination 2. In this way, the decoder side determines the weight derivation mode, the K prediction modes and the second blending parameter included in the second candidate combination 2 as the first weight derivation mode and K first prediction modes included in the first combination, and uses the first weight derivation mode, the second blending parameter and K first prediction modes to predict the current block, to obtain the prediction value of the current block.

In this Manner 2, the encoder side and decoder side may determine the same second candidate combination list, respectively. For example, the encoder side and decoder side both determine a list including L second candidate combinations, each second candidate combination includes a weight derivation mode, K prediction modes and a blending parameter. In the bitstream, the encoder side only needs to write a second candidate combination finally selected, for example, the first combination. The decoder side parses the first combination finally selected by the encoder side. Specifically, the decoder side decodes the bitstream to obtain the first index, and determines the first combination in the second candidate combination list determined by the decoder side, by the first index.

The embodiments of the present disclosure do not limit the specific manner in which the decoder side determines the above-mentioned second candidate combination list.

In some embodiments, the above second candidate combination list is pre-existing. After obtaining the first index by decoding the bitstream, the decoder side may obtain or read the second candidate combination list according to the first index, and then look up the second candidate combination corresponding to the first index in the second candidate combination list according to the first index.

In some embodiments, the above second candidate combination list is transmitted from the encoder side to the decoder side, for example, the encoder side transmits to the decoder side before encoding the current block.

In some embodiments, the above second candidate combination list is uploaded to a cloud by the encoder side, and the decoder side reads the second candidate combination list from the cloud after decoding the code team and obtaining the first index.

In some embodiments, the above second candidate combination list is constructed by the decoder side. For example, after decoding the bitstream and obtaining the first index, the decoder side constructs the second candidate combination list in response to the first index.

The embodiments of the present disclosure do not limit the manner in which the decoder side constructs the second candidate combination list. For example, information related to the current block is used to analyze the probability of occurrence of various combinations consisting of different weight derivation modes, different prediction modes and different blending parameters, and the second candidate combination list is constructed according to the probability of occurrence of various combinations.

Optionally, the information related to the current block includes mode information of surrounding blocks of the current block, reconstructed pixels of the current block, etc.

In some embodiments, the decoder side constructs the second candidate combination list by the following step S102-C1:

S102-C1, constructing a second candidate combination list based on a template of the current block.

Template matching utilizes the correlation between adjacent pixels and takes some regions around the current block as a template. When the current block is coded, the left side and the upper side thereof have been coded according to the coding order. During the inter prediction, the best matching position of the template is found in a reference frame to determine the motion information or motion vector of the current block. During the intra prediction, a template is used to determine the intra-prediction mode of the current block.

The template of the current block is constituted by reconstructed regions around the current block and is relevant to the current block. Based on this, the embodiments of the present disclosure construct the second candidate combination list based on the template of the current block.

The present disclosure does not limit the specific shape of the template of the current block.

In some embodiments, the template includes at least one of: an upper encoded area, a left encoded area, and an upper-left encoded area of the current block.

Optionally, the width of the upper encoded area is the same as the width of the current block, the height of the left encoded area is the same as the height of the current block, the width of the upper-left encoded area is the same as the width of the left encoded area, and the height of the upper-left encoded area is the same as the height of the upper encoded area.

For example, for each combination, the template of the current block is predicted by using the combination, to obtain a prediction value of the template under each combination, and the second candidate combination list is constructed according to the prediction value of the template under each combination.

For each combination, the template of the current block is predicted by using the combination, to obtain the cost corresponding to each combination, and then the second candidate combination list is constructed according to the cost corresponding to each combination. Exemplarily, the template is predicted according to the weight derivation mode, the blending parameter and the K prediction modes included in the combination, to obtain a prediction value of the template corresponding to the combination. For example, the weights of the template are derived by using the weight derivation mode included in the combination, and the weights of the template are adjusted by using the blending parameter in the combination, to obtain the adjusted weights of the template, the template is predicted by respectively using the K prediction modes included in the combination, to obtain K prediction values of the template, and the K prediction values of the template are weighted according to the adjusted weights of the template, to obtain the prediction value of the template under the combination. Finally, the cost corresponding to the combination is determined according to the prediction value of the template and the reconstructed value of the template under the combination.

It should be noted that the above-mentioned weights derived according to the weight derivation mode may be understood as deriving a weight corresponding to each pixel point in the template, and may also be understood as deriving a weight matrix corresponding to the template. Using the blending parameter to adjust the weights of the template may be understood as adjusting the weight corresponding to each pixel point in the template, or adjusting the weight matrix of the template. Herein, determining the prediction value of the template according to the adjusted weights of the template, may be determining K prediction values corresponding to each pixel point in the template, and determining the prediction value corresponding to each pixel according to the K prediction values and the adjusted weight corresponding to each pixel. The prediction value corresponding to each pixel in the template constitutes the prediction value of the template. Optionally, determining the prediction value of the template according to the adjusted weights, may also be performed according to blocks. For example, for determining the prediction value of the template, K prediction values of the template are weighted according to the adjusted weight matrix of the template, to obtain the prediction value of the template.

In some embodiments, S102-C1 includes the following steps of S102-C11 to S102-C13:

S102-C11, determining H third combinations, where any one of the H third combinations includes a weight derivation mode, K prediction modes and a blending parameter, and a weight derivation mode, K prediction modes and a blending parameter respectively included in any two combinations of the H third combinations are not the same completely, and H is a positive integer greater than 1;

S102-C12, for any one third combination of the H third combinations, determining a cost corresponding to the third combination when the template is predicted by using a weight derivation mode, K prediction modes and a blending parameter in the third combination; and

S102-C13, constructing a second candidate combination list according to the costs corresponding to respective third combinations of the H third combinations.

In this embodiment, when constructing the second candidate combination list, the decoder side first determines the H third combinations. The present disclosure does not limit the specific number of the H third combinations, such as 8, 16, 32, etc. Each of the H third combinations includes a weight derivation mode, K prediction modes and a blending parameter, and the weight derivation mode, the K prediction modes and the blending parameter respectively included in any two of the H third combinations are not the same completely. Next, for each of the H third combinations, a cost corresponding to the third combination when the template is predicted by using a weight derivation mode, K prediction modes and a blending parameter in the third combination is determined. Finally, according to the costs corresponding to respective third combinations of the H third combinations, the second candidate combination list is constructed.

In some embodiments, determining a cost corresponding to the third combination when the template is predicted by using a weight derivation mode, K prediction modes and a blending parameter in the third combination includes at least the following manners.

Manner 1: S102-C12 includes the following S102-C12-11 to S102-C12-14:

S102-C12-11, determining weights of the template according to the weight derivation mode and the blending parameter included in the third combination;

S102-C12-12, predicting the template according to the K prediction modes in the third combination, to obtain K prediction values of the template;

S102-C12-13, weighting the K prediction values of the template according to the weights of the template, to obtain a template prediction value corresponding to the third combination; and

S102-C12-14, determining the cost corresponding to the third combination according to the reconstructed value of the template and the prediction value of the template corresponding to the third combination.

In the embodiments of the present disclosure, the process of determining the cost corresponding to each of the H third combinations is consistent. For the convenience of description, one of the H third combinations is taken as an example for explanation.

In the embodiments of the present disclosure, the third combination includes a weight derivation mode, a blending parameter and K prediction modes. When the third combination is used to predict the template, the weights of the template are determined according to the weight derivation mode and the blending parameter included in the third combination, and the template is predicted according to the K prediction modes included in the third combination, to obtain K prediction values of the template. Then, the K prediction values of the template are weighted by using the weights of the template, to obtain the prediction value of the template corresponding to the third combination. Then, the cost corresponding to the third combination is determined according to the prediction value of the template and the reconstructed value of the template corresponding to the third combination.

In the embodiments of the present disclosure, the blending parameter is used to adjust the weights derived by the weight derivation mode. Therefore, in the embodiments of the present disclosure, in the above S102-C12-11, the implementation manner of determining the weights of the template according to the weight derivation mode and the blending parameter included in the third combination includes at least the following examples.

Example 1: When the first weight derivation mode is used to derive weights of the template, a plurality of intermediate variables need to be determined. The blending parameter may be used to adjust one or more of the plurality of intermediate variables, and then the adjusted variables are used to derive the weights of the template. For example, one or more of the variables such as displacementX, displacementY, partFlip, shiftHoroffsetX, offsetY, xL, yL, etc., are adjusted by using the blending parameter, to obtain the weights of the template.

Example 2: a third weight corresponding to the template is determined according to the weight derivation mode in the third combination and the template, the third weight is adjusted by using the blending parameter in the third combination, to obtain the adjusted third weight; and the weights of the template are determined according to adjusted third weight.

For example, the third weight corresponding to the template is determined to be weightIdx according to the weight derivation mode in the third combination and the template, then, the weightIdx is adjusted by using the blending parameter, to obtain adjusted weightIdx, and then, the weight wVemplateValue of the template is determined according to the adjusted weightIdx.

In an example, the weightIdx may be adjusted by using the blending parameter according to the following formula, to obtain the adjusted weightIdx:

$$weightIdx = weightIdx * blendingCoeff.$$

Herein, blendingCoeff is the blending parameter included in the third combination.

For another example, the third weight corresponding to the template is determined to be wVemplateValue according to the weight derivation mode in the third combination and the template, and then, the wVemplateValue is adjusted by using the blending parameter, to obtain the adjusted wVemplateValue, and the adjusted wVemplateValue is determined to be the weight of the template.

In an example, the blending parameter may be used to adjust wVemplateValue according to the following formula, to obtain the adjusted wVemplateValue:

$$wVemplateValue= wVemplateValue* blendingCoeff.$$

According to the above method, the weights of the template corresponding to each of the H third combinations may be determined. Next, for each third combination, the K prediction modes included in the third combination are used to predict the template, to obtain K prediction values of the template, and the weights of the template corresponding to the third combination are used to weight the K prediction values of the template corresponding to the third combination, to obtain the prediction value of the template corresponding to the third combination, and the cost corresponding to the third combination is determined according to the prediction value of the template and the reconstructed value of the template corresponding to the third combination. Herein, the manner of determining the cost corresponding to the third combination includes but is not limited to the SAD, SATD, SEE, etc. With reference to this method, the prediction value of the template corresponding to each of the H third combinations may be determined. Next, the second candidate combination list is constructed according to the prediction values of the template corresponding to respective third combinations of the H third combinations.

Manner 2, S102-C12 includes the following S102-C12-11 to S102-C12-14:

S102-C12-21, determining the prediction values of the template respectively corresponding to the K prediction modes in the third combination according to the weight derivation mode and the blending parameter in the third combination;
S102-C12-22, determining costs respectively corresponding to the K prediction modes in the third combination according to the prediction values of the template and reconstructed values of the template respectively corresponding to the K prediction modes in the third combination; and
S102-C12-23, determining the cost corresponding to the third combination according to the costs respectively corresponding to the K prediction modes in the third combination. For example, a sum of the costs respectively corresponding to the K prediction modes in the third combination is determined as the cost corresponding to the third combination.

For example, assuming that K=2, two prediction modes included in the third combination are denoted as a prediction mode 1 and a prediction mode 2, respectively. First, weights and prediction values of the template corresponding to the prediction mode 1 are determined according to the weight derivation mode and the blending parameter included in the third combination, and the prediction values corresponding to the prediction mode 1 are processed by using the weights of the template corresponding to the prediction mode 1. For example, for each pixel point in the template corresponding to the prediction mode 1, the prediction value of the pixel point in the template corresponding to the prediction mode 1 is multiplied by the weight of the template corresponding to the pixel point, to obtain a prediction value of the pixel point. In this way, the prediction values of the template corresponding to the prediction mode 1 may be determined, and then, the cost corresponding to the prediction mode 1 may be determined according to the prediction values of the template and reconstructed values of the template corresponding to the prediction mode 1, where the manner for determining the cost corresponding to the prediction mode 1 includes but is not limited to the SAD, SATD, SEE, etc. Similarly, the cost corresponding to the prediction mode 2 may be determined. Then, the cost corresponding to the third combination is determined according to the cost corresponding to the prediction mode 1 and the cost corresponding to the prediction mode 2. For example, the cost corresponding to the third combination is determined by adding the cost corresponding to the prediction mode 1 and the cost corresponding to the prediction mode 2.

In the above S102-C13, the manner of constructing the second candidate combination list according to the costs corresponding to respective third combinations of the H third combinations includes but is not limited to the following examples.

Example 1: the H third combinations are sorted according to the costs corresponding to respective third combinations of the H third combinations; and the sorted H third combinations are determined as the second candidate combination list.

The second candidate combination list generated in this Example 1 includes H second candidate combinations.

Optionally, the H second candidate combinations in the second candidate combination list are sorted in order of sizes of the costs from small to large, that is, the costs corresponding to the H second candidate combinations in the second candidate combination list increase in sequence according to the sorting.

Herein, sorting the H third combinations according to the costs corresponding to respective third combinations of the H third combinations may be, sorting the H third combinations in order of the costs from small to large.

Example 2: L third combinations are selected from the H third combinations according to the costs corresponding to the third combinations, and a list constituted by the L third combinations is determined as the second candidate combination list.

Optionally, the above-mentioned L third combinations are the first L third combinations with the smallest costs among the H third combinations. For example, L third combinations with the smallest costs are selected from the H third combinations according to the cost corresponding to each of the H third combinations, to constitute the second candidate combination list. At this time, the second candidate combination list includes L second candidate combinations.

Optionally, the L second candidate combinations in the second candidate combination list are sorted in order of sizes of the costs from small to large, that is, the costs corresponding to the L second candidate combinations in the second candidate combination list increase in sequence according to the sorting.

The process of determining H third combinations in the above S102-C11 is introduced below.

In some embodiments, the above-mentioned H third combinations are preset. In this way, each third combination of the preset H third combinations is used to predict the template of the current block to obtain the prediction value of the template corresponding to each third combination, and then, the cost corresponding to each third combination is determined according to the prediction value of the template and the reconstructed value of the template corresponding to each third combination, and the H third combinations are sorted according to the cost corresponding to each third combination, and the sorted H third combinations are taken as the second candidate combination list, or L third combinations with the smallest costs are selected from the sorted H third combinations, to constitute the second candidate combination list.

In some embodiments, S102-C11 includes the following steps:

S102-C11-1, determining F weight derivation modes, J prediction modes, and W blending parameters, where F and W are both positive integers, and J is a positive integer greater than or equal to K;

S102-C11-2, constructing H third combinations according to the F weight derivation modes, the J prediction modes and the W blending parameters, where any one of the H third combinations includes a weight derivation mode of the F weight derivation modes, K prediction modes of the J prediction modes and a blending parameter of the W blending parameters.

In this embodiment, the decoder side first determines the F weight derivation modes, the J prediction modes and the W blending parameters, and then constructs H third combinations according to the determined F weight derivation modes, J prediction modes and W blending parameters.

The embodiments of the present disclosure do not limit the specific number of the above-mentioned F weight derivation modes, J prediction modes and W blending parameters.

Assuming that K=2, the above-mentioned K prediction modes include a first prediction mode and a second prediction mode. Assuming that the number of all available prediction modes is J, the first prediction mode has J possibilities, and since the second prediction mode is different from the first prediction mode, the second prediction mode has J-1 possibilities. Assuming that the number of weight derivation modes is F, and assuming that the number of blending gradient coefficients is W, then the present disclosure may use any two different prediction mode of the prediction modes, any one of the weight derivation modes and any one of the blending gradient coefficients to constitute a third combination, for a total of F*J*(J-1) *W possible third combinations.

In this implementation, the F weight derivation modes are all the possible weight derivation modes, the J prediction modes are all the possible prediction modes, and the W blending parameters are all the possible blending parameters. An exhaustive manner is used to obtain all possible third combinations. The template of the current block is predicted by using each third combination of the all possible third combinations, the distortion cost of each third combination is calculated, and then the second candidate combination list corresponding to the current block is obtained according to the distortion cost of each third combination.

In some embodiments, in order to reduce the amount of data and increase the speed of constructing the second candidate combination list, not each prediction mode is tried, but some of the prediction modes may be selected to be tried.

At this time, the implementation of determining the J prediction modes in the above S102-C11-1 includes but is not limited to the following manners.

Manner 1: the J prediction modes are preset prediction modes.

Manner 2: at least one of a second candidate prediction mode list of the current block, second alternative prediction mode lists corresponding to the K prediction modes respectively, and a prediction mode corresponding to the weight derivation mode is determined, where the second candidate prediction mode list includes a plurality of second candidate prediction modes, and the second alternative prediction mode list corresponding to any one of the K prediction modes includes at least one second alternative prediction mode; the J prediction modes are determined according to at least one of the second candidate prediction mode list, the second alternative prediction mode lists corresponding to the K prediction modes respectively, and the prediction mode corresponding to the weight derivation mode.

Herein, the manner of determining the second candidate prediction mode list of the current block includes at least the following examples.

Example 1: the second candidate prediction mode list is determined according to a prediction mode used by at least one block adjacent to the current block.

Example 2: if the second candidate prediction mode list does not include a preset mode, the preset mode corresponding to the current block is determined; and the preset mode is added to the second candidate prediction mode list.

In an example, the above-mentioned preset mode is several preset prediction modes.

In another example, the preset mode is determined, by determining a picture type corresponding to the current block and according to the picture type corresponding to the current block.

For example, if the picture type corresponding to the current block is the B type or P type, the preset mode includes at least one of a DC mode, a horizontal mode, a vertical mode and an angular mode.

Example 3: a picture type corresponding to the current block is determined, and the second candidate prediction mode list is determined according to the picture type corresponding to the current block. For example, if the picture type corresponding to the current block is the B type or P type, at least one of the DC mode, the horizontal mode, the vertical mode and some angular modes may be added to the second candidate prediction mode list. For another example, if the picture type corresponding to the current block is the I type, at least one of the DC mode, the horizontal mode and the vertical mode may be added to the second candidate prediction mode list.

In the embodiments of the present disclosure, the specific implementation of the above-mentioned second manner refers to the specific description of the Manner 2 in the above S102-A11-1, which will not be repeated here.

The process of determining the F weight derivation modes in S102- C11-1 is introduced below.

In the embodiments of the present disclosure, the manner of determining the F weight derivation modes includes at least the following manners.

In some embodiments, the above-mentioned F weight derivation modes are preset weight derivation modes.

In some embodiments, the F weight derivation modes are selected from preset Z weight derivation modes, where Z is a positive integer greater than or equal to F.

The embodiments of the present disclosure do not limit the above-mentioned preset Z weight derivation modes.

In some embodiments, if Z is equal to F, the Z weight derivation modes are determined as the F weight derivation modes.

In some embodiments, if Z is greater than F, in order to further reduce the number of the H third combinations, the preset Z weight derivation modes are screened, and F weight derivation modes may be selected from the preset Z weight derivation modes, to construct the H third combinations.

The process of determining the F weight derivation modes in the above S102-C11-1 is basically consistent with the process of determining the P weight derivation modes in the above S102-A11-1. Please refer to the above specific description of determining the P weight derivation modes, which will not be repeated here.

The process of determining the W blending gradient coefficients in S102-C11-1 is introduced below.

In some embodiments, the above-mentioned W blending parameters are preset blending parameters, such as 1/4, 1/2, 1, 2, 4, etc.

In some embodiments, the W blending parameters are determined according to the size of the current block. For example, if the size of the current block is smaller than a certain preset value, the W blending parameters are within a value range 1 of the blending parameter. For another example, if the size of the current block is smaller than a certain preset value, the W blending parameters are within a value range 2 of the blending parameter. Herein, the value range 1 of the blending parameter and the value range 2 of the blending parameter may intersect or may not intersect.

In some embodiments, the W blending parameters are determined from a plurality of preset blending parameters.

In an example, the W blending parameters are determined from the plurality of preset blending parameters according to picture information of the current block.

The embodiments of the present disclosure do not limit the specific content of the picture information of the current block, such as blurriness, definition, sharpness, etc.

In some embodiments, if the picture information of the current block includes the definition of a picture edge, determining the W blending parameters from the plurality of preset blending parameters according to the picture information of the current block, includes two examples.

Example 1: if the definition of the picture edge of the current block is smaller than a preset value, at least one first-type blending parameter of the plurality of preset blending parameters is determined as the W blending parameters.

Herein, the first-type blending parameter may be understood as a blending parameter that may form a wider blending region, such as 1/4, 1/2, etc.

Example 2: if the definition of the picture edge of the current block is greater than or equal to the preset value, at least one second-type blending parameter of the plurality of preset blending parameters is determined as the W blending parameters, and the second-type blending parameter is greater than the first-type blending parameter.

Herein, the second-type blending parameter may be understood as a blending parameter that may form a narrower blending region, such as 2, 4, etc.

In the embodiments of the present disclosure, the manner of determining the picture information of the current block may include at least two manners.

Manner 1, the picture information of the current block is obtained by decoding the bitstream. For example, the encoder side encodes the picture information of the current block into the bitstream, so that the decoder side obtains the picture information of the current block by decoding the bitstream.

Manner 2, the template picture information of the current block is determined; the picture information of the current block is determined according to the template picture information of the current block. Since the template of the current block has been decoded, the template picture information of the current block is available. For example, the template picture information of the current block is obtained by analyzing the reconstructed value of the template of the current block. Next, the picture information of the current block is obtained according to the template picture information of the current block. For example, the template picture information of the current block is determined as the picture information of the current block, or the template picture information of the current block is processed to obtain the picture information of the current block.

After the decoder side determines J prediction modes, F weight derivation modes and W blending parameters according to the above steps, H different third combinations are constituted according to the J prediction modes, F weight derivation modes and W blending parameters. Next, the second candidate combination list is determined according to the H third combinations, and then the first weight derivation mode, the K first prediction modes and the second blending parameter are determined from this second candidate combination list.

In some embodiments, in order to further improve the speed of constructing the second candidate combination list, the decoder side screens the J prediction modes, the F weight derivation modes and the W blending parameters determined above, again. At this time, constructing the H third combinations according to the determined F weight derivation modes, J prediction modes and W blending parameters in the above S102-C11-2, includes the following steps of S102-C11-21 to S102-C11-24.

S102-C11-21, selecting E weight derivation modes from the F weight derivation modes, where E is a positive integer smaller than or equal to F.

Specifically, a weight derivation mode with a low probability of occurrence is deleted from the F weight derivation modes determined above, to obtain the screened E weight derivation modes.

Herein, the manner of selecting the E weight derivation modes from the F weight derivation modes in above S102-C11-21 includes but is not limited to the following manners.

Manner 1: for an i-th weight derivation mode of the F weight derivation modes, weights of the K second prediction modes on the template are determined according to the i-th weight derivation mode and a third blending parameter, the third blending parameter is any one blending parameter of the W blending gradients, the K second prediction modes are any K prediction modes of the J prediction modes, and i is a positive integer from 1 to F; if the weight of any prediction mode of the K prediction modes on the template is smaller than a first preset value, the i-th weight derivation mode is deleted from the F weight derivation modes, to obtain the E weight derivation modes.

In this Manner 1, the manner of determining the weights of the K second prediction modes on the template according to the i-th weight derivation mode and the third blending parameter, includes at least manners as shown in the following examples.

Example 1: when the i-th weight derivation mode is used to derive weights of the template, a plurality of intermediate variables need to be determined. The third blending parameter may be used to adjust one or more of the plurality of intermediate variables, and then the adjusted variables are used to derive the weights of the template.

Example 2: a fourth weight corresponding to the template is determined according to the i-th weight derivation mode and the template; the third blending parameter is used to adjust the fourth weight, to obtain the adjusted fourth weight; the weights of the K second prediction modes on the template are determined according to the adjusted fourth weight.

For example, the fourth weight corresponding to the template is determined to be weightIdx according to the i-th weight derivation mode and the template, and the weightIdx is adjusted by using the third blending parameter, to obtain adjusted weightIdx, and then, the weight wVemplateValue of the template is determined according to the adjusted weightIdx.

In an example, the third blending parameter may be used to adjust the weightIdx according to the following formula, to obtain the adjusted weightIdx:

$$weightIdx= weightIdx* blendingCoeff3.$$

Herein, blendingCoeff3 is the third blending parameter.

For another example, the fourth weight corresponding to the template is determined to be wVemplateValue according to the i-th weight derivation mode and the template, and then, the wVemplateValue is adjusted by using the third blending parameter, to obtain adjusted wVemplateValue, and the adjusted wVemplateValue is determined to be the weight of the template.

In an example, the third blending parameter may be used to adjust the wVemplateValue according to the following formula, to obtain the adjusted wVemplateValue:

$$wVemplateValue= wVemplateValue* blendingCoeff3.$$

According to the above method, the weights of the K second prediction modes on the template are determined according to the i-th weight derivation mode.

Manner 2: for the i-th weight derivation mode of the F weight derivation modes, the cost of predicting the template by using the i-th weight derivation mode is determined, where i is a positive integer from 1 to F; E weight derivation modes are selected from the F weight derivation modes according to the cost corresponding to the i-th weight derivation mode.

In some embodiments, when determining the above-mentioned cost corresponding to the i-th weight derivation mode, the impact of the blending parameter on the weights is not considered.

In some embodiments, when determining the above-mentioned cost corresponding to the i-th weight derivation mode, the impact of the blending parameter on the weights is included, that is, the weights of the template are determined according to the i-th weight derivation mode and the blending parameter, and then the prediction value of the template is determined according to the weights of the template and the K prediction values of the template, and the cost corresponding to the i-th weight derivation mode is determined according to the prediction value and the reconstructed value of the template. Herein, the specific process of determining the weights of the template according to the i-th weight derivation mode and the blending parameter may be referred to the description of the above embodiments, which will not be repeated here.

In some embodiments, the same manner of selecting the S weight derivation modes from the P weight derivation modes as in the above S102-A11-21 may be used to select the E weight derivation modes from the F weight derivation modes. Specifically, please refer to the description of the above embodiments, which will not be repeated here.

According to the above steps, after the decoder side screens the E weight derivation modes from the F weight derivation modes, the decoder side performs the following step S102-C11-22:

S102-C11-22, selecting V prediction modes from the J prediction modes, where V is a positive integer smaller than or equal to J.

The embodiments of the present disclosure do not limit the manner of selecting the V prediction modes from the J prediction modes.

In some embodiments, V preset prediction modes are selected from the J prediction modes.

In some embodiments, for an i-th prediction mode of the J prediction modes, the decoder side determines the cost of predicting the templating by using the i-th prediction mode, where i is a positive integer from 1 to J; and selects the V prediction modes from the J prediction modes according to the cost corresponding to the i-th prediction mode.

In the embodiments of the present disclosure, a weight derivation mode, K prediction modes and a blending parameter are taken as a combination to calculate a cost. In this way, for the convenience of calculation, the costs of the J weight derivation modes are calculated based on the given weight derivation mode, other K-1 prediction modes and the blending parameter. That is, the J prediction modes are respectively combined with the given weight derivation mode, the K-1 prediction modes and the blending parameter, to obtain J combinations, and the cost corresponding to each of the J combinations is calculated, to obtain the costs of the J prediction modes.

According to the above method, after the cost corresponding to the i-th prediction mode of the J prediction modes is determined, V prediction modes are selected from the J prediction modes according to the cost corresponding to the i-th prediction mode.

Herein, selecting, by the decoder side, the V prediction modes from the J prediction modes according to the cost corresponding to the i-th prediction mode, includes the following manners.

A first manner, if the cost corresponding to the i-th prediction mode is less than a fourth preset value, a prediction mode similar to the i-th prediction mode is selected from the J prediction modes; and the V prediction modes are determined according to the i-th prediction mode and the prediction mode similar to the i-th prediction mode. Herein, the prediction mode similar to the i-th prediction mode may be understood as a prediction mode with a prediction result similar (or close) to the prediction reception of the i-th prediction mode, for example, a prediction mode with a prediction direction (or angle) close to the prediction direction (or angle) of the i-th prediction mode, or a prediction mode with a prediction mode index close to the index of the i-th prediction mode, such as a prediction mode with an index larger than the index of the i-th prediction mode by 1, 2, etc., or a prediction mode with an index smaller than the index of the i-th prediction mode by 1, 2, etc.

A second manner: if the cost corresponding to the i-th prediction mode is greater than a fifth preset value, the i-th prediction mode and a prediction mode similar to the i-th prediction mode are deleted from the J prediction modes, to obtain at least one prediction mode remained after deleting; and V prediction modes are determined according to the at least one prediction mode remained after deleting.

According to the above steps, the E weight derivation modes are selected from the F weight derivation modes, and the V prediction modes are selected from the J prediction modes. Then, the following S102-C11-23 is performed.

S102-C11-23, selecting O blending parameters from the W blending parameters, where O is a positive integer smaller than or equal to W.

In some embodiments, if O is equal to W, the W blending parameters are determined as O blending parameters.

In some embodiments, if W is greater than O, the W blending parameters are screened, to obtain O blending parameters.

Herein, the manner of screening the W blending parameters to obtain the O blending parameters includes at least the following examples.

Example 1: a cost of each blending parameter of the W blending parameters is determined, and the first O blending parameters with the smallest costs of the W blending parameters are screened.

For example, for an i-th blending parameter of the W blending parameters, the i-th blending parameter is combined with a weight derivation mode 1, a prediction mode 1 and a prediction mode 2 to constitute a combination, and the template of the current block is predicted by using the combination, to obtain the prediction value of the template. Exemplarily, a weight is determined according to the weight derivation mode 1, and the weight is adjusted by using the i-th blending parameter, to obtain the adjusted weight. The template is predicted by using the prediction mode 1 and the prediction mode 2 respectively, to obtain two prediction values of the template, and the two prediction values are weighted by using the adjusted weight, to obtain the prediction value of the template corresponding to the i-th blending parameter. Next, the cost corresponding to the i-th blending parameter is determined according to the reconstructed value of the template and the prediction value of the template corresponding to the i-th blending parameter. Referring to the above method, the cost corresponding to the combination constituted by each blending parameter of the W blending parameters, the weight derivation mode 1, the prediction mode 1 and the prediction mode 2, may be determined, and then O blending parameters may be screened from the W blending parameters according to the cost. For example, the O blending parameters with the smallest costs among the W blending parameters are screened.

Example 2: if the above-mentioned W blending parameters are not determined by the picture information of the current block, the embodiments of the present disclosure may also determine the picture information of the current block; and determine O blending parameters from the W blending parameters according to the picture information of the current block.

The embodiments of the present disclosure do not limit the specific content of the picture information of the current block, such as blurriness, definition, sharpness, etc.

In some embodiments, if the picture information of the current block includes the definition of the picture edge, determining the O blending parameters from the W blending parameters according to the picture information of the current block, includes two examples.

In an example: if the definition of the picture edge of the current block is smaller than a preset value, at least one first-type blending parameter of the W blending parameters is determined as the O blending parameters.

In another example: if the definition of the picture edge of the current block is greater than or equal to the preset value, at least one second-type blending parameter of the W blending parameters is determined as the O blending parameters.

In some embodiments, the O blending parameters are selected from the W blending parameters according to the size of the current block.

In a possible implementation, according to the size of the current block, blending parameters greater than or equal to a third value among the W blending parameters are used as the O blending parameters.

For example, if the size of the current block is smaller than a second set threshold, a blending parameter with a value of the third value among the W blending parameters is used as one of the O blending parameters.

For another example, if the size of the current block is greater than or equal to the second set threshold, blending parameters smaller than or equal to a fourth value among the W blending parameters are used as the O blending parameters, where the fourth value is smaller than the third value.

The embodiments of the present disclosure do not limit the specific values of the second set threshold, the third value and the fourth value.

Optionally, the third value is 1, and the fourth value is 1/2.

Optionally, if the size of the current block is represented by the number of pixel points of the current block, the second set threshold is 256, etc.

In another possible implementation, the O blending parameters are determined to be at least one blending parameter within a certain value range among the W blending parameters, according to the size of the current block.

For example, if the size of the current block is smaller than the second set threshold, the O blending parameters are determined to be one or more blending parameters within the third blending parameter value range among the W blending parameters.

For another example, if the size of the current block is greater than or equal to the second set threshold, the O blending parameters are determined to be one or more blending parameters within a fourth blending parameter value range among the W blending parameters, where a minimum value of the fourth blending parameter value range is smaller than a minimum value of the third blending parameter value range.

The embodiments of the present disclosure do not limit the specific values of the third blending parameter value range and the fourth blending parameter value range. Optionally, the third blending parameter value range intersects the fourth blending parameter value range. Optionally, the third blending parameter value range does not intersect the fourth blending parameter value range.

After the E weight derivation modes are selected from the F weight derivation modes, the V prediction modes are selected from the J prediction modes, and the O blending parameters are selected from the W blending parameters, the following S102-C11-24 is performed.

S102-C11-24, constituting H third combinations according to the E weight derivation modes, the V prediction modes and the O blending parameters.

Specifically, a weight derivation mode is selected from the E weight derivation modes, K prediction modes are selected from the V prediction modes, and finally, a blending parameter is selected from the O blending parameters. This weight derivation mode, K prediction modes and a blending parameter constitute a third combination. The step is repeated, to obtain H third combinations.

It may be known from the above that a third combination includes a weight derivation mode, K prediction modes and a blending parameter, that is, a third combination includes K+2 elements. In this way, when screening an element, other elements in a combination may be limited to be fixed, for possible options of another element.

An implementation process of the above S102-C11-2 is introduced, by taking an example of the screening process of another prediction mode when a weight derivation mode, a blending parameter and a prediction mode are fixed.

In some embodiments, the above S102-C11-2 includes: for a f-th weight derivation mode of F weight derivation modes, and an o-th blending parameter of O blending parameters, determining the cost of predicting the template by using the f-th weight derivation mode, the o-th blending parameter and the j-th prediction mode of J prediction modes, where f is a positive integer smaller than or equal to F, o is a positive integer smaller than or equal to O, and j is a positive integer smaller than or equal to J; if the cost corresponding to a combination of the f-th weight derivation mode, the o-th blending parameter and the j-th prediction mode is greater than a sixth preset value, deleting the j-th prediction mode and the prediction mode similar to the j-th prediction mode from the J prediction modes, to obtain at least one prediction mode remained after deleting; constructing H third combinations according to the f-th weight derivation mode, the o-th blending parameter and at least one prediction mode remained after deleting.

In this embodiment, when a weight derivation mode, a blending parameter and one prediction mode are fixed, another prediction mode is screened. For example, if a relatively small cost cannot be obtained from a certain intra prediction mode as the first prediction mode, under a certain weight derivation mode and a certain blending parameter, then a case of an intra prediction mode similar to this intra prediction mode to be the first prediction mode under this weight derivation mode and this blending parameter, will no longer be tried.

Specifically, assuming K=2, for the f-th weight derivation mode of the F weight derivation modes and the o-th blending gradient parameter of the O blending parameters, and assuming that the second prediction mode is set to a prediction mode 1, and the prediction mode 1 may be one of the J prediction modes, or may be another prediction mode other than the J prediction modes. Determining a possible option of the first prediction mode from the J prediction modes, specifically, is, to use the j-th prediction mode of the J prediction modes as the first prediction mode. At this time, the prediction value of the template when predicting the template by using a combination constituted by the f-th weight derivation mode, o-th blending gradient parameter, the j-th prediction mode and the prediction mode 1 is determined, and the cost corresponding to the combination j is determined according to the prediction value, and the cost corresponding to the combination j is determined as the cost corresponding to the j-th prediction mode. Next, whether the cost corresponding to the j-th prediction mode is greater than the sixth preset value is judged. If the cost corresponding to the j-th prediction mode is greater than the sixth preset value, it means that using the combination constituted by the j-th prediction mode, the f-th weight derivation mode, the o-th blending gradient parameter and the prediction mode 1 cannot achieve the accurate prediction of the template. At this time, the j-th prediction mode is deleted from the J prediction modes. Since the prediction mode similar to the j-th prediction mode has a characteristic similar to the j-th prediction mode, the prediction mode similar to the j-th prediction mode is deleted from the J prediction modes, to obtain a set of prediction modes remained after deleting. In the set of prediction modes remained after deleting, a prediction mode is newly selected as a new j-th prediction mode, and the above steps are repeated, to obtain a set of prediction modes finally remained after deleting corresponding to the f-th weight derivation mode and the o-th blending parameter.

According to the above steps, the set of prediction modes finally remained after deleting corresponding to each weight derivation mode of the F weight derivation modes and the blending parameter may be determined, so that the H third combinations is constructed according to the F weight derivation modes, and their respective corresponding sets of prediction modes finally remained after deleting.

It should be noted that the above embodiments show the manner of screening the prediction mode in the form of the combination. Optionally, any one of the weight derivation mode and the blending parameter may also be screened in the form of the combination, to finally construct the H third combinations.

After the decoder side determines the H third combinations according to the above methods, for any one of the H third combinations, the template is predicted by using a weight derivation mode, a blending parameter and K prediction modes in the third combination, to obtain the prediction value of the template corresponding to the third combination.

An implementing process for predicting a template of a current block by using each third combination to obtain a prediction value of the template in an embodiment of the present disclosure is introduced below.

In the embodiments of the present disclosure, for each third combination, a template is predicted according to a weight derivation mode, a blending parameter and K prediction modes included in the third combination to obtain a prediction value of the template corresponding to the third combination.

The embodiments of the present disclosure do not limit a specific implementation in which a template is predicted according to a weight derivation mode, a blending parameter and K prediction modes included in a third combination to obtain a prediction value of the template corresponding to the third combination. For example, firstly, a prediction value of a template is determined according to a weight derivation mode and K prediction modes included in a third combination, and then, a prediction value of the template corresponding to the third combination is obtained according to a blending parameter and a determined prediction value of the template.

In some embodiments, a weight of a template may be determined by using a weight derivation mode and a blending parameter included in a third combination; then, K prediction values of the template are determined according to K prediction modes included in the third combination; and a prediction value of the template corresponding to the third combination is determined according to the weight of the template and the K prediction values of the template.

In some embodiments, determining the weight of the template according to the weight derivation mode includes the following steps.

Step 1, determining an angle index and a distance index according to the weight derivation mode.

Step 2, determining the weight of the template according to the angle index, the distance index, a blending parameter and a size of the template.

In the present disclosure, the weight of the template can be derived by adopting the same manner as that the weight of the prediction value is derived. For example, firstly, an angle index and a distance index are determined according to the weight derivation mode, where the angle index may be understood as a boundary angle index of each weight derived through the weight derivation mode. Exemplarily, the angle index and the distance index corresponding to the weight derivation mode may be determined according to the table 2 mentioned above. For example, the weight derivation mode is 27, and accordingly, the angle index is 12 and the distance index is 3. Then, the weight of the template is determined according to the angle index, the distance index and the size of the template.

The manner for determining the weight of the template according to the angle index, the distance index and the size of the template in step 2 mentioned above, includes but is not limited to the following manners.

Manner 1: a weight of a template is determined according to an angle index, a distance index, a blending parameter and a size of the template. At this time, step 2 mentioned above includes the following steps: step 21 to step 23.

Step 21, determining first parameters of pixel points in the template according to the angle index, the distance index and a size of the template.

Step 22, determining weights of the pixel points in the template according to the first parameters of the pixel points in the template and a blending parameter.

Step 23, determining the weights of the templates according to the weights of the pixel points in the template.

In this implementation, weights of pixel points in a template are determined according to an angle index, a distance index, a size of the template and a size of a current block, and then, a weight matrix composed of weights of respective points in the template is determined as a weight of the template.

The first parameter of the present disclosure is used to determine a weight.

In some embodiments, the first parameter is also referred to as a weight index.

In some embodiments, the first parameter may be understood as a third weight corresponding to the template and a fourth weight corresponding to the template in the embodiments mentioned above.

In a possible implementation, the offset and the first parameter may be determined according to the following manner.

Inputs to a derivation process of the weight of the template are: as shown in FIG. 17, a width of a current block, nCbW; a height of the current block, nCbH; a width of a left template, nVmW; a height of an upper template, nVmH; a "partition" angle index variable of GFM, angleId; a distance index variable of GFM, distanceIdx; and a component index variable, cIdx. Exemplarily, the present disclosure takes a luma component as an example, so cIdx is 0, which represents the luma component.

Herein, variables nW, nH, shift1, offset1, displacementX, displacementY, partFlip and shiftHor are derived in the following manner:

$$nW = ( cIdx == 0 ) ? nCbW : nCbW * EubWidthC$$

$$nH = ( cIdx == 0 ) ? nCbH : nCbH * EubHeightC$$

$$shift1 = Max( 5, 17 - BitDepth ),$$

where BitDepth is a bit depth of encoding and decoding

$$offset1 = 1 << ( shift1 - 1 )$$

$$displacementX = angleIdx$$

$$displacementY = ( angleIdx + 8 ) \% 32$$

$$partFlip = ( angleIdx >= 13 \&\& angleIdx <= 27 ) ? 0 : 1$$

$$shiftHor = ( angleIdx \% 16 == 8 || ( angleIdx \% 16 != 0 \&\& nH >= nW ) ) ? 0 : 1$$

Herein, offsets, i.e., offsetX and an offsetY, are derived in the following manner:

-- if a value of the shiftHor is 0:

$$offsetX = ( -nW ) >> 1$$

offsetY = ( ( -nH ) >> 1 ) + ( angleIdx < 16 ? ( distanceIdx * nH ) >> 3 : -( ( distanceIdx * nH) >> 3 ) )

- else (i.e., the value of the shiftHor is 1):

offsetX = ( ( -nW ) >> 1 ) + ( angleIdx < 16 ? ( distanceIdx * nW ) >> 3 : -( ( distanceIdx * nW) >> 3)

$$offsetY = ( - nH ) >> 1$$

A weight matrix of a template, wVemplateValue[x][y] (where x = -nVmW..nCbW - 1, y = -nVmH..nCbH - 1, excluding the case where both x and y are greater than or equal to 0), noting that in this example, a coordinate of an upper left corner of a current block is (0, 0), is derived in the following manner:

- variables xL and yL are derived in the following manner:

$$xL = ( cIdx == 0 ) ? x : x * EubWidthC$$

$$yL = ( cIdx == 0 ) ? y : y * EubHeightC$$

Herein, a disLut is determined according to table 3 mentioned above.

The first parameter weightIdx is derived in the following manner:

$$weightIdx = ( ( ( xL + offsetX ) << 1 ) + 1 ) * disLut[ displacementX ] + \\ ( ( ( yL + offsetY ) << 1 ) + 1 ) * disLut[ displacementY ]$$

In some embodiments, after the first parameter weightIdx is determined according to the manner mentioned above, and then, the first parameter is adjusted by using the blending parameter to obtain an adjusted first parameter.

In an example, the first parameter is adjusted through the following formula:

$$weightIdx = weightIdx * blendingCoeff$$

where blendingCoeff is the blending parameter.

Then, the manner for determining the weight of the pixel point in the template according to the adjusted first parameter includes but is not limited to the following manners.

Manner 1: determining second parameters of the pixel points in the template according to the adjusted first parameters of the pixel points in the template; and determining weights of the pixel points in the template according to the second parameters of the pixel points in the template.

Herein, the second parameter is also used to determine a weight. **In** some embodiments, the second parameter mentioned above is also referred to as a weight index under a first component, and the first component may be a luma component, a chroma component, etc.

For example, the weight of the pixel point in the template is determined according to the formula:

$$weightIdxL = partFlip ? 32 + weightIdx : 32 - weightIdx$$

$$wVemplateValue[x][y] = Clip3( 0, 8, ( weightIdxL + 4 ) >> 3 )$$

where wVemplateValue[x][y] is a weight of a point (x, y) of a template, weightIdxL is a second parameter of the point (x, y) of template, also referred to as a weight index under the first component (e.g., a luma component), wVemplateValue[x][y] is a weight of the point (x, y) of the temple, partFlip is an intermediate variable determined according to the angle index angleIdx. For example, as mentioned above, partFlip = ( angleIdx >= 13 && angleIdx <= 27 ) ? 0 : 1, that is, a value of partFlip is 1 or 0, when partFlip is 0, weightIdxL is 32 - weightIdx; and when partFlip is 1, weightIdxL is 32 + weightIdx. It should be noted that 32 herein is just an example, and the present disclosure is not limited to thereto.

Manner 2: determining the weight of the pixel point in the template according to the adjusted first parameter, a first threshold and a second threshold of the pixel point in the template.

In order to reduce the computational complexity of the weight of the template, the weight of the pixel point in the template is defined as the first threshold or the second threshold in manner 2, that is, the weight of the pixel point in the template is either the first threshold or the second threshold, thereby reducing the computational complexity of the weight of the template.

The present disclosure does not limit the specific values of the first threshold and the second threshold.

Optionally, the first threshold is 1.

Optionally, the second threshold is 0.

In an example, the weight of the pixel point in the template can be determined through the following formula:

$$wVemplateValue[x][y] = (partFlip ? weightIdx: - weightIdx) > 0 ? 1 : 0$$

where wVemplateValue[x][y] is the weight of a midpoint (x, y) in the template, and in the "1:0" mentioned above, 1 is the first threshold and 0 is the second threshold.

In manner 1 mentioned above, a weight of each point in the template is determined through the weight derivation mode, and a weight matrix composed of weights of respective points in the template is used as the weight of the template.

Second Manner: weights of a current block and a template are determined according to the weight derivation mode. That is, in this second manner, a merged area composed of the current block and the template is taken as a whole, and a weight of a pixel point in the merged area is derived according to the weight derivation mode. Based on this, step 2 mentioned above includes the following steps: step 2-1 and step 2-2.

Step 2-1, determining weights of pixel points in a merged area composed of a current block and a template according to an angle index, a distance index and a blending parameter as well as a size of the template and a size of the current block.

Step 2-2, determining the weight of the template according to the size of the template and the weights of the pixel points in the merged area.

In the second manner, a current block and a template are taken as a whole; weights of pixel points in a merged area composed of the current block and the template are determined according to an angle index, a distance index, a blending parameter as well as a size of the template and a size of the current block; and then, a weight corresponding to the template in the merged area is determined as the weight of the template according to the size of the template. For example, as shown in FIG. 17, a weight corresponding to an L-shaped template area in the merged area is determined as the weight of the template.

The present disclosure does not limit the specific implementation of determining a weight of a pixel point in a merged area composed of a current block and a template according to an angle index, a distance index, a blending parameter as well as ta size of the template and a size of the current block mentioned above.

In some embodiments, determining the weight of the pixel point in the merged area in step 2-1 mentioned above includes the following steps: step 2-11 to step 2-12.

Step 2-11, determining first parameters of pixel points in a merged area according to the angle index, the distance index and a size of the merged area.

Step 2-12, determining weights of the pixel points in the merged area according to the first parameters of the pixel points in the merged area and a blending parameter.

In this implementation, weights of pixel points in a merged area are determined according to an angle index, a distance index, a blending parameter and a size of the merged area, and weights of respective points in the merged area constitute a weight matrix.

In a possible implementation, the offset and the first parameter may be determined according to the following manner.

Inputs to the derivation process of the weight of the merged area are: as shown in FIG. 17, a width of a current block, nCbW; a height of the current block, nCbH; a width of a left template, nVmW; a height of an upper template, nVmH; a "partition" angle index variable of GFM, angleId; a distance index variable of GFM, distanceIdx; a component index variable, cIdx. Exemplarily, the present disclosure takes a luma component as an example, so cIdx is 0, which represents the luma component.

Variables nW, nH, shift1, offset1, displacementX, displacementY, partFlip and shiftHor are derived in the following manner:

$$nW = ( \ cIdx == 0 \ ) \ ? \ nCbW : nCbW * EubWidthC$$

$$nH = ( \ cIdx == 0 \ ) \ ? \ nCbH : nCbH * EubHeightC$$

$$shift1 = Max( \ 5, \ 17 - BitDepth \ )$$

where BitDepth is a bit depth of coding

$$offset1 = 1 << ( \ shift1 - 1 \ )$$

$$displacementX = angleIdx$$

$$displacementY = ( \ angleIdx + 8 \ ) \ \% \ 32$$

$$partFlip = (\ angleIdx >= 13\ \&\&\ angleIdx <= 27\ )\ ?\ 0 : 1$$

$$shiftHor = (\ angleIdx\ \%\ 16 == 8\ ||\ (\ angleIdx\ \%\ 16\ != 0\ \&\&\ nH >= nW\ )\ )\ ?\ 0 : 1$$

Herein, offsets, i.e., offsetX and offsetY, are derived in the following manner:

-if a value of shiftHor is 0:

$$offsetX = (\ -nW\ ) >> 1$$

offsetY = ( ( -nH) >> 1) + ( angleIdx < 16 ? ( distanceIdx * nH) >> 3 : -( distanceIdx *nH) >> 3))

-otherwise (i.e., the value of shiftHor is 1):

offsetX = ( ( -nW ) >> 1) + ( angleIdx < 16 ? ( distanceIdx * nW) >> 3 : -( ( distanceIdx *nW) >> 3)

$$offsetY = (\ -nH\ ) >> 1$$

The weight matrix of the pixel points in the merged area, wValueMatrix[x][y] (where x = -nVmW..nCbW - 1, y = -nVmH..nCbH - 1), noting that in this example, a coordinate of an upper left corner of the current block is (0, 0), is derived in the following manner:

-     variables xL and yL are derived in the following manner:

$$xL = (\ cIdx == 0\ )\ ?\ x : x * EubWidthC$$

$$yL = (\ cIdx == 0\ )\ ?\ y : y * EubHeightC$$

A disLut is determined according to table 3.
Herein, the first parameter weightIdx is derived in the following manner:

$$weightIdx = (\ (\ (\ xL + offsetX\ ) << 1\ ) + 1\ ) * disLut[\ displacementX\ ] +$$
$$(\ (\ (\ yL + offsetY\ ) << 1\ ) + 1\ ) * disLut[displacementY]$$

In some embodiments, after the first parameter weightIdx is determined according to the manner mentioned above, and then, the first parameter is adjusted by using the blending parameter to obtain an adjusted first parameter.
In an example, the first parameter is adjusted through the following formula:

$$weightIdx = weightIdx * blendingCoeff$$

where blendingCoeff is the blending parameter.
Then, a weight at a point (x, y) in the merged area is determined according to the adjusted weightIdx.
In the present disclosure, in the step 2-12 mentioned above, the manner for determining the weight of the pixel ponits in the merged area according to the adjusted first parameter of the pixel points in the merged area includes but is not limited to the following manners.
Manner 1: determining a second parameter of the pixel points in the merged area according to the adjusted first parameter of the pixel points in the merged area; and determining the weight of the pixel points in the merged area according to the second parameter of the pixel points in the merged area.
For example, the weight of the pixel points in the merged area is determined according to the formula:

$$weightIdx = ( ( ( xL + offsetX ) << 1 ) + 1 ) * disLut[ displacementX ] +$$
$$( ( ( yL + offsetY ) << 1 ) + 1 ) * disLut[displacementY]$$

$$weightIdxL = partFlip\ ?\ 32 + weightIdx : 32 - weightIdx$$

$$wValueMatrix\ [x][y] = Clip3( 0, 8, ( weightIdxL + 4 ) >> 3 )$$

where wValueMatrix[x][y] is the weight of the point (x, y) in the merged area, weightIdxL is the second parameter of the point (x, y) in the merged area, and wVemplateValue[x][y] is the weight of the point (x, y) in the merged area.

Manner 2: determining the weight of the pixel points in the merged area according to the adjusted first parameter of the pixel points in the merged area, a first threshold and a second threshold.

Exemplarily, the weight of the pixel points in the merged area is the first threshold or the second threshold.

In order to reduce the computational complexity of the weight of the merged area, in the manner 2, the weight of the pixel points in the merged area is defined as the first threshold or the second threshold, that is, the weight of the pixel points in the merged area is either the first threshold or the second threshold, thereby reducing the computational complexity of the weight of the merged area.

The present disclosure does not limit the specific values of the first threshold and the second threshold.

Optionally, the first threshold is 1.

Optionally, the second threshold is 0.

In an example, the weight of the pixel points in the merged area may be determined through the following formula:

$$wVemplateValue[x][y] = (partFlip\ ?\ weightIdx: - weightIdx) > 0\ ?\ 1 : 0$$

where wValueMatrix [x][y] is the weight of the point (x, y) in the merged area, and in the above "1:0", 1 is the first threshold and 0 is the second threshold.

In the second manner mentioned above, a weight of each point in a merged area composed of a current block and a template is determined through a weight derivation mode, and then, a weight corresponding to a template in the merged area is determined as the weight of the template according to a size of the template. And, in this second manner, a weight of a prediction value is determined simultaneously, and there is no need to perform a subsequent step for determining the weight of the prediction value, thereby decreasing the prediction step and enhancing the prediction efficiency.

According to the manner mentioned above, after the weight of the template corresponding to the weight derivation mode included in the third combination is determined, the template is predicted by using K prediction modes in the third combination to obtain K prediction values; and the K prediction values are weighted according to the weight of the template to obtain the prediction value of the template.

The prediction value of the template may be understood as a matrix composed of prediction values of pixel points in the template.

In some embodiments, the prediction value mentioned above is also referred to as a prediction sample.

Then, a cost of the third combination is determined according to the prediction value and a reconstructed value of the template.

The manner for determining the cost of the third combination mentioned above includes but is not limited to the following manners.

First manner: determining the cost of the third combination by adopting a matrix manner. Specifically, a loss is determined according to the prediction value and a reconstructed value of the template, and the loss is recorded as a first loss. Since the prediction value and the reconstructed value of the template mentioned above are matrices, the obtained first loss is also a matrix. For example, an absolute value of a difference between the prediction value and the reconstructed value of the template is determined as the first loss, and the first loss is determined as the cost of the third combination.

Second manner: determining the cost of the third combination is determined by adopting point-by-point calculation.

Specifically, for an i-th pixel point in the template, when a prediction, at the i-th pixel point, of each prediction mode among the K prediction modes in the third combination is determined, a weight of the template corresponding to the i-th pixel point and among the weights of the template is determined; and a prediction value of the i-th pixel point is obtained according to the weight of the template of the i-th pixel point and K prediction values of the i-th pixel point. According to the prediction value and a reconstructed value of the i-th pixel point, a cost of the third combination at the i-th pixel point is obtained. According to this manner, a prediction distortion cost of the third combination at each pixel point in the template may be determined. Finally, a cumulative sum of prediction distortion costs of the third combination at respective pixel points in the template is determined as the cost of the third combination.

According to the manner mentioned above, the cost of each third combination among the H third combinations may be determined.

Then, a second candidate combination list is constructed according to the cost of each third combination among the H third combinations.

For example, according to sizes of the costs of the third combinations, the H third combinations are sorted in an order from small to large, and sorted H third combinations are determined as the second candidate combination list.

For another example, according to the sizes of the costs of the third combinations, L third combinations with a smallest cost are selected from the H third combinations to constitute the second candidate combination list.

Optionally, L is 8 or 16 or 32, etc.

According to the manner mentioned above, a second candidate combination list is determined, and respective second candidate combinations in the second candidate combination list are sorted in an order from small to large according to the sizes of the costs. Exemplarily, the second candidate combination list is as shown in table 8 mentioned above.

In this way, a decoder side searches for a second candidate combination corresponding to a first index in the second candidate combination list shown in table 8 according to the first index, and determines the second candidate combination corresponding to the first index, as the first combination. That is, a weight derivation mode included in the second candidate combination is determined as a first weight derivation mode, K prediction modes included in the second candidate combination is determined as K first prediction modes, and a blending parameter included in the second candidate combination is determined as a second blending parameter.

In case 2 mentioned above, the implementation process of the S102 mentioned above is introduced by taking the first combination including a first weight derivation mode, K first prediction modes and a second blending parameter as an example.

Case 3: the first combination includes a first weight derivation mode and K first prediction modes, and the first weight derivation mode includes a fourth blending parameter. The fourth blending parameter is used to determine a weight, e.g., used to determine a weight of a prediction value, or a weight of a template.

In this case 3, the implementation of S102 mentioned above includes but is not limited to the following manners.

Manner 1: an encoder side and a decoder side determine a first combination corresponding to the first index from a plurality of preset third candidate combinations. For example, the plurality of preset third candidate combinations include any number of third candidate combinations such as 2, 3, 4, 5, 6, 7, 8, 9, etc. Assuming that 8 third candidate combinations are included, each third candidate combination includes a weight derivation mode and K prediction modes, and the weight derivation mode includes a blending parameter; and the 8 third candidate combinations have different identifiers (or indexes). In this way, after the decoder side obtains the first index, the decoder side searches for a third candidate combination corresponding to the first index from the plurality of third candidate combinations, determines a third candidate combination corresponding to the first index as the first combination, and then, determines a weight derivation mode included in the third candidate combination as a first weight derivation mode, and determines K prediction modes included in the second candidate combination as K first prediction modes.

Manner 2: a decoder side and an encoder side both determine a list, where the list includes a plurality of third candidate combinations. Therefore, the list is also referred to as a third candidate combination list, and a first combination corresponding to the first index is determined from the third candidate combination list. At this time, S102 mentioned above includes the following steps.

S102-E, determining a third candidate combination list.

S102-F, a weight derivation mode and K prediction modes included in the third candidate combination and corresponding to the first index in the third candidate combination list are determined as a first weight derivation mode and K first prediction modes.

Herein, the third candidate combination list mentioned above includes a plurality of third candidate combinations, and any third candidate combination among the plurality of third candidate combinations includes a weight derivation mode and K prediction modes, where the weight derivation mode includes a blending parameter.

Exemplarily, the third candidate combination list is shown in table 9:

Table 9

| Index | Third candidate combination |
|---|---|
| 0 | Third candidate combination 1 (including a weight derivation mode and K prediction modes, where the weight derivation mode includes a blending parameter) |
| 1 | Third candidate combination 2 (including a weight derivation mode and K prediction modes, where the weight derivation mode includes a blending parameter) |

(continued)

| Index | Third candidate combination |
|---|---|
| ...... | ...... |
| i-1 | Third candidate combination i (including a weight derivation mode and K prediction modes, where the weight derivation mode includes a blending parameter) |
| ...... | ...... |

As shown in table 9, the third candidate combination list includes a plurality of third candidate combinations, and any two of the plurality of third candidate combinations are not completely the same, that is, at least one of the weight derivation mode and the K prediction modes included in one of any two third candidate combinations is different from that of the weight derivation mode and the K prediction modes included in another one of the any two third candidate combinations.

Exemplary, in table 9 mentioned above, a ranking of the third candidate combination among the third candidate combination list is used as an index. Optionally, the index of the third candidate combination among the third candidate combination list may be embodied in other manners, which is not limited in the embodiments of the present disclosure.

In this manner 2, the decoder side decodes a bitstream to obtain the first index; determines the third candidate combination list as shown in table 9 mentioned above; and queries the third candidate combination list according to the first index, to obtain a first weight derivation mode and K prediction modes included in the first combination indicated by the first index.

For example, the first index is index 1. In the third candidate combination list shown in table 9, the third candidate combination corresponding to the index 1 is a third candidate combination 2. That is, the first combination indicated by the first index is the third candidate combination 2. In this way, the decoder side determines a weight derivation mode and K prediction modes included in the third candidate combination 2 as a first weight derivation mode and K first prediction modes included in the first combination, and predicts a current block by using a fourth blending parameter included in the first weight derivation mode and the K first prediction modes, to obtain the prediction value of the current block.

In this manner 2, the encoder side and the decoder side may determine the same second candidate combination list, respectively. For example, the encoder side and the decoder side both determine a list including a plurality of third candidate combinations, each third candidate combination includes 1 weight derivation mode and K prediction modes. However, in a bitstream, the encoder side only needs to write a third candidate combination that is finally selected, such as a first combination. The decoder side parses the first combination finally selected by the encoder side. Specifically, the decoder side decodes the bitstream to obtain a first index, and determines the first combination from the third candidate combination list determined by the decoder side through the first index.

The embodiments of the present disclosure do not limit the specific manner for the decoder side to determine the third candidate combination list.

In some embodiments, the third candidate combination list mentioned above is already available. After the decoder side decodes the bitstream to obtain the first index, the decoder side may obtain or read the third candidate combination list according to the first index, and then, query a third candidate combination corresponding to the first index in the third candidate combination list according to the first index.

In some embodiments, the third candidate combination list mentioned above is sent from the encoder side to the decoder side. For example, the encoder side sends the third candidate combination list to the decoder side before the current block is encoded.

In some embodiments, the third candidate combination list mentioned above is uploaded to a cloud by the encoder side, and the decoder side reads the third candidate combination list from the cloud after the decoder side decodes the bitstream to obtain the first index.

In some embodiments, the third candidate combination list mentioned above is constructed by the decoder side. For example, after the decoder side decodes the bitstream to obtain the first index, the decoder side constructs the third candidate combination list in response to the first index.

The embodiments of the present disclosure do not limit the manner in which the decoder side constructs the third candidate combination list. For example, a probability of occurrence of respective combinations composed of different prediction modes and different blending parameters is analyzed by utilizing information related to the current block, and a third candidate combination list is constructed according to the probability of occurrence of the respective combinations.

Optionally, the information related to the current block includes mode information of surrounding blocks of the current block, a reconstructed pixel of the current block, etc.

In some embodiments, the decoder side constructs the third candidate combination list through the following step S102-E1.

S102-E1, constructing a third candidate combination list based on a template of a current block.

The template of the current block is formed by a reconstructed area around the current block and is relevant to the current block. Based on this, the embodiments of the present disclosure construct the third candidate combination list based on the template of the current block.

For example, for each combination, the template of the current block is predicted by using the combination to obtain a cost corresponding to each combination, and a third candidate combination list is constructed according to the cost corresponding to each combination.

For each combination, the template of the current block is predicted by using the combination to obtain a cost corresponding to each combination, and a third candidate combination list is constructed according to the cost corresponding to each combination.

In some embodiments, S102-E1 includes the following steps S102-E11 to S102-E13.

S102-E11: determining A fourth combinations, where each fourth combination of the A fourth combinations includes a weight derivation mode and K prediction modes, and the weight derivation mode and the K prediction modes included in any two combinations of the A fourth combinations are not completely the same; and A is a positive integer greater than 1.

S102-E12: for each fourth combination among the A fourth combinations, determining a cost corresponding to the fourth combination in a case of predicting the template using a weight derivation mode and K prediction modes in the fourth combination.

S102-E13: constructing a third candidate combination list according to costs corresponding to respective fourth combinations among the A fourth combinations.

In this embodiment, when the third candidate combination list is constructed, the decoder side first determines A fourth combinations. The present disclosure does not limit the specific value of the A fourth combinations, e.g., 8, 16, 32, etc. Each of the A fourth combinations includes a weight derivation mode and K prediction modes. The weight derivation mode includes a blending parameter, and the weight derivation mode and the K prediction modes included in any two combinations of the A fourth combinations are not completely the same. Then, for each of the A fourth combinations, a cost corresponding to the fourth combination is determined in a case of predicting a template of a current block using a weight derivation mode and K prediction modes included in the fourth combination. Finally, a third candidate combination list is constructed according to costs corresponding to respective fourth combinations among the A fourth combinations.

In some embodiments, in S102-E12 mentioned above, determining the cost corresponding to the fourth combination in a case of predicting the template using a weight derivation mode and K prediction modes in the fourth combination includes at least the following manners.

Manner 1, S102-E12 includes the following S102-E12-11 to S102-E12-14.

S102-E12-11: determining a weight of the template according to the weight derivation mode included in the fourth combination.

S102-E12-12: obtaining K prediction values of the template by predicting the template according to the K prediction modes in the fourth combination.

S102-E12-13: obtaining a prediction value of the template corresponding to the fourth combination by weighing the K prediction values of the template according to the weight of the template.

S102-E12-14: determining the cost corresponding to the fourth combination according to the prediction value of the template and a reconstructed value of the template corresponding to the fourth combination.

In the embodiments of the present disclosure, the process of determining the cost corresponding to each fourth combination among the A fourth combinations is consistent. For the convenience of description, one fourth combination among the A fourth combinations is taken as an example for illustration.

In the embodiments of the present disclosure, the fourth combination includes a weight derivation mode and K prediction modes. Exemplarily, when the fourth combination is used to predict the template, the decoder side may determine the weight of the template according to the weight derivation mode included in the fourth combination, obtain K prediction values of the template by predicting the template according to the K prediction modes included in the fourth combination, next, obtain the prediction value of the template corresponding to the fourth combination by weighing the K prediction values of the template using the weight of the template, and then, determining the cost corresponding to the fourth combination according to the prediction value of the template corresponding to the fourth combination and the reconstructed value of the template.

The embodiments of the present disclosure do not limit the specific manner in which the weight of the template is determined according to the weight derivation mode included in the fourth combination among the S102-E12-11 mentioned above. For example, the weight derivation mode in the fourth combination includes a blending parameter, and therefore, the weight of the template may be determined according to the blending parameter.

Manner 2, S102-E12 includes the following S102-E12-11 to S102-E12-14.

S102-E12-21: determining prediction values of the template corresponding to the K prediction modes respectively in the fourth combination according to the weight derivation mode in the fourth combination.

S102-E12-22: determining costs corresponding to the K prediction modes respectively in the fourth combination according to the prediction values of the template and reconstructed values of the template corresponding to the K prediction modes respectively in the fourth combination.

S102-E12-23: determining the cost corresponding to the fourth combination according to the costs corresponding to the K prediction modes respectively in the fourth combination. For example, a sum of the costs corresponding to the K prediction modes respectively in the fourth combination is determined as the cost corresponding to the fourth combination.

For example, assuming K=2, 2 prediction modes included in the fourth combination are recorded as a prediction mode 1 and a prediction mode 2, respectively. First, a weight of the template and a prediction value corresponding to the prediction mode 1 are determined according to the weight derivation mode included in the fourth combination; and the prediction value corresponding to the prediction mode 1 is processed by using the weight of the template corresponding to the prediction mode 1. For example, for each pixel point in the template corresponding to the prediction mode 1, a prediction value of the pixel point in the template corresponding to the prediction mode 1 is multiplied by a weight of the template corresponding to the pixel point to obtain a prediction value of the pixel point. In this way, the prediction value of the template corresponding to the prediction mode 1 may be determined. Next, a cost corresponding to the prediction mode 1 may be determined according to the prediction value of the template and a reconstructed value of the template corresponding to the prediction mode 1, where the manner for determining the cost corresponding to the prediction mode 1 includes but is not limited to SAD, SATD, SEE, etc. Similarly, a cost corresponding to the prediction mode 2 may be determined. The cost corresponding to the fourth combination is then determined according to the cost corresponding to the prediction mode 1 and the cost corresponding to the prediction mode 2. For example, the cost corresponding to prediction mode 1 and the cost corresponding to prediction mode 2 are added together to be determined as the cost corresponding to the fourth combination.

In S102-E13 mentioned above, the manner for constructing the third candidate combination list according to the costs corresponding to respective fourth combinations in the A fourth combinations include but is not limited to the following examples.

Example 1: the A fourth combinations are sorted according to the costs corresponding to respective fourth combinations in the A fourth combinations; and sorted A fourth combinations are determined as the third candidate combination list.

The second candidate combination list generated in this example 1 includes A third candidate combinations.

Optionally, the A second candidate combinations in the third candidate combination list are sorted in an order from small to large according to the size of the cost, that is, the costs corresponding to the third candidate combinations in the third candidate combination list increase in sequence according to ranking.

Herein, sorting the A fourth combinations according to the costs corresponding to respective fourth combinations in the A fourth combinations may be: sorting the A fourth combinations in an order from small to large according to the size of the cost.

Example 2: B fourth combinations are selected from the A fourth combinations according to costs corresponding to the fourth combinations, and a list composed of the B fourth combinations is determined as the third candidate combination list.

Optionally, the B fourth combinations mentioned above are first B fourth combinations with a smallest cost and in the A fourth combinations.

Optionally, the B third candidate combinations in the third candidate combination list are sorted in an order from small to large according to the size of the cost, that is, costs corresponding to the B third candidate combinations in the third candidate combination list increase in sequence according to ranking.

The process for determining A fourth combinations in the S102-E11 mentioned above is introduced below.

In some embodiments, the A fourth combinations mentioned above are preset. In this way, the template of the current block is predicted by using each fourth combination in the preset A fourth combinations, so as to obtain a prediction value of the template corresponding to each fourth combination; then a cost corresponding to each fourth combination is determined according to the prediction value of the template and a reconstructed value of the template corresponding to each fourth combination; the A fourth combinations are sorted according to costs corresponding to respective fourth combinations; and sorted A fourth combinations are used as the third candidate combination list, or B fourth combinations with a smallest cost are selected from the sorted A fourth combinations to constitute the third candidate combination list.

In some embodiments, S102-E11 includes the following steps:

S102-E11-1: determining C weight derivation modes and D prediction modes, where C is a positive integer and D is a positive integer greater than or equal to K; and

S102-E11-2: constructing A fourth combinations according to the C weight derivation modes and the D prediction modes, where each fourth combination of the A fourth combinations includes a weight derivation mode from the C weight derivation modes and K prediction modes from the D prediction modes.

In this embodiment, the decoder side first determines C weight derivation modes and D prediction modes, and then, constructs A fourth combinations according to determined C weight derivation modes and D prediction modes.

The embodiments of the present disclosure do not limit the specific numbers of the C weight derivation modes and the D prediction modes mentioned above.

Assuming K=2, the K prediction modes mentioned above include a first prediction mode and a second prediction mode. Assuming that there are D types of all available prediction modes, the first prediction mode has D possibilities, and since the second prediction mode is different from the first prediction mode, there are D-1 types of second prediction modes. Assuming that there are C types of weight derivation modes, the present disclosure may use any two different prediction modes, any type of weight derivation mode and any type of blending gradient coefficient to constitute a fourth combination, and thus there are a total of C*D*(D-1) types of possible fourth combinations.

In this implementation, the C weight derivation modes are all possible weight derivation modes, and a weight derivation mode includes a blending parameter, that is, the C weight derivation modes include all possible blending parameters. The D prediction modes are all possible prediction modes. An exhaustive method is used to obtain all possible fourth combinations. Specifically, each fourth combination of all possible fourth combinations is used to predict the template of the current block, a distortion cost of each fourth combination is calculated, and then, the third candidate combination list corresponding to the current block is obtained according to distortion costs of respective fourth combinations.

In some embodiments, in order to reduce an amount of data and enhance a speed of constructing the second candidate combination list, not every prediction mode is tried, but a part of the prediction modes may be selected for trying.

At this time, the implementation for determining the D prediction modes in the S102-E11-1 mentioned above includes but is not limited to the following manners.

First manner: the D prediction modes are preset prediction modes.

Second manner: at least one of a third candidate prediction mode list for a current block, third alternative prediction mode lists corresponding to K prediction modes respectively, and a prediction mode corresponding to a weight derivation mode is determined, where the third candidate prediction mode list includes a plurality of third candidate prediction modes, and the third candidate prediction mode list corresponding to any prediction mode in the K prediction modes includes at least one third candidate prediction mode; and the D prediction modes are determined according to the at least one of the third candidate prediction mode list, the third alternative prediction mode lists corresponding to the K prediction modes respectively, and the prediction mode corresponding to the weight derivation mode.

Herein, the manner for determining the third candidate prediction mode list for the current block includes at least the following examples.

Example 1: the third candidate prediction mode list is determined according to a prediction mode used by at least one block adjacent to the current block.

Example 2: in a case where the third candidate prediction mode list does not include a preset mode, a preset mode corresponding to the current block is determined; and the preset mode is added to the third candidate prediction mode list.

In an example, the preset mode mentioned above is of several preset prediction modes.

In another example, a picture type corresponding to the current block is determined, and the preset mode is determined according to the picture type corresponding to the current block.

For example, in a case where the picture type corresponding to the current block is type B or type P, the preset mode includes at least one of a DC, a horizontal mode, a vertical mode and an angle mode.

Example 3: a picture type corresponding to the current block is determined, and a third candidate prediction mode list is determined according to the picture type corresponding to the current block. For example, in a case where the picture type corresponding to the current block is type B or type P, at least one of a DC, a horizontal mode, a vertical mode and some angle modes may be added to the third candidate prediction mode list. For another example, in a case where the picture type corresponding to the current block is type I, at least one of a DC, a horizontal mode and a vertical mode may be added to the third candidate prediction mode list.

In the embodiments of the present disclosure, the specific implementation of the second manner mentioned above refers to the specific description of the second manner in the S102-A11-1 mentioned above, which will not be repeated herein.

The process for determining the C weight derivation modes in the S102-E11-1 is introduced below.

In some embodiments, the C weight derivation modes mentioned above are preset.

In some embodiments, the C weight derivation modes mentioned above are screened out from a plurality of preset weight derivation modes. For example, C weight derivation modes are obtained by screening according to information such as the size of the current block and/or the picture type corresponding to the current block. Optionally, C weight derivation modes with a smaller cost may be selected from a plurality of preset weight derivation modes according to costs.

In some embodiments, X blending parameters are determined, and C weight derivation modes are determined according to the X blending parameters. The embodiments of the present disclosure do not limit a size relationship between X and C.

In the embodiments of the present disclosure, since each weight derivation mode of the C weight derivation modes includes a blending parameter, in this way, the C weight derivation modes may be determined according to the X blending parameters. For example, in a case where the weight derivation mode further includes other parameters in addition to the blending parameter, at this time, the blending parameters included in at least one or two of the C weight derivation modes may be the same or different from each other, and then, the C weight derivation modes may be determined according to the X blending parameters. For example, a plurality of different weight derivation modes composed of X blending parameters are used to determine a cost corresponding to each weight derivation mode in the plurality of different weight derivation modes, and further, C weight derivation modes with a smallest cost are selected.

The embodiments of the present disclosure do not limit the specific manner for determining the X blending parameters mentioned above.

In some embodiments, the X blending parameters mentioned above are preset blending parameters, such as 1/4, 1/2, 1, 2, 4, etc.

In some embodiments, the X blending parameters are determined according to the size of the current block.

For example, in a case where the size of the current block is smaller than a third set threshold, blending parameters greater than or equal to a fifth value in at least one preset blending parameter are used as the X blending parameters.

For another example, in a case where the size of the current block is greater than or equal to a third set threshold, blending parameters less than or equal to a sixth value in at least one blending parameter are used as X blending parameters, where the sixth value is less than the fifth value.

For another example, in a case where the size of the current block is greater than or equal to a third set threshold, blending parameters less than or equal to a sixth value in the at least one blending parameter are used as X blending parameters, where the sixth value is less than the fifth value.

For another example, in a case where the size of the current block is smaller than a third set threshold, the X blending parameters are determined as one or more blending parameters, within a fifth blending parameter value range, of at least one preset blending parameter.

For another example, in a case where the size of the current block is greater than or equal to a third set threshold, the X blending parameters are determined as one or more blending parameters, within a sixth blending parameter value range, of at least one blending parameter, where a minimum value of the sixth blending parameter value range is less than a minimum value of the fifth blending parameter value range.

The embodiments of the present disclosure do not limit the specific values of the third set threshold, the fifth value, the sixth value, the fifth blending parameter value range and the sixth blending parameter value range.

Optionally, in a case where the size of the current block is represented by a number of pixel points included in the current block, the third set threshold mentioned above is 256.

Optionally, the fifth value is 1.

Optionally, the sixth value is 1/2.

In some embodiments, picture information of the current block is determined; and X blending parameters are determined according to the picture information of the current block.

Example 1: in a case where a definition of a picture edge of the current block is less than a preset value, at least one third-type blending parameter in Y preset blending parameters is determined as X blending parameters, where Y is a positive integer greater than X.

Herein, the third-type blending parameter may be understood as a blending parameter that may form a wider blending area, such as 1/4, 1/2, etc.

Example 2: in a case where a definition of a picture edge of the current block is greater than or equal to a preset value, at least one fourth-type blending parameter in Y blending parameters is determined as X blending parameters, where the fourth-type blending parameter is greater than the third-type blending parameter.

Herein, the fourth-type blending parameter may be understood as a blending parameter that may form a narrower blending area, such as 2, 4, etc.

After the decoder side determines the D prediction modes, the C weight derivation modes, and the W blending parameters according to the steps mentioned above, A different fourth combinations are constituted according to the D prediction modes and the C weight derivation modes. Then, a third candidate combination list is determined according to the A fourth combinations, and further, a first weight derivation mode and K first prediction modes are determined from the third candidate combination list.

In some embodiments, in order to further increase a speed of constructing the third candidate combination list, the decoder side screens the D prediction modes and the C weight derivation modes determined above. At this time, in the S102-E11-2 mentioned above, constituting the A different fourth combinations according to determined C weight derivation modes and D prediction modes includes the following steps S102-E11-21 to S102-E11-24.

S102-E11-21: C1 weight derivation modes are selected from the C weight derivation modes, where C1 is a positive integer less than or equal to C.

The specific implementation process of the S102-E11-21 mentioned above may refer to the description of the S102-A11-21 mentioned above, which will not be repeated herein.

According to the step mentioned above, after the decoder side selects the C1 weight derivation mode from the C weight derivation modes, the following step S102-E11-22 is executed.

S102-E11-22: D1 prediction modes are selected from the D prediction modes, where D1 is a positive integer less than or equal to D.

The specific implementation process of S102-E11-22 mentioned above may refer to the description of the S102-A11-22 mentioned above, which will not be repeated herein.

According to the steps mentioned above, the C1 weight derivation modes are selected from the C weight derivation modes, and the D1 prediction modes are selected from the D prediction modes. Next, the following S102-E11-23 is executed.

S102-C11-23: A fourth combinations are constituted according to the C1 weight derivation modes and the D1 prediction modes.

The specific implementation process of the S102-E11-23 mentioned above may refer to the description of the S102-A11-23 mentioned above, which will not be repeated herein.

The implementation process in which the template of the current block is predicted by using each fourth combination to obtain the prediction value of the template in an embodiment of the present disclosure is introduced.

First, a weight of the template is determined by using a weight derivation mode included in the fourth combination.

In some embodiments, determining the weight of the template according to the weight derivation mode includes the following steps:

step 3, determining an angle index, a distance index and a blending parameter according to the weight derivation mode; and

step 4, determining the weight of the template according to the angle index, the distance index, the blending parameter and a size of the template.

In the present disclosure, the weight of the template may be derived in the same manner that a weight of the prediction value is derived. For example, first, parameters such as an angle index, a distance index and a blending parameter are determined according to the weight derivation mode.

The manner for determining the weight of the template according to the angle index, the distance index, the blending parameter and the size of the template in step 2 mentioned above, includes but is not limited to the following manners.

First manner: the weight of the template is determined according to the angle index, the distance index, the blending parameter and the size of the template. At this time, step 4 mentioned above includes the following steps: step 41 to step 43.

Step 41: determining first parameters of pixel points in the template according to the angle index, the distance index and the size of the template.

Step 42: determining weights of the pixel points in the template according to the first parameter of the pixel point in the template and the blending parameter.

Step 43: determining the weight of the template according to the weights of the pixel points in the template.

In this implementation, weights of pixel points in the template are determined according to an angle index, a distance index, a size of the template and a blending parameter, and the, a weight matrix composed of weights of respective points in the template is determined as the weight of the template.

The first parameter of the present disclosure is used to determine a weight.

In some embodiments, the first parameter is also referred to as a weight index.

In a possible implementation, the offset and the first parameter may be determined according to the following manner.

Inputs to the weight derivation process of the template are: as shown in FIG. 17, a width of a current block, nCbW; a height of the current block, nCbH; a width of a left template, nVmW; a height of an upper template, nVmH; a "partition" angle index variable of GFM, angleId; a distance index variable of GFM, distanceIdx; and a component index variable, cIdx. Exemplarily, the present disclosure takes a luma component as an example, so cIdx is 0, which represents the luma component.

The variables nW, nH, shift1, offset1, displacementX, displacementY, partFlip and shiftHor are derived in the following manner:

$$nW = (\, cIdx \ \ == \ \ 0\,)\,?\,nCbW : nCbW * EubWidthC$$

$$nH = ( \ cIdx \ == \ 0 \ ) \ ? \ nCbH : nCbH * EubHeightC$$

$$shift1 = Max( \ 5, \ 17 - BitDepth \ ),$$

where BitDepth is a bit depth of coding

$$offset1 = 1 \ << \ ( \ shift1 - 1 \ )$$

$$displacementX = angleIdx$$

$$displacementY = ( \ angleIdx + 8 \ ) \% 32$$

$$partFlip = ( \ angleIdx \ >= \ 13 \ \&\& \ angleIdx \ <= \ 27 \ ) \ ? \ 0 : 1$$

shiftHor = ( angleIdx % 16 = = 8 $\|$ ( angleIdx % 16 != 0 && nH >= nW))? 0: 1

Herein, the offsets, i.e., offsetX and offsetY, are derived in the following manner:

- if a value of shiftHor is 0:

$$offsetX = ( -nW \ ) \ >> \ 1$$

offsetY = ( ( -nH) >> 1) + ( angleIdx < 16 ? ( distanceIdx * nH) >> 3 : -( ( distanceIdx * nH) >> 3))

- otherwise (i.e., the value of shiftHor is 1):

offsetX = ( ( -nW ) >> 1) + ( angleIdx < 16 ? ( distanceIdx * nW) >> 3 : -( ( distanceIdx * nW) >> 3)

$$offsetY = ( - nH \ ) \ >> \ 1$$

The weight matrix of the template wVemplateValue[x][y] (where x = -nVmW..nCbW - 1, y = -nVmH..nCbH - 1, excluding the case where both x and y are greater than or equal to 0), noting that in this example, a coordinate of the upper left corner of the current block is (0, 0), is derived in the following manner:

- the variables xL and yL are derived in the following manner:

$$xL = ( \ cIdx \ == \ 0 \ ) \ ? \ x : x * EubWidthC$$

$$yL = ( \ cIdx \ == \ 0 \ ) \ ? \ y : y * EubHeightC$$

Herein, the disLut is determined according to table 3 mentioned above.
The first parameter weightIdx is derived in the following manner:

$$weightIdx = ( ( ( xL + offsetX ) \ << \ 1 ) + 1 ) * disLut[ \ displacementX \ ] + \\ ( ( ( yL + offsetY ) \ << \ 1 ) + 1 ) * disLut[ \ displacementY \ ]$$

In some embodiments, after the first parameter weightIdx is determined according to the manner mentioned above, and then, the first parameter is adjusted by using the blending parameter to obtain an adjusted first parameter.

In an example, the first parameter is adjusted through the following formula:

$$weightIdx = weightIdx * blendingCoeff$$

where blendingCoeff is the blending parameter.

Then, the manner for determining the weights of the pixel points in the template according to the adjusted first parameter includes but is not limited to the following manners.

Manner 1: determining second parameters of the pixel points in the template according to the adjusted first parameters of the pixel points in the template; and determining the weight of the pixel points in the template according to the second parameters of the pixel points in the template.

Herein, the second parameter is also used to determine the weight. **In** some embodiments, the second parameter mentioned above is also referred to as a weight index under a first component, and the first component may be a luma component, a chroma component, etc.

For example, the weights of the pixel points in the template are determined according to the formula:

$$weightIdxL = partFlip \ ? \ 32 + weightIdx : 32 - weightIdx$$

$$wVemplateValue[x][y] = Clip3(\ 0,\ 8,\ (\ weightIdxL + 4\ )\ >> \ 3\ )$$

where wVemplateValue[x][y] is a weight of a point in the template, (x, y); weightIdxL is a second parameter of the point in the template, (x, y), also referred to as a weight index under the first component (e.g., luma component); wVemplateValue[x][y] is a weight of the point in the template, (x, y); partFlip is an intermediate variable, determined according to an angle index angleIdx, as mentioned above: partFlip = ( angleIdx >= 13 && angleIdx <= 27 ) ? 0 : 1. That is, a value of partFlip is 1 or 0, when partFlip is 0, weightIdxL is 32 - weightIdx; and when partFlip is 1, weightIdxL is 32 + weightIdx. It should be noted that 32 herein is just an example, and the present disclosure is not limited to thereto.

Manner 2: determining the weights of the pixel points in the template according to the adjusted first parameters of the pixel points in the template, a first threshold and a second threshold.

In order to reduce the computational complexity for the weight of the template, in manner 2, the weights of the pixel points in the template are defined as the first threshold or the second threshold, that is, the weights of the pixel points in the template are either the first threshold or the second threshold, thereby reducing the computational complexity for the weight of the template .

The present disclosure does not limit the specific values of the first threshold and the second threshold.

Optionally, the first threshold is 1.

Optionally, the second threshold is 0.

In an example, the weights of the pixel points in the template may be determined through the following formula:

$$wVemplateValue[x][y] = (partFlip \ ? \ weightIdx: - weightIdx) > 0 \ ? \ 1 : 0$$

where wVemplateValue[x][y] is a weight of a point in the template, (x, y), and in the "1:0" mentioned above, 1 is the first threshold and 0 is the second threshold.

In the first manner mentioned above, a weight of each point in the template is determined through the weight derivation mode, and a weight matrix composed of weights of respective points in the template is used as the weight of the template.

Second manner: the weight of the current block and a template is determined according to the weight derivation mode. That is, in the second manner, a merged area composed of the current block and the template is taken as a whole, and weights of pixel points in the merged area are derived according to the weight derivation mode. Based on this, the step 4 mentioned above includes the following steps: step 4-1 and step 4-2.

Step 4-1: determining weights of pixel points in a merged area composed of the current block and the template according to an angle index, a distance index and a blending parameter as well as a size of the template and a size of the current block.

Step 4-2: determining the weight of the template according to the size of the template and the weights of the pixel points in the merged area.

In this second manner, the current block and the template are taken as a whole; weights of pixel points in the merged area composed of the current block and the template are determined according to an angle index, a distance index, a blending parameter, and a size of the template and a size of the current block; and then, a weight corresponding to the template in the merged area is determined as the weight of the template according to the size of the template. For example, as shown in FIG. 17, a weight corresponding to an L-shaped template area in the merged area is determined as the weight of the template.

The present disclosure does not limit the specific implementation in which the weights of the pixel points in the merged area composed of the current block and the template are determined according to the angle index, the distance index, the blending parameter as well as the size of the template and the size of the current block.

Herein, the specific implementation process of step 4-1 and step 4-2 mentioned above refers to the description of step 2-1 and step 2-2 mentioned above, which will not be repeated herein.

According to the method mentioned above, after the weight of the template corresponding to the weight derivation mode included in the fourth combination is determined, a cost corresponding to each prediction mode in the K prediction modes included in the fourth combination is determined, and then, a cost corresponding to the fourth combination is determined.

According to the method mentioned above, a cost of each fourth combination in the A fourth combinations may be determined.

Then, the third candidate combination list is constructed according to costs of respective fourth combinations in the A fourth combinations.

For example, according to sizes of the costs of the fourth combinations, the A fourth combinations are sorted in an order from small to large, and sorted A fourth combinations are determined as the third candidate combination list.

For another example, according to sizes of the costs of the fourth combinations, B fourth combinations with a smallest cost are selected from the A fourth combinations to constitute the third candidate combination list.

The third candidate combination list is determined according to the method mentioned above, and respective third candidate combinations in the third candidate combination list are sorted in an order from small to large according to sizes of the costs. Exemplarily, the third candidate combination list is shown in table 9 mentioned above.

In this way, the decoder side searches for a third candidate combination corresponding to the first index in the third candidate combination list shown in table 9 according to the first index, and determines the third candidate combination corresponding to the first index as a first combination. That is, a weight derivation mode included in the third candidate combination is determined as a first weight derivation mode, and determines K prediction modes included in the third candidate combination as K first prediction modes.

According to case 1, case 2 and case 3, after the decoder side determines the first combination, the following step S103 is executed.

S103: predicting the current block according to the first weight derivation mode and the K first prediction modes to obtain a prediction value of the current block.

It can be seen from the S103 mentioned above that in the embodiments of the present disclosure, different contents are included in the first combinations. For example, in case 1, the first combination includes a first weight derivation mode and K first prediction modes, but does not include a blending parameter. In case 2, the first combination includes a first weight derivation mode, K first prediction modes and a second blending parameter. In the embodiments of the present disclosure, the methods for determining a prediction value of a current block are different from each other for different contents included in the first combinations. In case 3, the first combination includes a first weight derivation mode and K first prediction modes, and the first weight derivation mode includes a fourth blending parameter.

Case 1: in a case where the first combination includes a first weight derivation mode and K first prediction modes, S103 mentioned above includes the following steps:

S103-A1: determining a first blending parameter; and
S103-A2, predicting the current block according to the first blending parameter, the first weight derivation mode and the K first prediction modes to obtain the prediction value of the current block.

The embodiments of the present disclosure do not limit the specific implementation process of S103-A2 mentioned above. For example, the first weight derivation mode and K first prediction modes are used for predicting the current block to obtain a prediction value, and then, the prediction value of the current block is determined according to the first blending parameter and the prediction value.

In some embodiments, S103-A2 mentioned above includes the following steps:

S103-A21: determining a weight of a prediction value according to the first blending parameter and the first weight derivation mode;
S103-A22: predicting the current block according to the K first prediction modes to obtain K prediction values; and
S103-A23: weighting the K prediction values according to the weight of the prediction value to obtain the prediction value of the current block.

There is no order for executing S103-A22 and the S103-A21 mentioned above, that is, S103-A22 may be executed before S103-A21, or may be executed after S103-A21, or may be executed in parallel with S103-A21.

In this case 1, in a case where the first combination includes a first weight derivation mode and K first prediction modes, but does not include a blending parameter, a decoder side determines a first blending parameter and determines a weight of a prediction value according to the first blending parameter and the first weight derivation mode. Next, the current block is predicted according to the K first prediction modes to obtain K prediction values of the current block. Then, the K prediction values of the current block are weighed by using the weight of prediction value to obtain the prediction value of the current block.

In the embodiments of the present disclosure, the manner for determining the first blending parameter includes at least the following manners.

Manner 1: a bitstream is decoded to obtain a second index, where the second index is used to indicate a first blending parameter; and the first blending parameter is determined according to the second index. Specifically, after determining the first blending parameter, the encoder side writes the second index corresponding to the first blending parameter into a bitstream. Then, the decoder side obtains the second index by decoding the bitstream, and further determines the first blending parameter according to the second index.

In an example, a syntax corresponding to manner 1 is shown table 10:

Table 10

| If (the condition for the current block to use GPM is derived) { | |
|---|---|
| **gpm_cand_idx**[x0][y0] | ae(v) |
| **gpm_blending_idx**[x0][y0] | ae(v) |
| } | |

In table 10, gpm_cand_idx represents the first index, and gpm_blending_idx represents the second index.

In some embodiments, different blending gradient indices have a small effect on a prediction result of a template. In a case where a simplified method is used, that is, weights of the template include only 0 and 1, and at this time, a blending gradient index cannot affect the prediction of the template, that is, the blending gradient index cannot affect the first candidate combination list. At this time, the blending gradient index may be placed outside the combination.

In the embodiments of the present disclosure, the specific manner for determining the first blending parameter according to the second index is not limited.

In some embodiments, the decoder side determines a candidate blending parameter list, where the candidate blending parameter list includes a plurality of candidate blending parameters, and determines a candidate blending parameter corresponding to the second index and in the candidate blending parameter list as the first blending parameter.

The embodiments of the present disclosure do not limit the manner for determining the candidate blending parameter list.

In an example, the candidate blending parameters in the candidate blending parameter list mentioned above are preset.

In another example, the decoder side selects at least one blending parameter from a plurality of preset blending parameters according to characteristic information of the current block to constitute a candidate blending parameter list. For example, a blending parameter that meets picture information of the current block is selected from the plurality of preset blending parameters according to the picture information of the current block, to constitute the candidate blending parameter list.

For example, assuming that the picture information includes a definition of a picture edge, in a case where the definition of the picture edge of the current block is less than a preset value, at least one first-type blending parameter in the plurality of preset blending parameters, such as 1/4, 1/2, etc., is selected to constitute the candidate blending parameter list; and in a case where the definition of the picture edge of the current block is greater than or equal to the preset value, at least one second-type blending parameter in the plurality of preset blending parameters, such as 2, 4, etc., is selected to constitute the candidate blending parameter list.

Exemplarily, the candidate blending parameter list of the embodiments of the present disclosure is shown in table 11:

Table 11

| Index | Candidate blending parameter |
|---|---|
| 0 | Candidate blending parameter 0 |
| 1 | Candidate blending parameter 1 |

(continued)

| Index | Candidate blending parameter |
|---|---|
| ...... | ...... |
| i | Candidate blending parameter i |
| ...... | ...... |

As shown in table 11, the candidate blending parameter list includes a plurality of candidate blending parameters, and each candidate blending parameter corresponds to an index.

Exemplarily, in table 11 mentioned above, a ranking of the candidate blending parameter in the candidate blending parameter list is used as an index. Optionally, the index of the candidate blending parameter in the candidate blending parameter list may also be reflected in other ways, which is not limited in the embodiments of the present disclosure.

Based on table 11 mentioned above, the decoder side determines a candidate blending parameter corresponding to the second index in table 11, as the first blending parameter, according to the second index.

In addition that the decoder side decodes the bitstream through manner 1 mentioned above to obtain the second index, and then, determines the first blending parameter according to the second index, the decoder side may further determine the first blending parameter according to the following manner 2.

In some embodiments, the decoder side may further determine the first blending parameter through the following manner 2.

Manner 2: the first blending parameter is determined through the following steps S103-A11 and S103-A12.

S103-A11: determining G alternative blending parameters, where G is a positive integer.

S103-A12: determining a first blending parameter from the G alternative blending parameters.

In this manner 2, the decoder side determines the first blending parameter by itself, thereby preventing the encoder side from indexing the second index in the bitstream, thereby saving codewords. Specifically, the decoder side first determines G alternative blending parameters, and then, determines an alternative blending parameter from the G alternative blending parameters, as the first blending parameter.

The embodiments of the present disclosure do not limit the specific manner for the decoder side to determine the G alternative blending parameters.

In a possible implementation, the G alternative blending parameters mentioned above are preset, that is, the decoder side and the encoder side agree to determine several preset blending parameters as the G alternative blending parameters.

In another possible implementation, the G alternative blending parameters mentioned above may be indicated by the encoder side. For example, the encoder side indicates that G blending parameters in a plurality of preset blending parameters are used as the G alternative blending parameters.

In another possible implementation, there is a certain correlation between a size of a block and a blending parameter, and thus the correlation between the size of the block and the blending parameter may be used to increase the compression efficiency. A reasonable correlation is that a smaller block is better suited for a narrower blending area, and a larger block is better suited for a wider blending area. Based on this, the embodiments of the present disclosure may also determine G alternative blending parameters according to the size of the current block. For example, when the size of the current block is greater than a certain preset value, smaller blending parameters may be determined as G alternative blending parameters. For another example, in a case where the size of the current block is less than or equal to a certain preset value, larger blending parameters may be determined as G alternative blending parameters.

Exemplarily, the size of the block may be represented by a length, a width, or a number of pixels of a block.

**In** another possible implementation, picture information of the current block is determined; and G alternative blending parameters are determined from a plurality of preset alternative blending parameters according to the picture information of the current block.

Exemplarily, in a case where the picture information includes a definition of a picture edge, determining the G alternative blending parameters from the plurality of preset alternative blending parameters according to the picture information of the current block includes the following two manners.

First manner: in a case where the definition of the picture edge of the current block is less than a preset value, at least one first alternative blending parameter in the plurality of preset alternative blending parameters, such as 1/4, 1/2, etc., is determined as G alternative blending parameters.

Second manner: in a case where the definition of the picture edge of the current block is greater than or equal to a preset value, at least one second alternative blending parameter in the plurality of preset alternative blending parameters, such as 2, 4, etc., is determined as G alternative blending parameters, where the second alternative blending parameter is greater than the first alternative blending parameter.

After the decoder side determines the G alternative blending parameters, the decoder side determines a first blending parameter from the G alternative blending parameters.

The embodiments of the present disclosure do not limit the specific manner for determining the first blending parameter from the G alternative blending parameters.

In some embodiments, any alternative blending parameter in the G alternative blending parameters is determined as the first blending parameter.

In some embodiments, the first blending parameter is determined from the G alternative blending parameters through the following steps S103-A121 and S103-A122.

S103-A121: for a g-th alternative blending parameter in the G alternative blending parameters, determining a cost corresponding to the g-th alternative blending parameter, where g is a positive integer from 1 to G.

S103-A122: determining a first blending parameter from the G alternative blending parameters according to costs corresponding to the G alternative blending parameters.

In this embodiment, a cost corresponding to each alternative blending parameter of the G alternative blending parameters is determined, and then, a first blending parameter is determined from the G alternative blending parameters according to the costs.

In the embodiments of the present disclosure, costs corresponding to respective alternative blending parameters of the G alternative blending parameters are the same. For the convenience of description, a g-th alternative blending parameter is taken as an example for explanation.

The embodiments of the present disclosure do not limit the specific manner for determining the cost corresponding to the g-th alternative blending parameter.

In a possible implementation, the g-th alternative blending parameter, as well as a preset weight derivation mode and K preset prediction modes are used as a combination, and a cost of the combination is determined when the combination is used to predict the template. For example, the weight of the template is determined according to a preset weight derivation mode and a g-th alternative blending parameter; K prediction values of the template are determined according to preset K prediction modes; the K prediction values of the template are weighted according to the weight of the template to obtain a prediction value of the template; and then, a cost corresponding to the combination is determined according to the prediction value and a reconstructed value of the template, and the cost corresponding to the combination is determined as the cost corresponding to the g-th alternative blending parameter.

In another possible implementation, a first weight derivation mode, a g-th alternative blending parameter, and K first prediction modes are taken as a combination, and a cost of the combination when the combination predicts the template is determined. Exemplarily, S103-A121 includes the following steps:

S103-A1211: determining a weight of a template of a current block according to a first weight mode and a g-th alternative blending parameter;

S103-A1212: predicting the template according to K first prediction modes to obtain K prediction values of the template;

S103-A1213: weighting the K prediction values of the template according to the weight of the template to obtain a prediction value of the template; and

S103-A1214: determining a cost corresponding to the g-th alternative blending parameter according to the prediction value of the template.

Herein, the specific process for determining the weight of the template of the current block according to the first weight mode and the g-th alternative blending parameter in S103-A1211 mentioned above may refer to the description of the embodiments mentioned above.

For example, a first weight corresponding to the template is determined according to the first weight derivation mode and the template; the first weight is adjusted by using the g-th alternative blending parameter to obtain an adjusted first weight; and the weight of the template is determined according to the adjusted first weight.

Referring to the method mentioned above, a cost corresponding to each alternative blending parameter of the G alternative blending parameters may be determined, and then, the first blending parameter may be determined from the G alternative blending parameters according to the costs.

For example, an alternative blending parameter with a smallest cost and in the G alternative blending parameters is determined as the first blending parameter.

In some embodiments, the first blending parameter may also be determined according to the following manner 3.

Manner 3: the first blending parameter is determined according to the size of the current block.

It can be seen from the description mentioned above that there is a certain correlation between the blending parameter and the size of the block. Therefore, the embodiments of the present disclosure may further determine the first blending parameter according to the size of the current block.

In a possible implementation, a certain fixed blending parameter is determined as the first blending parameter according to the size of the current block.

For example, in a case where the size of the current block is smaller than a first set threshold, the first blending parameter is determined as a first value.

For another example, in a case where the size of the current block is greater than or equal to a first set threshold, the first blending parameter is determined as a second value, where the second value is smaller than the first value.

The embodiments of the present disclosure do not limit the specific values of the first value, the second value and the first set threshold.

Exemplarily, the first value is 1 and the second value is 1/2.

Exemplarily, in a case where the size of the current block is represented by a number of pixel points (or sampling points) of the current block, the first set threshold may be 256, etc.

In another possible implementation, a value range where the first blending parameter is located is determined according to the size of the current block, and then the first blending parameter is determined as a value within the value range.

For example, in a case where the size of the current block is smaller than a first set threshold, it is determined that the first blending parameter is within a first blending parameter value range. For example, the first blending parameter is any blending parameter such as a minimum blending parameter, or a maximum blending parameter, or an intermediate blending parameter within the first blending parameter value range. For another example, the first blending parameter is a blending parameter with a smallest cost within the first blending parameter value range. The method for determining the cost of the blending parameter may refer to the description of other embodiments of the present disclosure, which will not be repeated herein.

For another example, in a case where the size of the current block is greater than or equal to a first set threshold, it is determined that the first blending parameter is within a second blending parameter value range. For example, the first blending parameter is any blending parameter such as a minimum blending parameter, a maximum blending parameter, or an intermediate blending parameter within the second blending parameter value range. For another example, the first blending parameter is a blending parameter with a smallest cost within the second blending parameter value range. A minimum value of the second blending parameter value range is smaller than a minimum value of the first blending parameter value range, and the first blending parameter value range and the second blending parameter value range may intersect or may not intersect to each other, and the embodiments of the present disclosure do not limit thereto.

In this case 1, after the first blending parameter is determined according to the step mentioned above, the step S103-A2 mentioned above is executed: the weight of the prediction value is determined according to the first blending parameter and the first weight derivation mode.

In the embodiments of the present disclosure, the manner for determining the weight of the prediction value according to the first blending parameter and the first weight derivation mode includes at least the manners shown in the following examples.

Example 1: when the first weight derivation mode is used to derive the weight of the prediction value, a plurality of intermediate variables need to be determined. The first blending parameter may be used to adjust a certain intermediate variable or certain intermediate variables of the plurality of intermediate variables, and then, an adjusted variable is used to derive the weight of the prediction value.

Example 2: a second weight corresponding to the current block is determined according to the first weight derivation mode and the current block; the second weight is adjusted by using the first blending parameter to obtain an adjusted second weight; and the weight of the prediction value is determined according to the adjusted second weight.

For example, the second weight corresponding to the current block is determined as weightIdx according to the first weight derivation mode and the current block; next, weightIdx is adjusted by using the first blending parameter to obtain an adjusted weightIdx; and next, the weight of the prediction value, wVemplateValue, is determined according to the adjusted weightIdx.

In an example, weightIdx may be adjusted by using the first blending parameter according to the following formula to obtain the adjusted weightIdx:

$$weightIdx = weightIdx * blendingCoeff1$$

where blendingCoeff1 is the first blending parameter.

For another example, the second weight corresponding to the current block is determined as wVemplateValue according to the first weight derivation mode and the current block; and then, the wVemplateValue is adjusted by using the first blending parameter to obtain an adjusted wVemplateValue; and the adjusted wVemplateValue is determined as the weight of the prediction value.

In an example, the wVemplateValue may be adjusted by using the first blending parameter according to the following formula to obtain the adjusted wVemplateValue:

$$wVemplateValue = wVemplateValue * blendingCoeff1.$$

Referring to the method mentioned above, the decoder side may determine the weight of the prediction value according to the first blending parameter and the first weight derivation mode.

Then, the current block is predicted according to the K first prediction modes to obtain K prediction values; and the K prediction values are weighted according to the weight of the prediction value to obtain the prediction value of the current block.

The process for determining the prediction value of the current block in the case 1 where the first combination includes the first weight derivation mode and K first prediction modes but does not include the blending parameter is introduced above.

The determination process in the prediction of the current block corresponding to the case 2 is introduced below.

Case 2: in a case where the first combination includes a first weight derivation mode, K first prediction modes and a second blending parameter, S103 mentioned above includes: predicting the current block according to the second blending parameter, the first weight derivation mode and the K first prediction modes to obtain the prediction value of the current block.

The embodiments of the present disclosure do not limit the specific implementation for obtaining the prediction value of the current block by predicting the current block according to the second blending parameter, the first weight derivation mode and the K first prediction modes. For example, the current block is predicted through the first weight derivation mode and the K first prediction modes to obtain a prediction value, and then, the prediction value of the current block is determined according to the second blending parameter and the prediction value.

In some embodiments, the prediction value of the current block may be determined through the following steps S103-B1 to S103-B4.

S103-B1: determining a weight of the prediction value according to a first weight derivation mode and a second blending parameter.

S103-B2: determining K prediction values according to K first prediction modes.

S103-B3: obtaining K prediction values by predicting the current block according to the K first prediction modes.

S103-B4: obtaining the prediction value of the current block by weighing the K prediction values according to the weights of the K prediction values.

There is no order for executing S103-B1 and S103-B2, that is, S103-B1 may be executed before S103-B2, or may be executed after S103-B1, or may be executed in parallel with S103-B2.

In this case 2, in a case where the first combination includes a first weight derivation mode, K first prediction modes and a second blending parameter, the decoder side determines the weight of the prediction value according to the first blending parameter and the first weight derivation mode. The current block is predicted according to the K first prediction modes to obtain K prediction values of the current block. Then, the K prediction values of the current block are weighted by using the weight of the prediction value to obtain the prediction value of the current block.

In the embodiments of the present disclosure, the manner for determining the weight of the prediction value according to the second blending parameter and the first weight derivation mode includes at least the manners as shown in the following examples.

Example 1: when the first weight derivation mode is used to derive the weight of the prediction value, a plurality of intermediate variables need to be determined. The second blending parameter may be used to adjust a certain intermediate variable or certain intermediate variables of the plurality of intermediate variables; and then, an adjusted variable is used to derive the weight of the prediction value.

Example 2: a fourth weight corresponding to the current block is determined according to the first weight derivation mode and the current block; the fourth weight is adjusted by using the second blending parameter to obtain an adjusted fourth weight; and the weight of the prediction value is determined according to the adjusted fourth weight.

For example, a fourth weight corresponding to the current block is determined as weightIdx according to the first weight derivation mode and the current block; next, weightIdx is adjusted by using the second blending parameter to obtain an adjusted weightIdx; and next, the weight wVemplateValue of the prediction value is determined according to the adjusted weightIdx.

In an example, the adjusted weightIdx may be obtained by using the second blending parameter to adjust weightIdx according to the following formula:

$$weightIdx = weightIdx * blendingCoeff2$$

where blendingCoeff2 is the second blending parameter.

For another example, a fourth weight corresponding to the current block is determined as wVemplateValue according to the first weight derivation mode and the current block; next, the wVemplateValue is adjusted by using the second blending parameter to obtain an adjusted wVemplateValue; and the adjusted wVemplateValue is determined the weight of the prediction value.

In an example, the adjusted wVemplateValue may be obtained by using the second blending parameter to adjust wVemplateValue according to the following formula:

$$wVemplateValue = wVemplateValue * blendingCoeff2.$$

Referring to the method mentioned above, the decoder side may determine the weight of the prediction value according to the second blending parameter and the first weight derivation mode.

Then, the current block is predicted according to the K first prediction modes to obtain K prediction values; and the K prediction values are weighted according to the weight of the prediction value to obtain the prediction value of the current block.

The embodiments mentioned above may be understood as the weight of the template and the weight of the prediction value are two independent processes and do not interfere with each other. By the method mentioned above, the weight of the prediction value may be determined individually.

In some embodiments, in a case where the weight of the template is determined as mentioned above, a template area and a current block are constituted as a merged area, and the weight of the template is determined by determining the weight of the merged area, at this time since the merged area includes the current block, a weight corresponding to the current block in the weights of the merged area is determined as the weight of the prediction value. It should be noted that when the weight of the merged area is determined, the influence of the blending parameter on the weight is also taken into consideration, which specifically refers to the description of the embodiments mentioned above and will not be repeated herein.

In some embodiments, the prediction process mentioned above is performed in a unit of pixel, and a weight corresponding to the prediction value mentioned above is also a weight corresponding to the pixel. At this time, when the current block is predicted, a certain pixel point A in the current block is predicted by using each prediction mode of the K first prediction modes, so as to obtain K prediction values of the K first prediction modes with respect to the pixel point A; and a weight of the prediction value of the pixel point A is determined according to the first weight derivation mode and the blending parameter. Next, the K prediction values are weighted by using the weight of the prediction value of the pixel point A to obtain the prediction value of pixel point A. A prediction value of each pixel in the current block may be obtained by performing the steps mentioned above on each pixel in the current block, and prediction values of respective pixel points in the current block constitute the prediction value of the current block. Taking K=2 as an example, a certain pixel point A in the current block is predicted by using a first prediction mode, so as to obtain a first prediction value of the pixel point A; the pixel point A is predicted by using a second prediction mode, so as to obtain a second prediction value of the pixel point A; and the first prediction value and the second prediction value are weighted according to the weight of the prediction value corresponding to the pixel point A, so as to obtain the prediction value of the pixel point A.

In an example, taking K=2 as an example, in a case where the first prediction mode and the second prediction mode both are intra prediction modes, a first intra prediction mode is adopted for prediction, so as to obtain a first prediction value, and a second intra prediction mode is adopted for prediction, so as to obtain a second prediction value; and the first prediction value and the second prediction value are weighted according to the weight of the prediction value to obtain the prediction value of the current block. For example, the first intra prediction mode is adopted for predicting a pixel point A to obtain a first prediction value of the pixel point A, and the second intra prediction mode is adopted for predicting the pixel point A to obtain a second prediction value of the pixel point A; and the first prediction value and the second prediction value are weighted according to the weight of the prediction value corresponding to the pixel point A, so as to obtain the prediction value of the pixel point A.

The process for determining a prediction value of a current block in the case 2 where a first combination includes a first weight derivation mode, K first prediction modes and a blending parameter is introduced above.

The determination process in the prediction of the current block corresponding to the case 3 is introduced below.

Case 3: in a case where the first combination includes a first weight derivation mode and K first prediction modes, and the first weight derivation mode includes a fourth blending parameter, S103 mentioned above includes: predicting a current block according to the fourth blending parameter and the K first prediction modes to obtain a prediction value of the current block.

The embodiments of the present disclosure do not limit the specific implementation in which a current block is predicted according to a fourth blending parameter and K first prediction modes to obtain a prediction value of the current block. For example, in a case where the first weight derivation mode further includes other parameters, the current block is predicted according to the other parameters in the first weight derivation mode and the K first prediction modes to obtain a prediction value, and then, the prediction value of the current block is determined according to the fourth blending parameter and the prediction value.

In some embodiments, the prediction value of the current block may be determined through the following steps S103-C1 to S103-C4.

S103-C1: determining a weight of a prediction value according to the first weight derivation mode.

S103-C2: determining K prediction values according to the K first prediction modes.

S103-C3: obtaining K prediction values by predicting the current block according to the K first prediction modes.

S103-C4: obtaining the prediction value of the current block by weighing the K prediction values according to weights of the K prediction values.

There is no order for executiing the S103-C1 and S103-C2, that is, S103-C1 may be executed before S103-C2, or may be executed after S103-B1, or may be executed in parallel with S103-C2.

In this case 3, in a case where the first combination includes a first weight derivation mode and K first prediction modes, the decoder side determines a weight of a prediction value according to the first weight derivation mode. A current block is predicted according to the K first prediction modes to obtain K prediction values of the current block. Then, the K prediction values of the current block are weighted by using the weight of the prediction value to obtain the prediction value of the current block.

In the embodiments of the present disclosure, the manner for determining the weight of the prediction value according to the first weight derivation mode is not limited. For example, an angle index, a distance index and a fourth blending parameter are determined according to the first weight derivation mode; and the weight of the prediction value is determined according to the angle index, the distance index, the fourth blending parameter and a size of the current block.

Then, the current block is predicted according to the K first prediction modes to obtain K prediction values; and the K prediction values are weighted according to the weight of the prediction value to obtain the prediction value of the current block.

In the embodiments of the present disclosure, the prediction value of the current block may be determined according to any of case 1, case 2 and case 3 mentioned above.

In some embodiments, in a case where a j-th prediction mode in the K first prediction modes is an inter prediction mode, determining the prediction value of the current block according to the K first prediction modes and the first weight derivation mode in S103 mentioned above, includes the following steps.

S103-D1: determining motion information according to a j-th prediction mode.

S103-D2: determining a j-th prediction value according to the motion information.

S103-D3: determining K-1 prediction values according to other prediction modes in the K first prediction modes except the j-th prediction mode.

S103-D4: determining weights of K prediction values according to the first weight derivation mode.

S103-D5: determining the prediction value of the current block according to the j-th prediction value, K-1 prediction values and the weights of the prediction values.

Taking K=2 as an example, in a case where a first prediction mode is an intra prediction mode and a second prediction mode is an inter prediction mode, the intra prediction mode is used for prediction to obtain a first prediction value, and the inter prediction mode is used for prediction to obtain a second prediction value; and the first prediction value and the second prediction value are weighted according to weights of prediction values to obtain the prediction value of the current block. In this example, the intra prediction mode is adopted to predict each point in the current block, so as to obtain a prediction value of each point in the current block; and prediction values of respective points in the current block constitute a first prediction value of the current block. The inter prediction mode is adopted to determine motion information, a best matching block of the current block is determined according to the motion information, and the best matching block is determined as a second prediction value of the current block. For the weight of the prediction value of each pixel in the current block, a point-by-point weighted operation is performed on first prediction values and second prediction values of the current block to obtain the prediction value of the current block. For example, for a pixel point A in the current block, according to a weight of a prediction value of the pixel point A, a first prediction value corresponding to the pixel point A in the first prediction values of the current block and a second prediction value corresponding to the pixel point A in the second prediction values of the current block are weighted to obtain the prediction value of the pixel point A.

In some embodiments, in a case where K is greater than 2, weights of prediction values corresponding to two prediction modes in the K first prediction modes may be determined according to the first weight derivation mode, and weights of prediction values corresponding to other prediction modes in the K first prediction modes may be preset values. For example, K=3, a first weight of prediction values corresponding to a first prediction mode and a second prediction mode are derived according to the weight derivation mode, and a weight of a prediction value corresponding to a third prediction mode is a preset value. In some embodiments, in a case where a weight of a total prediction value corresponding to the K first prediction modes is certain, for example, is 8, weights of the prediction values corresponding to the K first prediction modes respectively may be determined according to a preset weight proportion. Assuming that the weight of the prediction value corresponding to the third prediction mode accounts for 1/4 of the weight of the entire prediction value, the weight of the prediction value of the third prediction mode may be determined as 2, and the remaining 3/4 of the weight of the total prediction value is allocated to the first prediction mode and the second prediction mode. Exemplarily, in a case where the weight 3 of the prediction value corresponding to the first prediction mode is derived according to the first weight derivation mode, the weight of the prediction value corresponding to the first prediction mode is determined as (3/4)*3, and the weight of the prediction value corresponding to the 2nd prediction mode is determined as (3/4)*5.

According to the method mentioned above, a prediction value of a current block is determined. At the same time, a bitstream is decoded to obtain a quantization coefficient of the current block. The quantization coefficient of the current block is dequantized and inversely transformed to obtain a residual value of the current block. The prediction value and the residual value of the current block are added to obtain a reconstructed value of the current block.

It can be seen from the above that respective first candidate combinations among the first candidate combination list of the embodiments of the present disclosure are sorted in an order from small to large according to costs, where a first candidate combination with a small cost has a high probability of being selected. Based on this, in order to further reduce an encoding cost, a shorter codeword is used to encode first candidate combinations that are sorted in some front positions and in the first candidate combination list, and a longer codeword is used to encode first candidate combinations that are sorted in back positions and in the first candidate combination list, so that the overall coding efficiency is enhanced.

In some embodiments, the first index is encoded into a bitstream through a variable-length encoding manner, for example, a golomb encoding manner is adopted for encoding.

In some embodiments, in a case where a number of first candidate combinations included in the first candidate combination list mentioned above is less than a fourth preset threshold, the first index is encoded into a bitstream by adopting a fixed-length encoding manner. That is, in the embodiments of the present disclosure, in a case where the number of first candidate combinations included in the first candidate combination list is smaller, respective first candidate combinations are uniformly encoded by using a preset bit length, and the embodiments of the present disclosure do not limit the specific value of the fourth preset threshold, e.g., the fourth preset threshold = 16.

In some embodiments, the second index is encoded into a bitstream through a variable-length coding manner, for example, a golomb encoding manner is adopted for encoding.

In some embodiments, in a case where a number of candidate blending parameters included in the candidate blending parameter list mentioned above is less than a certain preset threshold, the second index is encoded into a bitstream by adopting a fixed-length encoding manner. That is, in the embodiments of the present disclosure, in a case where the number of candidate candidate combinations included in the candidate candidate combination list is smaller, respective candidate blending parameters are uniformly encoded by using a preset bit length.

In some embodiments, a high level syntax (high level syntax) may be used to control a switch of a combined encoding technology provided in the embodiments of the present disclosure. For example, at least one flag may be used to indicate whether a current block is allowed to adopt the combined encoding technology provided in the embodiments of the present disclosure, that is, whether the first combination is allowed to be used for decoding.

In a possible implementation, at least one flag that is set may be flags of different levels, which are used to indicate whether a corresponding level is allowed to adopt the combined encoding technology solution provided in the embodiments of the present disclosure.

Optionally, the at least one flag mentioned above includes at least one of a sequence level flag, a picture level flag, a slice level flag, a unit level flag and a block level flag.

For example, the at least one flag mentioned above includes a sequence level flag, where the sequence level flag is used to indicate whether a current sequence is allowed to adopt the combined encoding technical solution provided in the embodiments of the present disclosure.

Exemplarily, a syntax element (sps_cgpm_enabled_flag) is added to a parameter set (sequence parameter set), where cgpm may be considered as an abbreviation of a combined geometric partitioning mode. In a case where a value of sps_cgpm_enabled_flag is 1, it represents that the current sequence is allowed to use the technical solution of the present disclosure. In a case where a value of sps_cgpm_enabled_flag is 0, it represents that the current sequence is not allowed to use the technical solution of the present disclosure.

In a case where the technical solution provided in the embodiments of the present disclosure is used in an inter mode, since there is already an sps_gpm_enbled_flag in the inter mode, this solution may also be controlled by sps_gpm_enbled_flag. Since this solution may also be used in an intra mode, sps_cgpm_enabled_flag or sps_gpm_enabled_flag may be used in the intra mode and the inter mode. Of course, for better flexibility, different flags may be used for the intra mode and the inter mode, for example, a sps_sgpm_enabled_flag is set. The sgpm may be considered as an abbreviation of spatial geometric partitioning mode. The sps_sgpm_enabled_flag controls whether the intra mode is allowed to use this solution, while the sps_cgpm_enabled_flag or the sps_gpm_enabled_flag controls whether the inter mode is allowed to use this solution.

For another example, the at least one flag mentioned above includes a picture level flag, where the picture level flag is used to indicate whether a current picture is allowed to use the technical solution of the present disclosure.

Optionally, in a case where the at least one flag includes a picture flag, where the picture level flag may be located in a picture header (picture header).

For another example, the at least one flag mentioned above includes a slice level flag, where the slice level flag is used to indicate whether a current slice (slice) is allowed to use the technical solution of the present disclosure.

Optionally, in a case where the at least one flag includes a slice level flag, where the slice level flag may be located in a slice header (slice header).

For another example, the at least one flag mentioned above includes a unit level flag, where the unit level flag is used to indicate whether a current CTU is allowed to use the technical solution of the present disclosure.

For another example, the at least one flag mentioned above includes a block (CU) level flag, where the block level flag is used to indicate whether a current block is allowed to use the technical solution of the present disclosure.

Taking an intra mode as an example, the block level flag is assumed as cu_cgpm_flag. In a case where a value of cu_cgpm_flag is 1, it represents that the current block is allowed to use the technical solution of the present disclosure. In a case where a value of cu_cgpm_flag is 0, it represents that the current block is not allowed to use the technical solution of the present disclosure. Currently, the GPM in VVC is used in an intra merged mode, which is obtained through derivation and of course may be directly represented by the CU level flag in the future, which is not limited herein.

In this way, the decoder side first decodes a bitstream to obtain the at least one flag mentioned above, and determines whether a current block is allowed to use the technical solution of the present disclosure according to the at least one flag. In a case where it is determined that the current block is not allowed to use the technical solution of the present disclosure according to the at least one flag mentioned above, the method of the embodiments of the present disclosure is skipped. In a case where it is determined that a current block is allowed to use the technical solution of the present disclosure according to the at least one flag mentioned above, the method of the embodiments of the present disclosure is performed, that is, the bitstream is decoded to obtain the first index.

In some embodiments, in a case where the at least one flag mentioned above includes a block level flag, the decoder side decodes a bitstream and determines the block level flag when the decoder side determines that a size of a current block meets a preset condition. The embodiments of the present disclosure do not limit the preset condition mentioned above.

In some embodiments, in a case where it is determined that a first technology is not adopted for decoding a current block, a bitstream is decoded to obtain the first index. That is, in the embodiments of the present disclosure, for the consideration of performance and complexity, the combined encoding technology proposed in the embodiments of the present disclosure and the first technology may be set not to be shared within the same block. The first technology may be MRL (Multiple reference line), ISP (Intra sub-partitions), etc. That is, when parsing the bitstream to determine that the current block uses the combined encoding technology proposed in the present disclosure, there is no need to parse an MRL flag (e.g., intra_luma_ref_idx in VVC) and/or an ISP flag (e.g., intra_subpartitions_mode_flag in VVC) that are 0 by default. Or when an MRL flag (e.g., intra_luma_ref_idx in VVC) and/or an ISP flag (e.g., intra_subpartitions_mode_flag in VVC) is 1, there is no need to parse at least one flag mentioned above and involved in the embodiments of the present disclosure, for example, the block level flag cu_cgpm_enabled _flag is not parsed and is 0 by default.

In the video decoding method provided in the embodiments of the present disclosure, a bitstream is decoded to obtain a first index, where the first index is used to indicate a first combination, and the first combination includes a weight derivation mode and K prediction modes, K is a positive integer greater than 1; and a first weight derivation mode and K first prediction modes included in the first combination are determined according to the first index; and according to the first weight derivation mode and the K first prediction modes, a current block is predicted to obtain a prediction value of the current block. In the present disclosure, a weight derivation mode and K prediction modes are taken as a combination, and in this way, a weight derivation mode and K prediction modes used by the current block are indicated in a bitstream and in a form of combination, so that a syntax is becoming simpler, a code word is saved, and there is no need for determination of various cases, thereby enhancing coding efficiency. In some embodiments, the embodiments of the present disclosure adjust a weight of a prediction value through a first blending parameter or a second blending parameter, and use an adjusted weight of the prediction value for predicting, thereby enhancing prediction accuracy.

The above introduces the prediction method of the present disclosure by taking the decoder side as an example, and the following explains the prediction method of the present disclosure by taking the encoder side as an example.

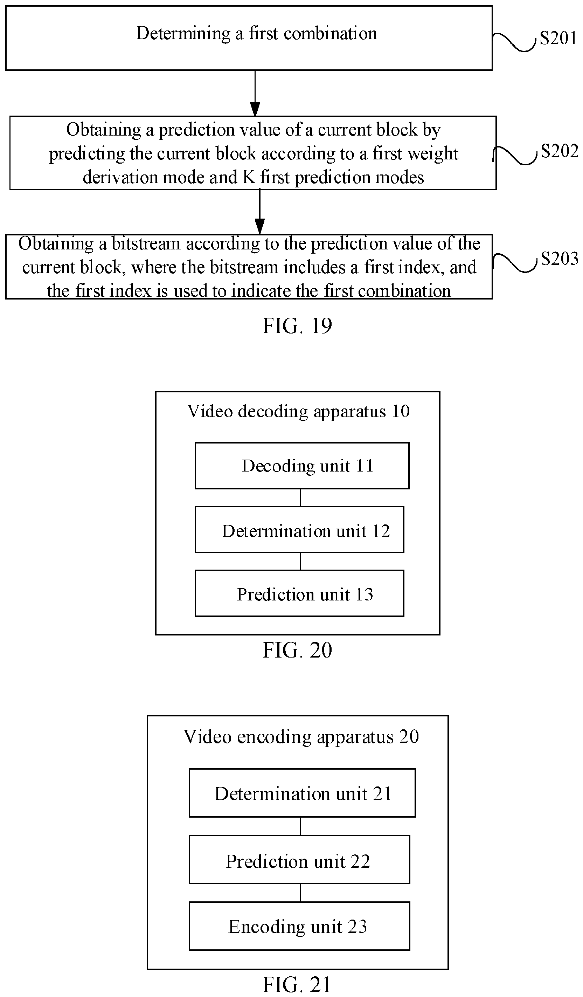

FIG. 19 is a schematic flow chart of a prediction method provided in an embodiment of the present disclosure, and the embodiment of the present disclosure is applied to the video encoder shown in FIG. 1 and FIG. 2. As shown in FIG. 19, the method of the embodiments of the present disclosure includes at least the following S201-S203.

S201, determining a first combination.

Herein, the first combination includes a first weight derivation mode and K first prediction modes.

Based on the description mentioned above, a weight derivation mode and K prediction modes, as a combination, may act collectively on a current block. In order to save a codeword and reduce an encoding cost, the embodiments of the present disclosure take a weight derivation mode and K prediction modes corresponding to a current block as a combination, i.e., a first combination, and use a first index to indicate the first combination. Compared with indicating a weight derivation mode and K prediction modes, respectively, the embodiments of the present disclosure use fewer codewords, thereby reducing the encoding cost.

Specifically, the encoder side determines a first combination corresponding to a current block, where the first combination is composed of a weight derivation mode and K prediction modes. For the convenience of description, a weight derivation mode included in the first combination is recorded as a first weight derivation mode, and K prediction modes included in the first combination are determined as K first prediction modes. The encoder side uses the first weight derivation mode and the K first prediction modes to predict the current block, so as to obtain a prediction value of the current block. For example, the first weight derivation mode is used to derive a weight; the K prediction modes are used to predict the current block respectively, so as to obtain K prediction values; and the K prediction values are weighted according to a derived weight, so as to obtain a prediction value of the current block.

In some embodiments, before the encoder side determines the first combination, the encoder side first needs to determine whether K different prediction modes is used to perform weighted prediction processing on the current block. In a case where the encoder side determines that K different prediction modes are used to perform weighted prediction processing on the current block, S201 mentioned above is executed to determine the first combination. In a case where the encoder side determines that K different prediction modes are not used block to perform weighted prediction processing on the current block, step S201 mentioned above is skipped.

In a possible implementation, the encoder side may determine whether K different prediction modes are not used block to perform weighted prediction processing on the current block by determining a prediction mode parameter of the current block.

Optionally, in the embodiments of the present disclosure, the prediction mode parameter may indicate whether the current block may use a GPM mode or an AWP mode, i.e., indicate whether K different prediction modes may be used to perform prediction processing on the current block.

It can be understood that, in the embodiments of the present disclosure, the prediction mode parameter may be understood as a flag bit indicating whether the GPM mode or the AWP mode is used. Specifically, an encoder may use a variable as a prediction mode parameter, so that a setting of the prediction mode parameter may be achieved by setting a value of the variable. Exemplarily, in the present disclosure, in a case where the current block uses the GPM mode or the AWP mode, the encoder may set the value of the prediction mode parameter to indicate that the current block uses the GPM mode or the AWP mode. Specifically, the encoder may set the value of the variable to 1. Exemplarily, in the present disclosure, in a case where the current block does not use the GPM mode or the AWP mode, the encoder may set the value of the prediction mode parameter to indicate that the current block does not use the GPM mode or the AWP mode. Specifically, the encoder may set the value of the variable to 0. Further, in the embodiments of the present disclosure, after the setting of the prediction mode parameters is completed, the encoder may write the prediction mode parameter into a bitstream and transmit the bitstream to a decoder, so that the decoder may obtain the prediction mode parameter after the bitstream is parsed.

In some embodiments, as shown in table 5, the embodiments of the present disclosure may further conditionally define the usage of the GPM mode or the AWP mode on the current block, that is, when it is determined that the current block meets a preset condition, it is determined that K prediction modes are used to perform weighted prediction on the current block, and then, the first combination is determined.

Exemplarily, when the GPM mode or the AWP mode is applied, a size of the current block may be limited.

It can be understood that since the prediction method proposed in the embodiments of the present disclosure needs to use K different prediction modes to generate K prediction values respectively, and then the K prediction values are weighted according to a weight to obtain the prediction value of the current block, in order to reduce the complexity and meanwhile consider a trade-off between compression performance and complexity. In the embodiments of the present disclosure, blocks with some sizes may be limited to not use the GPM mode or AWP mode. Therefore, in the present disclosure, the encoder side may first determine a size parameter of the current block, and then determine whether the current block uses the GPM mode or the AWP mode according to the size parameter.

In the embodiments of the present disclosure, the size parameter of the current block may include a height and a width of the current block. Therefore, the encoder may determine whether the current block uses the GPM mode or the AWP mode according to the height and width of the current block.

Exemplarily, in the present disclosure, in a case where the width is greater than a first threshold and the height is greater than a second threshold, it is determined that the current block may use the GPM mode or the AWP mode. It can be seen that a possible limitation is to use the GPM mode or the AWP mode only in a case where the width of the block is greater than (or greater than or equal to) the first threshold and the height of the block is greater than (or greater than or equal to) the second threshold. Values of the first threshold and the second threshold may be 4, 8, 16, 32, 128, 256, etc., and the first threshold may be equal to the second threshold.

Exemplarily, in the present disclosure, in a case where the width is less than a third threshold and the height is greater than a fourth threshold, it is determined that the current block may use the GPM mode or the AWP mode. It can be seen that a possible limitation is to use the GPM mode or the AWP mode only in a case where the width of the block is smaller than (or smaller than or equal to) the third threshold and the height of the block is greater than (or greater than or equal to) the fourth threshold. Values of the third threshold and the fourth threshold may be 4, 8, 16, 32, 128, 256, etc., and the third threshold may be equal to the fourth threshold.

Further, in the embodiments of the present disclosure, the size of the block that may use the GPM mode or the AWP mode may be limited by limiting a pixel parameter.

Exemplarily, in the present disclosure, the encoder may first determine a pixel parameter of the current block, and then further determine whether the current block may use the GPM mode or the AWP mode according to the pixel parameter and a fifth threshold. It can be seen that a possible limitation is to use the GPM mode or the AWP mode only in a case where a number of pixels of the block is greater than (or greater than or equal to) the fifth threshold. A value of the fifth threshold may be 4, 8, 16, 32, 128, 256, 1024, etc.

That is, in the present disclosure, the current block may use the GPM mode or the AWP mode only under a condition that the size parameter of the current block meets a size requirement.

Exemplarily, in the present disclosure, there may be a frame level flag to determine whether a current frame to be encoded uses the present disclosure. For example, an intra frame (e.g., I frame) may be configured to use the present disclosure, while an inter frame (e.g., B frame and P frame) may be configured to not use the present disclosure. Alternatively, an intra frame may be configured to not use the present disclosure, and an inter frame may be configured to use the present disclosure. Alternatively, certain inter frames may be configured to use the present disclosure, while certain inter frames may be configured to not use the present disclosure. The inter frame may also use intra prediction, so the inter frame may also use the present disclosure.

In some embodiments, there may also be a flag (e.g., tile, slice, patch, LCU, etc.) below the frame level and above the CU level to determine whether this area uses the technical solution of the present disclosure.

In the embodiments of the present disclosure, the first combination includes a first weight derivation mode and K first prediction modes.

Herein, the first weight derivation mode is used to determine a weight used for the current block. Specifically, the first weight derivation mode may be a mode for deriving a weight. For a block with given length and width, each type of weight derivation mode may derive a weight matrix; and for blocks with the same size, different weight derivation modes derive different weight matrices.

Exemplarily, in the present disclosure, the AWP has 56 types of weight derivation modes and the GPM has 64 types of weight derivation modes.

The K different first prediction modes included in the first combination mentioned above include the following examples.

Example 1: the K different first prediction modes mentioned above are all intra prediction modes, for example, the current block is an intran encoded block and is not applicable for screen content encoding.

Example 2: the K different first prediction modes mentioned above are all inter prediction modes, for example, the current block is an inter encoded block.

Example 3: among the K different first prediction modes mentioned above, at least one of the K different first prediction modesis an intra prediction mode, and at least one of the K different first prediction modes is an inter prediction mode.

Example 4: among the K different first prediction modes mentioned above, at least one of the K different first prediction modes is an intra prediction mode, and at least one of the K different first prediction modes is a non-inter and non-intra prediction mode, such as an intra block copy (IBC) prediction mode or a palette prediction mode, etc.

Example 5: among the K different first prediction modes mentioned above, at least one of the K different first prediction modes is an inter prediction mode, and at least one of the K different first prediction modes is a non-inter-frame and non-intra prediction mode, such as an IBC prediction mode or a palette prediction mode, etc.

Example 6: the K different first prediction modes mentioned above are neither intra prediction modes nor inter prediction modes. For example, one of the K different first prediction modes is an IBC prediction mode, one of the K different first prediction modes is a palette prediction mode, etc.

It should be noted that the embodiments of the present disclosure do not limit a specific type of the K different first prediction modes included in the first combination.

In the embodiments of the present disclosure, in a case, the first combination includes a first weight derivation mode and K first prediction modes. In another case, the first combination includes a first weight derivation mode, K first prediction modes and a second blending parameter, where the second blending parameter is used to adjust the weight determined by the first weight derivation mode, so as to obtain an adjusted weight. In this way, K prediction values may be determined through the K first prediction modes, and the K prediction values are weighted by using the adjusted weight to obtain the prediction value of the current block.

The process for determining the first combination when the first combination includes different contents is introduced below.

Case 1: when the first combination includes a first weight derivation mode and K first prediction modes, the manner for the encoder side to determine the first combination includes but is not limited to the following manners.

Manner 1: the first combination is a preset combination.

Manner 2: the encoder side determines a list, where the list includes a plurality of first candidate combinations, so the list is also referred to a first candidate combination list, and the first combination is determined from the first candidate combination list. At this time, S201 mentioned above includes the following steps:

S201-A, determining a first candidate combination list; and
S201-B, determining a first combination from the first candidate combination list.

Herein, the first candidate combination list mentioned above includes a plurality of first candidate combinations, and each first candidate combination of the plurality of first candidate combinations includes a weight derivation mode and K prediction modes.

Exemplarily, the first candidate combination list is shown in table 6 mentioned above.

As shown in table 6, the first candidate combination list includes a plurality of first candidate combinations, any two first candidate combinations of the plurality of first candidate combinations are not completely the same, that is, at least one of the weight derivation modes and the K prediction modes included in one of any two first candidate combinations is different from those included in the another one of the any two first candidate combinations. For example, the weight derivation mode in a first candidate combination 1 is different from the weight derivation mode in a first candidate combination 2; or the weight derivation mode in the first candidate combination 1 and the weight derivation mode in the first candidate combination 2 are the same, and at least one of the K prediction modes in the first candidate combination 1 is different from that in first candidate combination 2; or the weight derivation mode in the first candidate combination 1 is different from the weight derivation mode in the first candidate combination 2, and at least one of the K prediction modes in the first candidate combination 1 is different from that in the first candidate combination 2.

Exemplarily, in table 6 mentioned above, a ranking of the first candidate combination in the first candidate combination list is used as an index. Optionally, the index of the first candidate combination in the first candidate combination list may be embodied in other manners, which is not limited in the embodiments of the present disclosure.

In this manner 2, the encoder side determines a first candidate combination in the first candidate combination list, as the first combination.

For example, the encoder side determines a first one of the first candidate combinations in the first candidate combination list, as the first combination.

In this manner 2, the encoder side and the decoder side may determine the same first candidate combination list, respectively. For example, both the encoder side and the decoder side determine a list including N first candidate combinations, each first candidate combination includes 1 weight derivation mode and K prediction modes. While, in a bitstream, the encoder side only needs to write a first candidate combination finally selected, e.g., the first combination. The decoder side parses the first combination finally selected by the encoder side. Specifically, the decoder side decodes the bitstream to obtain a first index, and determines, through the first index, the first combination in the first candidate combination list determined by the decoder side.

The embodiments of the present disclosure do not limit the specific manner for the encoder side to determine the first candidate combination list mentioned above.

In some embodiments, the first candidate combination list mentioned above is already available, and when the encoder side determines that the current block may use K prediction modes to perform weighted prediction, the encoder side obtains the first candidate combination list.

In some embodiments, the first candidate combination list mentioned above is constructed by the encoder side. At this time, in some embodiments, the encoder side may send a constructed first candidate combination list to the decoder side. In some embodiments, the encoder side uploads a constructed first candidate combination list mentioned above to a cloud, and the decoder side reads the first candidate combination list from the cloud after decoding the bitstream to obtain the first index.

The process for the encoder side to construct the first candidate combination list is introduced below.

The embodiments of the present disclosure do not limit the manner for the encoder side to construct the first candidate combination list.

In some embodiments, the encoder side constructs the first candidate combination list through the following step S201-A1:

S201-A1, constructing the first candidate combination list based on a template of a current block.

Template matching takes some areas around the current block as a template by utilizing a correlation between adjacent pixels. When the current block is coded, a left side and an upper side thereof have been encoded in an encoding order. Upon an inter prediction, a best matching position of the template is found in a reference frame to determine motion information or motion vector of the current block. Upon an intra prediction, an intra prediction mode of the current block is determined by utilizing the template.

The template of the current block is composed of a reconstructed area around the current block and is relevant to the current block. Based on this, the embodiments of the present disclosure construct the first candidate combination list based on the template of the current block.

The present disclosure does not limit a specific shape of the template of the current block.

In some embodiments, the template includes at least one of an upper encoded area, a left encoded area, and an upper left encoded area of the current block.

Optionally, a width of the upper encoded area is the same as a width of the current block, a height of the left encoded area is the same as a height of the current block, a width of the upper left encoded area is the same as a width of the left encoded area, and a height of the upper left encoded area is the same as a height of the upper encoded area.

For example, for each combination, the template of the current block is predicted by using the combination to obtain a prediction value of the template under each combination, and the first candidate combination list is constructed according to prediction values of the template under respective combinations.

For each combination, the template of the current block is predicted by using the combination to obtain the prediction value of the template under each combination. Specifically, the weight of the template is derived by using the weight derivation mode included in the combination; the template is predicted by using the K prediction modes included in the combination, respectively, so as to obtain K prediction values of the template; the K prediction values of the template are weighted according to a derived weight of the template, so as to obtain the prediction value of the template under the combination. Finally, the first candidate combination list is constructed according to prediction values of the template under respective combinations.

It should be noted that the weight derived according to the weight derivation mode mentioned above can be understood as a weight corresponding to each pixel point in the derived template, and can also be understood to a weight matrix corresponding to the derived template. When the prediction value of the template is determined based on the weight, it can be to determine K prediction values corresponding to each pixel point in the template, and determine a prediction value corresponding to each pixel according to the K prediction values and the weight corresponding to each pixel. The prediction values corresponding to respective pixel points in the template constitute the prediction value of the template. Optionally, when the prediction value of the template is determined based on the weight, it may also be performed in a block. For example, when the prediction value of the template is determined, K prediction values of the template are weighted according to the weight matrix of the template to obtain the prediction value of the template.

In some embodiments, S201-A1 includes the following steps S201-A11 to S201-A13.

S201-A11: determining R second combinations, where each second combination in the R second combinations includes a weight derivation mode and K prediction modes, and the weight derivation mode and the K prediction modes included in one of any two combinations in the R second combinations are not completely the same as those included in another one of the any two combinations in the R second combinations, and R is a positive integer greater than 1.

S201-A12: for each second combination in the R second combinations, obtaining the prediction value of the template corresponding to the second combination by predicting the template by using the weight derivation mode and the K prediction modes in the second combination.

S201-A13: constructing the first candidate combination list according to prediction values of the template corresponding to respective second combinations in the R second combinations.

In this embodiment, when the encoder side constructs the first candidate combination list, the encoder side first determines R second combinations. The present disclosure does not limit the specific value of the R second combinations, such as 8, 16, 32, etc. Each second combination of the R second combinations includes a weight derivation mode and K prediction modes, and the weight derivation mode and the K prediction modes included in one of any two second combinations of the R second combinations are not completely the same as those included in another one of the any two second combinations of the R second combinations. Next, for each second combination of the R second combinations, the template of the current block is predicted by using the weight derivation mode and the K prediction modes included in the second combination to obtain the prediction value of the template under the second combination. Finally, the first candidate combination list is constructed according to the prediction values of the template corresponding to respective second combinations in the R second combinations.

The manner for constructing the first candidate combination list according to the prediction values of the template corresponding to respective second combinations in the R second combinations in S201-A13 mentioned above include but is not limited to the following manners.

Manner 1: a first candidate combination list is constructed according to sizes of the prediction values of the template corresponding to respective second combinations in the R second combinations.

For example, the R second combinations are sorted according to the sizes of the prediction values of the template corresponding to respective second combinations of the R second combinations, and sorted R second combinations are determined as the first candidate combination list. At this time, the first candidate combination list includes R first candidate combinations.

For another example, the R second combinations are sorted according to the sizes of the prediction value of the template corresponding to respective second combinations of the R second combinations, and N second combinations are selected from sorted R second combinations to constitute the first candidate combination list. At this time, the first candidate combination list includes N first candidate combinations.

Manner 2: S201-A13 mentioned above includes the following steps:

S201-A13-1, determining a cost corresponding to the second combination according to the prediction value of the template and a reconstructed value of the template corresponding to the second combination; and

S201-A13-2, constructing the first candidate combination list according to costs corresponding to respective second combinations in the R second combinations.

Since the template of the current block is a reconstructed area, the encoder side may obtain the reconstructed value of the template. In this way, for each second combination of the R second combinations, a prediction distortion cost corresponding to the second combination may be determined according to the prediction value of the template and the reconstructed value of the template under the second combination. The manner for determining the cost corresponding to the second combination includes but is not limited to SAD, SATD, SEE, etc. Then, the first candidate combination list is constructed according to costs corresponding to respective second combinations in the R second combinations.

In the embodiments of the present disclosure, the prediction value of the template corresponding to the second combination includes at least two cases.

A first case is that the prediction value of the template corresponding to the second combination is a numerical value, that is, the decoder side predicts the template by using the K prediction modes included in the second combination to obtain K prediction values, determines the weight of the template according to the weight derivation mode included in the second combination, weights the K prediction values through the weight of the template to obtain a weighted prediction value, and determines the weighted prediction value as the prediction value of the template corresponding to the second combination.

A second case is that the prediction value of the template corresponding to the second combination includes the prediction values of the template corresponding to the K prediction modes included in the second combination. At this time, S202-A13-1 mentioned above includes the following steps:

S202-A13-11, determining costs corresponding to the K prediction modes in the second combination respectively according to the prediction values of the template and reconstructed values of the template corresponding to the K prediction modes in the second combination respectively; and

S202-A13-12, determining a cost corresponding to the second combination according to costs corresponding to the K prediction modes in the second combination respectively. For example, a sum of the costs corresponding to the K prediction modes in the second combination is determined as the cost corresponding to the second combination.

According to the method mentioned above, the costs corresponding to respective second combinations in the R second combinations may be determined, and then, S102-A13-2 is executed.

Herein, the manner for constructing the first candidate combination list according to the costs corresponding to respective second combinations in the R second combinations in S201-A13-2 includes but is not limited to the following examples.

Example 1: the R second combinations are sorted according to the costs corresponding to respective second combinations in the R second combinations; and sorted R second combinations are determined as the first candidate combination list.

The first candidate combination list generated in this example 1 includes R first candidate combinations.

Optionally, the R first candidate combinations in the first candidate combination list are sorted in an order from small to large according to sizes of the costs, that is, the costs corresponding to the R first candidate combinations in the first candidate combination list increase in sequence according to the ranking.

Herein, the sorting the R second combinations according to the costs corresponding to respective second combinations in the R second combinations may be sorting the R second combinations in an order from small to large according to costs.

Example 2: N second combinations are selected from the R second combinations according to the costs corresponding to the second combinations, and a list composed of the N second combinations is determined as the first candidate combination list.

Optionally, the N second combinations mentioned above are first N second combinations with a smallest cost in the R second combinations. For example, according to the costs corresponding to respective second combinations in the R second combinations, N second combinations with a smallest cost are selected from the R second combinations to constitute the first candidate combination list. At this time, the first candidate combination list includes N first candidate combinations.

Optionally, the N first candidate combinations in the first candidate combination list are sorted in an order from small to large according to the sizes of the costs, that is, the costs corresponding to the N first candidate combinations in the first candidate combination list increase in sequence according to the ranking.

The process for determining the R second combinations in S201-A11 mentioned above is introduced below.

In some embodiments, the R second combinations mentioned above are preset. In this way, the template of the current block is predicted by using each second combination of the preset R second combinations to obtain the prediction value of the template corresponding to each second combination; a cost corresponding to each second combination is determined according to the prediction value of the template and the reconstructed value of the template corresponding to each second combination; the R second combinations are sorted according to costs corresponding to respective second combinations; and sorted R second combinations are used as the first candidate combination list, or N second combinations with a smallest cost are selected from the sorted R second combinations to constitute the first candidate combination list.

In some embodiments, S201-A11 includes the following steps:

S201-A11-1, determining P weight derivation modes and Q prediction modes, where P is a positive integer and Q is a positive integer greater than or equal to K; and

S201-A11-2, constructing R second combinations according to the P weight derivation modes and the Q prediction modes, where each second combination of the R second combinations includes a weight derivation mode of the P weight derivation modes and K prediction modes of the Q prediction modes, P is a positive integer and Q is a positive integer greater than or equal to K.

In this embodiment, the encoder side first determines P weight derivation modes and Q prediction modes, and then, constructs R second combinations according to determined P weight derivation modes and Q prediction modes.

The embodiments of the present disclosure do not limit the specific numbers of the P weight derivation modes and the Q prediction modes mentioned above.

In a possible implementation, it is assumed that a current block is an intran encoded block, and it is assumed that there are 64 types of possible weight derivation modes of the GPM and 67 types of possible intra prediction modes in the GPM, which may be found in the VVC standard. However, the possible weights of GPM are not limited to only 64 types, or which 64 types. It should be noted that the reason why the GPM of the VVC chooses 64 types is also a trade-off between enhancing prediction effect and increasing overhead in the bitstream. However, the present disclosure no longer uses a fixed logic to encode the weight derivation mode, so theoretically the present disclosure may use more diverse weights and use the weights more flexibly. Similarly, the intra prediction modes of the GPM are not limited to only 67 types, or which 67 types. Theoretically, all possible intra prediction modes may be used in the GPM. For example, in a case where the intra angle prediction mode is made more detailed and more intra angle prediction modes are generated, then GPM may also use more intra angle prediction modes. For example, the MIP (matrix-based intra prediction) mode of the VVC may also be used in the present disclosure, but considering that a plurality of sub-modes may be selected for MIP, MIP will not be added to this embodiment for ease of understanding. In addition, there are also some wide angle modes that may also be used in the present disclosure, which will not be described in this embodiment.

Assuming K=2, the K prediction modes mentioned above include a first prediction mode and a second prediction mode. Assuming that there are 67 types of all available prediction modes (i.e., Q=67), there are 67 possibilities for first prediction mode. Since the second prediction mode is different from the first prediction mode, there are 66 possibilities for second one prediction mode. Assuming that there are 64 types of weight derivation modes (i.e., P=64), the present disclosure may use any two different prediction modes and any weight derivation mode to constitute the second combination, with a total of 64*67*66 possible second combinations.

In this implementation, P weight derivation modes are all possible weight derivation modes, such as the 64 weight derivation modes and the Q prediction modes are all possible prediction modes, such as 67 intra prediction modes of the GPM. An exhaustive method is used to obtain all possible second combinations, for example, 64*67*66 possible second combinations are obtained. Each second combination in the 64*67*66 possible second combinations is used to predict the template of the current block to calculate a distortion cost of each second combination. Then, a first candidate combination list corresponding to the current block is obtained according to distortion costs of respective second combinations.

In some embodiments, in order to reduce an amount of data and increase a speed of constructing the first candidate combination list, not every prediction mode is tried, but a part of the prediction modes may be selected for trying.

At this time, the implementation for determining the Q prediction modes in the S201-A11-1 described above includes but is not limited to the following manners.

Manner 1: the Q prediction modes are preset prediction modes.

Manner 2: at least one of a first candidate prediction mode list, first alternative prediction mode lists corresponding to K prediction modes, and a prediction mode corresponding to a weight derivation mode of the current block is determined; and Q prediction modes are determined according to the first candidate prediction mode list, the first alternative prediction mode lists corresponding to the K prediction modes, and the prediction mode corresponding to the weight derivation mode.

Herein, the first candidate prediction mode list includes a plurality of first candidate prediction modes, and the first alternative prediction mode list corresponding to any prediction mode in the K prediction modes includes at least one first alternative prediction mode.

For example, the Q prediction modes are determined according to the candidate prediction mode list for the current block.

For another example, the Q prediction modes are determined according to the first alternative prediction mode lists corresponding to the K prediction modes, respectively.

For another example, the Q prediction modes are determined according to the prediction mode corresponding to the weight derivation mode.

For another example, the Q prediction modes are determined according to the first candidate prediction mode list for the current block and the first alternative prediction mode lists corresponding to the K prediction modes respectively.

For another example, the Q prediction modes are determined according to the first candidate prediction mode list for the current block and the prediction mode corresponding to the weight derivation mode.

For another example, the Q prediction modes are determined according to the first alternative prediction mode lists corresponding to the K prediction modes respectively and the prediction mode corresponding to the weight derivation mode.

For another example, the Q prediction modes are determined according to the first candidate prediction mode list, the first alternative prediction mode lists corresponding to the K prediction modes respectively, and the prediction mode corresponding to the weight derivation mode.

The embodiments of the present disclosure do not limit the manner for determining the first alternative prediction mode list corresponding to each prediction mode in the K prediction modes.

In a possible implementation, for any prediction mode in the K prediction modes, at least one of the first candidate prediction mode list corresponding to the prediction mode and the prediction mode corresponding to the weight derivation mode are determined; and a first alternative prediction mode list corresponding to the prediction mode is determined according to the at least one of the first candidate prediction mode list and the prediction mode corresponding to the weight derivation mode.

In the embodiments of the present disclosure, the process for determining the first candidate prediction mode list corresponding to a certain prediction mode in the K prediction modes is basically similar to the process for determining the first candidate prediction mode list corresponding to the current block, which may be specifically referred to the following description.

In some embodiments, the first candidate prediction mode list mentioned above includes one or more inter prediction modes, for example, at least one of a skip, a merge, a normal inter prediction mode, an unidirectional prediction, a bidirectional prediction, a multi-hypothesis prediction, etc.

In some embodiments, the first candidate prediction mode list mentioned above includes one or more intra prediction modes, for example, at least one of a direct current (Direct Current, DC) mode, a planar (PLANAR) mode, an angle mode, etc. Optionally, the first candidate prediction mode list mentioned above includes at least one intra prediction mode in an MPM list.

In some embodiments, the first candidate prediction mode list mentioned above may further include modes such as an IBC and a palette, etc.

The present disclosure does not limit the types of prediction modes and the number of prediction modes included in the first candidate prediction mode list mentioned above.

In some embodiments, the first candidate prediction mode list is determined through at least one of the following manners.

Manner 1: the first candidate prediction mode list mentioned above includes a preset mode.

Manner 2: the first candidate prediction mode list mentioned above includes a mode in an MPM list.

In some embodiments, the first candidate intra prediction mode list may be an MPM list of the current block. For example, in the VVC, the current block may obtain an MPM list with a length of 6. In addition, in some subsequent technological evolutions, there is a secondary MPM solution, which may derive an MPM list with a length of 22. In other words, a sum of a length of a first MPM list and a length of a second MPM list is 22. That is, the embodiments of the present disclosure may use the MPM to screen the intra prediction modes.

In some embodiments, in a case where the first candidate prediction mode list determined above does not include a preset mode, the preset mode is added to the candidate prediction mode list.

In an example, the preset mode mentioned above is several preset prediction modes. Optionally, the preset mode mentioned above includes at least one of a DC, a horizontal mode, and a vertical mode.

In another example, the preset mode is determined by determining a picture type corresponding to the current block and further according to the picture type corresponding to the current block.

For example, when the first candidate prediction mode list is constructed, in a case where the picture type corresponding to the current block is type B or type P, more preset modes are added, for example, some other angle modes are added on a basis of the DC, the horizontal mode and the vertical mode, such as an upper right direction (mode 2 in the VVC), a lower left direction (mode 66 in the VVC), an upper left direction (mode 34 in the VVC), etc. Alternatively, blocks with different picture types are limited by using different numbers of first candidate prediction mode lists, etc.

The manner for determining the picture type corresponding to the current block mentioned above may be to determine the picture type corresponding to the current block according to the picture type of the current picture to which the current block belongs or the picture type of the current slice to which the current block belongs. For example, the picture type of the current picture to which the current block belongs or the picture type of the current slice to which the current block belongs is determined as the picture type corresponding to the current block.

Optionally, a preset mode may be added under certain conditions. An example is adding a preset mode when a number of prediction modes in the candidate prediction modes is less than or equal to a threshold. The threshold may be 3, 4, 5, 6, etc.

Manner 3: the first candidate prediction mode list mentioned above includes a set of first candidate prediction modes determined according to some rules, such as equal-interval screening, etc.

Manner 4: the first candidate prediction mode list is determined according to a prediction mode used by at least one block adjacent to the current block.

For example, the prediction mode used by one or more blocks adjacent to the current block is added to the first candidate prediction mode list to obtain the first candidate prediction mode list for the current block, or obtain the first candidate prediction mode list corresponding to a k-th prediction mode in the K prediction modes, where the k-th prediction mode is any prediction mode of the K prediction modes

For another example, a prediction mode corresponding to a k-th prediction mode in the prediction modes, used by one or more blocks adjacent to the current block, is added to the first candidate prediction mode list corresponding to the k-th prediction mode. For example, assuming K=2, the k-th prediction mode is a first prediction mode, and two blocks adjacent to the current block are assumed to also use two prediction modes for weighted prediction, where two prediction modes used by a first adjacent block are a prediction mode 1 and a prediction mode 3, and two prediction modes used by a second adjacent block are a prediction mode 4 and a prediction mode 5. In this way, the prediction mode 1 and the prediction mode 4 may be added to the first candidate prediction mode list corresponding to the first prediction mode.

Manner 5: a picture type corresponding to the current block is determined, and the first candidate prediction mode list is determined according to the picture type corresponding to the current block. For example, in a case where the picture type corresponding to the current block is type B or type P, at least one of a DC, a horizontal mode, a vertical mode and some angle modes may be added to the first candidate prediction mode list. For another example, in a case where the picture type corresponding to the current block is type I, at least one of a DC, a horizontal mode and a vertical mode may be added to the first candidate prediction mode list.

It should be noted that the manner 1 to manner 5 mentioned above may be used alone, or may be used in any combination, as the manner for determining the first candidate prediction mode list.

In some embodiments, the first candidate prediction mode list mentioned above includes at least one of a candidate intra prediction mode list and a candidate inter prediction mode list. The candidate intra prediction mode list includes at least one candidate intra prediction mode, and the candidate inter prediction mode list includes at least one candidate inter prediction mode.

After the candidate prediction mode list for the current block is obtained according to the manners mentioned above, Q prediction modes are determined according to the first candidate prediction mode list. For example, all or a part of the first candidate prediction modes included in the first candidate prediction mode list are determined as all or a part of the Q prediction modes.

The process for determining the prediction mode corresponding to the weight derivation mode is introduced below.

In the embodiments of the present disclosure, the prediction mode corresponding to the weight derivation mode is a general term, for example, may be a prediction mode corresponding to a preset weight derivation mode, or prediction modes corresponding to several preset weight derivation modes. In some embodiments, the prediction mode corresponding to the weight derivation mode may also be understood as a prediction mode list corresponding to the weight derivation mode, and the prediction mode list includes at least one prediction mode.

In some embodiments, the prediction mode corresponding to the derivation mode mentioned above includes a prediction mode corresponding to at least one weight derivation mode in the P weight derivation modes. At this time, determining the prediction mode corresponding to the weight derivation mode includes: determining a prediction mode corresponding to a p-th weight derivation mode for the p-th weight derivation mode in the P weight derivation modes; and determining a prediction mode corresponding to the weight derivation mode according to the prediction mode corresponding to at least one weight derivation mode in the P weight derivation modes, where p is a positive integer.

In the embodiments of the present disclosure, the processes for determining the prediction modes corresponding to respective weight derivation modes of the P weight derivation modes are basically the same. For ease of description, the p-th weight derivation mode in the P weight derivation modes is taken as an example for explanation below.

Herein, determining the prediction mode corresponding to the p-th weight derivation mode includes the following two manners.

Manner 1: in a case where at least one of the prediction modes corresponding to the p-th weight derivation mode is an intra prediction mode, an angle index is determined according to the p-th weight derivation mode; and an intra prediction mode corresponding to the angle index is determined as at least one of the prediction modes corresponding to the p-th weight derivation mode.

Herein, the angle index is used to indicate a partition line angle index of the weight.

In some embodiments, the angle index is represented by a field (angleIdx).

Table 2 mentioned above shows a correspondence relationship between merge_gpm_partition_idx and angleIdx. Referring to table 2 mentioned above, the angle index may be derived according to the p-th weight derivation mode.

In the present disclosure, there is a correspondence relationship between the angle index and the intra prediction mode, that is, different angle indices correspond to different intra prediction modes.

Exemplarily, the correspondence relationship between the angle index and the intra prediction mode is shown in table 7.

In this manner 1, taking K=2 as an example, in a case where a first prediction mode or a second prediction mode is an intra prediction mode, the angle index is determined according to the p-th weight derivation mode. For example, according to table 2 mentioned above, the angle index corresponding to the p-th weight derivation mode is derived. Next, in table 7 mentioned above, the intra prediction mode corresponding to the angle index is determined. For example, the angle index is 2, and its corresponding intra prediction mode is 42, and in turn the intra prediction mode 42 is determined as the first one prediction mode or the second one prediction mode.

Manner 2: in a case where at least one of the prediction modes corresponding to the p-th weight derivation mode is an intra prediction mode, an intra prediction mode corresponding to the p-th weight derivation mode is determined; and at least one of the intra prediction modes corresponding to the p-th weight derivation mode is determined as at least one of the prediction modes corresponding to the p-th weight derivation mode.

Herein, the intra prediction mode corresponding to the p-th weight derivation mode includes at least one of an intra prediction mode in which a prediction direction is parallel to a weight partition line, an intra prediction mode in which a prediction direction is perpendicular to the partition line, and a planar mode.

It should be noted that the intra prediction mode in which the prediction direction is parallel to the partition line of the weight includes one or more intra prediction modes in which the prediction direction is parallel or approximately parallel to the partition line of the weight. The intra prediction mode in which the prediction direction is perpendicular to the partition line of the weight includes one or more intra prediction modes in which the prediction direction is perpendicular or approximately perpendicular to the partition line of the weight.

In this manner 2, taking K=2 as an example, in a case where a first prediction mode and/or a second prediction mode is an intra prediction mode, the first prediction mode and/or the second prediction mode is determined from the intra prediction mode corresponding to the weight derivation mode. For example, the first prediction mode and/or the second prediction mode may be an intra prediction mode that is on the same straight line or approximately on the same straight line as the weight partition line (also referred to as a dividing line). Alternatively, the first prediction mode and/or the second prediction mode may be an intra prediction mode in which the prediction direction is perpendicular or approximately perpendicular to the weight partition line. For example, the weight partition line is in a horizontal direction, the modes with indices 18, 19, 50, and 51 of GPM as shown in FIG. 4; and the first prediction mode and/or the second prediction mode is mode 18 in the horizontal direction or mode 50 in the vertical direction.

According to the steps mentioned above, the encoder side determines the prediction mode corresponding to at least one weight derivation mode in the P weight derivation modes, and then, determines the prediction mode corresponding to the weight derivation mode according to the prediction mode corresponding to at least one weight derivation mode in the P weight derivation modes. For example, all or a part of the prediction modes corresponding to at least one weight derivation mode in the P weight derivation modes is used as the prediction mode corresponding to the weight derivation mode.

Further, there may be repeated prediction modes in the prediction modes corresponding to the P weight derivation modes, and then, the repeated prediction modes are deleted, and the remaining different prediction modes are determined as the prediction modes corresponding to the weight derivation mode.

In the embodiments of the present disclosure, in order to reduce the number of R second combinations, the prediction modes are screened. Specifically, Q prediction modes are determined according to the method mentioned above.

In some embodiments, in order to reduce the complexity of the encoder side, the number of the Q prediction modes mentioned above is limited. For example, Q is less than or equal to a first preset threshold. The present disclosure does not limit the specific value of the first preset threshold, which may be determined according to actual needs. For example, the first preset threshold is 6, that is, 6 prediction modes are selected to construct R second combinations for controlling the number of second combinations.

In some embodiments, a size of Q is related to a size and/or a shape of a current block, where the shape of the current block may be understood to be determined by an aspect ratio of the current block.

Upon predicting, for a smaller block, similar prediction modes have little impact on a prediction result. For a larger block, similar prediction modes have a more obvious impact on a prediction result. Based on this, the embodiments of the present disclosure set different Q values for with of different sizes, that is, a larger Q value is set for a larger block, and a smaller Q value is set for a smaller block.

At this time, upon determining a Q value corresponding to the current block, it is set according to the size of the current block. For example, in a case where the size of the current block is greater than a first numerical value, Q is greater than or equal to a second preset threshold. For another example, in a case where the size of the current block is less than or equal to a first numerical value, Q is less than a third preset threshold. The embodiments of the present disclosure do not limit the specific sizes of the first numerical value, the second prediction threshold and the third preset threshold, where the third preset threshold is smaller than the second preset threshold.

The process for determining the P weight derivation modes in S202-A11-1 is introduced below.

It can be seen from above, GPM includes 64 types of weight derivation modes and the AWP includes 56 types of weight derivation modes.

In some embodiments, the P weight derivation modes are the 64 types of weight derivation modes included in GPM, or the 56 types of weight derivation modes included in AWP.

In some embodiments, the P weight derivation modes are selected from M preset weight derivation modes, where M is a positive integer greater than or equal to P.

The M preset weight derivation modes mentioned above may be the 64 types of weight derivation modes included in GPM, or the 56 types of weight derivation modes included in AWP; or may also be partial weight derivation modes of the 64 types of weight derivation modes included in GPM, or partial weight derivation modes of the 56 types of weight derivation modes included in AWP.

In this embodiment, in order to further reduce the number of R second combinations, the M preset weight derivation modes are screened, and P weight derivation modes may be selected from the M preset weight derivation modes to construct R second combinations.

In some embodiments, a weight derivation mode corresponding to a preset partition angle and/or a preset offset is deleted from the M weight derivation modes to obtain P weight derivation modes. Since the same partition angle in the weight derivation mode may correspond to a plurality of offsets. As shown in FIG. 16A, weight derivation modes 10, 11, 12 and 13 have the same partition angle but different offsets. In this way, weight derivation modes corresponding to some preset offsets may be deleted, and/or weight derivation modes corresponding to some preset partition angles may also be deleted. Doing so may reduce a total number of possible second combinations. And, differences between respective possible second combinations are made more obvious.

In some embodiments, screening conditions corresponding to different blocks may be different from each other. In this way, upon determining the P weight derivation modes corresponding to the current block, a screening condition corresponding to the current block is first determined, and P weight derivation modes are selected from the M weight derivation modes according to the screening condition corresponding to the current block.

In some embodiments, the screening condition corresponding to the current block includes a screening condition corresponding to a size of the current block and/or a screening condition corresponding to a shape of the current block. Upon predicting, for a smaller block, similar weight derivation modes have little effect on a prediction result, while for a larger block, similar weight derivation modes have a more obvious effect on a prediction result. Based on this, the embodiments of the present disclosure set different values of P for blocks with different sizes, that is, a larger value of P is set for a larger block, and a smaller value of P is set for a smaller block.

In some embodiments, the screening condition mentioned above includes an array, where the array includes M elements, and the M elements are in one-to-one correspondence with M weight derivation modes. An element corresponding to each weight derivation mode is used to indicate whether the weight derivation mode is available, where whether the weight derivation mode is available may be understood as whether the weight derivation mode is used to form a weight derivation mode of the P weight derivation modes for a subsequent attempt of the second combination.

The array mentioned above may be a 1-bit numerical value or a two-bit numerical value.

In some embodiments, in a case where the screening condition corresponding to the current block includes a screening condition corresponding to a size of the current block and a screening condition corresponding to a shape of the current block, and for the same weight derivation mode, in a case where the screening condition corresponding to the size of the current block and the screening condition corresponding to the shape of the current block indicate that the weight derivation mode is available, the weight derivation mode is determined as one of the P weight derivation modes; and in a case where at least one of the screening condition corresponding to the size of the current block and the screening condition corresponding to the shape of the current block indicates that the weight derivation mode is unavailable, it is determined that the weight derivation mode does not constitute the P weight derivation modes.

In some embodiments, screening conditions corresponding to different sizes of blocks and screening conditions corresponding to different shapes of blocks may be implemented by using a plurality of arrays, respectively.

In some embodiments, the screening conditions corresponding to different sizes of blocks and the screening conditions corresponding to different shapes of blocks may be implemented by using a two-bit array, that is, a two-bit array includes both the screening condition corresponding to the size of the block and the screening condition corresponding to the shape of the block.

After the encoder side determines the Q prediction modes and the P weight derivation modes according to the steps described above, R different second combinations are constituted according to the Q prediction modes and the P weight derivation modes.

In some embodiments, in order to further increase a speed of constructing the first candidate combination list, the encoder side screens the Q prediction modes and the P weight derivation modes determined above again. At this time, constituting the R second combinations according to determined P weight derivation modes and the Q prediction modes in the S201-A11-2 mentioned above, includes the following steps S201-A11-21 to S201-A11-23.

S201-A11-21: selecting S weight derivation modes from the P weight derivation modes, where S is a positive integer less than or equal to P.

Specifically, weight derivation modes with a low probability of occurrence are deleted from the P weight derivation modes determined above to obtain screened S weight derivation modes.

Herein, the manner for selecting the S weight derivation modes from the P weight derivation modes in S201-A11-21 mentioned above includes but is not limited to the following manners.

Manner 1: for an i-th weight derivation mode in the P weight derivation modes, weights of K second prediction modes on the template are determined according to the i-th weight derivation mode, where the K second prediction modes are any K prediction modes in the Q prediction modes, and i is a positive integer from 1 to P. In a case where a weight of any prediction mode in the K prediction modes on the template is less than a first preset value, the i-th weight derivation mode is deleted from the P weight derivation modes to obtain the S weight derivation modes.

In this manner 1, in a case where a weight of the template derived by a weight derivation mode makes a certain prediction mode have little effect on a template, or has no effect on the template, this weight derivation mode will not be used. For example, a weight derivation mode 52 in FIG. 4 (square block) makes the weight of the second prediction mode on the template smaller. For another example, a weight derivation mode 54 makes the weight of the second prediction mode on the template 0. That is, it can be considered that under the weight derivation mode 54, the second prediction mode has no effect on the template, and the prediction value of the template is entirely determined by the first prediction mode. In this case, the second prediction mode has no effect at all, and such a weight derivation mode needs to be deleted from the P weight derivation modes.

In the manner 1 mentioned above, the weight derivation mode that makes the weight of any prediction mode in the K prediction modes on the template less than the first preset value is deleted from the P weight derivation modes, so as to obtain the S weight derivation modes.

The embodiments of the present disclosure do not limit the specific value of the first preset value mentioned above, for example, the first preset value is a smaller value greater than or equal to 0.

Manner 2: for an i-th weight derivation mode in the P weight derivation modes, a cost of using the i-th weight derivation mode to predict the template is determined, where i is a positive integer from 1 to P; and S weight derivation modes are selected from the P weight derivation modes according to the cost corresponding to the i-th weight derivation mode.

In this manner 2, S weight derivation modes are selected from the P weight derivation modes by calculating a cost corresponding to each weight derivation mode in the P weight derivation modes.

In the embodiments of the present disclosure, the weight derivation mode and K prediction modes are taken as a combination to calculate a cost. In this way, for the convenience of calculation, costs of P weight derivation modes are calculated on a basis of given K prediction modes. That is, the P weight derivation modes are combined with given K prediction modes, respectively, so as to obtain P combinations, and a cost corresponding to each combination in the P combinations is calculated to obtain costs of the P weight derivation modes.

According to the method mentioned above, after the cost corresponding to the i-th weight derivation mode in the P weight derivation modes is determined, S weight derivation modes are selected from the P weight derivation modes according to the cost corresponding to the i-th weight derivation mode.

In this manner 2, the encoder side selecting the S weight derivation modes from the P weight derivation modes according to the cost corresponding to the i-th weight derivation mode, includes the following manner.

First type of manner: in a case where the cost corresponding to the i-th weight derivation mode is less than a second preset value, a weight derivation mode similar to the i-th weight derivation mode is selected from the P weight derivation modes; and the S weight derivation modes are determined according to the i-th weight derivation mode and the weight derivation mode similar to the i-th weight derivation mode. The weight derivation mode similar to the i-th weight derivation mode may be understood as a weight derivation mode whose prediction result is similar to the prediction result of the i-th weight derivation mode.

The embodiments of the present disclosure do not limit the size of the second preset value, which is specifically determined according to actual needs.

In some embodiments, the encoder side may also select S weight derivation modes from the P weight derivation modes according to the following second type of manner.

Second type of manner: in a case where a cost corresponding to the i-th weight derivation mode is greater than a third preset value, the i-th weight derivation mode and a weight derivation mode similar to the i-th weight derivation mode are deleted from the P weight derivation modes to obtain at least one weight derivation mode remained after deleting; and S weight derivation modes are determined according to the at least one weight derivation mode being deleted.

The embodiments of the present disclosure do not limit the size of the third preset value, which is specifically determined according to actual needs. The third preset value is greater than the second preset value.

According to the steps mentioned above, after the S weight derivation modes are selected from the P weight derivation modes, the encoder side performs the following step S201-A11-22.

S201-A11-22: selecting T prediction modes from the Q prediction modes, where T is a positive integer less than or equal to Q.

The embodiments of the present disclosure do not limit the manner for selecting the T prediction modes from the Q prediction modes.

In some embodiments, preset T prediction modes are selected from the Q prediction modes.

In some embodiments, for the i-th prediction mode in the Q prediction modes, the encoder side determines a cost in a case of predicting the template by using the i-th prediction mode, where i is a positive integer from 1 to Q; and selects T prediction modes from the Q prediction modes according to the cost corresponding to the i-th prediction mode.

In the embodiments of the present disclosure, a weight derivation mode and K prediction modes are taken as a combination to calculate a cost. In this way, for the convenience of calculation, costs of Q weight derivation modes are calculated on a basis of a given weight derivation mode and other K-1 prediction modes. That is, the Q prediction modes are combined with a set weight derivation mode and K-1 prediction modes, respectively, to obtain Q combinations; and a cost corresponding to each of the Q combinations is calculated to obtain costs of the Q prediction modes.

For example, it is assumed that the given K-1 prediction modes is prediction mode 1, and the given weight derivation mode is weight derivation mode 1. For the i-th prediction mode in the Q prediction modes, the weight derivation mode 1, the i-th prediction mode and the prediction mode 1 constitute a combination, recorded as combination i. The template of the current block is predicted by using the combination i to obtain the prediction value of the template under the combination i; a prediction distortion cost corresponding to the combination i is determined according to the prediction value of the template and a reconstructed value of the template under the combination i; and the prediction distortion cost corresponding to the combination i is determined as the cost corresponding to the i-th prediction mode. In this way, a cost corresponding to any prediction mode of the Q prediction modes may be determined.

According to the method mentioned above, after the cost corresponding to the i-th prediction mode in the Q prediction modes is determined, T prediction modes are selected from the Q prediction modes according to the cost corresponding to the i-th prediction mode.

Herein, the encoder side selecting the T prediction modes from the Q prediction modes according to the cost corresponding to the i-th prediction mode includes the following manners.

First type of manner: in a case where a cost corresponding to the i-th prediction mode is less than a fourth preset value, a prediction mode similar to the i-th prediction mode is selected from the Q prediction modes; and T prediction modes are determined according to the i-th prediction mode and a prediction mode similar to the i-th prediction mode. The prediction mode similar to the i-th prediction mode may be understood as a prediction mode whose prediction result is similar (or close) to the prediction result of the i-th prediction mode, such as a prediction mode whose prediction direction (or angle) is similar to a prediction direction (or angle) of the i-th prediction mode, or a prediction mode whose prediction mode index is similar to an index of the i-th prediction mode, such as a prediction mode whose index is greater than the index of the i-th prediction mode by 1, 2, etc., or a prediction mode whose index is smaller than the index of the i-th prediction mode by 1, 2, etc.

The embodiments of the present disclosure do not limit the size of the fourth preset value, which is specifically determined according to actual needs.

Second type of manner: in a case where a cost corresponding to the i-th prediction mode is greater than a fifth preset value, the i-th prediction mode and a prediction mode similar to the i-th prediction mode are deleted from the Q prediction modes to obtain at least one prediction mode remained after deleting; and T prediction modes are determined according to the at least one prediction mode remained after deleting.

The embodiments of the present disclosure do not limit the size of the fifth preset value, which is specifically determined according to actual needs. The fifth preset value is greater than the fourth preset value mentioned above.

According to the steps mentioned above, S weight derivation modes are selected from P weight derivation modes, and T prediction modes are selected from Q prediction modes. Then, the following S201-A11-23 is executed.

S201-A11-23: constituting R second combinations according to the S weight derivation modes and the T prediction modes.

Specifically, a weight derivation mode is selected from the S weight derivation modes, and K prediction modes are selected from the T prediction modes. This weight derivation mode and the K prediction modes constitute a second combination. R second combinations may be obtained by performing this step repeatedly.

In some embodiments, S201-A11-2 mentioned above includes: for an i-th weight derivation mode in the P weight derivation modes, a cost in a case of predicting the template by using the i-th weight derivation mode and a j-th prediction mode in the Q prediction modes is determined; in a case where the cost corresponding to a combination of the i-th weight derivation mode and the j-th prediction mode is greater than a sixth preset value, the j-th prediction mode and a prediction mode similar to the j-th prediction mode are deleted from the Q prediction modes to obtain at least one prediction mode remained after deleting; and R second combinations are constructed according to the i-th weight derivation mode and the at least one prediction mode remained after deleting.

In this embodiment, when the weight derivation mode and the prediction mode are fixed, another prediction mode is screened. For example, under a certain weight derivation mode, a relatively small cost cannot be obtained in a certain intra prediction mode as a first prediction mode, a case of an intra prediction mode, as the first prediction mode, similar to the intra prediction mode under the weight derivation mode, will no longer be tried.

According to the steps mentioned above, a final prediction mode set corresponding to each weight derivation mode in the P weight derivation modes emained after deleting may be determined. In this way, R second combinations may be constructed according to the P weight derivation modes and their respective corresponding final prediction mode sets remained after deleting.

It should be noted that the embodiments mentioned above shows a manner for screening prediction modes in a form of combination. Optionally, any of the weight derivation modes and the prediction modes may also be screened in the form of combination to finally construct R second combinations.

After the encoder side determines the R second combinations according to the methods mentioned above, for each second combination of the R second combinations, the encoder side predicts the template by using the weight derivation mode and the K prediction modes in the second combination to obtain the prediction value of the template corresponding to the second combination.

Next, a cost of the second combination is determined according to the prediction value and the reconstructed value of the template.

The manner for determining the cost of the second combination mentioned above includes but is not limited to the following manners.

First manner: the cost of the second combination is determined by using a manner of matrix. Specifically, a loss is determined according to a prediction value and a reconstructed value of the template, and the loss is recorded as a first loss. Since the prediction value and the reconstructed value of the template mentioned above are matrices, the first loss is also a matrix. For example, an absolute value of a difference between the prediction value and the reconstructed value of the template is determined as the first loss, and the first loss is determined as the cost of the second combination.

Second manner: the cost of the second combination is determined by using a manner of point-by-point calculation.

Specifically, for an i-th pixel point in the template, when the prediction of each prediction mode in the K prediction modes in the second combination is determined at the i-th pixel point, a weight of the template corresponding to the i-th pixel point in the weight of the template is determined, and a prediction value of the i-th pixel point is obtained according to the weight of the template at the i-th pixel point and the K prediction values of the i-th pixel point. A cost of the second combination at the i-th pixel point is obtained according to the prediction value and the reconstructed value of the i-th pixel point. According to this method, a prediction distortion cost of the second combination at each pixel point in the template may be determined. Finally, a cumulative sum of prediction distortion costs of the second combination at respective pixel points in the template is determined as the cost of the second combination.

According to the method mentioned above, a cost of each second combination in the R second combinations may be determined.

Then, a first candidate combination list is constructed according to costs of respective second combinations in the R second combinations.

For example, the R second combinations are sorted in an order from small to large according to the costs of the second combinations, and sorted R second combinations are determined as the first candidate combination list.

For another example, N second combinations with a smallest cost are selected from the R second combinations to constitute the first candidate combination list according to the costs of the second combinations.

Optionally, N is 8 or 16 or 32, etc.

The first candidate combination list is determined according to the method mentioned above, and respective first candidate combinations in the first candidate combination list are sorted in an order from small to large according to the sizes of the costs. Exemplarily, the first candidate combination list is shown in table 6 mentioned above.

In this way, the decoder side searches for the first candidate combination corresponding to the first index and in the first candidate combination list shown in table 6 according to the first index, and determines the first candidate combination corresponding to the first index, as the first combination, that is, the decoder side determines the weight derivation mode included in the first candidate combination as the first weight derivation mode, and determines the K prediction modes included in the first candidate combination as K first prediction modes.

In case 1 mentioned above, taking the first combination including the first weight derivation mode and K first prediction modes as an example, the process for determining the first combination is introduced.

Case 2: the first combination includes a first weight derivation mode, K first prediction modes and a second blending parameter.

In this case 2, the implementation of the S201 mentioned above includes but is not limited to the following manners.

Manner 1: the encoder side and the decoder side determine a first combination from a plurality of preset second candidate combinations. For example, a second candidate combination with a smallest cost in the plurality of preset second candidate combinations is determined as the first combination.

Manner 2: both the decoder side and the encoder side determine a list, where the list includes a plurality of second candidate combinations. Therefore, the list is also referred to as a second candidate combination list, and the first combination is determined from the second candidate combination list. At this time, S201 mentioned above includes the following steps.

S201-C: determining a second candidate combination list; and
S201-D: determining the first combination from the second candidate combination list.

Herein, the second candidate combination list mentioned above includes a plurality of second candidate combinations, and any second candidate combination in the plurality of second candidate combinations includes a weight derivation mode, K prediction modes and a blending parameter.

Exemplarily, the second candidate combination list is shown in table 8.

The embodiments of the present disclosure do not limit the specific manner for determining the second candidate combination list.

In some embodiments, the second candidate combination list mentioned above is already available, and the encoder side obtains or reads the second candidate combination list.

In some embodiments, the second candidate combination list mentioned above is constructed by the encoder side.

The embodiments of the present disclosure do not limit the manner for the encoder side to construct the second candidate combination list.

In some embodiments, the encoder side constructs the second candidate combination list through the following step S201-C1.

S201-C1: constructing the second candidate combination list according to the template of the current block.

In some embodiments, the template includes at least one of an upper encoded area, a left encoded area, and an upper left encoded area of a current block.

In some embodiments, S201-C1 includes the following steps S201-C11 to S201-C13.

S201-C11: determining H third combinations, where each third combination in the H third combinations includes a weight derivation mode, K prediction modes and a blending parameter; the weight derivation mode, K prediction modes and blending parameters included in one of any two combinations in the H third combinations are not completely the same as those included in another one of the any two combinations in the H third combinations; and H is a positive integer greater than 1.

S201-C12: for each third combination in the H third combinations, determining a cost corresponding to the third combination in a case of predicting the template by using the weight derivation mode, the K prediction modes and the blending parameters in the third combination.

S201-C13: constructing a second candidate combination list according to costs corresponding to respective third combinations in the H third combinations.

In this embodiment, when the decoder side constructs the second candidate combination list, the decoder side first determines H third combinations. The present disclosure does not limit the specific value of the H third combinations, such as 8, 16, 32, etc. Each third combination of the H third combinations includes a weight derivation mode, K prediction modes and a blending parameter; and a weight derivation mode, K prediction modes and a blending parameter included in one of any two of the H third combinations are not completely the same as those included in another one of the any two of the H third combinations. Then, for each third combination of the H third combinations, a cost corresponding to the third combination in a case of predicting the template of the current block by using the weight derivation mode, the K prediction modes and the blending parameters included in the third combination, is determined. Finally, the second candidate combination list is constructed according to the costs corresponding to respective third combinations in the H third combinations.

In some embodiments, determining the cost corresponding to the third combination in case of predicting the template by using the weight derivation mode, the K prediction modes and the blending parameters in the third combination in the S202-C12 mentioned above, includes at least the following manners.

Manner 1: S202-C12 includes the following S202-C12-11 to S202-C12-14:

S202-C12-11: determining the weight of the template according to the weight derivation mode and the blending parameter included in the third combination;

S202-C12-12: obtaining K prediction values of the template by predicting the template according to the K prediction modes in the third combination;

S202-C12-13: obtaining a prediction value of the template corresponding to the third combination by weighting the K prediction values of the template according to the weight of the template; and

S202-C12-14: determining a cost corresponding to the third combination according to the prediction value of the template and the reconstructed value of the template corresponding to the third combination.

In the embodiments of the present disclosure, the processes for determining costs corresponding to respective third combinations of the H third combinations are consistent. For the convenience of description, a third combination of the H third combinations is taken as an example for explanation.

In the embodiments of the present disclosure, the third combination includes a weight derivation mode, a blending parameter and K prediction modes. When the third combination is used to predict the template, the weight of the template is determined according to the weight derivation mode and the blending parameter included in the third combination, and the template is predicted according to the K prediction modes included in the third combination to obtain K prediction values of the template. Next, the K prediction values of the template are weighted by using the weight of the template to obtain the prediction value of the template corresponding to the third combination. Then, the cost corresponding to the third combination is determined according to the prediction value of the template and the reconstructed value of the template corresponding to the third combination.

In the embodiments of the present disclosure, the blending parameter is used to adjust the weight derived through the weight derivation mode. Therefore, in the embodiments of the present disclosure, the implementation for determining the weight of the template according to the weight derivation mode and the blending parameter included in the third combination in the S201-C121 mentioned above, includes at least the following examples.

Example 1: a plurality of intermediate variables need to be determined when the first weight derivation mode is used to derive the weight of the template, and a certain intermediate variable or certain intermediate variables of the plurality of intermediate variables may be adjusted by using the blending parameter, and then the weight of the template is derived by using an adjusted variable(s).

Example 2: the third weight corresponding to the template is determined according to the weight derivation mode and the template in the third combination, the third weight is adjusted by using the blending parameter in the third combination to obtain an adjusted third weight; and the weight of the template is determined according to the adjusted third weight.

According to the method mentioned above, the weight of the template corresponding to each third combination of the H third combinations may be determined. Next, for each third combination, the template is predicted by using the K prediction modes included in the third combination to obtain K prediction values of the template, and the K prediction values of the template corresponding to the third combination are weighted by using the weight of the template corresponding to the third combination to obtain the prediction value of the template corresponding to the third combination; and the cost corresponding to the third combination is determined according to the prediction value of the template corresponding to the third combination and the reconstructed value of the template. The manner for determining the cost corresponding to the third combination includes but is not limited to SAD, SATD, SEE, etc. Referring to this method, the prediction value of the template corresponding to each third combination of the H third combinations may be determined. Next, a second candidate combination list is constructed according to the prediction values of the template corresponding to respective third combinations in the H third combinations.

Manner 2: S202-C12 includes the following S202-C12-11 to S202-C12-14:

S202-C12-21: determining prediction values of the template corresponding to K prediction modes in the third combination respectively according to the weight derivation mode and the blending parameter in the third combination;

S202-C12-22: determining costs corresponding to the K prediction modes in the third combination respectively according to the prediction values of the template and reconstructed values of the template corresponding to the K prediction modes in the third combination respectively; and

S202-C12-23: determining the cost corresponding to the third combination according to the costs corresponding to the K prediction modes in the third combination respectively. For example, a sum of the costs corresponding to the K prediction modes in the third combination is determined as the cost corresponding to the third combination.

In S202-C13 mentioned above, the manner for constructing the second candidate combination list according to the costs corresponding to respective third combinations in the H third combinations include but is not limited to the following examples.

Example 1: the H third combinations are sorted according to the costs corresponding to respective third combinations in the H third combinations; and sorted H third combinations are determined as the second candidate combination list.

Example 2: L third combinations are selected from the H third combinations according to the costs corresponding to the third combinations, and a list composed of the L third combinations is determined as the second candidate combination list.

The process for determining the H third combinations in the S201-C11 mentioned above is introduced below.

In some embodiments, the H third combinations mentioned above are preset. In this way, the template of the current block is predicted by using each third combination of the H preset third combinations to obtain the prediction value of the template corresponding to each third combination; and then, a cost corresponding to each third combination is determined according to the prediction value of the template and the reconstructed value of the template corresponding to each third combination; the H third combinations are sorted according to the costs corresponding to respective third combinations; and sorted H third combinations are used as the second candidate combination list, or L third combinations with a smallest cost are selected from the sorted H third combinations to constitute the second candidate combination list.

In some embodiments, S201-C11 includes the following steps.

S201-C11-1: determining F weight derivation modes, J prediction modes, and W blending parameters, where both F and W are positive integers, and J is a positive integer greater than or equal to K; and

S201-C11-2: constructing H third combinations according to F weight derivation modes, J prediction modes and W blending parameters, where each third combination of the H third combinations includes a weight derivation mode in the F weight derivation modes, K prediction modes in the J prediction modes and a blending parameter in the W blending parameters.

In this embodiment, the decoder side first determines F weight derivation modes, J prediction modes and W blending parameters, and then constructs H third combinations according to determined F weight derivation modes, J prediction modes and W blending parameters.

In some embodiments, in order to reduce an amount of data and increase a speed of constructing the second candidate combination list, not every prediction mode is tried, but a part of the prediction modes may be selected for trying.

At this time, the implementation for determining the J prediction modes in the S201-C11-1 mentioned above includes but is not limited to the following manners.

Manner 1: the J prediction modes are preset prediction modes.

Manner 2: at least one of a second candidate prediction mode list for the current block, second alternative prediction mode lists corresponding to K prediction modes respectively, and a prediction mode corresponding to a weight derivation mode is determined, where the second candidate prediction mode list includes a plurality of second candidate prediction modes, and a second alternative prediction mode list corresponding to any prediction mode in the K prediction modes includes at least one second alternative prediction mode; and the J prediction modes are determined according to at least one of the second candidate prediction mode list, the second alternative prediction mode lists corresponding to the K prediction modes respectively, and the prediction mode corresponding to the weight derivation mode.

Herein, the manner for determining the second candidate prediction mode list for the current block includes at least the following examples.

Example 1: the second candidate prediction mode list is determined according to a prediction mode used by at least one block adjacent to the current block.

Example 2: in a case where the second candidate prediction mode list does not include a preset mode, the preset mode corresponding to the current block is determined; and the preset mode is added to the second candidate prediction mode list.

In an example, the preset mode mentioned above is of several preset prediction modes.

In another example, a picture type corresponding to the current block is determined; and the preset mode is determined according to the picture type corresponding to the current block.

For example, in a case where the picture type corresponding to the current block is type B or type P, the preset mode includes at least one of a DC, a horizontal mode, a vertical mode and an angle mode.

Example 3: a picture type corresponding to the current block is determined, and the second candidate prediction mode list is determined according to the picture type corresponding to the current block. For example, in a case where the picture type corresponding to the current block is type B or type P, at least one of a DC, a horizontal mode, a vertical mode and some angle modes may be added to the second candidate prediction mode list. For another example, in a case where the picture type corresponding to the current block is type I, at least one of a DC, a horizontal mode, and a vertical mode may be added to the second candidate prediction mode list.

In the embodiments of the present disclosure, the specific implementation of the second method mentioned above refers to the specific description of the second manner in the S201-A11-1 mentioned above, which will not be repeated here.

The process for determining F weight derivation modes in S201-C11-1 is introduced below.

In the embodiments of the present disclosure, the manner for determining the F weight derivation modes includes at least the following manners.

In some embodiments, the F weight derivation modes mentioned above are preset weight derivation modes.

In some embodiments, the F weight derivation modes are selected from preset Z weight derivation modes, where Z is a positive integer greater than or equal to F.

The embodiments of the present disclosure do not limit the preset Z weight derivation modes mentioned above.

In some embodiments, in a case where Z is equal to F, the Z weight derivation modes are determined as the F weight derivation modes.

In some embodiments, in a case where Z is greater than F, in order to further reduce the number of H third combinations, the preset Z weight derivation modes are screened, and F weight derivation modes may be selected from the preset Z weight derivation modes to construct H third combinations.

The process for determining F weight derivation modes in the S201-C11-1 mentioned above is basically the same as the process for determining P weight derivation modes in the S201-A11-1 mentioned above. References are made to the specific description of determining the P weight derivation modes mentioned above, which will not be repeated herein.

The process for determining W blending gradient coefficients in S201-C11-1 is introduced below.

In some embodiments, the W blending parameters mentioned above are preset blending parameters, such as 1/4, 1/2, 1, 2, 4, etc.

In some embodiments, the W blending parameters are determined according to the size of the current block.

In some embodiments, the W blending parameters are determined from a plurality of preset blending parameters.

In an example, the W blending parameters are determined from the plurality of preset blending parameters according to picture information of the current block.

The embodiments of the present disclosure do not limit the specific content of the picture information of the current block, such as an ambiguity, a definition, acutance, etc.

In some embodiments, in a case where the picture information of the current block includes a definition of a picture edge, determining W blending parameters from the plurality of preset blending parameters according to the picture information of the current block, includes two examples.

Example 1: in a case where the definition of the picture edge of the current block is less than a preset value, at least one first-type blending parameter in the plurality of preset blending parameters is determined as the W blending parameters.

Herein, the first type blending parameter may be understood as a blending parameter that may form a wider blending area, such as 1/4, 1/2, and the like.

Example 2: in a case where the definition of the picture edge of the current block is greater than or equal to the preset value, at least one second type blending parameter in the plurality of preset blending parameters is determined as W blending parameters, where the second type blending parameter is greater than the first type blending parameter.

Herein, the second type blending parameter may be understood as a blending parameter that may form a narrower blending area, such as 2, 4, etc.

In the embodiments of the present disclosure, the manner for determining the picture information of the current block may include at least two manners.

Manner 1: picture information of the current block is analyzed to obtain the picture information of the current block.

Manner 2: picture information of the template of the current block is determined; and picture information of the current block is determined according to the picture information of the template of the current block.

According to the steps mentioned above, after the J prediction modes, the F weight derivation modes and the W blending parameters are determined, H different third combinations are constituted according to the J prediction modes, the F weight derivation modes and the W blending parameters. Next, a second candidate combination list is determined according to the H third combinations; and then, a first weight derivation mode, K first prediction modes and a second blending parameter are determined from the second candidate combination list.

In some embodiments, in order to further increase the speed of constructing the second candidate combination list, the J prediction modes, the F weight derivation modes and the W blending parameters determined above are screened again. At this time, constituting the H third combinations according to the determined F weight derivation modes, J prediction modes and W blending parameters in the S201-C11-2 mentioned above includes the following steps S201-C11-21 to S201-C11-24.

S201-C11-21: selecting E weight derivation modes from the F weight derivation modes, where E is a positive integer less than or equal to F.

Specifically, a weight derivation mode with a small probability of occurrence (i.e., a large cost) is deleted from the F weight derivation modes determined above, so as to obtain screened E weight derivation modes.

Herein, the manner for selecting the E weight derivation modes from the F weight derivation modes in S201-C11-21 mentioned above includes but is not limited to the following manners.

Manner 1: for an i-th weight derivation mode in the F weight derivation modes, weights of K second prediction modes on the template are determined according to the i-th weight derivation mode and a third blending parameter, where the third blending parameter is any blending parameter in the W blending gradients, the K second prediction modes are any K prediction modes in the J prediction modes, and i is a positive integer from 1 to F; and in a case where a weight of any prediction mode in the K prediction modes on the template is less than a first preset value, the i-th weight derivation mode is deleted from the F weight derivation modes to obtain the E weight derivation modes.

In this manner 1, the manner for determining the weights of the K second prediction modes on the template according to the i-th weight derivation mode and the third blending parameter includes at least the manners as shown in the following examples.

Example 1: a plurality of intermediate variables need to be determined when the i-th weight derivation mode is used to derive the weight of the template; a certain intermediate variable or certain intermediate variables in the plurality of intermediate variables are adjusted by using the third blending parameter; and then, the weight of the template is derived by using an adjusted variable.

Example 2: a fourth weight corresponding to the template is determined according to the i-th weight derivation mode and the template; the fourth weight is adjusted by using the third blending parameter to obtain an adjusted fourth weight; and the weights of the K second prediction modes on the template are determined according to the adjusted fourth weight.

According to the method mentioned above, the weights of the K second prediction modes on the template are determined according to the i-th weight derivation mode.

Manner 2: for an i-th weight derivation mode in the F weight derivation modes, a cost in case of predicting the template by using the i-th weight derivation mode is determined, where i is a positive integer from 1 to F; and E weight derivation modes are selected from the F weight derivation modes according to the cost corresponding to the i-th weight derivation mode.

In some embodiments, upon determining the cost corresponding to the i-th weight derivation mode mentioned above, the influence of the blending parameter on the weight is not considered.

In some embodiments, upon determining the cost corresponding to the i-th weight derivation mode mentioned above, the influence of the blending parameters on the weight is included. That is, a weight of the template is determined according to the i-th weight derivation mode and the blending parameter; then, a prediction value of the template is determined according to the weight of the template and K prediction values of the template; and a cost corresponding to the i-th weight derivation mode is determined according to the prediction value and a reconstructed value of the template. Herein, the specific process for determining the weight of the template according to the i-th weight derivation mode and the blending parameter may be referred to the description of the embodiments mentioned above, which will not be repeated herein.

According to the steps mentioned above, after the E weight derivation modes are selected from the F weight derivation modes, the following step S201-C11-22 is executed.

S201-C11-22: V prediction modes are selected from the J prediction modes, where V is a positive integer less than or equal to J.

The embodiments of the present disclosure do not limit the manner for selecting the V prediction modes from the J prediction modes.

In some embodiments, V preset prediction modes are selected from the J prediction modes.

In some embodiments, for an i-th prediction mode in the J prediction modes, the decoder side determines a cost in case of predicting the template by using the i-th prediction mode, where i is a positive integer from 1 to J; and V prediction modes are selected from the J prediction modes according to the cost corresponding to the i-th prediction mode.

In the embodiments of the present disclosure, a weight derivation mode, K prediction modes and a blending parameter are taken as a combination to calculate a cost. In this way, for the convenience of calculation, costs of the J weight derivation modes are calculated on a basis of a given weight derivation mode, other given K-1 prediction modes and a given blending parameter. That is, the J prediction modes are combined with a set weight derivation mode, set K-1 prediction modes and a set blending parameter, respectively, so as to obtain J combinations; and a cost corresponding to each combination of the J combinations is calculated to obtain costs of the J prediction modes.

According to the method mentioned above, after the cost corresponding to the i-th prediction mode in the J prediction modes is determined, V prediction modes are selected from the J prediction modes according to the cost corresponding to the i-th prediction mode.

Herein, selecting the V prediction modes from the J prediction modes according to the cost corresponding to the i-th prediction mode includes the following manners.

First type of manner: in a case where the cost corresponding to the i-th prediction mode is less than a fourth preset value, a prediction mode similar to the i-th prediction mode is selected from the J prediction modes; and V prediction modes are determined according to the i-th prediction mode and the prediction mode similar to the i-th prediction mode.

Second type of manner: in a case where the cost corresponding to the i-th prediction mode is greater than a fifth preset value, the i-th prediction mode and a prediction mode similar to the i-th prediction mode are deleted from the J prediction modes to obtain at least one prediction mode remained after deleting; and V prediction modes are determined according to the at least one prediction mode being deleted.

According to the steps mentioned above, E weight derivation modes are selected from F weight derivation modes, and V prediction modes are selected from J prediction modes. Next, the following S201-C11-23 is executed.

S201-C11-23: selecting O blending parameters from W blending parameters, where O is a positive integer less than or equal to W.

In some embodiments, in a case where O is equal to W, the W blending parameters are determined as O blending parameters.

In some embodiments, in a case where W is greater than O, the W blending parameters are screened to obtain O blending parameters.

Herein, the manner for screening the W blending parameters to obtain the O blending parameters includes at least the following examples.

Example 1: a cost of each blending parameter in the W blending parameters is determined, and first O blending parameters with a smallest cost in the W blending parameters are screened.

Example 2: in a case where the W blending parameters mentioned above are not determined through the picture information of the current block, the embodiments of the present disclosure may further determine the picture information of the current block; and determine O blending parameters from the W blending parameters according to the picture information of the current block.

In some embodiments, in a case where the picture information of the current block includes a definition of a picture edge, determining O blending parameters from the W blending parameters according to the picture information of the current block, includes two examples.

In an example, in a case where the definition of the picture edge of the current block is less than a preset value, at least one first type blending parameter in the W blending parameters is determined as O blending parameters.

In another example, in a case where the definition of the picture edge of the current block is greater than or equal to the preset value, at least one second type blending parameter in the W blending parameters is determined as O blending parameters.

In some embodiments, the O blending parameters are selected from the W blending parameters according to the size of the current block.

In a possible implementation, a blending parameter greater than or equal to a third value and in the W blending parameters is used as O blending parameters according to the size of the current block.

For example, in a case where the size of the current block is smaller than a second set threshold, a blending parameter with a third value and in the W blending parameters is used as a blending parameter in the O blending parameters.

For another example, in a case where the size of the current block is greater than or equal to a second set threshold, blending parameters that are less than or equal to a fourth value in the W blending parameters are used as O blending parameters, where the fourth value is less than the third value.

In another possible implementation, O blending parameters are determined as at least one blending parameter of the W blending parameters and within a certain value range according to the size of the current block.

For example, in a case where the size of the current block is smaller than a second set threshold, O blending parameters are determined as one or more blending parameters of the W blending parameters and within a third blending parameter value range.

For another example, in a case where the size of the current block is greater than or equal to a second set threshold, O blending parameters are determined as one or more blending parameters of the W blending parameters and within a fourth blending parameter value range, where a minimum value of the fourth blending parameter value range is less than a minimum value of the third blending parameter value range.

After the E weight derivation modes are selected from the F weight derivation modes, the V prediction modes are selected from J prediction modes, and the O blending parameters are selected from W blending parameters, the following S201-C11-24 is executed.

S201-C11-24: constituting H third combinations according to the E weight derivation modes, the V prediction modes and the O blending parameters.

Specifically, a weight derivation mode is selected from the E weight derivation modes, K prediction modes are selected from the V prediction modes, and finally, a blending parameter is selected from the O blending parameters, where the weight derivation mode, the K prediction modes and the blending parameter constitute a third combination.H third combinations may be obtained By repeating this step.

It can be seen from the above that the third combination includes a weight derivation mode, K prediction modes and a blending parameter, that is, the third combination includes K+2 elements. In this way, upon screening an element, other elements in the combination may be limited to be fixed, and a possible selection of another element may be limited.

The implementation process of S201-C11-2 mentioned above is introduced below by taking the screening process for one prediction mode when the weight derivation mode, the blending parameter and another prediction mode are fixed as an example.

In some embodiments, S201-C11-2 mentioned above includes: for an f-th weight derivation mode in the F weight derivation modes, and an o-th blending parameter in the O blending parameters, a cost in case of predict the template by using the f-th weight derivation mode, the o-th blending parameter and the j-th prediction mode in the J prediction modesis determined, where f is a positive integer less than or equal to F, o is a positive integer less than or equal to O, and j is a positive integer less than or equal to J; in a case where a cost corresponding to a combination of the f-th weight derivation mode, the o-th blending parameter and the j-th prediction mode is greater than a sixth preset value, the j-th prediction mode and a prediction mode similar to the j-th prediction mode are deleted from the J prediction modes to obtain at least one prediction mode remained after deleting; and H third combinations are constructed according to the f-th weight derivation mode, the o-th blending parameter and at least one prediction mode remained after deleting.

In this embodiment, when the weight derivation mode, the blending parameter and one prediction mode are fixed, another prediction mode is obtained by screening. For example, a relatively small cost of a certain intra prediction mode as the first prediction mode cannot be obtained under a certain weight derivation mode and a blending parameter, a case where the intra prediction mode, as the first prediction mode, similar to the intra prediction mode under the weight derivation mode and the blending parameter will no longer be tried.

According to the steps mentioned above, a prediction mode set after being finally deleted corresponding to each weight derivation mode in the F weight derivation modes and the blending parameter may be determined. In this way, H third combinations are constructed according to the F weight derivation modes and their respective corresponding prediction mode sets being finally deleted.

It should be noted that the embodiments mentioned above shows a manner for screening the prediction mode in a form of combination. Optionally, any of the weight derivation mode and the blending parameter may also be screened in the form of combination to construct H third combinations finally.

According to the respective methods mentioned above, after the H third combinations are determined, for each third combination of the H third combinations, the template is predicted by using the weight derivation mode, the blending parameter and K prediction modes in the third combination to obtain the prediction value of the template corresponding to the third combination.

Next, a cost of the third combination is determined according to the prediction value and the reconstructed value of the template.

The manner for determining the cost of the third combination mentioned above includes but is not limited to the following manners.

First manner: the cost of the third combination is determined by using a manner of a matrix. Specifically, a loss is determined according to the prediction value and the reconstructed value of the template, and the loss is recorded as a first loss. Since the prediction value and the reconstructed value of the template mentioned above are matrices, the first loss is also a matrix. For example, an absolute value of a difference between the prediction value and the reconstructed value of the template is determined as the first loss, and the first loss is determined as the cost of the third combination.

Second manner: the cost of the third combination is determined by using a manner of a point-by-point calculation.

Specifically, for an i-th pixel point in the template, upon determining a prediction value at the i-th pixel point of each prediction mode in the K prediction modes in the third combination, a weight of the template corresponding to the i-th pixel point and in the weights of the template is determined, and a prediction value of the i-th pixel point is obtained according to the weight of the template at the i-th pixel point and K prediction values of the i-th pixel point. The cost of the third combination at the i-th pixel point is obtained according to the prediction value and a reconstructed value of the i-th pixel point. According to this method, a prediction distortion cost of the third combination at each pixel point in the template may be determined, and finally, a cumulative sum of prediction distortion costs of the third combination at respective pixel points in the template is determined as the cost of the third combination.

According to the method mentioned above, a cost of each third combination in the H third combinations may be determined.

Next, a second candidate combination list is constructed according to the costs of respective third combinations in the H third combinations.

For example, according to the costs of the third combinations, the H third combinations are sorted in an order from small to large, and sorted H third combinations are determined as the second candidate combination list.

For another example, L third combinations with a smallest cost are selected from the H third combinations to constitute the second candidate combination list according to the costs of the third combinations.

According to the method mentioned above, the second candidate combination list is determined, where respective second candidate combinations in the second candidate combination list are sorted in an order from small to large according to the sizes of the costs. Exemplarily, the second candidate combination list is shown in table 8 mentioned above.

**In** this way, the encoder side determines the first combination from a constructed second candidate combination list.

For example, any second candidate combination in the second candidate combination list is determined as the first combination.

For another example, a second candidate combination with a smallest cost and in the second candidate combination list is determined as the first combination.

According to the method mentioned above, after the first combination is determined, the following S202 is executed.

In case 2 mentioned above, the implementation process of the S102 mentioned above is introduced by taking the first combination including a first weight derivation mode, K first prediction modes and a second blending parameter as an example.

Case 3: the first combination includes a first weight derivation mode and K first prediction modes, where the first weight derivation mode includes a fourth blending parameter, and the fourth blending parameter is used to determine a weight, such as to determine a weight of a prediction value, or a weight of a template.

In this case 3, the implementation of S202 mentioned above includes but is not limited to the following manners.

Manner 1: the encoder side and the decoder side determine a first combination corresponding to the first index from a plurality of preset third candidate combinations.

Manner 2: both the decoder side and the encoder side determine a list, where the list includes a plurality of third candidate combinations. Therefore, the list is also referred to as a third candidate combination list, and a first combination corresponding to the first index is determined from the third candidate combination list. At this time, S202 mentioned above includes the following steps:

S202-E: determining a third candidate combination list; and
S202-F: determining a weight derivation mode and K prediction modes included in the third candidate combination corresponding to the first index and in the third candidate combination list, as a first weight derivation mode and K first prediction modes.

Herein, the third candidate combination list mentioned above includes a plurality of third candidate combinations, and any third candidate combination of the plurality of third candidate combinations includes a weight derivation mode and K prediction modes, where the weight derivation mode includes a blending parameter.

Exemplarily, the third candidate combination list is shown in table 9.

The embodiments of the present disclosure do not limit the specific manner in which the decoder side determines the third candidate combination list.

In some embodiments, the third candidate combination list mentioned above is already available.

In some embodiments, the third candidate combination list is constructed by the encoder side.

The embodiments of the present disclosure do not limit the manner in which the encoder side constructs the third candidate combination list.

In some embodiments, the encoder side constructs the third candidate combination list through the following step S202-E1.

S202-E1: constructing the third candidate combination list based on the template of the current block.

In some embodiments, S202-E1 includes the following steps S202-E11 to S202-E13:

S202-E11: determining A fourth combinations, where each fourth combination of the A fourth combinations includes a weight derivation mode and K prediction modes; a weight derivation mode and K prediction modes included in one of any two combinations of the A fourth combinations are not completely the same as those included in another one of the any two combinations of the A fourth combinations, and A is a positive integer greater than 1;
S202-E12: for each fourth combination in the A fourth combinations, determining a cost corresponding to the fourth combination in case of predicting the template by using the weight derivation mode and the K prediction modes in the fourth combination to predict the template,; and
S202-E13: constructing a third candidate combination list according to costs corresponding to respective fourth combinations in the A fourth combinations.

In this embodiment, when the encoder side constructs the third candidate combination list, the encoder side first determines A fourth combinations. The present disclosure does not limit the specific value of the A fourth combinations, such as 8, 16, 32, etc. Each of the A fourth combinations includes a weight derivation mode and K prediction modes. The weight derivation mode includes a blending parameter; and a weight derivation mode and K prediction modes included in one of any two combinations of the A fourth combinations are not completely the same as those included in another one of the any two combinations of the A fourth combinations. Then, for each fourth combination of the A fourth combinations, a cost corresponding to the fourth combination in case of predicting the template of the current block by using the weight derivation mode and the K prediction modes included in the fourth combination, is determined. Finally, a third candidate combination list is constructed according to costs corresponding to respective fourth combinations in the A fourth combinations.

In some embodiments, determining the cost corresponding to the fourth combination in case of predicting predicting the template of the current block by using the weight derivation mode and the K prediction modes included in the fourth combination in S202-E12 mentioned above, includes at least the following manners.

Manner 1: S202-E12 includes the following S202-E12-11 to S202-E12-14:

S202-E12-11: determining a weight of the template according to the weight derivation mode included in the fourth combination;
S202-E12-12: obtaining K prediction values of the template by predicting the template according to the K prediction modes in the fourth combination;
S202-E12-13: obtaining a prediction value of the template corresponding to the fourth combination by weighting the K prediction values of the template according to the weight of the template; and
S202-E12-14: determining a cost corresponding to the fourth combination according to the prediction value of the template and the reconstructed value of the template corresponding to the fourth combination.

In the embodiments of the present disclosure, the processes for determining costs corresponding to respective fourth combinations in the A fourth combinations are consistent. For the convenience of description, a fourth combination in the A fourth combinations is taken as an example for illustration.

In the embodiments of the present disclosure, the fourth combination includes a weight derivation mode and K prediction modes. When the template is predicted by using the fourth combination, exemplarily, the encoder side may determine the weight of the template according to the weight derivation mode included in the fourth combination; obtain K prediction values of the template by predicting the template according to the K prediction modes included in the fourth combination; next, obtain the prediction value of the template corresponding to the fourth combination by weighting the K prediction values of the template by using the weight of the template to; and then, determine the cost corresponding to the fourth combination according to the prediction value of the template and the reconstructed value of the template corresponding to the fourth combination.

The embodiments of the present disclosure do not limit the specific manner for determining the weight of the template according to the weight derivation mode included in the fourth combination in the S202-E12-11 mentioned above. For example, the weight derivation mode in the fourth combination includes a blending parameter, and therefore, the weight of the template may be determined according to the blending parameter.

Manner 2: S202-E12 includes the following S202-E12-11 to S202-E12-14:

S202-E12-21: determining prediction values of the template corresponding to the K prediction modes in the fourth combination according to the weight derivation mode in the fourth combination;
S202-E12-22: determining costs corresponding to the K prediction modes in the fourth combination respectively according to the prediction values of the template and reconstructed values of the template corresponding to the K prediction modes in the fourth combination respectively; and
S202-E12-23: determining the cost corresponding to the fourth combination according to costs corresponding to the K prediction modes in the fourth combination respectively. For example, a sum of the costs corresponding to the K prediction modes in the fourth combination respectively is determined as the cost corresponding to the fourth combination.

The manner for constructing the third candidate combination list according to costs corresponding to respective fourth combinations in the A fourth combinations in the S202-E13 mentioned above includes but is not limited to the following examples.

Example 1: A fourth combinations are sorted according to the costs corresponding to respective fourth combinatios in the A fourth combinations; and sorted A fourth combinations are determined as the third candidate combination list.

The third candidate combination list generated in this example 1 includes A third candidate combinations.

Optionally, A second candidate combinations in the third candidate combination list are sorted in an order from small to large according to the sizes of the costs, that is, costs corresponding to the A third candidate combinations in the third candidate combination list increase in sequence according to ranking.

Herein, sorting the A fourth combinations according to the costs corresponding to respective fourth combinations in the A fourth combinations may be sorting the A fourth combinations in an order from small to large according to the costs.

Example 2: B fourth combinations are selected from A fourth combinations according to the costs corresponding to the fourth combinations, and a list composed of the B fourth combinations is determined as the third candidate combination list.

Optionally, B fourth combinations mentioned above are first B fourth combinations with a smallest cost in the A fourth combinations.

Optionally, B third candidate combinations in the third candidate combination list are sorted in an order from small to large according to the sizes of the costs, that is, costs corresponding to B third candidate combinations in the third candidate combination list increase in sequence according to ranking.

The process for determining A fourth combinations in the S202-E11 mentioned above is introduced below.

In some embodiments, A fourth combinations mentioned above are preset. In this way, the template of the current block is predicted by using each fourth combination of the A preset fourth combinations to obtain the prediction value of the template corresponding to each fourth combination; then a cost corresponding to each fourth combination is determined according to the prediction value of the template and the reconstructed value of the template corresponding to each fourth combination; A fourth combinations are sorted according to the costs corresponding to respective fourth combinations; and sorted A fourth combinations are used as the third candidate combination list, or B fourth combinations with a smallest cost are selected from the sorted A fourth combinations to constitute the third candidate combination list.

In some embodiments, S202-E11 includes the following steps:

S102-E11-1: determining C weight derivation modes and D prediction modes, where C is a positive integer and D is a positive integer greater than or equal to K; and

S102-E11-2: constructing A fourth combinations according to the C weight derivation modes and the D prediction modes, where each fourth combination of the A fourth combinations includes a weight derivation mode in the C weight derivation modes and K prediction modes from the D prediction modes.

In this embodiment, the encoder side first determines C weight derivation modes and D prediction modes, and next constructs A fourth combinations according to determined C weight derivation modes and D prediction modes.

The embodiments of the present disclosure do not limit the specific numbers of the C weight derivation modes and the D prediction modes mentioned above.

At this time, the implementation for determining the D prediction modes in the S202-E11-1 mentioned above includes but is not limited to the following manners.

Manner 1: D prediction modes are preset prediction modes.

Manner 2: at least one of a third candidate prediction mode list for the current block, third alternative prediction mode lists corresponding to K prediction modes respectively, and a prediction mode corresponding to the weight derivation mode is determined, where the third candidate prediction mode list includes a plurality of third candidate prediction modes, and a third alternative prediction mode list corresponding to any prediction mode in the K prediction modes includes at least one third alternative prediction mode; and D prediction modes are determined according to at least one of the third candidate prediction mode list, the third alternative prediction mode lists corresponding to the K prediction modes respectively, and the prediction mode corresponding to the weight derivation mode.

Herein, the manner for determining the third candidate prediction mode list for the current block includes at least the following examples.

Example 1: a third candidate prediction mode list is determined according to a prediction mode used by at least one block adjacent to the current block.

Example 2: in a case where the third candidate prediction mode list does not include a preset mode, a preset mode corresponding to the current block is determined; and the preset mode is added to the third candidate prediction mode list.

In an example, the preset mode mentioned above is of several preset prediction modes.

In another example, a picture type corresponding to the current block is determined, and the preset mode is determined according to the picture type corresponding to the current block.

For example, in a case where the picture type corresponding to the current block is type B or type P, the preset mode includes at least one of a DC, a horizontal mode, a vertical mode and an angle mode.

Example 3: a picture type corresponding to the current block is determined, and a third candidate prediction mode list is determined according to the picture type corresponding to the current block. For example, in a case where the picture type corresponding to the current block is type B or type P, at least one of a DC, a horizontal mode, a vertical mode and some angle modes may be added to the third candidate prediction mode list. For another example, in a case where the picture type corresponding to the current block is type I, at least one of a DC, a horizontal mode and a vertical mode may be added to the third candidate prediction mode list.

In the embodiments of the present disclosure, the specific implementation of the second manner mentioned above refers to the specific description of the second manner in the S202-A11-1 mentioned above, which will not be repeated herein.

The process for determining the C weight derivation modes in S202-E11-1 is introduced below.

In some embodiments, the C weight derivation modes mentioned above are preset.

In some embodiments, the C weight derivation modes mentioned above are screened out from a plurality of preset weight derivation modes, for example, C weight derivation modes are obtained by screening according to information such as the size of the current block and/or the picture type corresponding to the current block. Optionally, C weight derivation modes with a smaller cost may be selected from the plurality of preset weight derivation modes according to the costs.

In some embodiments, X blending parameters are determined, and C weight derivation modes are determined according to the X blending parameters. The embodiments of the present disclosure do not limit a size relationship between X and C.

In the embodiments of the present disclosure, since each weight derivation mode of the C weight derivation modes includes a blending parameter. In this way, the C weight derivation modes may be determined according to X blending parameters. For example, in a case where the weight derivation mode includes other parameters in addition to the blending parameter, at this time, a blending parameter included in at least one or two of the C weight derivation modes may be the same or different, and then, C weight derivation modes may be determined according to the X blending parameters. For example, a cost corresponding to each weight derivation mode in a plurality of different weight derivation modes is determined by using a plurality of different weight derivation modes composed of X blending parameters, and then, C weight derivation modes with a smallest cost are selected.

The embodiments of the present disclosure do not limit the specific manner for determining the X blending parameters.

In some embodiments, the X blending parameters mentioned above are preset blending parameters, such as 1/4, 1/2, 1, 2, 4, etc.

In some embodiments, the X blending parameters are determined according to the size of the current block.

For example, in a case where the size of the current block is smaller than a third set threshold, blending parameters of the at least one preset blending parameter and greater than or equal to a fifth value are used as X blending parameters.

For another example, in a case where the size of the current block is greater than or equal to a third set threshold, blending parameters of the at least one blending parameter and less than or equal to a sixth value are used as X blending parameters, where the sixth value is less than the fifth value.

For another example, in a case where the size of the current block is greater than or equal to a third set threshold, blending parameters of the at least one blending parameter and less than or equal to a sixth value are used as X blending parameters, where the sixth value is less than the fifth value.

For another example, in a case where the size of the current block is less than the third set threshold, the X blending parameters are determined as one or more blending parameters of the at least one preset blending parameter t and within a fifth blending parameter value range.

For another example, in a case where the size of the current block is greater than or equal to a third set threshold, the X blending parameters are determined as one or more blending parameters of the at least one blending parameter and within a sixth value range blending parameter, where a minimum value of the sixth blending parameter value range is less than a minimum value of the fifth blending parameter value range.

In some embodiments, picture information of the current block is determined; and X blending parameters are determined according to the picture information of the current block.

Example 1: in a case where a definition of a picture edge of the current block is less than a preset value, at least one third type blending parameter in Y preset blending parameters is determined as X blending parameters, where Y is a positive integer greater than X.

The third type blending parameter may be understood as a blending parameter that may form a wider blending area, such as 1/4, 1/2, etc.

Example 2: in a case where a definition of a picture edge of the current block is greater than or equal to a preset value, at least one fourth type blending parameter in the Y blending parameters is determined as X blending parameters, where the fourth type blending parameter is greater than the third type blending parameter.

Herein, the fourth type blending parameter may be understood as a blending parameter that may form a narrower blending area, such as 2, 4, etc.

After the encoder side determines the D prediction modes, the C weight derivation modes, and the W blending parameters according to the steps mentioned above, A different fourth combinations are constituted according to the D prediction modes and the C weight derivation modes. Next, a third candidate combination list is determined according to the A fourth combinations, and then, a first weight derivation mode and K first prediction modes are determined from the third candidate combination list.

In some embodiments, in order to further increase the speed of constructing the third candidate combination list, the encoder side screens the D prediction modes and the C weight derivation modes determined above again. At this time, constituting A fourth combinations according to the determined C weight derivation modes and D prediction modes in the S102-E11-2 mentioned above includes the following steps S202-E11-21 to S202-E11-24.

S202-E11-21: selecting C1 weight derivation modes from C weight derivation modes, where C1 is a positive integer less than or equal to C.

The specific implementation process of S202-E11-21 mentioned above may refer to the description of the S102-A11-21 mentioned above, which will not be repeated herein.

According to the step mentioned above, after the encoder side selects C1 weight derivation mode from C weight derivation modes, the following step S202-E11-22 is executed.

S202-E11-22: selecting D1 prediction modes are selected from D prediction modes, where D1 is a positive integer less than or equal to D.

The specific implementation process of the S202-E11-22 mentioned above may refer to the description of the S102-A11-22 mentioned above, which will not be repeated herein.

According to the steps mentioned above, C1 weight derivation modes are selected from C weight derivation modes, and D1 prediction modes are selected from D prediction modes. Next, the following S102-E11-23 is executed.

S102-C11-23: constituting A fourth combinations according to the C1 weight derivation modes and the D1 prediction modes.

The specific implementation process of the S202-E11-23 mentioned above may refer to the description of the S102-A11-23 mentioned above, which will not be repeated herein.

According to the method mentioned above, after A fourth combinations are determined, a cost of each fourth combination in the A fourth combinations may be determined.

Next, a third candidate combination list is constructed according to the costs of respective fourth combinations in the A fourth combinations.

For example, according to sizes of the costs of the fourth combinations, the A fourth combinations are sorted in an order from small to large, and sorted A fourth combinations are determined as the third candidate combination list.

For another example, according to sizes of the costs of the fourth combinations, B fourth combinations with a smallest cost are selected from the A fourth combinations to constitute the third candidate combination list.

According to the method mentioned above, a third candidate combination list is determined, where respective third candidate combinations in the third candidate combination list are sorted in an order from small to large according to the sizes of the costs. Exemplarily, the third candidate combination list is shown in table 9 above.

In this way, the encoder side determines the first combination from a constructed third candidate combination list.

For example, any third candidate combination in the third candidate combination list is determined as the first combination.

For another example, a third candidate combination with a smallest cost in the third candidate combination list is determined as the first combination.

According to the method mentioned above, after the first combination is determined, the following S202 is executed.

In the embodiments of the present disclosure, after the decoder side determines the first combination according to case 1, case 2, and case 3, the following step S103 is executed.

S202: obtaining a prediction value of the current block by predicting the current block according to the first weight derivation mode and the K first prediction modes.

It can be seen from the S201 mentioned above that in the embodiments of the present disclosure, the first combination includes different contents. For example, in case 1, the first combination includes a first weight derivation mode and K first prediction modes, but does not include a blending parameter. In case 2, the first combination includes a first weight derivation mode, K first prediction modes and a second blending parameter. In the embodiments of the present disclosure, the methods for determining the prediction value of the current block are different for different contents included in the first combination. In case 3, the first combination includes a first weight derivation mode and K first prediction modes, and the first weight derivation mode includes a fourth blending parameter.

Case 1: in a case where the first combination includes a first weight derivation mode and K first prediction modes, S202 mentioned above includes the following steps:

S202-A1: determining a first blending parameter;
S202-A2: obtaining a prediction value of the current block by predicting the current block according to the first blending parameter, the first weight derivation mode and the K first prediction modes.

The embodiments of the present disclosure do not limit the specific implementation process of S202-A2 mentioned above. For example, the current block is predicted by using the first weight derivation mode and the K first prediction modes to obtain a prediction value, and next, according to the first blending parameter and the prediction value, a prediction value of the current block is determined.

In some embodiments, S202-A2 mentioned above includes the following steps:

S202-A21: determining a weight of the prediction value according to the first blending parameter and the first weight derivation mode;

S202-A22: obtaining K prediction values by predicting the current block according to the K first prediction modes;

S202-A23: obtaining the prediction value of the current block by weighting the K prediction values according to the weight of the prediction value.

There is no order for executing S202-A22 and S202-A21, that is, S202-A22 may be executed before S202-A21, or may be executed after S202-A21, or may be executed in parallel with S202-A21.

In this case 1, in a case where the first combination includes a first weight derivation mode and K first prediction modes, but does not include a blending parameter, a first blending parameter is determined; and a weight of the prediction value is determined according to the first blending parameter and the first weight derivation mode. Next, the current block is predicted according to the K first prediction modes to obtain K prediction values of the current block. Then, the K prediction values of the current block are weighted by using the weight of the prediction value to obtain a prediction value of the current block.

In some embodiments, a blending parameter in a plurality of preset blending parameters is determined as a first blending parameter.

In some embodiments, a candidate blending parameter list is determined, where the candidate blending parameter list includes a plurality of candidate blending parameters, and a candidate blending parameter in the candidate blending parameter list is determined as the first blending parameter.

In some embodiments, for a candidate blending parameter in the candidate blending parameter list, a cost corresponding to the candidate blending parameter is determined; and a candidate blending parameter is selected from the candidate blending parameter list as the first blending parameter, according to costs corresponding to respective candidate blending parameters in the candidate blending parameter list.

In some embodiments, determining the cost corresponding to the candidate blending parameter includes: determining a weight of the template of the current block according to the candidate blending parameter and the first weight derivation mode; obtaining K prediction values of the template by predicting the template according to the K first prediction modes; obtaining the prediction value of the template by weighting the K prediction values of the template according to the weight of the template; and determining the cost corresponding to the candidate blending parameter according to the prediction value and a reconstructed value of the template.

In some embodiments, determining the weight of the template of the current block according to the candidate blending parameter and the first weight derivation mode, includes: determining a first template weight according to the first weight derivation mode; and obtaining the weight of the template by adjusting the first template weight with the candidate blending parameter.

In some embodiments, selecting a candidate blending parameter from the candidate blending parameter list, as the first blending parameter according to the costs corresponding to respective candidate blending parameters in the candidate blending parameter list, includes: determining a candidate blending parameter with a smallest cost and in the candidate blending parameter list as the first blending parameter.

In some embodiments, after the first blending parameter is determined according to the method mentioned above, a second index is written in a bitstream, where the second index is used to indicate a first blending parameter, so that the decoder side quickly determines the first blending parameter

In some embodiments, the encoder side may further determine the first blending parameter through the following manner 2.

Manner 2: the first blending parameter is determined through the following steps S202-A11 and S202-A12.

S202-A11: determining G alternative blending parameters, where G is a positive integer.

S202-A12: determining a first blending parameter from the G alternative blending parameters.

The embodiments of the present disclosure do not limit the specific manner for the encoder side to determine the G alternative blending parameters.

In a possible implementation, the G alternative blending parameters mentioned above are preset, that is, the decoder side and the encoder side agree to determine several preset blending parameters as the G alternative blending parameters.

In another possible implementation, the G alternative blending parameters are determined according to the size of the current block.

Exemplarily, a size of a block may be represented by a length, a width or a number of pixels of a block.

In another possible implementation, picture information of the current block is determined; and G alternative blending parameters are determined from a plurality of preset alternative blending parameters according to the picture information of the current block.

Exemplarily, in a case where the picture information includes a definition of a picture edge, determining the G alternative blending parameters from the plurality of preset alternative blending parameters according to the picture information of the current block includes the following two manners.

First type of manner: in a case where the definition of the picture edge of the current block is less than a preset value, at least one first alternative blending parameter in the plurality of preset alternative blending parameters, such as 1/4, 1/2, etc., is determined as G alternative blending parameters.

Second type of manner: in a case where the definition of the picture edge of the current block is greater than or equal to a preset value, at least one second alternative blending parameter in the plurality of preset alternative blending parameters, such as 2, 4, etc., is determined as G alternative blending parameters, where the second alternative blending parameter is greater than the first alternative blending parameter.

After the encoder determines the G alternative blending parameters, the encoder side determines the first blending parameter from the G alternative blending parameters.

The embodiments of the present disclosure do not limit the specific manner of determining the first blending parameter from the G alternative blending parameters.

In some embodiments, any alternative blending parameter in the G alternative blending parameters is determined as the first blending parameter.

In some embodiments, the first blending parameter is determined from the G alternative blending parameters through the following steps S202-A121 and S202-A122:

S202-A121: for a g-th alternative blending parameter in the G alternative blending parameters, determining a cost corresponding to the g-th alternative blending parameter, where g is a positive integer from 1 to G; and
S202-A122: determining a first blending parameter from the G alternative blending parameters according to costs corresponding to the G candidate blending parameters.

In this embodiment, a cost corresponding to each alternative blending parameter of the G alternative blending parameters is determined, and then, a first blending parameter is determined from the G alternative blending parameters according to the costs.

In the embodiments of the present disclosure, it is determined that the costs corresponding to respective alternative blending parameters of the G alternative blending parameters are the same. For the convenience of description, the g-th alternative blending parameter is taken as an example for explanation.

The embodiments of the present disclosure do not limit the specific manner for determining the cost corresponding to the g-th alternative blending parameter.

In a possible implementation, a first weight derivation mode, a g-th alternative blending parameter, and K first prediction modes are taken as a combination, and the cost in case of predicting the template by using the combination is determined. Exemplarily, S202-A121 includes the following steps:

S202-A1211: determining a weight of the template of the current block according to the first weight mode and the g-th alternative blending parameter;
S202-A1212: obtaining K prediction values of the template by predicting the template according to the K first prediction modes;
S202-A1213: obtaining a prediction value of the template by weighting the K prediction values of the template according to the weight of the template; and
S202-A1214: determining a cost corresponding to the g-th alternative blending parameter according to the prediction value of the template.

herein, the specific process for determining the weight of the template of the current block according to the first weight mode and the g-th alternative blending parameter in the S202-A1211 mentioned above may refer to the description of the embodiments mentioned above.

For example, the first weight corresponding to the template is determined according to the first weight derivation mode and the template; the first weight is adjusted by using the g-th alternative blending parameter to obtain an adjusted first weight; and the weight of the template is determined according to the adjusted first weight.

Referring to the method mentioned above, a cost corresponding to each alternative blending parameter of the G alternative blending parameters may be determined, and then, the first blending parameter may be determined from the G alternative blending parameters according to costs.

For example, an alternative blending parameter with a smallest cost in the G alternative blending parameters is determined as the first blending parameter.

In some embodiments, the first blending parameter is determined according to the size of the current block.

It can be seen from the above that there is a certain correlation between the blending parameter and the size of the block. Therefore, the embodiments of the present disclosure may also determine the first blending parameter according to the size of the current block.

In a possible implementation manner, a fixed blending parameter is determined as the first blending parameter according to the size of the current block.

For example, in a case where the size of the current block is less than a first set threshold, the first blending parameter is determined as a first value.

For another example, in a case where the size of the current block is greater than or equal to a first set threshold, the first blending parameter is determined as a second value, where the second value is smaller than the first value.

In another possible implementation, a value range where the first blending parameter is located is determined according to the size of the current block, and then, the first blending parameter is determined as a value within the value range.

For example, in a case where the size of the current block is less than a first set threshold, the first blending parameter is determined to be within a first blending parameter value range. For example, the first blending parameter is determined as any blending parameter such as a minimum blending parameter, a maximum blending parameter, or an intermediate blending parameter within the first blending parameter value range. For another example, the first blending parameter is determined as a blending parameter with a smallest cost within the first blending parameter value range. The method for determining the cost of the blending parameter may refer to the description of other embodiments of the present disclosure, which will not be repeated herein.

For another example, in a case where the size of the current block is greater than or equal to a first set threshold, the first blending parameter is determined to be within a second blending parameter value range. For example, the first blending parameter is determined as any blending parameter such as a minimum blending parameter, or a maximum blending parameter, or an intermediate blending parameter within the second blending parameter value range. For another example, the first blending parameter is determined as a blending parameter with a minimum cost within the second blending parameter value range. A minimum value in the second blending parameter value range is less than a minimum value in the first blending parameter value range, and the first blending parameter value range may intersect or may not intersect with the second blending parameter value range, which is not limited by the embodiments of the present disclosure.

In this case 1, after the first blending parameter is determined according to the steps mentioned above, step S202-A2 mentioned above is executed to determine the weight of the prediction value according to the first blending parameter and the first weight derivation mode.

In the embodiments of the present disclosure, the manner for determining the weight of the prediction value according to the first blending parameter and the first weight derivation mode includes at least manners as shown in the following examples.

Example 1: when the first weight derivation mode is used to derive the weight of the prediction value, a plurality of intermediate variables need to be determined. A certain intermediate variable or certain intermediate variables of the plurality of intermediate variables are adjusted by using the first blending parameter, and then, the weight of the prediction value is derived by using an adjusted variable(s).

Example 2: a second weight corresponding to the current block is determined according to the first weight derivation mode and the current block; the second weight is adjusted by using the first blending parameter to obtain an adjusted second weight; and a weight of the prediction value is determined according to the adjusted second weight.

Next, the current block is predicted according to the K first prediction modes to obtain K prediction values; and the K prediction values are weighted according to the weight of the prediction value to obtain the prediction value of the current block.

The process for determining the prediction value of the current block when the first combination includes the first weight derivation mode and K first prediction modes but does not include the blending parameter in case 1 is introduced above.

The determination process in the prediction of the current block corresponding to case 2 is introduced below.

Case 2: in a case where the first combination includes a first weight derivation mode, K first prediction modes and a second blending parameter, S202 mentioned above includes: obtaining the prediction value of the current block by predicting the current block according to the second blending parameter, the first weight derivation mode and the K first prediction modes.

The embodiments of the present disclosure do not limit the specific implementation of obtaining the prediction value of the current block by predicting the current block according to the second blending parameter, the first weight derivation mode and K first prediction modes. For example, the current block is predicted by using the first weight derivation mode and K first prediction modes to obtain a prediction value, and then, the prediction value of the current block is determined according to the second blending parameter and the prediction value.

In some embodiments, the prediction value of the current block may be determined through the following steps S202-B1 to S202-B4:

S202-B1, determining the weight of the prediction value according to the first weight derivation mode and the second blending parameter;
S202-B2, determining K prediction values according to the K first prediction modes;
S202-B3, obtaining K prediction values by predicting the current block according to K first prediction modes; and
S202-B4, obtaining the prediction value of the current block by weighing the K prediction values according to the weights of the K prediction values.

There is no order for executing the S202-B1 and S202-B2, that is, S202-B1 may be executed before S202-B2, or may be executed after S202-B1, or may be executed in parallel with S202-B2.

In this case 2, in a case where the first combination includes a first weight derivation mode, K first prediction modes and a second blending parameter, the decoder side determines a weight of a prediction value according to the first blending parameter and the first weight derivation mode. The current block is predicted according to the K first prediction modes to obtain K prediction values of the current block. Then, the K prediction values of the current block are weighted by using the weight of prediction value to obtain the prediction value of the current block.

In the embodiments of the present disclosure, the manner for determining the weight of the prediction value according to the second blending parameter and the first weight derivation mode includes at least manners as shown in the following examples.

Example 1: when the first weight derivation mode is used to derive the weight of the prediction value, a plurality of intermediate variables need to be determined. A certain intermediate variable or certain intermediate variables of the plurality of intermediate variables are adjusted; and then, the weight of the prediction value is derived by using an adjusted variable(s).

Example 2: the fourth weight corresponding to the current block is determined according to the first weight derivation mode and the current block; the fourth weight is adjusted by using the second blending parameter to obtain an adjusted fourth weight; and the weight of the prediction value is determined according to the adjusted fourth weight.

Referring to the method mentioned above, the weight of the prediction value is determined according to the second blending parameter and the first weight derivation mode.

Next, the current block is predicted according to the K first prediction modes to obtain K prediction values; and the K prediction values are weighted according to the weight of the prediction value to obtain the prediction value of the current block.

The process for determining the prediction value of the current block when the first combination includes the first weight derivation mode, K first prediction modes and a blending parameter in the case 2 is introduced above.

The determination process in the prediction of the current block corresponding to case 3 is introduced below.

Case 3: in a case where the first combination includes a first weight derivation mode and K first prediction modes, and the first weight derivation mode includes a fourth blending parameter, S103 mentioned above includes: obtaining a prediction value of the current block by predicting the current block according to the fourth blending parameter and the K first prediction modes .

The embodiments of the present disclosure do not limit the specific implementation of obtaining the prediction value of the current block by predicting the current block according to the fourth blending parameter and the K first prediction modes. For example, in a case where the first weight derivation mode further includes other parameters, the current block is predicted according to the other parameters in the first weight derivation mode and the K first prediction modes to obtain a prediction value, and then, the prediction value of the current block is determined according to the fourth blending parameter and the prediction value.

In some embodiments, the prediction value of the current block may be determined through the following steps S202-C1 to S202-C4:

S203-C1, determining a weight of a prediction value according to the first weight derivation mode;
S203-C2, determining K prediction values according to the K first prediction modes;
S203-C3, obtaining K prediction values by predicting the current block according to K first prediction modes; and
S203-C4, obtaining a prediction value of the current block by weighting the K prediction values according to weights of the K prediction values.

There is no order for executing the S203-C1 and S203-C2, that is, S203-C1 may be executed before S203-C2, or may be executed after S203-B1, or may be executed in parallel with S203-C2.

In this case 3, in a case where the first combination includes a first weight derivation mode and K first prediction modes, the decoder side determines the weight of the prediction value according to the first weight derivation mode; obtains K prediction values of the current block by predicting the current block according to the K first prediction modes; then, obtains the prediction value of the current block by weighing the K prediction values of the current block with the weight of the prediction value.

In the embodiments of the present disclosure, the manner for determining the weight of the prediction value according to the first weight derivation mode is not limited. For example, an angle index, a distance index and a fourth blending parameter are determined according to the first weight derivation mode, and the weight of the prediction value is determined according to the angle index, the distance index, the fourth blending parameter and a size of the current block.

Next, the current block is predicted according to the K first prediction modes to obtain K prediction values; and the K prediction values are weighted according to weight of the prediction value to obtain the prediction value of the current block.

In the embodiments of the present disclosure, the prediction value of the current block may be determined according to any of case 1, the case 2 and the case 3 mentioned above.

S203: obtaining a bitstream according to the prediction value of the current block, where the bitstream includes a first index, and the first index is used to indicate a first combination.

Specifically, after the prediction value of the current block is determined according to the steps mentioned above, a residual value of the current block is obtained according to the current block and the prediction value of the current block; the residual value of the current block is transformed to obtain a transformation coefficient; the transformation coefficient is quantized to obtain a quantization coefficient; and the quantization coefficient is encoded to obtain the bitstream.

In the embodiments of the present disclosure, in order to maintain consistency between the encoder side and the decoder side, the encoder side indicates the first combination to the decoder side through the first index, that is, the encoder side writes the first index into the bitstream. In this way, the decoder side obtains the first index by decoding the bitstream, and then, determines the first combination corresponding to the current block according to the first index, so as to predict the current block by using the first weight derivation mode and K first prediction modes included in the first combination to obtain the prediction value of the current block.

In some embodiments, the encoder side determines at least one flag, and determines whether to determine the first combination according to the at least one flag.

Optionally, the at least one flag mentioned above includes at least one of a sequence level flag, a picture level flag, a slice level flag, a unit level flag and a block level flag.

For example, the at least one flag mentioned above includes a sequence level flag, where the sequence level flag is used to indicate whether a current sequence is allowed to adopt the combined encoding technical solution provided in the embodiments of the present disclosure.

In some embodiments, in a case where the at least one flag includes a block level flag, the above encoder side determines the block level flag upon determining that the size of the current block meets a preset condition. The embodiments of the present disclosure do not limit the preset conditions mentioned above.

In some embodiments, in a case where it is determined that the current block is not decoded by using the first technology, the first combination is determined.

In the video encoding method provided in the embodiments of the present disclosure, the encoder side determines a first combination, where the first combination includes a first weight derivation mode and K first prediction modes; obtains a prediction value of the current block by predicting a current block according to the first weight derivation mode and the K first prediction modes; and obtains a bitstream according to the prediction value of the current block, where the bitstream includes a first index, and the first index is used to indicate the first combination. The present disclosure takes the weight derivation mode and K prediction modes as a combination, and in this way, the weight derivation mode and the K prediction modes used by the current block are indicated in the bitstream in a form of combination, thereby making the syntax simpler, saving code words, and deleting the need for determination of various cases and further, enhancing the coding efficiency.

It should be understood that FIGS. 15 to 19 are merely examples of the present disclosure and should not be construed as limitations to the present disclosure.

The preferred implementations of the present disclosure are described in detail above in connection with the accompanying drawings. However, the present disclosure is not limited to the specific details in the implementations described above. Within the scope of the technical concept of the present disclosure, a variety of simple modifications may be made to the technical solutions of the present disclosure, and these simple modifications all fall within the protection scope of the present disclosure. For example, the various specific technical features described in the specific implementations described above may be combined in any suitable manner without conflict. In order to avoid unnecessary repetition, the various possible combinations are not otherwise described in the present disclosure. For another example, any combination between the various different implementations of the present disclosure is also possible, as long as they do not contradict with the idea of the present disclosure, they should also be regarded as the content disclosed in the present disclosure.

It should also be understood that in the various method embodiments of the present disclosure, the sizes of the serial numbers of the processes described above do not mean an order of execution. The execution order of each process should be determined by its function and internal logic, and should not constitute any limitation on the implementing process of the embodiments of the present disclosure. In addition, in the embodiments of the present disclosure, the term "and/or" is merely used to describe an association relationship between associated objects, which represents that three types of relationships may exist. Specifically, A and/or B may mean three cases where: A exists alone, both A and B exist, and B exists alone. In addition, a character "/" in the present disclosure generally means that associated objects before and after "/" are in an "or" relationship.

The method embodiments of the present disclosure are described in detail above with reference to FIG. 15 to FIG. 19. Apparatus embodiments of the present disclosure are described in detail below with reference to FIG. 20 to FIG. 22.

FIG. 20 is a schematic block diagram of a video decoding apparatus provided in an embodiment of the present disclosure. The video decoding apparatus 10 is applied to the above-mentioned video decoder.

As shown in FIG. 20, the video decoding apparatus 10 includes:

a decoding unit 11, configured to obtain a first index by decoding a bitstream, where the first index is used to indicate a first combination, the first combination includes a weight derivation mode and K prediction modes, and K is a positive integer greater than 1;

a determination unit 12, configured to determine a first weight derivation mode and K first prediction modes included in the first combination according to the first index; and

a prediction unit 13, configured to obtain a prediction value of a current block by predicting the current block according to the first weight derivation mode and the K first prediction modes.

In some embodiments, the determination unit 12 is specifically configured to determine a first candidate combination list, where the candidate combination list includes a plurality of first candidate combinations, and each first candidate combination among the plurality of first candidate combinations includes a weight derivation mode and K prediction modes; and determine a weight derivation mode and K prediction modes included in a first candidate combination corresponding to the first index and in the first candidate combination list as the first weight derivation mode and the K first prediction modes.

In some embodiments, the prediction unit 13 is specifically configured to determine a first blending parameter; and obtain the prediction value of the current block by predicting the current block according to the first blending parameter, the first weight derivation mode and the K first prediction modes.

In some embodiments, the prediction unit 13 is specifically configured to determine the first blending parameter; determine a weight of the prediction value according to the first blending parameter and the first weight derivation mode; obtain K prediction values by predicting the current block according to the K first prediction modes; and obtain the prediction value of the current block by weighting the K prediction values according to the weight of the prediction value.

In some embodiments, the prediction unit 13 is specifically configured to obtain a second index by decoding the bitstream, where the second index is used to indicate the first blending parameter; and determine the first blending parameter according to the second index.

In some embodiments, the prediction unit 13 is specifically configured to determine a candidate blending parameter list; and determine a candidate blending parameter corresponding to the second index and in the candidate blending parameter list as the first blending parameter.

In some embodiments, the prediction unit 13 is specifically configured to determine G alternative blending parameters, where G is a positive integer; and determine the first blending parameter from the G alternative blending parameters.

In some embodiments, the prediction unit 13 is specifically configured to determine a cost corresponding to a g-th alternative blending parameter for the g-th alternative blending parameter among the G alternative blending parameters, where g is a positive integer from 1 to G; and determine the first blending parameter from the G alternative blending parameters according to costs corresponding to the G alternative blending parameters.

In some embodiments, the prediction unit 13 is specifically configured to determine a weight of a template of the current block according to the first weight mode and the g-th alternative blending parameter; obtain K prediction values of the template by predicting the template according to the K first prediction modes; obtain a prediction value of the template by weighting the K prediction values of the template according to the weight of the template; and determine the cost corresponding to the g-th alternative blending parameter according to the prediction value of the template.

In some embodiments, the prediction unit 13 is specifically configured to determine a first weight corresponding to the template according to the first weight derivation mode and the template; obtain an adjusted first weight by adjusting the first weight using the g-th alternative blending parameter; and determine the weight of the template according to the adjusted first weight.

In some embodiments, the prediction unit 13 is specifically configured to determine an alternative blending parameter with a smallest cost and among the G alternative blending parameters as the first blending parameter.

In some embodiments, the prediction unit 13 is specifically configured to determine picture information of the current block; and determine the G alternative blending parameters from a plurality of preset alternative blending parameters according to the picture information of the current block.

In some embodiments, the picture information includes a definition of a picture edge, and the prediction unit 13 is specifically configured to determine at least one first alternative blending parameter among the plurality of preset alternative blending parameters as the G alternative blending parameters in a case where the definition of the picture edge of the current block is less than a preset value; or determine at least one second alternative blending parameter among the plurality of preset alternative blending parameters as the G alternative blending parameters in a case where the definition of the picture edge of the current block is greater than or equal to the preset value, where a second alternative blending parameter is greater than a first alternative blending parameter.

In some embodiments, the prediction unit 13 is specifically configured to determine the G alternative blending parameters according to a size of the current block.

In some embodiments, the prediction unit 13 is specifically configured to determine the first blending parameter according to a size of the current block.

In some embodiments, the prediction unit 13 is specifically configured to determine that the first blending parameter is a first value in a case where the size of the current block is smaller than a first set threshold; or determine that the first blending parameter is a second value in a case where the size of the current block is greater than or equal to the first set threshold, where the second value is less than the first value.

In some embodiments, the prediction unit 13 is specifically configured to determine that the first blending parameter is within a first blending parameter value range in a case where the size of the current block is smaller than a first set threshold; or determine that the first blending parameter is within a second blending parameter value range in a case where the size of the current block is greater than or equal to the first set threshold, where a minimum value of the second blending parameter value range is less than a minimum value of the first blending parameter value range.

In some embodiments, the determination unit 12 is specifically configured to construct the first candidate combination list.

In some embodiments, the determination unit 12 is specifically configured to construct the first candidate combination list based on a template of the current block.

In some embodiments, the determination unit 12 is specifically configured to determine R second combinations, where each second combination among the R second combinations includes a weight derivation mode and K prediction modes, and a weight derivation mode and K prediction modes included in one of any two combinations of the R second combinations are not completely the same as a weight derivation mode and K prediction modes included in another one of the any two combinations of the R second combinations, and R is a positive integer greater than 1; for each second combination among the R second combinations, determine a prediction value of the template corresponding to the second combination in a case of predicting the template using a weight derivation mode and K prediction modes included in the second combination; and construct the candidate combination list according to prediction values of the template corresponding to respective second combinations among the R second combinations.

In some embodiments, the determination unit 12 is specifically configured to determine a cost corresponding to a second combination according to a prediction value of the template and a reconstructed value of the template corresponding to the second combination; and construct the candidate combination list according to costs corresponding to the respective second combinations among the R second combinations.

In some embodiments, in a case where the prediction value of the template corresponding to the second combination includes prediction values of the template corresponding to the K prediction modes in the second combination respectively, the determination unit 12 is specifically configured to determine costs corresponding to the K prediction modes in the second combination respectively according to the prediction values of the template and reconstructed values of the template corresponding to the K prediction modes in the second combination respectively; and determine the cost corresponding to the second combination according to the costs corresponding to the K prediction modes in the second combination respectively.

In some embodiments, the determination unit 12 is specifically configured to determine a sum of the costs corresponding to the K prediction modes in the second combination respectively as the cost corresponding to the second combination.

In some embodiments, the determination unit 12 is specifically configured to determine P weight derivation modes and Q prediction modes, where P is a positive integer, and Q is a positive integer greater than or equal to K; and construct the R second combinations according to the P weight derivation modes and the Q prediction modes, where each second combination among the R second combinations includes a weight derivation mode among the P weight derivation modes and K prediction modes among the Q prediction modes.

In some embodiments, the determination unit 12 is specifically configured to determine at least one of a first candidate prediction mode list of the current block, first alternative prediction mode lists corresponding to the K prediction modes respectively, and a prediction mode corresponding to a weight derivation mode, where the first candidate prediction mode list includes a plurality of first candidate prediction modes, and a first alternative prediction mode list corresponding to any prediction mode among the K prediction modes includes at least one first alternative prediction mode; and determine the Q prediction modes according to the at least one of the first candidate prediction mode list, the first alternative prediction mode lists corresponding to the K prediction modes respectively, and the prediction mode corresponding to the weight derivation mode.

In some embodiments, the determination unit 12 is specifically configured to determine the first candidate prediction mode list according to a prediction mode used by at least one block adjacent to the current block.

In some embodiments, the determination unit 12 is further configured to determine a preset mode corresponding to the current block in a case where the first candidate prediction mode list does not include a preset mode; and add the preset mode to the first candidate prediction mode list.

In some embodiments, the determination unit 12 is specifically configured to determine a picture type corresponding to the current block; and determine the first candidate prediction mode list according to the picture type corresponding to the current block.

In some embodiments, the prediction unit 13 is specifically configured to determine a second weight corresponding to the current block according to the first weight derivation mode and the current block; obtain an adjusted second weight by adjusting the second weight using the first blending parameter; and determine the weight of the prediction value according to the adjusted second weight.

In some embodiments, the first combination further includes a second blending parameter, and the prediction unit 13 is specifically configured to obtain the prediction value of the current block by predicting the current block according to the second blending parameter, the first weight derivation mode and the K first prediction modes.

In some embodiments, the prediction unit 13 is specifically configured to determine a weight of the prediction value according to the first weight derivation mode and the second blending parameter; determine K prediction values according to the K first prediction modes; and obtain the prediction value of the current block by weighting the K prediction values according to weights of the K prediction values.

In some embodiments, the prediction unit 13 is specifically configured to determine a fourth weight corresponding to the current block according to the first weight derivation mode and the current block; obtain an adjusted fourth weight by adjusting the fourth weight using the second blending parameter; and determine the weight of the prediction value according to the adjusted fourth weight.

In some embodiments, the determination unit 12 is specifically configured to determine a second candidate combination list, where the second candidate combination list includes a plurality of second candidate combinations, and any second candidate combination among the plurality of second candidate combinations includes a weight derivation mode, K prediction modes, and a blending parameter; and determine a weight derivation mode, K prediction modes and a blending parameter included in a second candidate combination corresponding to the first index and in the second candidate combination list as the first weight derivation mode, the K first prediction modes, and the second blending parameter.

In some embodiments, the determination unit 12 is specifically configured to construct the second candidate combination list.

In some embodiments, the determination unit 12 is specifically configured to construct the second candidate combination list based on a template of the current block.

In some embodiments, the determination unit 12 is specifically configured to determine H third combinations, where each third combination among the H third combinations includes a weight derivation mode, K prediction modes and a blending parameter, and a weight derivation mode, K prediction modes and a blending parameter included in one of any two combinations of the H third combinations are not completely the same as a weight derivation mode, K prediction modes and a blending parameter included in another one of the any two combinations of the H third combinations, and H is a positive integer greater than 2; for each third combination among the H third combinations, determine a cost corresponding to the third combination in a case of predicting the template using a weight derivation mode, K prediction modes, and a blending parameter included in the third combination; and construct the second candidate combination list according to costs corresponding to respective third combinations among the H third combinations.

In some embodiments, the determination unit 12 is specifically configured to determine a weight of the template according to the weight derivation mode and the blending parameter included in the third combination; obtain K prediction values of the template by predicting the template according to the K prediction modes in the third combination; obtain a prediction value of the template corresponding to the third combination by weighting the K prediction values of the template according to the weight of the template; and determine the cost corresponding to the third combination according to the prediction value of the template and a reconstructed value of the template corresponding to the third combination.

In some embodiments, the determination unit 12 is specifically configured to determine a third weight corresponding to the template according to the weight derivation mode in the third combination and the template; obtain an adjusted third weight by adjusting the third weight using the blending parameter in the third combination; and determine the weight of the template according to the adjusted third weight.

In some embodiments, the determination unit 12 is specifically configured to determine prediction values of the template corresponding to the K prediction modes in the third combination respectively according to the weight derivation mode and the blending parameter in the third combination; determine costs corresponding to the K prediction modes in the third combination respectively according to the prediction values of the template and reconstructed values of the template corresponding to the K prediction modes in the third combination respectively; and determine the cost corresponding to the third combination according to the costs corresponding to the K prediction modes in the third combination respectively.

In some embodiments, the determination unit 12 is specifically configured to determine a sum of the costs corresponding to the K prediction modes in the third combination as the cost corresponding to the third combination.

In some embodiments, the determination unit 12 is specifically configured to sort the H third combinations according to the costs corresponding to the respective third combinations among the H third combinations; and determine the H third combinations that are sorted as the second candidate combination list.

In some embodiments, the determination unit 12 is specifically configured to sort the H third combinations in an ascending order of the costs.

In some embodiments, the determination unit 12 is specifically configured to select L third combinations from the H third combinations according to the costs corresponding to the third combinations; and determine a list consisting of the L third combinations as the second candidate combination list.

In some embodiments, the L third combinations are first L third combinations with smallest costs among the H third combinations.

In some embodiments, the determination unit 12 is specifically configured to determine F weight derivation modes, J prediction modes, and W blending parameters, where F and W are both positive integers, and Q is a positive integer greater than or equal to K; and construct the H third combinations according to the F weight derivation modes, the J prediction modes and the W blending parameters.

In some embodiments, the determination unit 12 is specifically configured to determine at least one of a second candidate prediction mode list of the current block, second alternative prediction mode lists corresponding to the K prediction modes respectively, and a prediction mode corresponding to a weight derivation mode, where the second candidate prediction mode list includes a plurality of second candidate prediction modes, and a second alternative prediction mode list corresponding to any prediction mode among the K prediction modes includes at least one second alternative prediction mode; and determine the J prediction modes according to the at least one of the second candidate prediction mode list, the second alternative prediction mode lists corresponding to the K prediction modes respectively, and the prediction mode corresponding to the weight derivation mode.

In some embodiments, the determination unit 12 is specifically configured to determine the second candidate prediction mode list corresponding to the current block according to a prediction mode used by at least one block adjacent to the current block.

In some embodiments, the determination unit 12 is further configured to determine a preset mode corresponding to the current block in a case where the second candidate prediction mode list does not include a preset mode; and add the preset mode to the second candidate prediction mode list.

In some embodiments, the determination unit 12 is specifically configured to determine a picture type corresponding to the current block; and determine the second candidate prediction mode list according to the picture type corresponding to the current block.

In some embodiments, the determination unit 12 is specifically configured to select the F weight derivation modes from preset Z weight derivation modes, where Z is a positive integer greater than or equal to F.

In some embodiments, the determination unit 12 is specifically configured to determine the W blending parameters according to a size of the current block.

In some embodiments, the determination unit 12 is specifically configured to select E weight derivation modes from the F weight derivation modes, where E is a positive integer less than or equal to F; select V prediction modes from the J prediction modes, where V is a positive integer less than or equal to J; select O blending parameters from the W blending parameters, where O is a positive integer less than or equal to W; and constitute the H third combinations according to the E weight derivation modes, the V prediction modes and the O blending parameters.

In some embodiments, the determination unit 12 is specifically configured to determine weights of K second prediction modes on the template according to an i-th weight derivation mode and a third blending parameter for the i-th weight derivation mode among the F weight derivation modes, where the third blending parameter is any blending parameter among the W blending gradients, the K second prediction modes are any K prediction modes among the J prediction modes, and i is a positive integer from 1 to F; and obtain the E weight derivation modes by deleting the i-th weight derivation mode from the F weight derivation modes in a case where a weight of any prediction mode among the K prediction modes on the template is less than a first preset value.

In some embodiments, the determination unit 12 is specifically configured to determine a fourth weight corresponding to the template according to the first weight derivation mode and the template; obtain an adjusted fourth weight by adjusting the fourth weight using the third blending parameter; and determine the weights of the K second prediction modes on the template according to the adjusted fourth weight.

In some embodiments, the determination unit 12 is specifically configured to determine picture information of the current block; and determine the O blending parameters from the W blending parameters according to the picture information of the current block.

In some embodiments, the picture information includes a definition of a picture edge, and the determination unit 12 is specifically configured to determine at least one first-type blending parameter among the W blending parameters as the O blending parameters in a case where the definition of the picture edge of the current block is less than a preset value; or determine at least one second-type blending parameter among the W blending parameters as the O blending parameters in a case where the definition of the picture edge of the current block is greater than or equal to the preset value, where a second-type blending parameter is greater than a first-type blending parameter.

In some embodiments, the determination unit 12 is specifically configured to select the O blending parameters from the W blending parameters according to a size of the current block.

In some embodiments, the determination unit 12 is specifically configured to take a blending parameter greater than or equal to a third value and among the W blending parameters as the O blending parameters in a case where the size of the current block is smaller than a second set threshold; or take a blending parameter less than or equal to a fourth value and among the W blending parameters as the O blending parameters in a case where the size of the current block is greater than or equal to the second set threshold, and the fourth value is less than the third value.

In some embodiments, the determination unit 12 is specifically configured to determine that the O blending parameters are one or more blending parameters within a third blending parameter value range and among the W blending parameters in a case where the size of the current block is smaller than the second set threshold; or determine that the O blending parameters are one or more blending parameters within a fourth blending parameter value range and among the W blending parameters in a case where the size of the current block is greater than or equal to the second set threshold, where a minimum value of the fourth blending parameter value range is less than a minimum value of the third blending parameter value range. The O blending parameters are selected from the W blending parameters according to the size of the current block.

In some embodiments, the determination unit 12 is specifically configured to take a blending parameter greater than or equal to a third value and among the W blending parameters as the O blending parameters in a case where the size of the current block is smaller than a second set threshold; or take a blending parameter less than or equal to a fourth value and among the W blending parameters as the O blending parameters in a case where the size of the current block is greater than or equal to the second set threshold, and the fourth value is less than the third value.

In some embodiments, the determination unit 12 is specifically configured to determine that the O blending parameters are one or more blending parameters within a third blending parameter value range and among the W blending parameters in a case where the size of the current block is smaller than the second set threshold; or determine that the O blending parameters are one or more blending parameters within a fourth blending parameter value range and among the W blending parameters in a case where the size of the current block is greater than or equal to the second set threshold, where a minimum value of the fourth blending parameter value range is less than a minimum value of the third blending parameter value range. The O blending parameters are selected from the W blending parameters according to the size of the current block.

In some embodiments, the determination unit 12 is specifically configured to take a blending parameter greater than or equal to a third value and among the W blending parameters as the O blending parameters in a case where the size of the current block is smaller than a second set threshold; or take a blending parameter less than or equal to a fourth value and among the W blending parameters as the O blending parameters in a case where the size of the current block is greater than or equal to the second set threshold, and the fourth value is less than the third value.

In some embodiments, the determination unit 12 is specifically configured to determine that the O blending parameters are one or more blending parameters within a third blending parameter value range and among the W blending parameters in a case where the size of the current block is smaller than the second set threshold; or determine that the O blending parameters are one or more blending parameters within a fourth blending parameter value range and among the W blending parameters in a case where the size of the current block is greater than or equal to the second set threshold, where a minimum value of the fourth blending parameter value range is less than a minimum value of the third blending parameter value range.

In some embodiments, the first weight derivation mode includes a fourth blending parameter, and the prediction unit 13 is specifically configured to obtain the prediction value of the current block by predicting the current block according to the fourth blending parameter and the K first prediction modes.

In some embodiments, the prediction unit 13 is specifically configured to determine a weight of the prediction value according to the fourth blending parameter; determine K prediction values according to the K first prediction modes; and obtain the prediction value of the current block by weighting the K prediction values according to weights of the K prediction values.

In some embodiments, the determination unit 12 is specifically used to determine a third candidate combination list, where the third candidate combination list includes a plurality of third candidate combinations, any third candidate combination among the plurality of third candidate combinations includes a weight derivation mode and K prediction modes, and the weight derivation mode includes a blending parameter; and determine a weight derivation mode and K prediction modes included in a third candidate combination corresponding to the first index and in the third candidate combination list as the first weight derivation mode and the K first prediction modes.

In some embodiments, the determination unit 12 is specifically configured to construct the third candidate combination list.

In some embodiments, the determination unit 12 is specifically configured to construct the third candidate combination list based on a template of the current block.

In some embodiments, the determination unit 12 is specifically configured to determine A fourth combinations, where each fourth combination among the A fourth combinations includes a weight derivation mode and K prediction modes, the weight derivation mode includes a blending parameter, and a weight derivation mode and K prediction modes included in one of any two combinations of the A fourth combinations are not completely the same as a weight derivation mode and K prediction modes included in another one of the any two combinations of the A fourth combinations, and A is a positive integer greater than 1; for each fourth combination among the A fourth combinations, determine a cost corresponding to the fourth combination in a case of predicting the template using a weight derivation mode and K prediction modes included in the fourth combination; and construct the third candidate combination list according to costs corresponding to respective fourth combinations among the A fourth combinations.

In some embodiments, the determination unit 12 is specifically configured to determine prediction values of the template corresponding to the K prediction modes in the fourth combination respectively according to the weight derivation mode in the fourth combination; determine costs corresponding to the K prediction modes in the fourth combination respectively according to the prediction values of the template and reconstructed values of the template corresponding to the K prediction modes in the fourth combination respectively; and determine the cost corresponding to the fourth combination according to the costs corresponding to the K prediction modes in the fourth combination respectively.

In some embodiments, the determination unit 12 is specifically configured to determine a sum of the costs corresponding to the K prediction modes in the fourth combination as the cost corresponding to the fourth combination.

In some embodiments, the determination unit 12 is specifically configured to sort the A fourth combinations according to the costs corresponding to the respective fourth combinations among the A fourth combinations; and determine the A fourth combinations that are sorted as the third candidate combination list.

In some embodiments, the determination unit 12 is specifically configured to sort the A fourth combinations in an ascending order of the costs.

In some embodiments, the determination unit 12 is specifically configured to select B fourth combinations from the A fourth combinations according to the costs corresponding to the fourth combinations ; and determine a list consisting of the B fourth combinations as the third candidate combination list.

In some embodiments, the B fourth combinations are first B fourth combinations with smallest costs among the A fourth combinations.

In some embodiments, the determination unit 12 is specifically configured to determine C weight derivation modes and D prediction modes, where C is a positive integer and D is a positive integer greater than or equal to K; and construct the A fourth combinations according to the C weight derivation modes and the D prediction modes.

In some embodiments, the determination unit 12 is specifically configured to determine at least one of a third candidate prediction mode list of the current block, third alternative prediction mode lists corresponding to the K prediction modes respectively, and a prediction mode corresponding to a weight derivation mode, where the third candidate prediction mode list includes a plurality of third candidate prediction modes, and a third alternative prediction mode list corresponding to any prediction mode among the K prediction modes includes at least one third alternative prediction mode; and determine the D prediction modes according to the at least one of the third candidate prediction mode list, the third alternative prediction mode lists corresponding to the K prediction modes respectively, and the prediction mode corresponding to the weight derivation mode.

In some embodiments, the determination unit 12 is specifically configured to determine the third candidate prediction mode list corresponding to the current block according to a prediction mode used by at least one block adjacent to the current block.

In some embodiments, the determination unit 12 is further configured to determine a preset mode corresponding to the current block in a case where the third candidate prediction mode list does not include a preset mode; and add the preset mode to the third candidate prediction mode list.

In some embodiments, the determination unit 12 is specifically configured to determine a picture type corresponding to the current block; and determine the third candidate prediction mode list according to the picture type corresponding to the current block.

In some embodiments, the determination unit 12 is specifically configured to determine X blending parameters, where X is a positive integer; and determine the C weight derivation modes according to the X blending parameters.

In some embodiments, the determination unit 12 is specifically configured to determine picture information of the current block; and determine the X blending parameters according to the picture information of the current block.

In some embodiments, the picture information includes a definition of a picture edge, and the determination unit 12 is specifically configured to determine at least one third-type blending parameter among preset Y blending parameters as the X blending parameters, where Y is a positive integer greater than X in a case where the definition of the picture edge of the current block is less than a preset value; or determine at least one fourth-type blending parameter among the Y blending parameters as the X blending parameters, where the fourth-type blending parameter is greater than the third-type blending parameter in a case where the definition of the picture edge of the current block is greater than or equal to the preset value, where the fourth-type blending parameter is greater than the third-type blending parameter.

In some embodiments, the determination unit 12 is specifically configured to determine the X blending parameters according to a size of the current block.

In some embodiments, the determination unit 12 is specifically configured to take a blending parameter greater than or equal to a fifth value and among at least one preset blending parameter as the X blending parameters in a case where the size of the current block is smaller than a third set threshold; or take a blending parameter less than or equal to a sixth value and among the at least one preset blending parameter as the X blending parameters in a case where the size of the current block is greater than or equal to the third set threshold, and the sixth value is less than the fifth value.

In some embodiments, the determination unit 12 is specifically configured to determine that the X blending parameters are one or more blending parameters in the at least one preset blending parameter and within a fifth blending parameter value range in a case where the size of the current block is smaller than a third set threshold; or determine that the X blending parameters are one or more blending parameters in the at least one blending parameter and within a sixth blending parameter value range in a case where the size of the current block is greater than or equal to a third set threshold, where a minimum value of the sixth blending parameter value range is less than a minimum value of the fifth blending parameter value range.

In some embodiments, the decoding unit 11 is further configured to obtain at least one flag by decoding the bitstream, where the at least one flag is used to indicate whether to use the first combination for decoding; and obtain the first index by decoding the bitstream in a case where the at least one flag indicates to use the first combination for decoding.

In some embodiments, the at least one flag includes at least one of: a sequence level flag, a picture level flag, a slice level flag, a unit level flag, and a block level flag.

In some embodiments, in a case where the at least one flag includes a block level flag, the decoding unit 11 is further configured to determine the block level flag by decoding the bitstream in a case where a size of the current block meeting a preset condition is determined.

In some embodiments, the decoding unit 11 is further configured to obtain the first index by decoding the bitstream in a case where the current block not using a first technology for decoding is determined.

In some embodiments, the determination unit 12 is specifically configured to determine a picture type corresponding to the current block; and determine the preset mode corresponding to the current block according to the picture type corresponding to the current block.

In some embodiments, the preset mode includes at least one of a DC, a horizontal mode, a vertical mode, or an angle mode.

In some embodiments, the determination unit 12 is specifically configured to determine the picture type corresponding to the current block according to a picture type of a current picture to which the current block belongs, or a picture type of a current slice to which the current block belongs.

It should be understood that, the apparatus embodiments and the method embodiments may correspond to each other, and similar descriptions for the apparatus embodiments may refer to the method embodiments, which will not be repeated herein to avoid repetition. Specifically, the apparatus 10 shown in FIG. 20 may perform the decoding method for the decoder side of the embodiments of the present disclosure, and the aforementioned and other operations and/or functions of various units in the apparatus 10 are respectively for implementing the corresponding processes in various methods such as the decoding method for the decoder side mentioned above, which will not be repeated herein for the sake of brevity.

FIG. 21 is a schematic block diagram of a video encoding apparatus provided in an embodiment of the present disclosure, and the video encoding apparatus is applied to the above-mentioned encoder.

As shown in FIG. 21, the video encoding apparatus 20 may include:

a determination unit 21, configured to determine a first combination, where the first combination includes a first weight derivation mode and K first prediction modes;

a prediction unit 22, configured to obtain a prediction value of a current block by predicting the current block according to the first weight derivation mode and the K first prediction modes; and

an encoding unit 23, configured to obtain a bitstream according to the prediction value of the current block, where the bitstream includes a first index, and the first index is used to indicate the first combination.

In some embodiments, the determination unit 21 is specifically configured to determine a first candidate combination list, where the first candidate combination list includes a plurality of first candidate combinations, and each first candidate combination among the plurality of first candidate combinations includes a weight derivation mode and K prediction modes; and determine the first combination from the first candidate combination list.

In some embodiments, the prediction unit 22 is specifically configured to determine a first blending parameter; and obtain the prediction value of the current block by predicting the current block according to the first blending parameter, the first weight derivation mode and the K first prediction modes.

In some embodiments, the prediction unit 22 is specifically configured to determine a weight of the prediction value according to the first blending parameter and the first weight derivation mode; obtain K prediction values by predicting the current block according to the K first prediction modes; and obtain the prediction value of the current block by weighting the K prediction values according to the weight of the prediction value.

In some embodiments, the prediction unit 22 is specifically configured to determine a candidate blending parameter list; and determine a candidate blending parameter in the candidate blending parameter list as the first blending parameter.

In some embodiments, the prediction unit 22 is specifically configured to determine a cost corresponding to the candidate blending parameter for the candidate blending parameter in the candidate blending parameter list; and select a candidate blending parameter from the candidate blending parameter list as the first blending parameter according to costs corresponding to respective candidate blending parameters in the candidate blending parameter list.

In some embodiments, the prediction unit 22 is specifically configured to determine a weight of a template of the current block according to the candidate blending parameter and the first weight derivation mode; obtain K prediction values of the template by predicting the template according to the K first prediction modes; obtain a prediction value of the template by weighting the K prediction values of the template according to the weight of the template; and determine the cost corresponding to the candidate blending parameter according to a reconstructed value and the prediction value of the template.

**In** some embodiments, the prediction unit 22 is specifically configured to determine a first template weight according to the first weight derivation mode; and obtain the weight of the template by adjusting the first template weight using the candidate blending parameter.

**In** some embodiments, the prediction unit 22 is specifically configured to determine an alternative blending parameter with a smallest cost in the candidate blending parameter list as the first blending parameter.

In some embodiments, the prediction unit 22 is specifically configured to write a second index into the bitstream, where the second index is used to indicate the first blending parameter.

In some embodiments, the prediction unit 22 is specifically configured to determine G alternative blending parameters, where G is a positive integer; and determine the first blending parameter from the G alternative blending parameters.

In some embodiments, the prediction unit 22 is specifically configured to determine a cost corresponding to a g-th alternative blending parameter for the g-th alternative blending parameter among the G alternative blending parameters, where g is a positive integer from 1 to G; and determine the first blending parameter from the G alternative blending parameters according to costs corresponding to the G alternative blending parameters.

In some embodiments, the prediction unit 22 is specifically configured to determine a weight of a template of the current block according to the first weight mode and the g-th alternative blending parameter; obtain K prediction values of the template by predicting the template according to the K first prediction modes; obtain a prediction value of the template by weighting the K prediction values of the template according to the weight of the template; and determine the cost corresponding to the g-th alternative blending parameter according to the prediction value of the template.

In some embodiments, the prediction unit 22 is specifically configured to determine a first weight corresponding to the template according to the first weight derivation mode and the template; obtain an adjusted first weight by adjusting the first weight using the g-th alternative blending parameter; and determine the weight of the template according to the adjusted first weight.

In some embodiments, the prediction unit 22 is specifically configured to determine an alternative blending parameter with a smallest cost and among the G alternative blending parameters as the first blending parameter.

In some embodiments, the prediction unit 22 is specifically configured to determine picture information of the current block; and determine the G alternative blending parameters from a plurality of preset alternative blending parameters according to the picture information of the current block.

In some embodiments, the picture information includes a definition of a picture edge, and the prediction unit 22 is specifically configured to determine at least one first alternative blending parameter among the plurality of preset alternative blending parameters as the G alternative blending parameters in a case where the definition of the picture edge of the current block is less than a preset value; or determine at least one second alternative blending parameter among the plurality of preset alternative blending parameters as the G alternative blending parameters in a case where the definition of the picture edge of the current block is greater than or equal to the preset value, where a second alternative blending parameter is greater than a first alternative blending parameter.

In some embodiments, the prediction unit 22 is specifically configured to determine the G alternative blending parameters according to a size of the current block.

In some embodiments, the prediction unit 22 is specifically configured to determine the first blending parameter according to a size of the current block.

In some embodiments, the prediction unit 22 is specifically configured to determine that the first blending parameter is a first value in a case where the size of the current block is smaller than a first set threshold; or determine that the first blending parameter is a second value in a case where the size of the current block is greater than or equal to the first set threshold, where the second value is less than the first value.

In some embodiments, the prediction unit 22 is specifically configured to determine that the first blending parameter is within a first blending parameter value range in a case where the size of the current block is smaller than a first set threshold; or determine that the first blending parameter is within a second blending parameter value range in a case where the size of the current block is greater than or equal to the first set threshold, where a minimum value of the second blending parameter value range is less than a minimum value of the first blending parameter value range.

In some embodiments, the determination unit 21 is specifically configured to construct the first candidate combination list.

In some embodiments, the determination unit 21 is specifically configured to construct the first candidate combination list based on a template of the current block.

In some embodiments, the determination unit 21 is specifically configured to determine R second combinations, where each second combination among the R second combinations includes a weight derivation mode and K prediction modes, and a weight derivation mode and K prediction modes included in one of any two combinations of the R second combinations are not completely the same as a weight derivation mode and K prediction modes included in another one of the any two combinations of the R second combinations, and R is a positive integer greater than 1; for each second combination among the R second combinations, determine a prediction value of the template corresponding to the second combination in a case of predicting the template using a weight derivation mode and K prediction modes included in the second combination; and construct the candidate combination list according to prediction values of the template corresponding to respective second combinations among the R second combinations.

In some embodiments, the determination unit 21 is specifically configured to determine a cost corresponding to a second combination according to a prediction value of the template and a reconstructed value of the template corresponding to the second combination; and construct the candidate combination list according to costs corresponding to the respective second combinations among the R second combinations.

In some embodiments, in a case where the prediction value of the template corresponding to the second combination includes prediction values of the template corresponding to the K prediction modes in the second combination respectively, the determination unit 21 is specifically configured to determine costs corresponding to the K prediction modes in the second combination respectively according to the prediction values of the template and reconstructed values of the template corresponding to the K prediction modes in the second combination respectively; and determine the cost corresponding to the second combination according to the costs corresponding to the K prediction modes in the second combination respectively.

In some embodiments, the determination unit 21 is specifically configured to determine a sum of the costs corresponding to the K prediction modes in the second combination respectively as the cost corresponding to the second combination.

In some embodiments, the determination unit 21 is specifically configured to determine P weight derivation modes and Q prediction modes, where P is a positive integer, and Q is a positive integer greater than or equal to K; and construct the R second combinations according to the P weight derivation modes and the Q prediction modes, where each second combination among the R second combinations includes a weight derivation mode among the P weight derivation modes and K prediction modes among the Q prediction modes.

In some embodiments, the determination unit 21 is specifically configured to determine at least one of a first candidate prediction mode list of the current block, first alternative prediction mode lists corresponding to the K prediction modes respectively, and a prediction mode corresponding to a weight derivation mode, where the first candidate prediction mode list includes a plurality of first candidate prediction modes, and a first alternative prediction mode list corresponding to any prediction mode among the K prediction modes includes at least one first alternative prediction mode; and determine the Q prediction modes according to the at least one of the first candidate prediction mode list, the first alternative prediction mode lists corresponding to the K prediction modes respectively, and the prediction mode corresponding to the weight derivation mode.

In some embodiments, the determination unit 21 is specifically configured to determine the first candidate prediction mode list according to a prediction mode used by at least one block adjacent to the current block.

In some embodiments, the determination unit 21 is further configured to determine a preset mode corresponding to the current block in a case where the first candidate prediction mode list does not include a preset mode; and add the preset mode to the first candidate prediction mode list.

In some embodiments, the determination unit 21 is specifically configured to determine a picture type corresponding to the current block; and determine the first candidate prediction mode list according to the picture type corresponding to the current block.

In some embodiments, the prediction unit 22 is specifically configured to determine a second weight corresponding to the current block according to the first weight derivation mode and the current block; obtain an adjusted second weight by adjusting the second weight using the first blending parameter; and determine the weight of the prediction value according to the adjusted second weight.

In some embodiments, the first combination further includes a second blending parameter, and the prediction unit 22 is specifically configured to obtain the prediction value of the current block by predicting the current block according to the second blending parameter, the first weight derivation mode and the K first prediction modes.

In some embodiments, the prediction unit 22 is specifically configured to determine a weight of the prediction value according to the first weight derivation mode and the second blending parameter; determine K prediction values according to the K first prediction modes; and obtain the prediction value of the current block by weighting the K prediction values according to weights of the K prediction values.

In some embodiments, the prediction unit 22 is specifically configured to determine a fourth weight corresponding to the current block according to the first weight derivation mode and the current block; obtain an adjusted fourth weight by adjusting the fourth weight using the second blending parameter; and determine the weight of the prediction value according to the adjusted fourth weight.

In some embodiments, the determination unit 21 is specifically configured to determine a second candidate combination list, where the second candidate combination list includes a plurality of second candidate combinations, and any second candidate combination among the plurality of second candidate combinations includes a weight derivation mode, K prediction modes, and a blending parameter; and determine the first combination from the second candidate combination list.

In some embodiments, the determination unit 21 is specifically configured to construct the second candidate combination list.

In some embodiments, the determination unit 21 is specifically configured to construct the second candidate combination list based on a template of the current block.

In some embodiments, the determination unit 21 is specifically configured to determine H third combinations, where each third combination among the H third combinations includes a weight derivation mode, K prediction modes and a blending parameter, and a weight derivation mode, K prediction modes and a blending parameter included in one of any two combinations of the H third combinations are not completely the same as a weight derivation mode, K prediction modes and a blending parameter included in another one of the any two combinations of the H third combinations, and H is a positive integer greater than 2; for each third combination among the H third combinations, determine a cost corresponding to the third combination in a case of predicting the template using a weight derivation mode, K prediction modes, and a blending parameter included in the third combination; and construct the second candidate combination list according to costs corresponding to respective third combinations among the H third combinations.

In some embodiments, the determination unit 21 is specifically configured to determine a weight of the template according to the weight derivation mode and the blending parameter included in the third combination; obtain K prediction values of the template by predicting the template according to the K prediction modes in the third combination; obtain a prediction value of the template corresponding to the third combination by weighting the K prediction values of the template according to the weight of the template; and determine the cost corresponding to the third combination according to the prediction value of the template and a reconstructed value of the template corresponding to the third combination.

In some embodiments, the determination unit 21 is specifically configured to determine a third weight corresponding to the template according to the weight derivation mode in the third combination and the template; obtain an adjusted third weight by adjusting the third weight using the blending parameter in the third combination; and determine the weight of the template according to the adjusted third weight.

In some embodiments, the determination unit 21 is specifically configured to determine prediction values of the template corresponding to the K prediction modes in the third combination respectively according to the weight derivation mode and the blending parameter in the third combination; determine costs corresponding to the K prediction modes in the third combination respectively according to the prediction values of the template and reconstructed values of the template corresponding to the K prediction modes in the third combination respectively; and determine the cost corresponding to the third combination according to the costs corresponding to the K prediction modes in the third combination respectively.

In some embodiments, the determination unit 21 is specifically configured to determine a sum of the costs corresponding to the K prediction modes in the third combination as the cost corresponding to the third combination.

In some embodiments, the determination unit 21 is specifically configured to sort the H third combinations according to the costs corresponding to the respective third combinations among the H third combinations; and determine the H third combinations that are sorted as the second candidate combination list.

In some embodiments, the determination unit 21 is specifically configured to sort the H third combinations in an ascending order of the costs.

In some embodiments, the determination unit 21 is specifically configured to select L third combinations from the H third combinations according to the costs corresponding to the third combinations; and determine a list consisting of the L third combinations as the second candidate combination list.

In some embodiments, the L third combinations are first L third combinations with smallest costs among the H third combinations.

In some embodiments, the determination unit 21 is specifically configured to determine F weight derivation modes, J prediction modes, and W blending parameters, where F and W are both positive integers, and Q is a positive integer greater than or equal to K; and construct the H third combinations according to the F weight derivation modes, the J prediction modes and the W blending parameters.

In some embodiments, the determination unit 21 is specifically configured to determine at least one of a second candidate prediction mode list of the current block, second alternative prediction mode lists corresponding to the K prediction modes respectively, and a prediction mode corresponding to a weight derivation mode, where the second candidate prediction mode list includes a plurality of second candidate prediction modes, and a second alternative prediction mode list corresponding to any prediction mode among the K prediction modes includes at least one second alternative prediction mode; and determine the J prediction modes according to the at least one of the second candidate prediction mode list, the second alternative prediction mode lists corresponding to the K prediction modes respectively, and the prediction mode corresponding to the weight derivation mode.

In some embodiments, the determination unit 21 is specifically configured to determine the second candidate prediction mode list corresponding to the current block according to a prediction mode used by at least one block adjacent to the current block.

In some embodiments, the determination unit 21 is further configured to determine a preset mode corresponding to the current block in a case where the second candidate prediction mode list does not include a preset mode; and add the preset mode to the second candidate prediction mode list.

In some embodiments, the determination unit 21 is specifically configured to determine a picture type corresponding to the current block; and determine the second candidate prediction mode list according to the picture type corresponding to the current block.

In some embodiments, the determination unit 21 is specifically configured to select the F weight derivation modes from preset Z weight derivation modes, where Z is a positive integer greater than or equal to F.

In some embodiments, the determination unit 21 is specifically configured to determine the W blending parameters according to a size of the current block.

In some embodiments, the determination unit 21 is specifically configured to select E weight derivation modes from the F weight derivation modes, where E is a positive integer less than or equal to F; select V prediction modes from the J prediction modes, where V is a positive integer less than or equal to J; select O blending parameters from the W blending parameters, where O is a positive integer less than or equal to W; and constitute the H third combinations according to the E weight derivation modes, the V prediction modes and the O blending parameters.

In some embodiments, the determination unit 21 is specifically configured to determine weights of K second prediction modes on the template according to an i-th weight derivation mode and a third blending parameter for the i-th weight derivation mode among the F weight derivation modes, where the third blending parameter is any blending parameter among the W blending gradients, the K second prediction modes are any K prediction modes among the J prediction modes, and i is a positive integer from 1 to F; and obtain the E weight derivation modes by deleting the i-th weight derivation mode from the F weight derivation modes in a case where a weight of any prediction mode among the K prediction modes on the template is less than a first preset value.

In some embodiments, the determination unit 21 is specifically configured to determine a fourth weight corresponding to the template according to the first weight derivation mode and the template; obtain an adjusted fourth weight by adjusting the fourth weight using the third blending parameter; and determine the weights of the K second prediction modes on the template according to the adjusted fourth weight.

In some embodiments, the determination unit 21 is specifically configured to determine picture information of the current block; and determine the O blending parameters from the W blending parameters according to the picture information of the current block.

In some embodiments, the picture information includes a definition of a picture edge, and the determination unit 21 is specifically configured to determine at least one first-type blending parameter among the W blending parameters as the O blending parameters in a case where the definition of the picture edge of the current block is less than a preset value, determining; or determine at least one second-type blending parameter among the W blending parameters as the O blending parameters in a case where the definition of the picture edge of the current block is greater than or equal to the preset value, where a second-type blending parameter is greater than a first-type blending parameter.

In some embodiments, the determination unit 21 is specifically configured to select the O blending parameters from the W blending parameters according to a size of the current block.

In some embodiments, the determination unit 21 is specifically configured to take a blending parameter greater than or equal to a third value and among the W blending parameters as the O blending parameters in a case where the size of the current block is smaller than a second set threshold; or take a blending parameter less than or equal to a fourth value and among the W blending parameters as the O blending parameters in a case where the size of the current block is greater than or equal to the second set threshold, and the fourth value is less than the third value.

In some embodiments, the determination unit 21 is specifically configured to determine that the O blending parameters are one or more blending parameters within a third blending parameter value range and among the W blending parameters in a case where the size of the current block is smaller than the second set threshold; or determine that the O blending parameters are one or more blending parameters within a fourth blending parameter value range and among the W blending parameters in a case where the size of the current block is greater than or equal to the second set threshold, where a minimum value of the fourth blending parameter value range is less than a minimum value of the third blending parameter value range. The O blending parameters are selected from the W blending parameters according to the size of the current block.

In some embodiments, the determination unit 21 is specifically configured to take a blending parameter greater than or equal to a third value and among the W blending parameters as the O blending parameters in a case where the size of the current block is smaller than a second set threshold; or take a blending parameter less than or equal to a fourth value and among the W blending parameters as the O blending parameters in a case where the size of the current block is greater than or equal to the second set threshold, and the fourth value is less than the third value.

In some embodiments, the determination unit 21 is specifically configured to determine that the O blending parameters are one or more blending parameters within a third blending parameter value range and among the W blending parameters in a case where the size of the current block is smaller than the second set threshold; or determine that the O blending parameters are one or more blending parameters within a fourth blending parameter value range and among the W blending parameters in a case where the size of the current block is greater than or equal to the second set threshold, where a minimum value of the fourth blending parameter value range is less than a minimum value of the third blending parameter value range. The O blending parameters are selected from the W blending parameters according to the size of the current block.

In some embodiments, the determination unit 21 is specifically configured to take a blending parameter greater than or equal to a third value and among the W blending parameters as the O blending parameters in a case where the size of the current block is smaller than a second set threshold; or take a blending parameter less than or equal to a fourth value and among the W blending parameters as the O blending parameters in a case where the size of the current block is greater than or equal to the second set threshold, and the fourth value is less than the third value.

In some embodiments, the determination unit 21 is specifically configured to determine that the O blending parameters are one or more blending parameters within a third blending parameter value range and among the W blending parameters in a case where the size of the current block is smaller than the second set threshold; or determine that the O blending parameters are one or more blending parameters within a fourth blending parameter value range and among the W blending parameters in a case where the size of the current block is greater than or equal to the second set threshold, where a minimum value of the fourth blending parameter value range is less than a minimum value of the third blending parameter value range.

In some embodiments, the first weight derivation mode includes a fourth blending parameter, and the prediction unit 22 is specifically configured to obtain the prediction value of the current block by predicting the current block according to the fourth blending parameter and the K first prediction modes.

In some embodiments, the prediction unit 22 is specifically configured to determine a weight of the prediction value according to the fourth blending parameter; determine K prediction values according to the K first prediction modes; and obtain the prediction value of the current block by weighting the K prediction values according to weights of the K prediction values.

In some embodiments, the determination unit 21 is specifically used to determine a third candidate combination list, where the third candidate combination list includes a plurality of third candidate combinations, any third candidate combination among the plurality of third candidate combinations includes a weight derivation mode and K prediction modes, and the weight derivation mode includes a blending parameter; and determine a weight derivation mode and K prediction modes included in a third candidate combination corresponding to the first index and in the third candidate combination list as the first weight derivation mode and the K first prediction modes.

In some embodiments, the determination unit 21 is specifically configured to construct the third candidate combination list.

In some embodiments, the determination unit 21 is specifically configured to construct the third candidate combination list based on a template of the current block.

In some embodiments, the determination unit 21 is specifically configured to determine A fourth combinations, where each fourth combination among the A fourth combinations includes a weight derivation mode and K prediction modes, the weight derivation mode includes a blending parameter, and a weight derivation mode and K prediction modes included in one of any two combinations of the A fourth combinations are not completely the same as a weight derivation mode and K prediction modes included in another one of the any two combinations of the A fourth combinations, and A is a positive integer greater than 1; for each fourth combination among the A fourth combinations, determine a cost corresponding to the fourth combination in a case of predicting the template using a weight derivation mode and K prediction modes included in the fourth combination; and construct the third candidate combination list according to costs corresponding to respective fourth combinations among the A fourth combinations.

In some embodiments, the determination unit 21 is specifically configured to determine prediction values of the template corresponding to the K prediction modes in the fourth combination respectively according to the weight derivation mode in the fourth combination; determine costs corresponding to the K prediction modes in the fourth combination respectively according to the prediction values of the template and reconstructed values of the template corresponding to the K prediction modes in the fourth combination respectively; and determine the cost corresponding to the fourth combination according to the costs corresponding to the K prediction modes in the fourth combination respectively.

In some embodiments, the determination unit 21 is specifically configured to determine a sum of the costs corresponding to the K prediction modes in the fourth combination as the cost corresponding to the fourth combination.

In some embodiments, the determination unit 21 is specifically configured to sort the A fourth combinations according to the costs corresponding to the respective fourth combinations among the A fourth combinations; and determine the A fourth combinations that are sorted as the third candidate combination list.

In some embodiments, the determination unit 21 is specifically configured to sort the A fourth combinations in an ascending order of the costs.

In some embodiments, the determination unit 21 is specifically configured to select B fourth combinations from the A fourth combinations according to the costs corresponding to the fourth combinations; and determine a list consisting of the B fourth combinations as the third candidate combination list.

In some embodiments, the B fourth combinations are first B fourth combinations with smallest costs among the A fourth combinations.

In some embodiments, the determination unit 21 is specifically configured to determine C weight derivation modes and D prediction modes, where C is a positive integer and D is a positive integer greater than or equal to K; and construct the A fourth combinations according to the C weight derivation modes and the D prediction modes.

In some embodiments, the determination unit 21 is specifically configured to determine at least one of a third candidate prediction mode list of the current block, third alternative prediction mode lists corresponding to the K prediction modes respectively, and a prediction mode corresponding to a weight derivation mode, where the third candidate prediction mode list includes a plurality of third candidate prediction modes, and a third alternative prediction mode list corresponding to any prediction mode among the K prediction modes includes at least one third alternative prediction mode; and determine the D prediction modes according to the at least one of the third candidate prediction mode list, the third alternative prediction mode lists corresponding to the K prediction modes respectively, and the prediction mode corresponding to the weight derivation mode.

In some embodiments, the determination unit 21 is specifically configured to determine the third candidate prediction mode list corresponding to the current block according to a prediction mode used by at least one block adjacent to the current block.

In some embodiments, the determination unit 21 is further configured to determine a preset mode corresponding to the current block in a case where the third candidate prediction mode list does not include a preset mode; and add the preset mode to the third candidate prediction mode list.

In some embodiments, the determination unit 21 is specifically configured to determine a picture type corresponding to the current block; and determine the third candidate prediction mode list according to the picture type corresponding to the current block.

In some embodiments, the determination unit 21 is specifically configured to determine X blending parameters, where X is a positive integer; and determine the C weight derivation modes according to the X blending parameters.

In some embodiments, the determination unit 21 is specifically configured to determine picture information of the current block; and determine the X blending parameters according to the picture information of the current block.

In some embodiments, the picture information includes a definition of a picture edge, and the determination unit 21 is specifically configured to determine at least one third-type blending parameter among preset Y blending parameters as the X blending parameters, where Y is a positive integer greater than X in a case where the definition of the picture edge of the current block is less than a preset value; or determine at least one fourth-type blending parameter among the Y blending parameters as the X blending parameters, where the fourth-type blending parameter is greater than the third-type blending parameter in a case where the definition of the picture edge of the current block is greater than or equal to the preset value, where the fourth-type blending parameter is greater than the third-type blending parameter.

In some embodiments, the determination unit 21 is specifically configured to determine the X blending parameters according to a size of the current block.

In some embodiments, the determination unit 21 is specifically configured to take a blending parameter greater than or equal to a fifth value and among at least one preset blending parameter as the X blending parameters in a case where the size of the current block is smaller than a third set threshold; or take a blending parameter less than or equal to a sixth value and among the at least one preset blending parameter as the X blending parameters in a case where the size of the current block is greater than or equal to the third set threshold, and the sixth value is less than the fifth value.

In some embodiments, the determination unit 21 is specifically configured to determine that the X blending parameters are one or more blending parameters in the at least one preset blending parameter and within a fifth blending parameter value range in a case where the size of the current block is smaller than a third set threshold; or determine that the X blending parameters are one or more blending parameters in the at least one blending parameter and within a sixth blending parameter value range in a case where the size of the current block is greater than or equal to a third set threshold, where a minimum value of the sixth blending parameter value range is less than a minimum value of the fifth blending parameter value range.

In some embodiments, the determination unit 21 is further used to determine at least one flag, where the at least one flag is used to indicate whether to use the first combination for decoding; determine the first combination in a case where in a case where the at least one flag indicates to use the first combination for decoding.

In some embodiments, the at least one flag includes at least one of: a sequence level flag, a picture level flag, a slice level flag, a unit level flag, and a block level flag.

In some embodiments, in a case where the at least one flag includes a block level flag, the determination unit 11 is further configured to determine the first combination in a case where a size of the current block meeting a preset condition is determined.

In some embodiments, the determination unit 21 is further configured to determine the first combination in a case where the current block not using a first technology for encoding is determined.

In some embodiments, the determination unit 21 is specifically configured to determine a picture type corresponding to the current block; and determine the preset mode corresponding to the current block according to the picture type corresponding to the current block.

In some embodiments, the preset mode includes at least one of a DC, a horizontal mode, a vertical mode, or an angle mode.

In some embodiments, the determination unit 21 is specifically configured to determine the picture type corresponding to the current block according to a picture type of a current picture to which the current block belongs, or a picture type of a current slice to which the current block belongs.

It should be understood that, the apparatus embodiments and the method embodiments may correspond to each other, and similar descriptions for the apparatus embodiments may refer to the method embodiments, which will not be described herein to avoid repetition. Specifically, the apparatus 20 shown in FIG. 21 may correspond to a respective entity performing the encoding method for the encoder side of the embodiments of the present disclosure, and the aforementioned and other operations and/or functions of various units in the apparatus 20 are respectively for implementing the corresponding processes in various methods such as the encoding method for the encoder side, which will not be repeated herein for the sake of brevity.

The apparatus and system in the embodiments of the present disclosure are described above from the perspective of functional units in combination with the accompanying drawings. It should be understood that the functional units may be implemented in the form of hardware, may be implemented by instructions in the form of software, or may be implemented by a combination of hardware and software units. Specifically, various steps of the method embodiments in the embodiments of the present disclosure may be completed by an integrated logic circuit of hardware and/or instructions in the form of software in the processor. The steps of the method disclosed in combination with the embodiments of the present disclosure may be directly embodied as being executed and completed by a hardware coding processor, or by a combination of hardware and software units in the coding processor. Optionally, the software unit may be located in a mature storage medium in the art, such as a random access memory, a flash memory, a read-only memory, a programmable read-only memory, an electrically erasable programmable memory, a register, etc. The storage medium is located in a memory, and a processor reads information in the memory and completes the steps in the above method embodiments in combination with hardware of the processor.

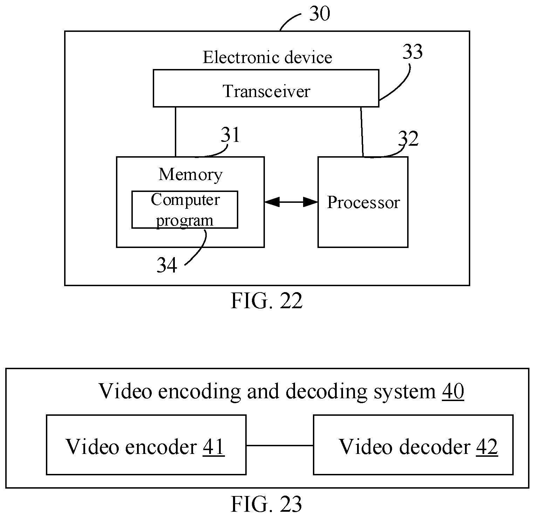

FIG. 22 is a schematic block diagram of an electronic device provided in the embodiments of the present disclosure.

As shown in FIG. 22, the electronic device 30 may be a video encoder or a video decoder as described in the embodiments of the present disclosure, and the electronic device 30 may include:

a memory 33 and a processor 32, where the memory 33 is used to store a computer program 34 and transmit the program code 34 to the processor 32. In other words, the processor 32 may invoke and execute the computer program 34 from the memory 33 to implement the method in the embodiments of the present disclosure.

For example, the processor 32 may be configured to perform the steps in the above method 200 according to instructions in the computer program 34.

In some embodiments of the present disclosure, the processor 32 may include, but not limited to:

a general-purpose processor, a digital signal processor (Digital Signal Processor, DSP), an application specific integrated circuit (Application Specific Integrated Circuit, ASIC), a field programmable gate array (Field Programmable Gate Array, FPGA) or other programmable logic devices, a discrete gate or transistor logic device, a discrete hardware component, etc.

In some embodiments of the present disclosure, the memory 33 includes, but not limited to:

a volatile memory and/or a non-volatile memory. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (synch link DRAM, SLDRAM) and a direct rambus random access memory (Direct Rambus RAM, DR RAM).

In some embodiments of the present disclosure, the computer program 34 may be divided into one or more units, and the one or more units are stored in the memory 33 and performed by the processor 32 to complete the methods provided in the present disclosure. The one or more units may be a series of computer program instruction segments capable of completing specific functions, and the instruction segments are used to describe the execution process of the computer program 34 in the electronic device 30.

As shown in FIG. 22, the electronic device 30 may further include:

a transceiver 33. The transceiver 33 may be connected to the processor 32 or the memory 33.

Herein, the processor 32 may control the transceiver 33 to communicate with other devices, and specifically, to transmit information or data to other devices, or receive information or data transmitted from other devices. The transceiver 33 may include a transmitter and a receiver. The transceiver 33 may further include antennas, and the number of the antennas may be one or more.

It should be understood that the various components in the electronic device 30 are connected via a bus system, where the bus system includes not only a data bus, but also a power bus, a control bus and a status signal bus.

FIG. 22 is a schematic block diagram of a video encoding and decoding system provided in the embodiments of the present disclosure.

As shown in FIG. 22, the video encoding and decoding system 40 may include: a video encoder 41 and a video decoder 42, where the video encoder 41 is configured to perform the video encoding method involved in the embodiments of the present disclosure, and the video decoder 42 is configured to perform the video decoding method involved in the embodiments of the present disclosure.

A computer storage medium is further provided in the present disclosure, and a computer program is stored on the computer storage medium. The computer program, when being executed by a computer, causes the computer to perform the method in the above method embodiments. In other words, a computer program product including instructions is further provided in the embodiments of the present disclosure, and the instructions, when being executed by a computer, cause the computer to perform the method in the above method embodiments.

A bitstream is further provided in the present disclosure, and the bitstream is generated according to the above encoding method.

When the above embodiments are implemented by using software, they may be implemented in the form of a computer program product in whole or in part. The computer program product includes one or more computer instructions. When computer program instructions are loaded and executed on a computer, processes or functions according to the embodiments of the present disclosure are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (such as coaxial cable, fiber optic, digital subscriber line (DSL)) or wireless (such as infrared, radio, microwave, etc.) means. The computer-readable storage medium may be any available medium that can be accessed by the computer, or a data storage device, such as including a server or a data center that integrates one or more available mediums. The available medium may be a magnetic medium (e.g., a floppy disk, a hard disk or a magnetic tape), an optical medium (e.g., a digital video disk (DVD)) or a semiconductor medium (e.g., a solid state disk (SSD)), etc.

Those ordinary skilled in the art may be aware that steps of units and algorithms of various examples described in conjunction with the embodiments disclosed in the present disclosure can be implemented by electronic hardware, or a combination of computer software and electronic hardware. Whether these functions are performed by hardware or software depends on specific application and design constraints of the technical solutions. A skilled person may use different methods for each specific application, to implement the described functions, but such implementation should not be considered beyond the scope of the present disclosure.

In several embodiments provided by the present disclosure, it should be understood that the disclosed system, apparatus and method may be implemented in other ways. For example, the apparatus embodiments described above are only illustrative. For example, the division of units is only a logical function division, and there may be other division methods for actual implementations. For example, multiple units or components may be combined or integrated into another system, or some features may be ignored or may not be executed. On the other hand, the coupling or direct coupling or communicative connection between each other as shown or discussed may be indirect coupling or indirect communicative connection via some interfaces, apparatus or units, which may be in the form of electronics, mechanisms, or others.

The units described as separate components may be or may not be physically separated, and the components shown as units may be or may not be physical units, that is, they may be located in one place or distributed across multiple network units. A portion or all of the units may be selected according to actual needs to implement the purposes of the embodiments' schemes. For example, various functional units in various embodiments of the present disclosure may be integrated into one processing unit or the various units may exist physically and separately, or two or more units may be integrated into one unit.

The above description is only specific implementations of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be subject to the protection scope of claims.

**Claims**

1. A video decoding method, comprising:

   obtaining a first index by decoding a bitstream, wherein the first index is used to indicate a first combination, the first combination includes a weight derivation mode and K prediction modes, and K is a positive integer greater than 1;
   determining a first weight derivation mode and K first prediction modes included in the first combination according to the first index; and
   obtaining a prediction value of a current block by predicting the current block according to the first weight derivation mode and the K first prediction modes.

2. The method according to claim 1, wherein the determining the first weight derivation mode and the K first prediction modes included in the first combination according to the first index, comprises:

   determining a first candidate combination list, wherein the candidate combination list includes a plurality of first candidate combinations, and each first candidate combination among the plurality of first candidate combinations includes a weight derivation mode and K prediction modes; and
   determining a weight derivation mode and K prediction modes included in a first candidate combination corresponding to the first index and in the first candidate combination list as the first weight derivation mode and the K first prediction modes.

3. The method according to claim 1 or 2, wherein the obtaining the prediction value of the current block by predicting the current block according to the first weight derivation mode and the K first prediction modes, comprises:

   determining a first blending parameter; and
   obtaining the prediction value of the current block by predicting the current block according to the first blending parameter, the first weight derivation mode and the K first prediction modes.

4. The method according to claim 3, wherein the obtaining the prediction value of the current block by predicting the current block according to the first blending parameter, the first weight derivation mode and the K first prediction modes, comprises:

determining a weight of the prediction value according to the first blending parameter and the first weight derivation mode;
obtaining K prediction values by predicting the current block according to the K first prediction modes; and
obtaining the prediction value of the current block by weighting the K prediction values according to the weight of the prediction value.

5. The method according to claim 3, wherein the determining the first blending parameter comprises:

obtaining a second index by decoding the bitstream, wherein the second index is used to indicate the first blending parameter; and
determining the first blending parameter according to the second index.

6. The method according to claim 5, wherein the determining the first blending parameter according to the second index comprises:

determining a candidate blending parameter list; and
determining a candidate blending parameter corresponding to the second index and in the candidate blending parameter list as the first blending parameter.

7. The method according to claim 4, wherein the determining the first blending parameter comprises:

determining G alternative blending parameters, wherein G is a positive integer; and
determining the first blending parameter from the G alternative blending parameters.

8. The method according to claim 7, wherein the determining the first blending parameter from the G alternative blending parameters comprises:

determining a cost corresponding to a g-th alternative blending parameter for the g-th alternative blending parameter among the G alternative blending parameters, wherein g is a positive integer from 1 to G; and
determining the first blending parameter from the G alternative blending parameters according to costs corresponding to the G alternative blending parameters.

9. The method according to claim 8, wherein the determining the cost corresponding to the g-th alternative blending parameter comprises:

determining a weight of a template of the current block according to the first weight mode and the g-th alternative blending parameter;
obtaining K prediction values of the template by predicting the template according to the K first prediction modes;
obtaining a prediction value of the template by weighting the K prediction values of the template according to the weight of the template; and
determining the cost corresponding to the g-th alternative blending parameter according to the prediction value of the template.

10. The method according to claim 9, wherein the determining the weight of the template of the current block according to the first weight mode and the g-th alternative blending parameter comprises:

determining a first weight corresponding to the template according to the first weight derivation mode and the template;
obtaining an adjusted first weight by adjusting the first weight using the g-th alternative blending parameter; and
determining the weight of the template according to the adjusted first weight.

11. The method according to claim 8, wherein the determining the first blending parameter from the G alternative blending parameters according to the costs corresponding to the G alternative blending parameters comprises:
determining an alternative blending parameter with a smallest cost and among the G alternative blending parameters

as the first blending parameter.

12. The method according to claim 7, wherein the determining the G alternative blending parameters comprises:

determining picture information of the current block; and
determining the G alternative blending parameters from a plurality of preset alternative blending parameters according to the picture information of the current block.

13. The method according to claim 12, wherein the picture information includes a definition of a picture edge, and the determining the G alternative blending parameters from the plurality of preset alternative blending parameters according to the picture information of the current block comprises:

in a case where the definition of the picture edge of the current block is less than a preset value, determining at least one first alternative blending parameter among the plurality of preset alternative blending parameters as the G alternative blending parameters; or
in a case where the definition of the picture edge of the current block is greater than or equal to the preset value, determining at least one second alternative blending parameter among the plurality of preset alternative blending parameters as the G alternative blending parameters, wherein a second alternative blending parameter is greater than a first alternative blending parameter.

14. The method according to claim 7, wherein the determining the G alternative blending parameters comprises:
determining the G alternative blending parameters according to a size of the current block.

15. The method according to claim 3, wherein the determining the first blending parameter comprises:
determining the first blending parameter according to a size of the current block.

16. The method according to claim 15, wherein the determining the first blending parameter according to the size of the current block comprises:

in a case where the size of the current block is smaller than a first set threshold, determining that the first blending parameter is a first value; or
in a case where the size of the current block is greater than or equal to the first set threshold, determining that the first blending parameter is a second value, wherein the second value is less than the first value.

17. The method according to claim 15, wherein the determining the first blending parameter according to the size of the current block comprises:

in a case where the size of the current block is smaller than a first set threshold, determining that the first blending parameter is within a first blending parameter value range; or
in a case where the size of the current block is greater than or equal to the first set threshold, determining that the first blending parameter is within a second blending parameter value range, wherein a minimum value of the second blending parameter value range is less than a minimum value of the first blending parameter value range.

18. The method according to claim 2, wherein the determining the first candidate combination list comprises:
constructing the first candidate combination list.

19. The method according to claim 18, wherein the constructing the first candidate combination list comprises:
constructing the first candidate combination list based on a template of the current block.

20. The method according to claim 19, wherein constructing the first candidate combination list based on the template of the current block comprises:

determining R second combinations, wherein each second combination among the R second combinations includes a weight derivation mode and K prediction modes, and a weight derivation mode and K prediction modes included in one of any two combinations of the R second combinations are not completely the same as a weight derivation mode and K prediction modes included in another one of the any two combinations of the R second combinations, and R is a positive integer greater than 1;
for each second combination among the R second combinations, determining a prediction value of the template corresponding to the second combination in a case of predicting the template using a weight derivation mode and K prediction modes included in the second combination; and
constructing the candidate combination list according to prediction values of the template corresponding to respective second combinations among the R second combinations.

21. The method according to claim 20, wherein the constructing the candidate combination list according to the prediction values of the template corresponding to the respective second combinations among the R second combinations comprises:

   determining a cost corresponding to a second combination according to a prediction value of the template and a reconstructed value of the template corresponding to the second combination; and
   constructing the candidate combination list according to costs corresponding to the respective second combinations among the R second combinations.

22. The method according to claim 21, wherein in a case where the prediction value of the template corresponding to the second combination includes prediction values of the template corresponding to the K prediction modes in the second combination respectively, the determining the cost corresponding to the second combination according to the prediction value of the template and the reconstructed value of the template corresponding to the second combination comprises:

   determining costs corresponding to the K prediction modes in the second combination respectively according to the prediction values of the template and reconstructed values of the template corresponding to the K prediction modes in the second combination respectively; and
   determining the cost corresponding to the second combination according to the costs corresponding to the K prediction modes in the second combination respectively.

23. The method according to claim 21, wherein the determining the cost corresponding to the second combination according to the costs corresponding to the K prediction modes in the second combination respectively comprises:
   determining a sum of the costs corresponding to the K prediction modes in the second combination respectively as the cost corresponding to the second combination.

24. The method according to claim 20, wherein the determining the R second combinations comprises:

   determining P weight derivation modes and Q prediction modes, wherein P is a positive integer and Q is a positive integer greater than or equal to K; and
   constructing the R second combinations according to the P weight derivation modes and the Q prediction modes, wherein each second combination among the R second combinations includes a weight derivation mode among the P weight derivation modes and K prediction modes among the Q prediction modes.

25. The method according to claim 24, wherein the determining the Q prediction modes comprises:

   determining at least one of a first candidate prediction mode list of the current block, first alternative prediction mode lists corresponding to the K prediction modes respectively, and a prediction mode corresponding to a weight derivation mode, wherein the first candidate prediction mode list includes a plurality of first candidate prediction modes, and a first alternative prediction mode list corresponding to any prediction mode among the K prediction modes includes at least one first alternative prediction mode; and
   determining the Q prediction modes according to the at least one of the first candidate prediction mode list, the first alternative prediction mode lists corresponding to the K prediction modes respectively, and the prediction mode corresponding to the weight derivation mode.

26. The method according to claim 25, wherein determining the first candidate prediction mode list corresponding to the current block comprises:
   determining the first candidate prediction mode list according to a prediction mode used by at least one block adjacent to the current block.

27. The method according to claim 25, wherein the method further comprises:

   in a case where the first candidate prediction mode list does not include a preset mode, determining a preset mode corresponding to the current block; and

adding the preset mode to the first candidate prediction mode list.

28. The method according to claim 25, wherein determining the first candidate prediction mode list corresponding to the current block comprises:

determining a picture type corresponding to the current block; and

determining the first candidate prediction mode list according to the picture type corresponding to the current block.

29. The method according to any one of claims 4 to 14, wherein the determining the weight of the prediction value according to the first blending parameter and the first weight derivation mode comprises:

determining a second weight corresponding to the current block according to the first weight derivation mode and the current block;

obtaining an adjusted second weight by adjusting the second weight using the first blending parameter; and

determining the weight of the prediction value according to the adjusted second weight.

30. The method according to claim 1, wherein the first combination further includes a second blending parameter, and the obtaining the prediction value of the current block by predicting the current block according to the first weight derivation mode and the K first prediction modes comprises:

obtaining the prediction value of the current block by predicting the current block according to the second blending parameter, the first weight derivation mode and the K first prediction modes.

31. The method according to claim 30, wherein the determining the prediction value of the current block according to the second blending parameter, the first weight derivation mode and the K first prediction modes comprises:

determining a weight of the prediction value according to the first weight derivation mode and the second blending parameter;

determining K prediction values according to the K first prediction modes; and

obtaining the prediction value of the current block by weighting the K prediction values according to weights of the K prediction values.

32. The method according to claim 31, wherein the determining the weight of the prediction value according to the first weight derivation mode and the second blending parameter comprises:

determining a fourth weight corresponding to the current block according to the first weight derivation mode and the current block;

obtaining an adjusted fourth weight by adjusting the fourth weight using the second blending parameter; and

determining the weight of the prediction value according to the adjusted fourth weight.

33. The method according to claim 30, wherein the determining the first weight derivation mode and the K first prediction modes included in the first combination according to the first index comprises:

determining a second candidate combination list, wherein the second candidate combination list includes a plurality of second candidate combinations, and any second candidate combination among the plurality of second candidate combinations includes a weight derivation mode, K prediction modes, and a blending parameter; and

determining a weight derivation mode, K prediction modes and a blending parameter included in a second candidate combination corresponding to the first index and in the second candidate combination list as the first weight derivation mode, the K first prediction modes, and the second blending parameter.

34. The method according to claim 33, wherein the determining the second candidate combination list comprises:

constructing the second candidate combination list.

35. The method according to claim 34, wherein the constructing the second candidate combination list comprises:

constructing the second candidate combination list based on a template of the current block.

36. The method according to claim 35, wherein the constructing the second candidate combination list based on the template of the current block comprises:

determining H third combinations, wherein each third combination among the H third combinations includes a weight derivation mode, K prediction modes and a blending parameter, and a weight derivation mode, K prediction modes and a blending parameter included in one of any two combinations of the H third combinations are not completely the same as a weight derivation mode, K prediction modes and a blending parameter included in another one of the any two combinations of the H third combinations, and H is a positive integer greater than 2; for each third combination among the H third combinations, determining a cost corresponding to the third combination in a case of predicting the template using a weight derivation mode, K prediction modes, and a blending parameter included in the third combination; and constructing the second candidate combination list according to costs corresponding to respective third combinations among the H third combinations.

37. The method according to claim 36, wherein the determining the cost corresponding to the third combination in a case of predicting the template using the weight derivation mode, the K prediction modes, and the blending parameter included in the third combination comprises:

determining a weight of the template according to the weight derivation mode and the blending parameter included in the third combination; obtaining K prediction values of the template by predicting the template according to the K prediction modes in the third combination; obtaining a prediction value of the template corresponding to the third combination by weighting the K prediction values of the template according to the weight of the template; and determining the cost corresponding to the third combination according to the prediction value of the template and a reconstructed value of the template corresponding to the third combination.

38. The method according to claim 37, wherein the determining the weight of the template according to the weight derivation mode and the blending parameter included in the third combination comprises:

determining a third weight corresponding to the template according to the weight derivation mode in the third combination and the template; obtaining an adjusted third weight by adjusting the third weight using the blending parameter in the third combination; and determining the weight of the template according to the adjusted third weight.

39. The method according to claim 36, wherein the determining the cost corresponding to the third combination in a case of predicting the template using the weight derivation mode, the K prediction modes, and the blending parameter included in the third combination comprises:

determining prediction values of the template corresponding to the K prediction modes in the third combination respectively according to the weight derivation mode and the blending parameter in the third combination; determining costs corresponding to the K prediction modes in the third combination respectively according to the prediction values of the template and reconstructed values of the template corresponding to the K prediction modes in the third combination respectively; and determining the cost corresponding to the third combination according to the costs corresponding to the K prediction modes in the third combination respectively.

40. The method according to claim 39, wherein the determining the cost corresponding to the third combination according to the costs corresponding to the K prediction modes in the third combination respectively comprises: determining a sum of the costs corresponding to the K prediction modes in the third combination as the cost corresponding to the third combination.

41. The method according to claim 36, wherein the constructing the second candidate combination list according to the costs corresponding to the respective third combinations among the H third combinations comprises:

sorting the H third combinations according to the costs corresponding to the respective third combinations among the H third combinations; and determining the H third combinations that are sorted as the second candidate combination list.

42. The method according to claim 41, wherein the sorting the H third combinations according to the costs corresponding to the respective third combinations among the H third combinations comprises:
sorting the H third combinations in an ascending order of the costs.

43. The method according to claim 41, wherein the constructing the second candidate combination list according to the costs corresponding to the respective third combinations among the H third combinations comprises:

selecting L third combinations from the H third combinations according to the costs corresponding to the third combinations; and
determining a list consisting of the L third combinations as the second candidate combination list.

44. The method according to claim 43, wherein the L third combinations are first L third combinations with smallest costs among the H third combinations.

45. The method according to claim 36, wherein the determining the H third combinations comprises:

determining F weight derivation modes, J prediction modes, and W blending parameters, wherein F and W are both positive integers, and Q is a positive integer greater than or equal to K; and
constructing the H third combinations according to the F weight derivation modes, the J prediction modes and the W blending parameters.

46. The method according to claim 45, wherein determining the J prediction modes comprises:

determining at least one of a second candidate prediction mode list of the current block, second alternative prediction mode lists corresponding to the K prediction modes respectively, and a prediction mode corresponding to a weight derivation mode, wherein the second candidate prediction mode list includes a plurality of second candidate prediction modes, and a second alternative prediction mode list corresponding to any prediction mode among the K prediction modes includes at least one alternative candidate prediction mode; and
determining the J prediction modes according to the at least one of the second candidate prediction mode list, the second alternative prediction mode lists corresponding to the K prediction modes respectively, and the prediction mode corresponding to the weight derivation mode.

47. The method according to claim 46, wherein the determining the second candidate prediction mode list comprises:
determining the second candidate prediction mode list corresponding to the current block according to a prediction mode used by at least one block adjacent to the current block.

48. The method according to claim 46, wherein the method further comprises:

in a case where the second candidate prediction mode list does not include a preset mode, determining a preset mode corresponding to the current block; and
adding the preset mode to the second candidate prediction mode list.

49. The method according to claim 46, wherein determining the second candidate prediction mode list corresponding to the current block comprises:

determining a picture type corresponding to the current block; and
determining the second candidate prediction mode list according to the picture type corresponding to the current block.

50. The method according to claim 45, wherein determining the F weight derivation modes comprises:
selecting the F weight derivation modes from preset Z weight derivation modes, wherein Z is a positive integer greater than or equal to F.

51. The method according to claim 45, wherein the W blending parameters comprises:
determining the W blending parameters according to a size of the current block.

52. The method according to claim 45, wherein the constructing the H third combinations according to the F weight derivation models, the J prediction modes and the W blending parameters comprises:

selecting E weight derivation modes from the F weight derivation modes, wherein E is a positive integer less than or equal to F;

selecting V prediction modes from the J prediction modes, wherein V is a positive integer less than or equal to J;

selecting O blending parameters from the W blending parameters, wherein O is a positive integer less than or equal to W; and

constituting the H third combinations according to the E weight derivation modes, the V prediction modes and the O blending parameters.

53. The method according to claim 52, wherein the selecting the E weight derivation modes from the F weight derivation modes comprises:

determining weights of K second prediction modes on the template according to an i-th weight derivation mode and a third blending parameter for the i-th weight derivation mode among the F weight derivation modes, wherein the third blending parameter is any blending parameter among the W blending gradients, the K second prediction modes are any K prediction modes among the J prediction modes, and i is a positive integer from 1 to F; and

in a case where a weight of any prediction mode among the K prediction modes on the template is less than a first preset value, obtaining the E weight derivation modes by eliminating the i-th weight derivation mode from the F weight derivation modes.

54. The method according to claim 53, wherein the determining the weights of the K second prediction modes on the template according to the i-th weight derivation mode and the third blending parameter comprises:

determining a fourth weight corresponding to the template according to the first weight derivation mode and the template;

obtaining an adjusted fourth weight by adjusting the fourth weight using the third blending parameter; and

determining the weights of the K second prediction modes on the template according to the adjusted fourth weight.

55. The method according to claim 52, wherein the selecting the O blending parameters from the W blending parameters comprises:

determining picture information of the current block; and

determining the O blending parameters from the W blending parameters according to the picture information of the current block.

56. The method according to claim 55, wherein the picture information includes a definition of a picture edge, and the determining the O blending parameters from the W blending parameters according to the picture information of the current block comprises:

in a case where the definition of the picture edge of the current block is less than a preset value, determining at least one first-type blending parameter among the W blending parameters as the O blending parameters; or

in a case where the definition of the picture edge of the current block is greater than or equal to the preset value, determining at least one second-type blending parameter among the W blending parameters as the O blending parameters, wherein a second-type blending parameter is greater than a first-type blending parameter.

57. The method according to claim 52, wherein the selecting the O blending parameters from the W blending parameters comprises:

selecting the O blending parameters from the W blending parameters according to a size of the current block.

58. The method according to claim 57, wherein the selecting the O blending parameters from the W blending parameters according to the size of the current block comprises:

in a case where the size of the current block is smaller than a second set threshold, taking a blending parameter greater than or equal to a third value and among the W blending parameters as the O blending parameters; or

in a case where the size of the current block is greater than or equal to the second set threshold, taking a blending parameter less than or equal to a fourth value and among the W blending parameters as the O blending parameters, wherein the fourth value is less than the third value.

59. The method according to claim 58, wherein the selecting the O blending parameters from the W blending parameters according to the size of the current block comprises:

in a case where the size of the current block is smaller than the second set threshold, determining that the O blending parameters are one or more blending parameters within a third blending parameter value range and among the W blending parameters; or

in a case where the size of the current block is greater than or equal to the second set threshold, determining that the O blending parameters are one or more blending parameters within a fourth blending parameter value range and among the W blending parameters, wherein a minimum value of the fourth blending parameter value range is less than a minimum value of the third blending parameter value range.

60. The method according to claim 1, wherein the first weight derivation mode includes a fourth blending parameter, and the obtaining the prediction value of the current block by predicting the current block according to the first weight derivation mode and the K first prediction modes comprises:
obtaining the prediction value of the current block by predicting the current block according to the fourth blending parameter and the K first prediction modes.

61. The method according to claim 60, wherein the obtaining the prediction value of the current block by predicting the current block according to the fourth blending parameter and the K first prediction modes comprises:

determining a weight of the prediction value according to the fourth blending parameter;

determining K prediction values according to the K first prediction modes; and

obtaining the prediction value of the current block by weighting the K prediction values according to weights of the K prediction values.

62. The method according to claim 60, wherein the determining the first weight derivation mode and the K first prediction modes included in the first combination according to the first index comprises:

determining a third candidate combination list, wherein the third candidate combination list includes a plurality of third candidate combinations, any third candidate combination among the plurality of third candidate combinations includes a weight derivation mode and K prediction modes, and the weight derivation mode includes a blending parameter; and

determining a weight derivation mode and K prediction modes included in a third candidate combination corresponding to the first index and in the third candidate combination list as the first weight derivation mode and the K first prediction modes.

63. The method according to claim 61, wherein the determining the third candidate combination list comprises:
constructing the third candidate combination list.

64. The method according to claim 63, wherein the constructing the third candidate combination list comprises:
constructing the third candidate combination list based on a template of the current block.

65. The method according to claim 64, wherein the constructing the third candidate combination list based on the template of the current block comprises:

determining A fourth combinations, wherein each fourth combination among the A fourth combinations includes a weight derivation mode and K prediction modes, the weight derivation mode includes a blending parameter, and a weight derivation mode and K prediction modes included in one of any two combinations of the A fourth combinations are not completely the same as a weight derivation mode and K prediction modes included in another one of the any two combinations of the A fourth combinations, and A is a positive integer greater than 1;

for each fourth combination among the A fourth combinations, determining a cost corresponding to the fourth combination in a case of predicting the template using a weight derivation mode and K prediction modes included in the fourth combination; and

constructing the third candidate combination list according to costs corresponding to respective fourth combinations among the A fourth combinations.

66. The method according to claim 65, wherein the determining the cost corresponding to the fourth combination in a case of predicting the template using the weight derivation mode and the K prediction modes included in the fourth combination comprises:

determining prediction values of the template corresponding to the K prediction modes in the fourth combination respectively according to the weight derivation mode in the fourth combination;

determining costs corresponding to the K prediction modes in the fourth combination respectively according to the prediction values of the template and reconstructed values of the template corresponding to the K prediction modes in the fourth combination respectively; and

determining the cost corresponding to the fourth combination according to the costs corresponding to the K prediction modes in the fourth combination respectively.

67. The method according to claim 66, wherein the determining the cost corresponding to the fourth combination according to the costs corresponding to the K prediction modes in the fourth combination respectively comprises: determining a sum of the costs corresponding to the K prediction modes in the fourth combination as the cost corresponding to the fourth combination.

68. The method according to claim 65, wherein the constructing the third candidate combination list according to the costs corresponding to the respective fourth combinations among the A fourth combinations comprises:

sorting the A fourth combinations according to the costs corresponding to the respective fourth combinations among the A fourth combinations; and

determining the A fourth combinations that are sorted as the third candidate combination list.

69. The method according to claim 65, wherein the sorting the A fourth combinations according to the costs corresponding to the respective fourth combinations among the A fourth combinations comprises: sorting the A fourth combinations in an ascending order of the costs.

70. The method according to claim 69, wherein the constructing the third candidate combination list according to the costs corresponding to the respective fourth combinations among the A fourth combinations comprises:

selecting B fourth combinations from the A fourth combinations according to the costs corresponding to the fourth combinations; and

determining a list consisting of the B fourth combinations as the third candidate combination list.

71. The method according to claim 70, wherein the B fourth combinations are first B fourth combinations with smallest costs among the A fourth combinations.

72. The method according to claim 65, wherein the determining the A fourth combinations comprises:

determining C weight derivation modes and D prediction modes, wherein C is a positive integer and D is a positive integer greater than or equal to K; and

constructing the A fourth combinations according to the C weight derivation modes and the D prediction modes.

73. The method according to claim 72, wherein the determining the D prediction modes comprises:

determining at least one of a third candidate prediction mode list of the current block, third alternative prediction mode lists corresponding to the K prediction modes respectively, and a prediction mode corresponding to a weight derivation mode, wherein the third candidate prediction mode list includes a plurality of third candidate prediction modes, and a third alternative prediction mode list corresponding to any prediction mode among the K prediction modes includes at least one third alternative prediction mode; and

determining the D prediction modes according to the at least one of the third candidate prediction mode list, the third alternative prediction mode lists corresponding to the K prediction modes respectively, and the prediction mode corresponding to the weight derivation mode.

74. The method according to claim 73, wherein determining the third candidate prediction mode list comprises: determining the third candidate prediction mode list corresponding to the current block according to a prediction mode used by at least one block adjacent to the current block.

75. The method according to claim 73, wherein the method further comprises:

in a case where the third candidate prediction mode list does not include a preset mode, determining a preset mode corresponding to the current block; and

adding the preset mode to the third candidate prediction mode list.

76. The method according to claim 73, wherein the determining the third candidate prediction mode list corresponding to the current block comprises:

determining a picture type corresponding to the current block; and

determining the third candidate prediction mode list according to the picture type corresponding to the current block.

77. The method according to claim 72, wherein the determining the C weight derivation modes comprises:

determining X blending parameters, wherein X is a positive integer; and

determining the C weight derivation modes according to the X blending parameters.

78. The method according to claim 77, wherein the determining the X blending parameters comprises:

determining picture information of the current block; and

determining the X blending parameters according to the picture information of the current block.

79. The method according to claim 78, wherein the picture information includes a definition of a picture edge, and the determining the X blending parameters according to the picture information of the current block comprises:

in a case where the definition of the picture edge of the current block is less than a preset value, determining at least one third-type blending parameter among preset Y blending parameters as the X blending parameters, wherein Y is a positive integer greater than X; or

in a case where the definition of the picture edge of the current block is greater than or equal to the preset value, determining at least one fourth-type blending parameter among the Y blending parameters as the X blending parameters, wherein the fourth-type blending parameter is greater than the third-type blending parameter.

80. The method according to claim 77, wherein the determining the X blending parameters comprises:
determining the X blending parameters according to a size of the current block.

81. The method according to claim 80, wherein the determining the X blending parameters according to the size of the current block comprises:

in a case where the size of the current block is smaller than a third set threshold, taking a blending parameter greater than or equal to a fifth value and among at least one preset blending parameter as the X blending parameters; or

in a case where the size of the current block is greater than or equal to the third set threshold, taking a blending parameter less than or equal to a sixth value and among the at least one preset blending parameter as the X blending parameters, wherein the sixth value is less than the fifth value.

82. The method according to claim 80, wherein the determining the X blending parameters according to the size of the current block comprises:

in a case where the size of the current block is smaller than a third set threshold, determining that the X blending parameters are one or more blending parameters in the at least one preset blending parameter and within a fifth blending parameter value range; or

in a case where the size of the current block is greater than or equal to a third set threshold, determining that the X blending parameters are one or more blending parameters in the at least one blending parameter and within a sixth blending parameter value range, wherein a minimum value of the sixth blending parameter value range is less than a minimum value of the fifth blending parameter value range.

83. The method according to any one of claims 1-2, 4-28, 30-82, wherein the method further comprises:

obtaining at least one flag by decoding the bitstream, wherein the at least one flag is used to indicate whether to use the first combination for decoding;

the obtaining the first index by decoding the bitstream comprises:

in a case where the at least one flag indicates to use the first combination for decoding, obtaining the first index by decoding the bitstream.

84. The method according to claim 83, wherein the at least one flag comprises at least one of: a sequence level flag, a picture level flag, a slice level flag, a unit level flag, and a block level flag.

85. The method according to claim 84, wherein in a case where the at least one flag includes a block level flag, the obtaining the at least one flag by decoding the bitstream comprises:

in a case where a size of the current block meeting a preset condition is determined, determining the block level flag by decoding the bitstream.

86. The method according to any one of claims 1-2, 4-28, 30-82, wherein the obtaining the first index by decoding the bitstream comprises:

in a case where the current block not using a first technology for decoding is determined, obtaining the first index by decoding the bitstream.

87. The method according to any one of claims 27, 48, and 75, wherein the determining the preset mode corresponding to the current block comprises:

determining a picture type corresponding to the current block; and

determining the preset mode corresponding to the current block according to the picture type corresponding to the current block.

88. The method according to claim 87, wherein the preset mode comprises at least one of a DC, a horizontal mode, a vertical mode, or an angle mode.

89. The method according to claim 87, wherein the determining the picture type corresponding to the current block comprises:

determining the picture type corresponding to the current block according to a picture type of a current picture to which the current block belongs, or a picture type of a current slice to which the current block belongs.

90. A video encoding method, comprising:

determining a first combination, wherein the first combination includes a first weight derivation mode and K first prediction modes;

obtaining a prediction value of a current block by predicting the current block according to the first weight derivation mode and the K first prediction modes; and

obtaining a bitstream according to the prediction value of the current block, wherein the bitstream includes a first index, and the first index is used to indicate the first combination.

91. The method according to claim 90, wherein the determining the first combination comprises:

determining a first candidate combination list, wherein the first candidate combination list includes a plurality of first candidate combinations, and each first candidate combination among the plurality of first candidate combinations includes a weight derivation mode and K prediction modes; and

determining the first combination from the first candidate combination list.

92. The method according to claim 90 or 91, wherein the obtaining the prediction value of the current block by predicting the current block according to the first weight derivation mode and the K first prediction modes, comprises:

determining a first blending parameter; and

obtaining the prediction value of the current block by predicting the current block according to the first blending parameter, the first weight derivation mode and the K first prediction modes.

93. The method according to claim 92, wherein the obtaining the prediction value of the current block by predicting the current block according to the first blending parameter, the first weight derivation mode and the K first prediction modes comprises:

determining a weight of the prediction value according to the first blending parameter and the first weight derivation mode;
obtaining K prediction values by predicting the current block according to the K first prediction modes; and
obtaining the prediction value of the current block by weighting the K prediction values according to the weight of the prediction value.

94. The method according to claim 92, wherein the determining the first blending parameter comprises:

determining a candidate blending parameter list; and
determining a candidate blending parameter in the candidate blending parameter list as the first blending parameter.

95. The method according to claim 94, wherein the determining the candidate blending parameter in the candidate blending parameter list as the first blending parameter comprises:

determining a cost corresponding to the candidate blending parameter for the candidate blending parameter in the candidate blending parameter list; and
selecting a candidate blending parameter from the candidate blending parameter list as the first blending parameter according to costs corresponding to respective candidate blending parameters in the candidate blending parameter list.

96. The method according to claim 95, wherein the determining the cost corresponding to the candidate blending parameter comprises:

determining a weight of a template of the current block according to the candidate blending parameter and the first weight derivation mode;
obtaining K prediction values of the template by predicting the template according to the K first prediction modes;
obtaining a prediction value of the template by weighting the K prediction values of the template according to the weight of the template; and
determining the cost corresponding to the candidate blending parameter according to a reconstructed value and the prediction value of the template.

97. The method according to claim 96, wherein the determining the weight of the template of the current block according to the candidate blending parameter and the first weight derivation mode comprises:

determining a first template weight according to the first weight derivation mode; and
obtaining the weight of the template by adjusting the first template weight with the candidate blending parameter.

98. The method according to claim 95, wherein the selecting the candidate blending parameter from the candidate blending parameter list as the first blending parameter according to the costs corresponding to the respective candidate blending parameters in the candidate blending parameter list comprises:
determining a candidate blending parameter with a smallest cost in the candidate blending parameter list as the first blending parameter.

99. The method according to any one of claims 92 to 98, wherein the method further comprises:
writing a second index into the bitstream, wherein the second index is used to indicate the first blending parameter.

100. The method according to claim 92, wherein the determining the first blending parameter comprises:

determining G alternative blending parameters, wherein G is a positive integer; and
determining the first blending parameter from the G alternative blending parameters.

101. The method according to claim 100, wherein the determining the first blending parameter from the G alternative blending parameters comprises:

determining a cost corresponding to a g-th alternative blending parameter for the g-th alternative blending parameter among the G alternative blending parameters, wherein g is a positive integer from 1 to G; and

determining the first blending parameter from the G alternative blending parameters according to costs corresponding to the G alternative blending parameters.

**102.**

The method according to claim 101, wherein the determining the cost corresponding to the g-th alternative blending parameter comprises:

determining a weight of a template of the current block according to the first weight mode and the g-th alternative blending parameter;

obtaining K prediction values of the template by predicting the template according to the K first prediction modes;

obtaining a prediction value of the template by weighting the K prediction values of the template according to the weight of the template; and

determining the cost corresponding to the g-th alternative blending parameter according to the prediction value of the template.

**103.**

The method according to claim 102, wherein the determining the weight of the template of the current block according to the first weight mode and the g-th alternative blending parameter comprises:

determining a first weight corresponding to the template according to the first weight derivation mode and the template;

obtaining an adjusted first weight by adjusting the first weight using the g-th alternative blending parameter; and

determining the weight of the template according to the adjusted first weight.

**104.**

The method according to claim 101, wherein the determining the first blending parameter from the G alternative blending parameters according to the costs corresponding to the G alternative blending parameters comprises: determining an alternative blending parameter with a smallest cost and among the G alternative blending parameters as the first blending parameter.

**105.**

The method according to claim 100, wherein the determining the G alternative blending parameters comprises:

determining picture information of the current block; and

determining the G candidate blending parameters from a plurality of preset candidate blending parameters according to the picture information of the current block.

**106.**

The method according to claim 105, wherein the picture information includes a definition of a picture edge, and the determining the G alternative blending parameters from the plurality of preset alternative blending parameters according to the picture information of the current block comprises:

in a case where the definition of the picture edge of the current block is less than a preset value, determining at least one first alternative blending parameter among the plurality of preset alternative blending parameters as the G alternative blending parameters; or

in a case where the definition of the picture edge of the current block is greater than or equal to the preset value, determining at least one second alternative blending parameter among the plurality of preset alternative blending parameters as the G alternative blending parameters, wherein a second alternative blending parameter is greater than a first alternative blending parameter.

**107.**

The method according to claim 100, wherein the determining the G alternative blending parameters comprises: determining the G alternative blending parameters according to a size of the current block.

**108.**

The method according to claim 92, wherein the determining the first blending parameter comprises:

determining the first blending parameter according to a size of the current block.

**109.**
The method according to claim 108, wherein the determining the first blending parameter according to the size of the current block comprises:

in a case where the size of the current block is smaller than a first set threshold, determining that the first blending parameter is a first value; or
in a case where the size of the current block is greater than or equal to the first set threshold, determining that the first blending parameter is a second value, wherein the second value is less than the first value.

**110.**
The method according to claim 109, wherein the determining the first blending parameter according to the size of the current block comprises:

in a case where the size of the current block is smaller than a first set threshold, determining that the first blending parameter is within a first blending parameter value range; or
in a case where the size of the current block is greater than or equal to the first set threshold, determining that the first blending parameter is within a second blending parameter value range, wherein a minimum value of the second blending parameter value range is less than a minimum value of the first blending parameter value range.

**111.** The method according to claim 91, wherein the determining the first candidate combination list comprises:
constructing the first candidate combination list.

**112.**
The method according to claim 111, wherein the constructing the first candidate combination list comprises:
constructing the first candidate combination list based on a template of the current block.

**113.**
The method according to claim 112, wherein the constructing the first candidate combination list based on the template of the current block comprises:

determining R second combinations, wherein each second combination among the R second combinations includes a weight derivation mode and K prediction modes, and a weight derivation mode and K prediction modes included in one of any two combinations of the R second combinations are not completely the same as a weight derivation mode and K prediction modes included in another one of the any two combinations of the R second combinations, and R is a positive integer greater than 1;
for each second combination among the R second combinations, determining a prediction value of the template corresponding to the second combination in a case of predicting the template using a weight derivation mode and K prediction modes included in the second combination; and
constructing the candidate combination list according to prediction values of the template corresponding to respective second combinations among the R second combinations.

**114.**
The method according to claim 113, wherein the constructing the candidate combination list according to the prediction values of the template corresponding to the respective second combinations among the R second combinations comprises:

determining a cost corresponding to a second combination according to a prediction value of the template and a reconstructed value of the template corresponding to the second combination; and
constructing the candidate combination list according to costs corresponding to the respective second combinations among the R second combinations.

**115.**
The method according to claim 113, wherein in a case where the prediction value of the template corresponding to the second combination includes prediction values of the template corresponding to the K prediction modes in the second combination respectively, the determining the cost corresponding to the second combination according to the prediction value of the template and the reconstructed value of the template corresponding to the second combination comprises:

determining costs corresponding to the K prediction modes in the second combination respectively according to the prediction values of the template and reconstructed values of the template corresponding to the K prediction modes in the second combination respectively; and

determining the cost corresponding to the second combination according to the costs corresponding to the K prediction modes in the second combination respectively.

**116.**
The method according to claim 115, wherein the determining the cost corresponding to the second combination according to the costs corresponding to the K prediction modes in the second combination respectively comprises:
determining a sum of the costs corresponding to the K prediction modes in the second combination respectively as the cost corresponding to the second combination.

**117.**
The method according to claim 113, wherein the determining the R second combinations comprises:

determining P weight derivation modes and Q prediction modes, wherein P is a positive integer and Q is a positive integer greater than or equal to K; and

constructing the R second combinations according to the P weight derivation modes and the Q prediction modes, wherein each second combination among the R second combinations includes a weight derivation mode among the P weight derivation modes and K prediction modes among the Q prediction modes.

**118.**
The method according to claim 117, wherein the determining the Q prediction modes comprises:

determining at least one of a first candidate prediction mode list of the current block, first alternative prediction mode lists corresponding to the K prediction modes respectively, and a prediction mode corresponding to a weight derivation mode, wherein the first candidate prediction mode list includes a plurality of first candidate prediction modes, and a first alternative prediction mode list corresponding to any prediction mode among the K prediction modes includes at least one first alternative prediction mode; and

determining the Q prediction modes according to the at least one of the first candidate prediction mode list, the first alternative prediction mode lists corresponding to the K prediction modes respectively, and the prediction mode corresponding to the weight derivation mode.

**119.**
The method according to claim 118, wherein determining the first candidate prediction mode list corresponding to the current block comprises:
determining the first candidate prediction mode list according to a prediction mode used by at least one block adjacent to the current block.

**120.**
The method according to claim 119, wherein the method further comprises:

in a case where the first candidate prediction mode list does not include a preset mode, determining a preset mode corresponding to the current block; and

adding the preset mode to the first candidate prediction mode list.

**121.**
The method according to claim 118, wherein determining the first candidate prediction mode list corresponding to the current block comprises:

determining a picture type corresponding to the current block; and

determining the first candidate prediction mode list according to the picture type corresponding to the current block.

**122.**
The method according to any one of claims 93 to 121, wherein the determining the weight of the prediction value according to the first blending parameter and the first weight derivation mode comprises:

determining a second weight corresponding to the current block according to the first weight derivation mode and the current block;

obtaining an adjusted second weight by adjusting the second weight using the first blending parameter; and

determining the weight of the prediction value according to the adjusted second weight.

**123.**

The method according to claim 90, wherein the first combination further includes a second blending parameter, and the obtaining the prediction value of the current block by predicting the current block according to the first weight derivation mode and the K first prediction modes comprises:

obtaining the prediction value of the current block by predicting the current block according to the second blending parameter, the first weight derivation mode and the K first prediction modes.

**124.**

The method according to claim 123, wherein the determining the prediction value of the current block according to the second blending parameter, the first weight derivation mode and the K first prediction modes comprises:

determining a weight of the prediction value according to the first weight derivation mode and the second blending parameter;

determining K prediction values according to the K first prediction modes; and

obtaining the prediction value of the current block by weighting the K prediction values according to weights of the K prediction values.

**125.**

The method according to claim 124, wherein the determining the weight of the prediction value according to the first weight derivation mode and the second blending parameter comprises:

determining a fourth weight corresponding to the current block according to the first weight derivation mode and the current block;

obtaining an adjusted fourth weight by adjusting the fourth weight using the second blending parameter; and

determining the weight of the prediction value according to the adjusted fourth weight.

**126.**

The method according to claim 123, wherein the determining the first combination comprises:

determining a second candidate combination list, wherein the second candidate combination list includes a plurality of second candidate combinations, and any second candidate combination among the plurality of second candidate combinations includes a weight derivation mode, K prediction modes, and a blending parameter; and

determining the first combination from the second candidate combination list.

**127.**

The method according to claim 126, wherein the determining the second candidate combination list comprises: constructing the second candidate combination list.

**128.**

The method according to claim 127, wherein the constructing the second candidate combination list comprises: constructing the second candidate combination list based on a template of the current block.

**129.**

The method according to claim 128, wherein the constructing the second candidate combination list based on the template of the current block comprises:

determining H third combinations, wherein each third combination among the H third combinations includes a weight derivation mode, K prediction modes and a blending parameter, and a weight derivation mode, K prediction modes and a blending parameter included in one of any two combinations of the H third combinations are not completely the same as a weight derivation mode, K prediction modes and a blending parameter included in another one of the any two combinations of the H third combinations, and H is a positive integer greater than 2;

for each third combination among the H third combinations, determining a cost corresponding to the third combination in a case of predicting the template using a weight derivation mode, K prediction modes, and a blending parameter included in the third combination; and

constructing the second candidate combination list according to costs corresponding to respective third combinations among the H third combinations.

**130.**
The method according to claim 129, wherein the determining the cost corresponding to the third combination in a case of predicting the template using the weight derivation mode, the K prediction modes, and the blending parameter included in the third combination comprises:

determining a weight of the template according to the weight derivation mode and the blending parameter included in the third combination;
obtaining K prediction values of the template by predicting the template according to the K prediction modes in the third combination;
obtaining a prediction value of the template corresponding to the third combination by weighting the K prediction values of the template according to the weight of the template; and
determining the cost corresponding to the third combination according to the prediction value of the template and a reconstructed value of the template corresponding to the third combination.

**131.**
The method according to claim 130, wherein the determining the weight of the template according to the weight derivation mode and the blending parameter included in the third combination comprises:

determining a third weight corresponding to the template according to the weight derivation mode in the third combination and the template;
obtaining an adjusted third weight by adjusting the third weight using the blending parameter in the third combination; and
determining the weight of the template according to the adjusted third weight.

**132.**
The method according to claim 129, wherein the determining the cost corresponding to the third combination in a case of predicting the template using the weight derivation mode, the K prediction modes, and the blending parameter included in the third combination comprises:

determining prediction values of the template corresponding to the K prediction modes in the third combination respectively according to the weight derivation mode and the blending parameter in the third combination;
determining costs corresponding to the K prediction modes in the third combination respectively according to the prediction values of the template and reconstructed values of the template corresponding to the K prediction modes in the third combination respectively; and
determining the cost corresponding to the third combination according to the costs corresponding to the K prediction modes in the third combination respectively.

**133.**
The method according to claim 132, wherein the determining the cost corresponding to the third combination according to the costs corresponding to the K prediction modes in the third combination respectively comprises:
determining a sum of the costs corresponding to the K prediction modes in the third combination as the cost corresponding to the third combination.

**134.**
The method according to claim 129, wherein the constructing the second candidate combination list according to the costs corresponding to the respective third combinations among the H third combinations comprises:

sorting the H third combinations according to the costs corresponding to the respective third combinations among the H third combinations; and
determining the H third combinations that are sorted as the second candidate combination list.

**135.**
The method according to claim 134, wherein the sorting the H third combinations according to the costs corresponding to the respective third combinations among the H third combinations comprises:

sorting the H third combinations in an ascending order of the costs.

**136.**

The method according to claim 129, wherein the constructing the second candidate combination list according to the costs corresponding to the respective third combinations among the H third combinations comprises:

selecting L third combinations from the H third combinations according to the costs corresponding to the third combinations; and
determining a list consisting of the L third combinations as the second candidate combination list.

**137.**

The method according to claim 136, wherein the L third combinations are first L third combinations with smallest costs among the H third combinations.

**138.**

The method according to claim 129, wherein the determining the H third combinations comprises:

determining F weight derivation modes, J prediction modes, and W blending parameters, wherein F and W are both positive integers, and Q is a positive integer greater than or equal to K; and
constructing the H third combinations according to the F weight derivation modes, the J prediction modes and the W blending parameters.

**139.**

The method according to claim 138, wherein determining the J prediction modes comprises:

determining at least one of a second candidate prediction mode list of the current block, second alternative prediction mode lists corresponding to the K prediction modes respectively, and a prediction mode corresponding to a weight derivation mode, wherein the second candidate prediction mode list includes a plurality of second candidate prediction modes, and a second alternative prediction mode list corresponding to any prediction mode among the K prediction modes includes at least one second alternative prediction mode; and
determining the J prediction modes according to the at least one of the second candidate prediction mode list, the second alternative prediction mode lists corresponding to the K prediction modes respectively, and the prediction mode corresponding to the weight derivation mode.

**140.**

The method according to claim 139, wherein the determining the second candidate prediction mode list comprises:
determining the second candidate prediction mode list corresponding to the current block according to a prediction mode used by at least one block adjacent to the current block.

**141.**

The method according to claim 139, wherein the method further comprises:

in a case where the second candidate prediction mode list does not include a preset mode, determining a preset mode corresponding to the current block; and
adding the preset mode to the second candidate prediction mode list.

**142.**

The method according to claim 139, wherein determining the second candidate prediction mode list corresponding to the current block comprises:

determining a picture type corresponding to the current block; and
determining the second candidate prediction mode list according to the picture type corresponding to the current block.

**143.**

The method according to claim 138, wherein determining the F weight derivation modes comprises:
selecting the F weight derivation modes from preset Z weight derivation modes, wherein Z is a positive integer greater than or equal to F.

**144.**

The method according to claim 138, wherein the W blending parameters comprise:
determining the W blending parameters according to a size of the current block.

**145.**

The method according to claim 138, wherein the constructing the H third combinations according to the F weight derivation models, the J prediction modes and the W blending parameters comprises:

selecting E weight derivation modes from the F weight derivation modes, wherein E is a positive integer less than or equal to F;
selecting V prediction modes from the J prediction modes, wherein V is a positive integer less than or equal to J;
selecting O blending parameters from the W blending parameters, wherein O is a positive integer less than or equal to W; and
constituting the H third combinations according to the E weight derivation modes, the V prediction modes and the O blending parameters.

**146.**

The method according to claim 145, wherein the selecting the E weight derivation modes from the F weight derivation modes comprises:

determining weights of K second prediction modes on the template according to an i-th weight derivation mode and a third blending parameter for the i-th weight derivation mode among the F weight derivation modes, wherein the third blending parameter is any blending parameter among the W blending gradients, the K second prediction modes are any K prediction modes among the J prediction modes, and i is a positive integer from 1 to F; and
in a case where a weight of any prediction mode among the K prediction modes on the template is less than a first preset value, obtaining the E weight derivation modes by eliminating the i-th weight derivation mode from the F weight derivation modes.

**147.**

The method according to claim 146, wherein the determining the weights of the K second prediction modes on the template according to the i-th weight derivation mode and the third blending parameter comprises:

determining a fourth weight corresponding to the template according to the first weight derivation mode and the template;
obtaining an adjusted fourth weight by adjusting the fourth weight using the third blending parameter; and
determining the weights of the K second prediction modes on the template according to the adjusted fourth weight.

**148.**

The method according to claim 145, wherein the selecting the O blending parameters from the W blending parameters comprises:

determining picture information of the current block; and
determining the O blending parameters from the W blending parameters according to the picture information of the current block.

**149.**

The method according to claim 148, wherein the picture information includes a definition of a picture edge, and the determining the O blending parameters from the W blending parameters according to the picture information of the current block comprises:

in a case where the definition of the picture edge of the current block is less than a preset value, determining at least one first-type blending parameter among the W blending parameters as the O blending parameters; or
in a case where the definition of the picture edge of the current block is greater than or equal to the preset value, determining at least one second-type blending parameter among the W blending parameters as the O blending parameters, wherein a second-type blending parameter is greater than a first-type blending parameter.

**150.**

The method according to claim 145, wherein the selecting the O blending parameters from the W blending parameters comprises:
selecting the O blending parameters from the W blending parameters according to a size of the current block.

**151.**
The method according to claim 150, wherein the selecting the O blending parameters from the W blending parameters according to the size of the current block comprises:

in a case where the size of the current block is smaller than a second set threshold, taking a blending parameter greater than or equal to a third value and among the W blending parameters as the O blending parameters; or in a case where the size of the current block is greater than or equal to the second set threshold, taking a blending parameter less than or equal to a fourth value and among the W blending parameters as the O blending parameters, wherein the fourth value is less than the third value.

**152.**
The method according to claim 150, wherein the selecting the O blending parameters from the W blending parameters according to the size of the current block comprises:

in a case where the size of the current block is smaller than a second set threshold, determining that the O blending parameters are one or more blending parameters within a third blending parameter value range and among the W blending parameters; or in a case where the size of the current block is greater than or equal to the second set threshold, determining that the O blending parameters are one or more blending parameters within a fourth blending parameter value range and among the W blending parameters, wherein a minimum value of the fourth blending parameter value range is less than a minimum value of the third blending parameter value range.

**153.**
The method according to claim 90, wherein the first weight derivation mode includes a fourth blending parameter, and the obtaining the prediction value of the current block by predicting the current block according to the first weight derivation mode and the K first prediction modes comprises:
obtaining the prediction value of the current block by predicting the current block according to the fourth blending parameter and the K first prediction modes.

**154.**
The method according to claim 153, wherein the obtaining the prediction value of the current block by predicting the current block according to the fourth blending parameter and the K first prediction modes comprises:

determining a weight of the prediction value according to the fourth blending parameter;
determining K prediction values according to the K first prediction modes; and
obtaining the prediction value of the current block by weighting the K prediction values according to weights of the K prediction values.

**155.**
The method according to claim 153, wherein the determining the first weight derivation mode and the K first prediction modes included in the first combination according to the first index comprises:

determining a third candidate combination list, wherein the third candidate combination list includes a plurality of third candidate combinations, any third candidate combination among the plurality of third candidate combinations includes a weight derivation mode and K prediction modes, and the weight derivation mode includes a blending parameter; and
determining a weight derivation mode and K prediction modes included in a third candidate combination corresponding to the first index and in the third candidate combination list as the first weight derivation mode and the K first prediction modes.

**156.**
The method according to claim 155, wherein the determining the third candidate combination list comprises:
constructing the third candidate combination list.

**157.**

The method according to claim 156, wherein the constructing the third candidate combination list comprises:
constructing the third candidate combination list based on a template of the current block.

**158.**

The method according to claim 157, wherein the constructing the third candidate combination list based on the template of the current block comprises:

determining A fourth combinations, wherein each fourth combination among the A fourth combinations includes a weight derivation mode and K prediction modes, the weight derivation mode includes a blending parameter, and a weight derivation mode and K prediction modes included in one of any two combinations of the A fourth combinations are not completely the same as a weight derivation mode and K prediction modes included in another one of the any two combinations of the A fourth combinations, and A is a positive integer greater than 1;
for each fourth combination among the A fourth combinations, determining a cost corresponding to the fourth combination in a case of predicting the template using a weight derivation mode and K prediction modes included in the fourth combination; and
constructing the third candidate combination list according to costs corresponding to respective fourth combinations among the A fourth combinations.

**159.**

The method according to claim 158, wherein the determining the cost corresponding to the fourth combination in a case of predicting the template using the weight derivation mode and the K prediction modes included in the fourth combination comprises:

determining prediction values of the template corresponding to the K prediction modes in the fourth combination respectively according to the weight derivation mode in the fourth combination;
determining costs corresponding to the K prediction modes in the fourth combination respectively according to the prediction values of the template and reconstructed values of the template corresponding to the K prediction modes in the fourth combination respectively; and
determining the cost corresponding to the fourth combination according to the costs corresponding to the K prediction modes in the fourth combination respectively.

**160.**

The method according to claim 159, wherein the determining the cost corresponding to the fourth combination according to the costs corresponding to the K prediction modes in the fourth combination respectively comprises:
determining a sum of the costs corresponding to the K prediction modes in the fourth combination as the cost corresponding to the fourth combination.

**161.**

The method according to claim 158, wherein the constructing the third candidate combination list according to the costs corresponding to the respective fourth combinations among the A fourth combinations comprises:

sorting the A fourth combinations according to the costs corresponding to the respective fourth combinations among the A fourth combinations; and
determining the A fourth combinations that are sorted as the third candidate combination list.

**162.**

The method according to claim 158, wherein the sorting the A fourth combinations according to the costs corresponding to the respective fourth combinations among the A fourth combinations comprises:
sorting the A fourth combinations in an ascending order of the costs.

**163.**

The method according to claim 158, wherein the constructing the third candidate combination list according to the costs corresponding to the respective fourth combinations among the A fourth combinations comprises:

selecting B fourth combinations from the A fourth combinations according to the costs corresponding to the fourth combinations; and
determining a list consisting of the B fourth combinations as the third candidate combination list.

**164.**

The method according to claim 163, wherein the B fourth combinations are first B fourth combinations with smallest costs among the A fourth combinations.

**165.**

The method according to claim 158, wherein the determining the A fourth combinations comprises:

determining C weight derivation modes and D prediction modes, wherein C is a positive integer and D is a positive integer greater than or equal to K; and
constructing the A fourth combinations according to the C weight derivation modes and the D prediction modes.

**166.**

The method according to claim 165, wherein the determining the D prediction modes comprises:

determining at least one of a third candidate prediction mode list of the current block, third alternative prediction mode lists corresponding to the K prediction modes respectively, and a prediction mode corresponding to a weight derivation mode, wherein the third candidate prediction mode list includes a plurality of third candidate prediction modes, and a third alternative prediction mode list corresponding to any prediction mode among the K prediction modes includes at least one third alternative prediction mode; and
determining the D prediction modes according to the at least one of the third candidate prediction mode list, the third alternative prediction mode lists corresponding to the K prediction modes respectively, and the prediction mode corresponding to the weight derivation mode.

**167.**

The method according to claim 166, wherein determining the third candidate prediction mode list comprises:
determining the third candidate prediction mode list corresponding to the current block according to a prediction mode used by at least one block adjacent to the current block.

**168.**

The method according to claim 166, wherein the method further comprises:

in a case where the third candidate prediction mode list does not include a preset mode, determining a preset mode corresponding to the current block; and
adding the preset mode to the third candidate prediction mode list.

**169.**

The method according to claim 166, wherein the determining the third candidate prediction mode list corresponding to the current block comprises:

determining a picture type corresponding to the current block; and
determining the third candidate prediction mode list according to the picture type corresponding to the current block.

**170.**

The method according to claim 165, wherein the determining the C weight derivation modes comprises:

determining X blending parameters, wherein X is a positive integer; and
determining the C weight derivation modes according to the X blending parameters.

**171.**

The method according to claim 170, wherein the determining the X blending parameters comprises:

determining picture information of the current block; and
determining the X blending parameters according to the picture information of the current block.

**172.**

The method according to claim 171, wherein the picture information includes a definition of a picture edge, and the determining the X blending parameters according to the picture information of the current block comprises:

in a case where the definition of the picture edge of the current block is less than a preset value, determining at least one third-type blending parameter among preset Y blending parameters as the X blending parameters, wherein Y is a positive integer greater than X; or

in a case where the definition of the picture edge of the current block is greater than or equal to the preset value, determining at least one fourth-type blending parameter among the Y blending parameters as the X blending parameters, wherein the fourth-type blending parameter is greater than the third-type blending parameter.

**173.**

The method according to claim 170, wherein the determining the X blending parameters comprises:

determining the X blending parameters according to a size of the current block.

**174.**

The method according to claim 173, wherein the determining the X blending parameters according to the size of the current block comprises:

in a case where the size of the current block is smaller than a third set threshold, taking a blending parameter greater than or equal to a fifth value and among at least one preset blending parameter as the X blending parameters; or

in a case where the size of the current block is greater than or equal to the third set threshold, taking a blending parameter less than or equal to a sixth value and among the at least one preset blending parameter as the X blending parameters, wherein the sixth value is less than the fifth value.

**175.**

The method according to claim 173, wherein the determining the X blending parameters according to the size of the current block comprises:

in a case where the size of the current block is smaller than a third set threshold, determining that the X blending parameters are one or more blending parameters in the at least one preset blending parameter and within a fifth blending parameter value range; or

in a case where the size of the current block is greater than or equal to a third set threshold, determining that the X blending parameters are one or more blending parameters in the at least one blending parameter and within a sixth blending parameter value range, wherein a minimum value of the sixth blending parameter value range is less than a minimum value of the fifth blending parameter value range.

**176.**

The method according to any one of claims 90-91, 93-98, 100-121, 123-175, wherein the method further comprises:

determining at least one flag, wherein the at least one flag is used to indicate whether to use the first combination for encoding;

the determining the first combination comprises:

in a case where the at least one flag indicates to use the first combination for encoding, determining the first combination.

**177.**

The method according to claim 176, wherein the at least one flag comprises at least one of: a sequence level flag, a picture level flag, a slice level flag, a unit level flag, and a block level flag.

**178.**

The method according to claim 177, wherein in a case where the at least one flag includes a block level flag, the determining the first combination comprises:

in a case where a size of the current block meeting a preset condition is determined, determining the first combination.

**179.**

The method according to any one of claims 90-91, 93-98, 100-121, and 123-175, wherein the determining the first combination comprises:

in a case where the current block not using a first technology for encoding is determined, determining the first combination.

**180.**

The method according to any one of claims 119, 141, and 168, wherein the determining the preset mode corresponding to the current block comprises:

determining a picture type corresponding to the current block; and
determining the preset mode corresponding to the current block according to the picture type corresponding to the current block.

**181.**
The method according to claim 180, wherein the preset mode comprises at least one of a DC, a horizontal mode, a vertical mode, or an angle mode.

**182.**
The method according to claim 180, wherein the determining the picture type corresponding to the current block comprises:
determining the picture type corresponding to the current block according to a picture type of a current picture to which the current block belongs, or a picture type of a current slice to which the current block belongs.

**183.**
A video decoding apparatus, comprising:

a decoding unit, configured to obtain a first index by decoding a bitstream, wherein the first index is used to indicate a first combination, the first combination includes a weight derivation mode and K prediction modes, and K is a positive integer greater than 1;
a determination unit, configured to determine a first weight derivation mode and K first prediction modes included in the first combination; and
a prediction unit, configured to obtain a prediction value of a current block by predicting the current block according to the first weight derivation mode and the K first prediction modes.

**184.**
A video encoding apparatus, comprising:

a determination unit, configured to determine a first combination, wherein the first combination includes a first weight derivation mode and K first prediction modes;
a prediction unit, configured to obtain a prediction value of a current block by predicting the current block according to the first weight derivation mode and the K first prediction modes; and
an encoding unit, configured to obtain a bitstream according to the prediction value of the current block, wherein the bitstream includes a first index, and the first index is used to indicate the first combination.

**185.**
An electronic device, comprising a processor and a memory; wherein

the memory is configured to store a computer program; and
the processor is configured to invoke and execute the computer program stored in the memory to implement the method according to any one of claims 1 to 89 or 90 to 182.

**186.**
A video encoding and decoding system, comprising: a video encoder and a video decoder; wherein

the video decoder is configured to implement the method according to any one of claims 1 to 89; and
the video encoder is configured to implement the method according to any one of claims 90 to 182.

**187.**
A computer-readable storage medium for storing a computer program;
wherein the computer program enables a computer to execute the method according to any one of claims 1 to 89 or 90 to 182.

**188.**
A bitstream, wherein the bitstream includes a first index, wherein the first index is used to indicate a first combination consisting of a weight derivation mode and K prediction modes, and K is a positive integer greater than 1.

Encoding device 110

| Video source 111 | | Video encoder 112 | | Output interface 113 |

~130

Decoding device 120

| Display apparatus 123 | | Video decoder 122 | | Input interface 121 |

FIG. 1

FIG. 2

FIG. 3

Video decoder 300
Bitstream
Entropy decoding unit 310
Prediction unit 320
Inter prediction unit 321
Intra prediction unit 322
Inverse quantization/ transform unit 330
340
In loop filter unit 350
Decoded picture buffer 360
Videodata

FIG. 4

FIG. 5

FIG. 6A

First motion information

First prediction block

Current block

Second motion information

Second prediction block

Weight matrix

New prediction block

FIG. 6B

FIG. 7A

Slice D          Slice E          Slice F

Reference line 3
Reference line 2
Reference line 1
Reference line 0

Slice C

Slice B

Slice A

Coded block

## FIG. 7B

0 (Vertical)

| M | A | B | C | D | E | F | G | H |
| I |
| J |
| K |
| L |

FIG. 8A

1 (Horizontal)

| M | A | B | C | D | E | F | G | H |
| I |
| J |
| K |
| L |

FIG. 8B

2 (DC)

| M | A | B | C | D | E | F | G | H |
| I |
| J | Mean(A.. |
| K | D,I..L) |
| L |

FIG. 8C

3

| M | A | B | C | D | E | F | G | H |
| I |
| J |
| K |
| L |

FIG. 8D

4

| M | A | B | C | D | E | F | G | H |
| I |
| J |
| K |
| L |

FIG. 8E

5

| M | A | B | C | D | E | F | G | H |
| I |
| J |
| K |
| L |

FIG. 8F

6

| M | A | B | C | D | E | F | G | H |
| I |
| J |
| K |
| L |

FIG. 8G

7

| M | A | B | C | D | E | F | G | H |
| I |
| J |
| K |
| L |

FIG. 8H

8

| M | A | B | C | D | E | F | G | H |
| I |
| J |
| K |
| L |

FIG. 8I

FIG. 9

FIG. 10

FIG. 11

FIG. 12

First prediction mode

First prediction block

Current block

Second prediction mode

Second prediction block

Weight matrix

New prediction block

FIG. 13

Template

Reference frame

Current frame

Current block

FIG. 14

| Obtaining a first index by decoding a bitstream | S101 |

| Determining a first weight derivation mode and K first prediction modes included in a first combination according to the first index | S102 |

| Obtaining a prediction value of a current block by predicting the current block according to the first weight derivation mode and the K first prediction modes | S103 |

FIG. 15

FIG. 16A

FIG. 16B

FIG. 17

FIG. 18

Determining a first combination — S201

Obtaining a prediction value of a current block by predicting the current block according to a first weight derivation mode and K first prediction modes — S202

Obtaining a bitstream according to the prediction value of the current block, where the bitstream includes a first index, and the first index is used to indicate the first combination — S203

FIG. 19

Video decoding apparatus 10

Decoding unit 11

Determination unit 12

Prediction unit 13

FIG. 20

Video encoding apparatus 20

Determination unit 21

Prediction unit 22

Encoding unit 23

FIG. 21

30

Electronic device

33

Transceiver

31

Memory

Computer program

Processor

32

34

FIG. 22

Video encoding and decoding system 40

Video encoder 41

Video decoder 42

FIG. 23

## INTERNATIONAL SEARCH REPORT

| International application No. |
| --- |
| **PCT/CN2022/097978** |

### A. CLASSIFICATION OF SUBJECT MATTER

H04N 19/50(2014.01)i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; JVET: 权重, 几何划分, 几何分割, 索引, 组合, 编码, 模式, 过渡, 融合, 混合, weight, GEO, GPM, index, coding, mode, blending

### C. DOCUMENTS CONSIDERED TO BE RELEVANT

| Category* | Citation of document, with indication, where appropriate, of the relevant passages | Relevant to claim No. |
| --- | --- | --- |
| Y | US 2021092392 A1 (QUALCOMM INC.) 25 March 2021 (2021-03-25)<br>  description, paragraphs [0088]-[0251] | 1-188 |
| Y | CN 113228679 A (BRITISH BROADCASTING CORPORATION) 06 August 2021 (2021-08-06)<br>  description, paragraphs [0040]-[0097] | 1-188 |
| A | CN 113497942 A (OPPO GUANGDONG MOBILE TELECOMMUNICATIONS CO., LTD.)<br>12 October 2021 (2021-10-12)<br>  entire document | 1-188 |
| A | WO 2021115657 A1 (BRITISH BROADCASTING CORPORATION) 17 June 2021 (2021-06-17)<br>  entire document | 1-188 |

☐ Further documents are listed in the continuation of Box C.   ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 December 2022** | **14 December 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/097978**

| Patent document cited in search report | | | Publication date (day/month/year) | Patent family member(s) | | | Publication date (day/month/year) |
|---|---|---|---|---|---|---|---|
| US | 2021092392 | A1 | 25 March 2021 | US | 11405619 | B2 | 02 August 2022 |
| CN | 113228679 | A | 06 August 2021 | None | | | |
| CN | 113497942 | A | 12 October 2021 | None | | | |
| WO | 2021115657 | A1 | 17 June 2021 | None | | | |

Form PCT/ISA/210 (patent family annex) (January 2015)